# EUROPEAN PATENT SPECIFICATION

(11) **EP 0 866 083 B1**
(45) Date of publication and mention of the grant of the patent: **28.05.2003**
(21) Application number: 96941158.6
(22) Date of filing: 04.12.1996
(51) Int. Cl.: C08G 64/04, C08G 64/12, C08G 64/42, G03G 5/05

(54) **POLYCARBONATE RESIN, CROSSLINKED POLYCARBONATE RESIN AND ELECTROPHOTOGRAPHIC PHOTORECEPTOR**
POLYCARBONATHARZ, VERNETZTES POLYCARBONATHARZ UND ELEKTROPHOTOGRAPHISCHER PHOTOREZEPTOR
RESINE DE POLYCARBONATE, RESINE DE POLYCARBONATE RETICULEE ET PHOTORECEPTEUR ELECTROPHOTOGRAPHIQUE

(30) Priority: 04.12.1995 JP 31559495; 04.12.1995 JP 31559595; 04.12.1995 JP 31559695; 28.05.1996 JP 13342196; 27.11.1996 JP 31669796
(43) Date of publication of application: 23.09.1998
(73) Proprietor: IDEMITSU KOSAN COMPANY LIMITED, Tokyo 100-0005 (JP)
(72) Inventor: KANAMARU, Masami, Chiba 299-02 (JP); HIKOSAKA, Takaaki, Chiba 299-02 (JP); SAKAMOTO, Shuji, Chiba 299-02 (JP)
(74) Representative: Strehl Schübel-Hopf & Partner
(86) International application number: PCT/JP96/03543
(87) International publication number: WO 97/020878

(56) References cited:
- EP-A- 0 006 579
- EP-A- 0 538 070
- EP-A- 0 566 423
- WO-A-94/19390
- FR-A- 2 037 394
- GB-A- 842 264
- JP-A- 8 006 266
- JP-A- 8 104 745
- JP-A- 8 113 636
- JP-A- 8 248 649
- H. S. KOLESNIKOV ET AL.: "Synthesis and investigation of crosslinked polycarbonates" POLYMER SCIENCE USSR., vol. 12, no. 8, 1970, pages 1973-1980, XP002099059 OXFORD GB

## Description

### TECHNICAL FIELD

An object of the present invention is to provide novel polycarbonates useful for the production of crosslinked polycarbonate resins or graft polymers, and crosslinked polycarbonate resins obtainable by crosslinking the polycarbonate resins. The present invention also relates to electrophotographic photoreceptors, which have a photosensitive layer containing these polycarbonate resins as resin ingredients and maintain high mechanical strength and excellent electrophotographic properties during repeated uses for a long term.

### BACKGROUND ART

While electrophotographic photoreceptors using inorganic photoconductive materials, such as selenium or α-silicon, have been used, organic electrophotographic photoreceptors (OPC) comprising a conductive substrate bearing a photosensitive layer comprising organic photoconductive materials and binder resins have been improved in performances, and their uses are increasing rapidly. Such organic electrophotographic photoreceptors include those of the laminate-type and the single-layer-type, the former having a photosensitive layer having at least a charge-generating layer (CGL), which generates charge on exposure, and a charge-transfer layer (CTL), which transfers the charge, the latter having a single-layer photosensitive layer containing a charge-generating substance and a charge-transfer substance both dispersed in a binder resin.

Electrophotographic photoreceptors require that their sensitivity, electric properties and optical properties be accommodated to the directed electrophotographic processes. Particularly, photoreceptors for repeated uses should withstand the electrical and mechanical, external force applied directly on the surface layer, namely the layer farthest away from the substrate (typically, a conductive substrate), during corona electrification, toner development, transfer onto paper, cleaning and so on, to maintain a uniform image quality for a long time. Specifically, they should resist friction which wears or scores the surface, and should be hardly subject to surface deterioration due to the ozone generated during corona electrification at elevated temperatures. To meet such requirements, polycarbonate resins made from bisphenol A or bisphenol Z have been widely used as the binder resins in the photosensitive layer of organic electrophotographic photoreceptors because of their good compatibility with charge-transfer substances and high mechanical strength. However, even these polycarbonate resins are inferior to the layers of inorganic photoconductive materials in durability.

To solve these problems, in Japanese Patent Application unexamined publication No. 4-179961 are proposed polycarbonates containing rigid units of copolymerized biphenol structure. The mechanical strength of the polycarbonates, however, is insufficient for the required abrasion resistance due to the poor tangling of molecular chains.

Crosslinking polycarbonates are proposed as binder resin materials to further improve the durability of electrophotographic photoreceptors. For example, Japanese Patent Application Unexamined Publication No. 4-291348 (1992) discloses crosslinked-type electrophotographic photoreceptors which contain as binder resins crosslinked polycarbonates made from polycarbonates having unsaturated groups in the side chains through crosslinking. However, the structure of the polycarbonates to be crosslinked lacks rigidity, so the layer containing the crosslinked products is too fragile to improve abrasion resistance adequately.

GB-A-842 264 discloses unsaturated polyesters of certain alkenyl-substituted aromatic dihydroxy compounds with dicarboxylic acids or carbonic acid. These polymers are adapted to be used as coating compositions or molding compositions for which would ageing resistance and resilience as well as mechanical strength are the required properties.

FR-A-2 037 394 describes a photoconductive composition comprising recurring units of a dicarboxylic acid dichloride and of bisphenols having ketostyryl groups.

EP-A-566 423 relates to electrophotographic photoconductors which comprise as a binder resin an aromatic polycarbonate having units of two different structural formulae I and II, each derived from different bisphenols.

Japanese Patent Application Unexamined Publication Nos. 5-65320 (1993) and 6-41258 (1994) disclose the synthesis of graft polycarbonates by grafting vinyl monomers on polycarbonates having unsaturated end groups. There, however, is no suggestion to use the polycarbonates having unsaturated end groups for the production of the photosensitive layer of electrophotographic photoreceptors, nor to crosslink the polycarbonates to produce crosslinked-type electrophotographic photoreceptors excellent in electrophotographic properties and durability.

Further, binder resins for electrophotographic photoreceptors are generally dissolved in solvents to prepare coating fluid for forming the photosensitive layer, and should not cause whitening nor gelation of the coating fluid. If the coating fluid whitens or sets to gel, the photosensitive layer may crystallize after coating and drying. In the crystallized areas, photo-decay does not occur and the charge remains as a residual potential, which appears as a picture defect.

### DISCLOSURE OF INVENTION

Under such circumstances, the present invention is directed to provide a novel polycarbonate resin which has crosslinking functional groups and is useful for the production of crosslinked polycarbonate resins or graft polymers, and to provide a novel crosslinked polycarbonate resin made from the polycarbonate resin through crosslinking.

Another object of the present invention is to provide an electrophotographic photoreceptor having high plate wear and maintaining excellent electrophotographic properties for a long term, which is produced by using as a;binder resin material the novel polycarbonate resin that is well compatible with charge-transfer substances, does not whiten nor set to gel on dissolution in solvents, and forms crosslinked products with high surface hardness and good abrasion resistance.

We have studied to solve these problems and have found that novel polycarbonate resins which are rigid and useful for the production of crosslinked polycarbonate'resins or graft polymers are obtainable by both the introduction of crosslinking functional groups and the introduction of a rigid central unit, such as direct bond or a fluorenylidene structure, in place of the common central carbon of bisphenols, and/or the introduction of a substituent restricting free rotation. It has also been found that among such polycarbonate resins, those having a specific range of reduced viscosity are well compatible with charge-transfer substances, cause no whitening nor gelation when dissolved in solvents, and give crosslinked products having high surface hardness and excellent abrasion resistance. These findings have led us to complete the present invention.

That is, the present invention provides:
1. a polycarbonate resin having crosslinking functional groups in side chains, which comprises repeating units (1') represented by the following general formula (1') and repeating units (2a) represented by the following general formula (2a) and/or repeating units (2b) represented by the following general formula (2b), in a molar ratio of the repeating units (1') to a total of the repeating units (1'), repeating units (2a) and the repeating units (2b), (1')/[(1')+(2a)+(2b)], of 0.001-1; 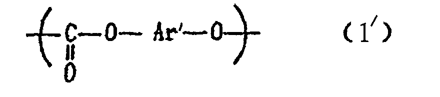 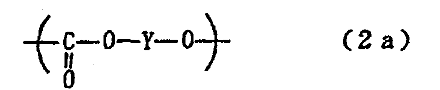 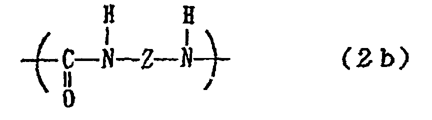 wherein,
   in the general formula (1'), Ar' is a divalent aromatic group represented by. 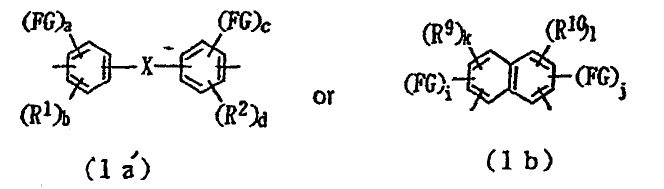 and in the formula (1a'), X is -CO-, -S-, -SO-, -SO₂-, -O-, fluorenylidene, diphenylmethylidene consisting of two phenyl groups linked to each other via 1 to 4 methylene groups, an α,ω-alkylene group of 2 to 12 carbon atoms, -CR⁵R⁶- (wherein R⁵ and R⁶ are each hydrogen, an alkyl group of 1 to 10 carbon atoms, an aryl group of 6 to 36 carbon atoms, an aliphatic hydrocarbon group of 2 to 10 carbon atoms having one or more unsaturated bonds (except for a linear alkenyl group of 2 to 6 carbon atoms having one double bond only at an end thereof and a linear alkynyl group of 2 to 6 carbon atoms having one triple bond only at an end thereof) or FG, at least one of R⁵ and R⁶ being FG or the aliphatic hydrocarbon group of 2 to 10 carbon atoms having one or more unsaturated bonds, FG being 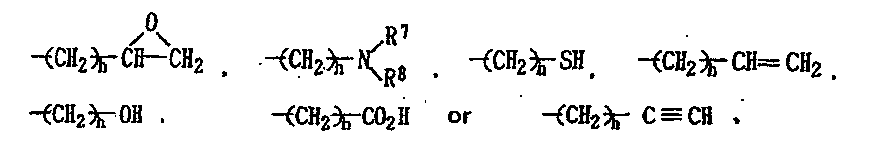 h being an integer of 0 to 4, R⁷ and R⁸ being each hydrogen, an alkyl group of 1 to 6 carbon atoms or a substituted or non-substituted aryl group of 6 to 12 carbon atoms), a cycloalkylidene group of 5 to 12 carbon atoms which is substituted by an aliphatic hydrocarbon group of 2 to 12 carbon atoms having one or more unsaturated bonds, a cycloalkylidene group of 5 to 12 carbon atoms which is substituted by an alicyclic hydrocarbon group of 5 to 12 carbon atoms having one or more unsaturated bonds, or a fluorenylidene which is substituted by an aliphatic hydrocarbon group of 2 to 12 carbon atoms having one or more unsaturated bonds, R¹ and R² are each a halogeno, a saturated hydrocarbon group of 1 to 10 carbon atoms, an alkyloxy group of 1 to 10 carbon atoms, an alkylthio group of 1 to 10 carbon atoms, an aryl group of 6 to 18 carbon atoms, an aryloxy group of 6 to 12 carbon atoms, an arylthio group of 6 to 12 carbon atoms, or an aryl group of 6 to 18 carbon atoms which is substituted by an alkoxyl group of 1 to 10 carbon atoms, a, b, c and d are each an integer of 0 to 4, a+b being an integer of 0 to 4, c+d being an integer of 0 to 4; and when X is fluorenylidene, a diphenylmethylidene consisting of two phenyl groups linked to each other via 1 to 4 methylene groups, -CO-, -S-, -SO-, -SO₂-, -O-, or an α,ω-alkylene group of 2 to 12 carbon atoms, a+c is not 0; and when X is -CO-, -S-, -SO-, -SO₂-, -O-, or an α,ω-alkylene group of 2 to 12 carbon atoms, and the FGs bonded to the phenylene groups of (1a') are 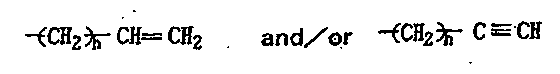 (wherein h is as defined above), a+c is not 0 and b+d is not 0;
   and when X is -CR⁵R⁶-, a cycloalkylidene group of 5 to 12 carbon atoms which is substituted by an aliphatic hydrocarbon group of 2 to 12 carbon atoms having one or more unsaturated bonds or a fluorenylidene which is substituted by an aliphatic hydrocarbon group of 2 to 12 carbon atoms having one or more unsaturated bonds, none of R¹ and R² are a halogeno;
   and in the formula (1b), R⁹ and R¹⁰ are each a halogeno, an alkyl group of 1 to 6 carbon atoms, an alkyloxy group of 1 to 4 carbon atoms, a substituted or non-substituted aryl group of 6 to 12 carbon atoms or a substituted or non-substituted aryloxy group of 6 to 12 carbon atoms, FG is as defined above, two -COOH present in one repeating unit may form the following structure 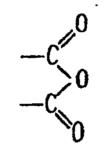 i, j, k and l are each an integer of 0 to 3, i+j=1 to 6, i+k=0 to 3, and j+l=0 to 3;
   and in the general formula (2a), Y is a divalent group containing an arylene group and no crosslinking functional group;
   and in the general formula (2b), Z is a group represented by the following formula 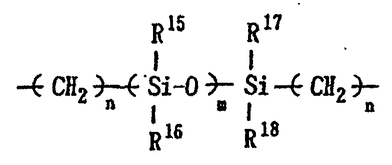 R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150.
2. The polycarbonate resin as defined in 1, wherein Ar' in the repeating units (1') are represented by the following formula. 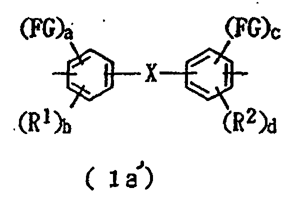
3. The polycarbonate resin as defined in 1, wherein Ar' in the repeating units (1') are represented by the following formula. 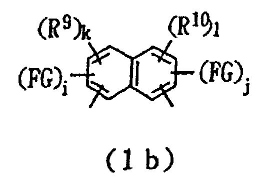
4. The polycarbonate resin as defined in 1, wherein the repeating units (1') are represented by the following formula 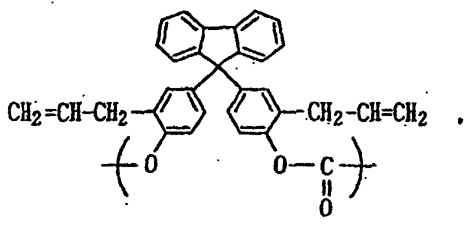 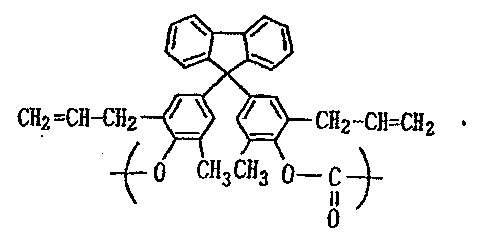 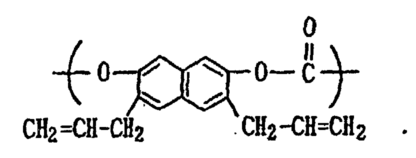
5. The polycarbonate resin as defined in 1, wherein the repeating units (2a) are repeating units (3) represented by the following general formula (3) 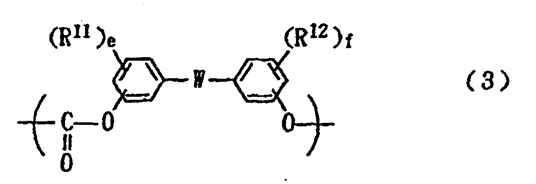 wherein R¹¹ and R¹² are each a halogeno, a saturated hydrocarbon group of 1 to 10 carbon atoms, an aromatic hydrocarbon group of 6 to 12 carbon atoms, an alkyloxy group of 1 to 10 carbon atoms, an alkylthio group of 1 to 10 carbon atoms, an aryloxy group of 6 to 12 carbon atoms or an arylthio group of 6 to 12 carbon atoms, e and f are each an integer of 0 to 4, W is a single bond, -O-, -CO-, -S-, -SO-, -SO₂-, -CR¹³R¹⁴-, a cycloalkylidene group of 5 to 12 carbon atoms or an α,ω-alkylene group of 2 to 12 carbon atoms (R¹³ and R¹⁴ are each hydrogen, trifluoromethyl, an alkyl group of 1 to 10 carbon atoms or an aromatic hydrocarbon group of 6 to 36 carbon atoms) or the following group 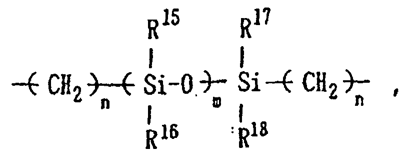 R¹⁵, R¹⁶, R¹⁷ and R¹⁸ being each an alkyl group of 1 to 4 carbon atoms or an aryl group of 6 to 36 carbon atoms, n being an integer of 1 to 6, and m being a number of 1 to 150.
6. The polycarbonate resin as defined in 1, which further has end groups which have a crosslinking functional group and are represented by the following general formula (E1), (E2) or (E3):

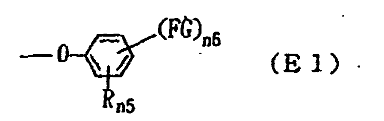

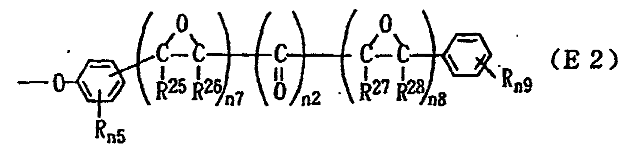

   ―O―FG (E3)

   wherein each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ may be linked to each other by a methylene chain of 1 to 4 carbon atoms, n7 and n8 are each 0 or 1, n7+n8 is 1 or 2, n2 is 0 or 1, FG is as defined above, and two -COOH present in one end group may form the following structure. 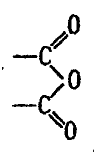
7. A polycarbonate resin having crosslinking functional groups in a main chain, which comprises repeating units (7) or (8) represented by the following general formula (7) or (8), and repeating units (2a) represented by the following general formula (2a) and/or repeating units (2b) represented by the following general formula (2b), in a molar ratio of the repeating units (7) or (8) to a total of the repeating units (6), (7) or (8), the repeating units (2a) and the repeating units (2b), [(7) or (8)]/{[ (7) or (8)]+(2a)+(2b)}, of 0.001 to 1; 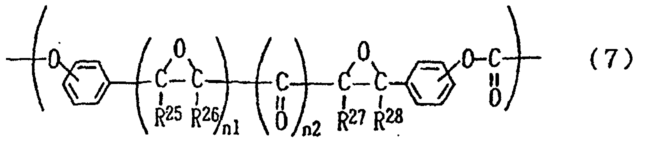 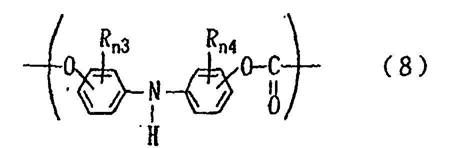 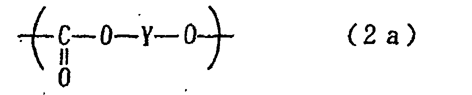 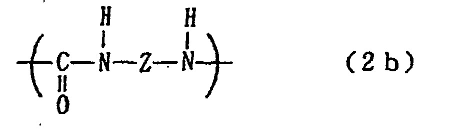 wherein,
   in the general formula (7), R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by a methylene chain of 1 to 4 carbon atoms, n1 and n2 are each an integer of 0 or 1;
   in the general formula (8), each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group or 6 to 12 carbon atoms or an arylthio group of 6 to 12 carbon atoms, n3 and n4 are each an integer of 0 to 4;
   in the general formula (2a), Y is a divalent group containing an arylene group and no crosslinking functional group;
   in the general formula (2b), Z is represented by the following formula 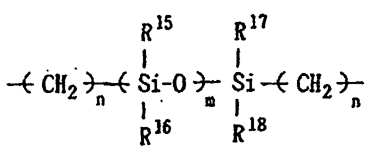 wherein R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150.
8. The polycarbonate resin as defined in 7, wherein the repeating units (2a) are repeating units (3) represented by the following general formula (3) 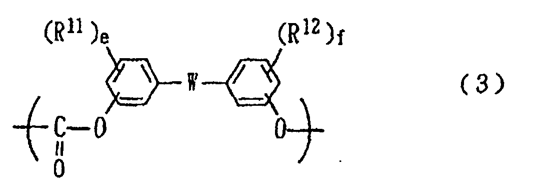 wherein R¹¹ and R¹² are each a halogeno, a saturated hydrocarbon group of 1 to 10 carbon atoms, an aromatic hydrocarbon group of 6 to 12 carbon atoms, an alkyloxy group of 1 to 10 carbon atoms, an alkylthio group of 1 to 10 carbon atoms, an aryloxy group of 6 to 12 carbon atoms or an arylthio group of 6 to 12 carbon atoms, e and f are each an integer of 0 to 4, W is a single bond, -O-, -CO-, -S-, -SO-, -SO₂-, -CR¹³R¹⁴-, a cycloalkylidene group of 5 to 12 carbon atoms or an α,ω-alkylene group of 2 to 12 carbon atoms (R¹³ and R¹⁴ are each hydrogen, trifluoromethyl, an alkyl group of 1 to 10 carbon atoms or an aromatic hydrocarbon groups of 6 to 36 carbon atoms) or a group represented by the following formula 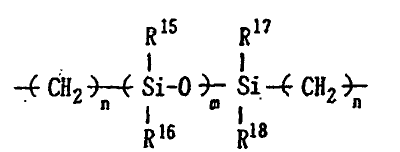 wherein R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150.
9. The polycarbonate resin as defined in 7, which further has end groups which have a crosslinking functional group and are represented by the following general formula (E1), (E2) or (E3)

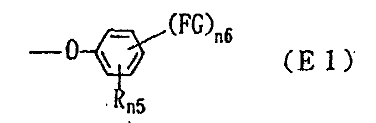

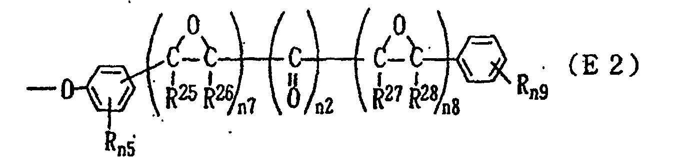

   ―O-FG (E 3)

   wherein each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ may be linked to each other by a methylene chain of 1 to 4 carbon atoms, n7 and n8 are each 0 or 1, n7+n8 is 1 or 2, n2 is 0 or 1, FG is 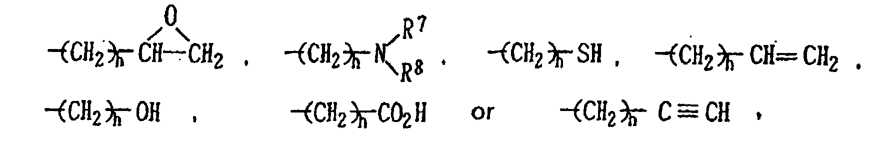 and two -COOH present in one end group may form the following structure, 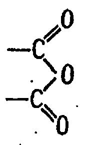 h is an integer of 0 to 4, R⁷ and R⁸ are each hydrogen, an alkyl group of 1 to 6 carbon atoms or a substituted or non-substituted aryl group of 6 to 12 carbon atoms.
10. A polycarbonate resin having crosslinking functional groups at ends, which comprises repeating units (2a) represented by the following general formula (2a) and/or repeating units (2b) represented by the following general formula (2b), and end groups represented by the following general formula (E1'), (E2) or (E3);

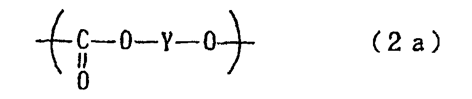

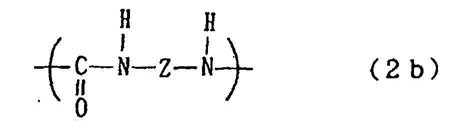

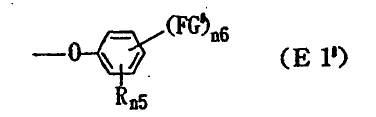

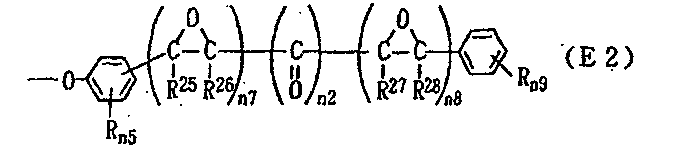

   ―O-FG (E 3)

   wherein
   in the general formula (2a), Y is a divalent group containing an arylene group and no crosslinking functional group;
   in the general formula (2b), Z is a group represented by the following formula 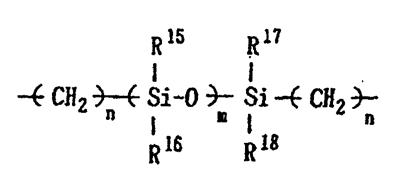 wherein R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150;
   in the general formulae (E1') (E2) and (E3), each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by a methylene chain of 1 to 4 carbon atoms, n7 and n8 are each 0 or 1, n7+n8 is 1 or 2, n2 is 0 or 1, FIG' is 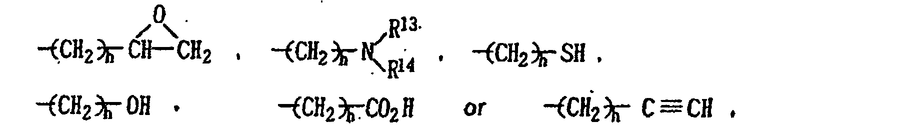 two -COOH present in one end group may have the following structure, 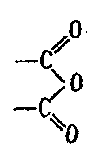 h is an integer of 0 to 4, R¹³ and R¹⁴ are each hydrogen, an alkyl group of 1 to 6 carbon atoms or a substituted or non-substituted aryl group of 6 to 12 carbon atoms.
11. The polycarbonate resin as defined in 10, wherein the repeating units (2a) are repeating units (3) represented by the following general formula (3) 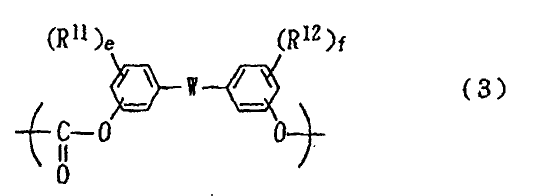 wherein R¹¹ and R¹² are each a halogeno, a saturated hydrocarbon group of 1 to 10 carbon atoms, an aromatic hydrocarbon group of 6 to 12 carbon atoms, an alkyloxy group of 1 to 10 carbon atoms, an alkylthio group of 1 to 10 carbon atoms, an aryloxy group of 6 to 12 carbon atoms or an arylthio group of 6 to 12 carbon atoms, e and f are each an integer of 0 to 4, W is a single bond, -O-, -CO-, -S-, -SO-, -SO₂-, -CR¹³R¹⁴-, a cycloalkylidene group of 5 to 12 carbon atoms or an α,ω-alkylene group of 2 to 12 carbon atoms (R¹³ and R¹⁴ being each hydrogen, trifluoromethyl, an alkyl group of 1 to 10 carbon atoms or an aromatic hydrocarbon groups of 6 to 36 carbon atoms) or a group represented by the following formula 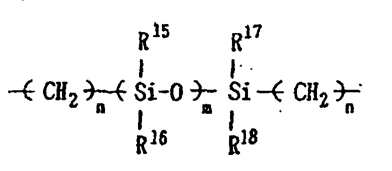 wherein R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150.
12. A crosslinked polycarbonate resin produced by crosslinking the polycarbonate resin as defined in any one of the above items 1 to 11,
13. An electrophotographic photoreceptor comprising a conductive substrate and a photosensitive layer that is disposed on the conductive substrate, the photosensitive layer containing:
   a polycarbonate resin having crosslinking functional groups in side chains, which comprises repeating units (1) represented by the following general formula (1) and repeating units (2a) represented by the following general formula (2a) and/or repeating units (2b) represented by the following general formula (2b), in a molar ratio of the repeating units (1) to a total of the repeating units (1), repeating units (2a) and the repeating units (2b), (1)/[(1)+(2a)+(2b)], of 0.001-1; 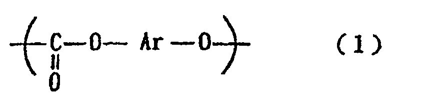 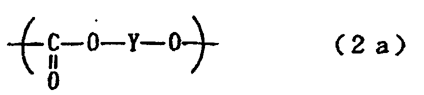 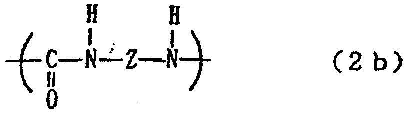
   wherein,
   in the general formula (1), Ar is a divalent aromatic group represented by 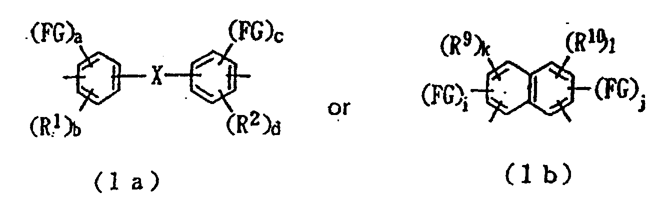 and in the formula (1a), X is a single bond, -CO-, -S-, - SO-, -SO₂-, -O-, -CR³R⁴- (wherein R³ and R⁴ are each an alkyl group of 1 to 10 carbon atoms, trifluoromethyl or an aryl group of 6 to 36 carbon atoms), a cycloalkylene group of 5 to 12 carbon atoms, a cycloalkylidene group of 5 to 12 carbon atoms, fluorenylidene, diphenylmethylidene consisting of two phenyl groups linked to each other via 1 to 4 methylene groups, an α,ω-alkylene group of 2 to 12 carbon atoms, -CR⁵R⁶- (wherein R⁵ and R⁶ are each hydrogen, an alkyl group of 1 to 10 carbon atoms, an aryl group of 6 to 36 carbon atoms, an aliphatic hydrocarbon group of 2 to 10 carbon atoms having one or more unsaturated bonds (except for a linear alkenyl group of 2 to 6 carbon atoms having one double bond only at an end thereof and a linear alkynyl group of 2 to 6 carbon atoms having one triple bond only at an end thereof) or FG, at least one of R⁵ and R⁶ being FG or the aliphatic hydrocarbon group of 2 to 10 carbon atoms having one or more unsaturated bonds, FG being 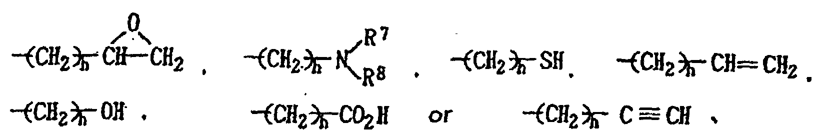 h being an integer of 0 to 4, R⁷ and R⁸ being each hydrogen, an alkyl group of 1 to 6 carbon atoms or a substituted or non-substituted aryl group of 6 to 12 carbon atoms), a cycloalkylidene group of 5 to 12 carbon atoms which is substituted by an aliphatic hydrocarbon group of 2 to 12 carbon atoms having one or more unsaturated bonds, a cycloalkylidene group of 5 to 12 carbon atoms which is substituted by an alicyclic hydrocarbon group of 5 to 12 carbon atoms having one or more unsaturated bonds, or a fluorenylidene which is substituted by an aliphatic hydrocarbon group of 2 to 12 carbon atoms having one or more unsaturated bonds, R¹ and R² are each a halogeno, a saturated hydrocarbon group of 1 to 10 carbon atoms, an alkyloxy group of 1 to 10 carbon atoms, an alkylthio group of 1 to 10 carbon atoms, an aryl group of 6 to 18 carbon atoms, an aryloxy group of 6 to 12 carbon atoms, an arylthio group of 6 to 12 carbon atoms, or an aryl group of 6 to 18 carbon atoms which is substituted by an alkoxyl group of 1 to 10 carbon atoms, a, b, c and d are each an integer of 0 to 4, a+b being an integer of 0 to 4, c+d being an integer of 0 to 4;
   and when X is a single bond, fluorenylidene, a diphenylmethylidene consisting of two phenyl groups linked to each other via 1 to 4 methylene groups, -CO-, -S-, -SO-, -SO₂-, -O-, -CR³R⁴-, a cycloalkylene group of 5 to 12 carbon atoms, a cycloalkylidene group of 5 to 12 carbon atoms or an α,ω-alkylene group of 2 to 12 carbon atoms, a+c is not 0;
   and when X is -CO-, -S-, -SO-, -SO₂-, -O-, -CR³R⁴-, a cycloalkylene group of 5 to 12 carbon atoms, a cycloalkylidene group of 5 to 12 carbon atoms or an α,ω-alkylene group of 2 to 12 carbon atoms, and the FGs bonded to the phenylene groups of (1a) are 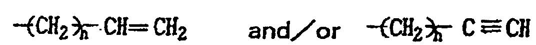 (wherein h is as defined above), a+c is not 0 and b+d is not 0;
   and when X is -CR⁵R⁶-, a cycloalkylidene group of 5 to 12 carbon atoms which is substituted by an aliphatic hydrocarbon group of 2 to 12 carbon atoms having one or more unsaturated bonds or a fluorenylidene which is substituted by an aliphatic hydrocarbon group of 2 to 12 carbon atoms having one or more unsaturated bonds, none of R¹ and R² are a halogeno;
   and in the formula (1b), R⁹ and R¹⁰ are each a halogeno, an alkyl group of 1 to 6 carbon atoms, an alkyloxy group of 1 to 4 carbon atoms, a substituted or non-substituted aryl group of 6 to 12 carbon atoms or a substituted or non-substituted aryloxy group of 6 to 12 carbon atoms, FG is as defined above, two -COOH present in one repeating unit may form the following structure 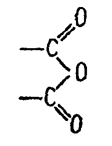 i, j, k and l are each an integer of 0 to 3, i+j=1 to 6, i+k=0 to 3, and j+l=0 to 3;
   and in the general formula (2a), Y is a divalent group containing an arylene group and no crosslinking functional group;
   and in the general formula (2b), Z is a group represented by the following formula 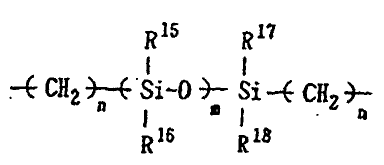 R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150;
   or a polycarbonate resin having crosslinking functional groups in a main chain, which comprises repeating units (7) or (8) represented by the following general formula (7) or (8), and repeating units (2a) represented by the following general formula (2a) and/or repeating units (2b) represented by the following general formula (2b), in a molar ratio of the repeating units (7) or (8) to a total of the repeating units (7) or (8), the repeating units (2a) and the repeating units (2b), [(7) or (8)]/{[(7) or (8)]+(2a)+(2b)}, of 0.001 to 1; 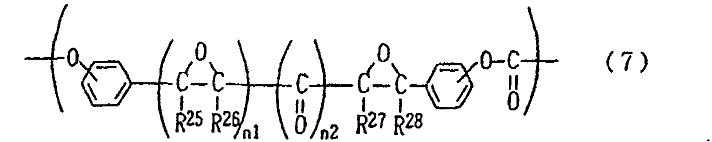 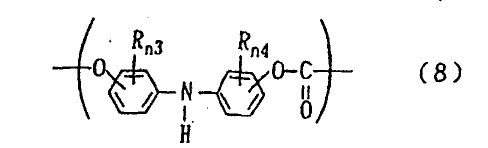 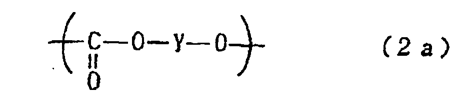 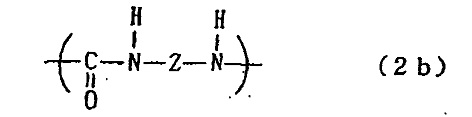 wherein,
   in the general formula (7), R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by methylene chain of 1 to 4 carbon atoms, n1 and n2 are each an integer of 0 or 1;
   in the general formula (8), each R is a halogeno, a substituted or non-substituted alkyl group of 1 to to carbon atoms, a substituted or pon-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted-aryl group of 6 to 24 carbon atoms, a substituted or non-substituted aryloxy group or 6 to 12 carbon atoms or an arylthio, group of 6 to 12 carbon atoms, n3 and n4 are each a integer of 0 to 4;
   in the general formula (2a), Y is as defined above;
   in the general formula (2b), Z is as defined above;
   or a polycarbonate resin having crosslinking functional groups at ends, which comprises repeating units (2a) represented by the following general formula (2a) and/or repeating units (2b) represented by the following general formula (2b), and end groups represented by the following general formula (E1'), (E2) or (E3)

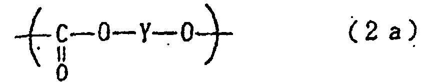

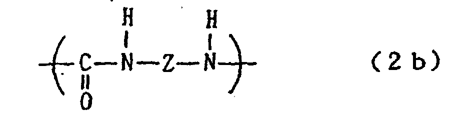

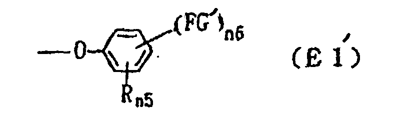

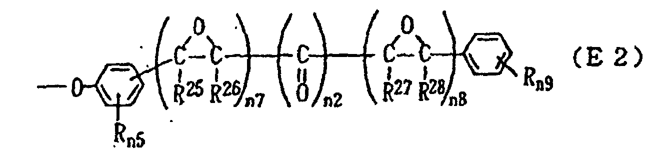

   ―O-FG (E 3)

   wherein
   in the general formula (2a), Y is as defined above;
   in the general formula (2b), Z is as defined above;
   in the general formulae (E1'), (E2) and (E3), each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by a methylene chain of 1 to 4 carbon atoms, n7 and n8 are each 0 or 1, n7+n8 is 1 or 2, n2 is 0 or 1, FIG' is 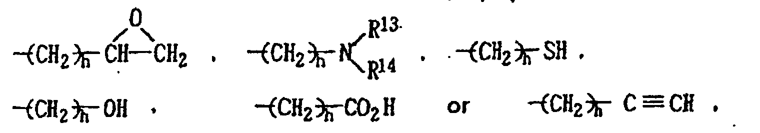 two -COOH present in one end group may have the following structure, 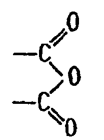 h is an integer of 0 to 4, R¹³ and R¹⁴ are each hydrogen, an alkyl group of 1 to 6 carbon atoms or a substituted or non-substituted aryl group of 6 to 12 carbon atoms.
14. The electrophotographic photoreceptor as defined in 13, wherein the photosensitive layer comprises a charge-generating layer containing a charge-generating substance and a charge-transfer layer containing a charge-transfer substance and a binder resin, the binder resin being the polycarbonate resin.
15. An electrophotographic photoreceptor comprising a conductive substrate and a photosensitive layer that is disposed on the conductive substrate, the photosensitive layer containing:
   a crosslinked polycarbonate resin obtainable by crosslinking a polycarbonate resin having crosslinking functional groups in side chains, which comprises repeating units (1) represented by the following general formula (1) and repeating units (2a) represented by the following general formula (2a) and/or repeating units (2b) represented by the following general formula (2b), in a molar ratio of the repeating units (1) to a total of the repeating units (1), repeating units (2a) and the repeating units (2b), (1)/[(1)+(2a)+(2b)], of 0.001-1; 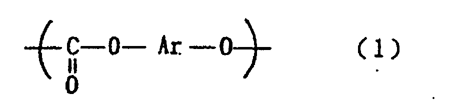 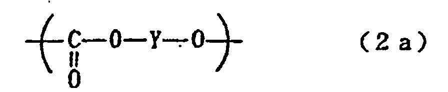 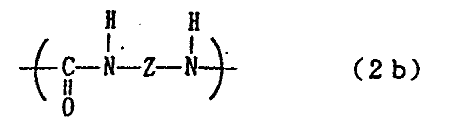 wherein,
   in the general formula (1), Ar is a divalent aromatic group represented by 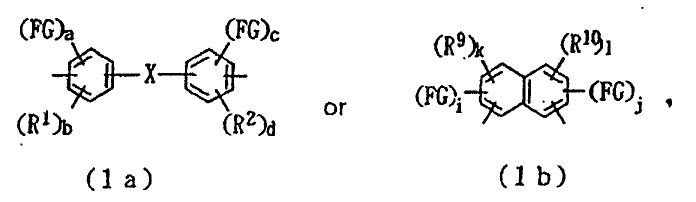 and in the formula (1a), X is a single bond, -CO-, -S-, -SO-, -SO₂-, -O-, -CR³R⁴- (wherein R³ and R⁴ are each an alkyl group of 1 to 10 carbon atoms, trifluoromethyl or an aryl group of 6 to 36 carbon atoms), a cycloalkylene group of 5 to 12 carbon atoms, a cycloalkylidene group of 5 to 12 carbon atoms, fluorenylidene, diphenylmethylidene consisting of two phenyl groups linked to each other via 1 to 4 methylene groups, an α,ω-alkylene group of 2 to 12 carbon atoms, -CR⁵R⁶- (wherein R⁵ and R⁶ are each hydrogen, an alkyl group of 1 to 10 carbon atoms, an aryl group of 6 to 36 carbon atoms, an aliphatic hydrocarbon group of 2 to 10 carbon atoms having one or more unsaturated bonds (except for a linear alkenyl group of 2 to 6 carbon atoms having one double bond only at an end thereof and a linear alkynyl group of 2 to 6 carbon atoms having one triple bond only at an end thereof) or FG, at least one of R⁵ and R⁶ being FG or the aliphatic hydrocarbon group of 2 to 10 carbon atoms having one or more unsaturated bonds, FG being 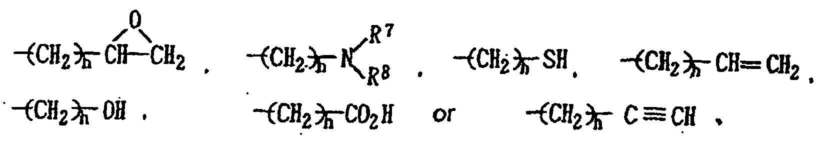 h being an integer of 0 to 4, R⁷ and R⁸ being each hydrogen, an alkyl group of 1 to 6 carbon atoms or a substituted or non-substituted aryl group of 6 to 12 carbon atoms), a cycloalkylidene group of 5 to 12 carbon atoms which is substituted by an aliphatic hydrocarbon group of 2 to 12 carbon atoms having one or more unsaturated bonds, a cycloalkylidene group of 5 to 12 carbon atoms which is substituted by an alicyclic hydrocarbon group of 5 to 12 carbon atoms having one or more unsaturated bonds, or a fluorenylidene which is substituted by an aliphatic hydrocarbon group of 2 to 12 carbon atoms having one or more unsaturated bonds, R¹ and R² are each a halogeno, a saturated hydrocarbon group of 1 to 10 carbon atoms, an alkyloxy group of 1 to 10 carbon atoms, an alkylthio group of 1 to 10 carbon atoms, an aryl group of 6 to 18 carbon atoms, an aryloxy group of 6 to 12 carbon atoms, an arylthio group of 6 to 12 carbon atoms, or an aryl group of 6 to 18 carbon atoms which is substituted by an alkoxyl group of 1 to 10 carbon atoms, a, b, c and d are each an integer of 0 to 4, a+b being an integer of 0 to 4, c+d being an integer of 0 to 4;
   and when X is a single bond, fluorenylidene, a diphenylmethylidene consisting of two phenyl groups linked to each other via 1 to 4 methylene groups, -CO-, -S-, -SO-, -SO₂-, -O-, -CR³R⁴-, a cycloalkylene group of 5 to 12 carbon atoms, a cycloalkylidene group of 5 to 12 carbon atoms or an α,ω-alkylene group of 2 to 12 carbon atoms, a+c is not 0; and when X is -CO-, -S-, -SO-, -SO₂-, -O-, -CR³R⁴-, a cycloalkylene group of 5 to 12 carbon atoms, a cycloalkylidene group of 5 to 12 carbon atoms or an α,ω-alkylene group of 2 to 12 carbon atoms, and the FGs bonded to the phenylene groups of (1a) are 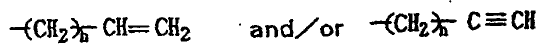 (wherein h is as defined above), a+c is not 0 and b+d is not 0;
   and when X is -CR⁵R⁶-, a cycloalkylidene group of 5 to 12 carbon atoms which is substituted by an aliphatic hydrocarbon group of 2 to 12 carbon atoms having one or more unsaturated bonds or a fluorenylidene which is substituted by an aliphatic hydrocarbon group of 2 to 12 carbon atoms having one or more unsaturated bonds, none of R¹ and R² are a halogeno;
   and in the formula (1b), R⁹ and R¹⁰ are each a halogeno, an alkyl group of 1 to 6 carbon atoms, an alkyloxy group of 1 to 4 carbon atoms, a substituted or non-substituted aryl group of 6 to 12 carbon atoms or a substituted or non-substituted aryloxy group of 6 to 12 carbon atoms, FG is as defined above, two -COOH present in one repeating unit may form the following structure 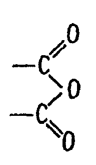 i, j, k and l are each an integer of 0 to 3, i+j=1 to 6, i+k=0 to 3, and j+l=0 to 3;
   and in the general formula (2a), Y is a divalent group containing an arylene group and no crosslinking functional group;
   and in the general formula (2b), Z is a group represented by the following formula 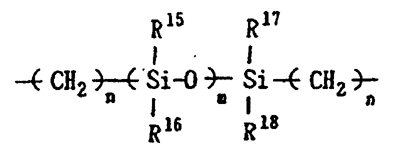 R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150;
   or a crosslinked polycarbonate resin obtainable by crosslinking a polycarbonate resin having crosslinking functional groups in a main chain, which comprises repeating units (7) or (8) represented by the following general formula (7) or (8), and repeating units (2a) represented by the following general formula (2a) and/or repeating units (2b) represented by the following general formula (2b), in a molar ratio of the repeating units (7) or (8) to a total of the repeating units (7) or (8), the repeating units (2a) and the repeating units (2b), [(7) or (8)]/{[ (7) or (8)]+(2a)+(2b)}, of 0.001 to 1; 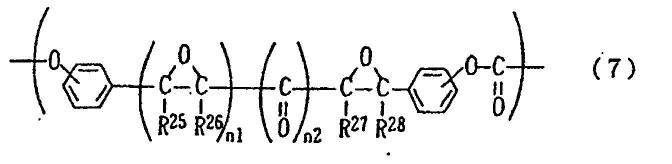 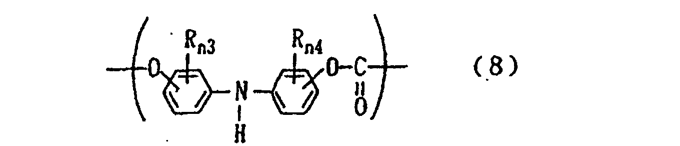 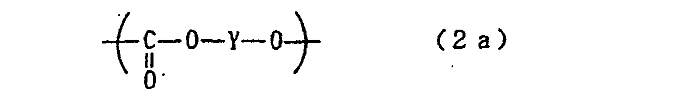 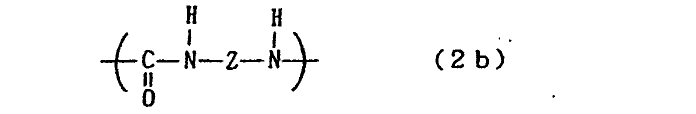 wherein,
   in the general formula (7), R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by a methylene chain of 1 to 4 carbon atoms, n1 and n2 are each an integer of 0 or 1;
   in the general formula (8), each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group or 6 to 12 carbon atoms or an arylthio group of 6 to 12 carbon atoms, n3 and n4 are each an integer of 0 to 4;
   in the general formula (2a), Y is as defined above;
   in the general formula (2b), Z is as defined above;
   or a crosslinked polycarbonate resin obtainable by crosslinking a polycarbonate resin having crosslinking functional groups at ends, which comprises repeating units (2a) represented by the following general formula (2a) and/or repeating units (2b) represented by the following general formula (2b), and end groups represented by the following general formula (E1'), (E2) or (E3)

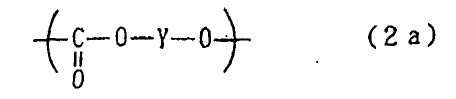

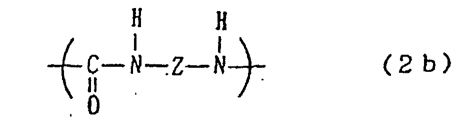

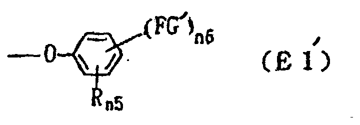

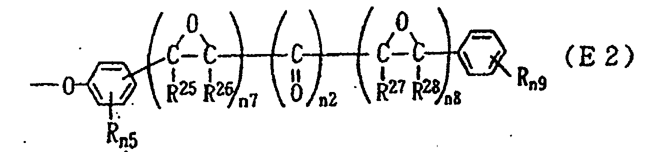

   ―O-FG (E 3)

   wherein
   in the general formula (2a) Y is as defined above;
   in the general formula (2b), Z is as defined above;
   in the general formulae (E1'), (E2) and (E3), each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by a methylene chain of 1 to 4 carbon atoms, n7 and n8 are each 0 or 1, n7+n8 is 1 or 2, n2 is 0 or 1, FIG' is 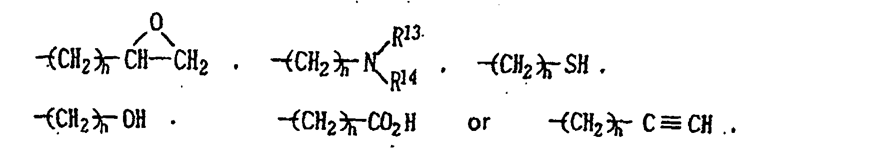 two -COOH present in one end group may have the following structure, 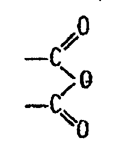 h is an integer of 0 to 4, R¹³ and R¹⁴ are each hydrogen, an alkyl group of 1 to 6 carbon atoms or a substituted or non-substituted aryl group of 6 to 12 carbon atoms.
16. The electrophotographic photoreceptor as defined in 15, wherein the photosensitive layer comprises a charge-generating layer containing a charge-generating substance and a charge-transfer layer containing a charge-transfer substance and a binder resin, the binder resin being the crosslinked polycarbonate resin.

### BRIEF DESCRIPTION OF DRAWINGS

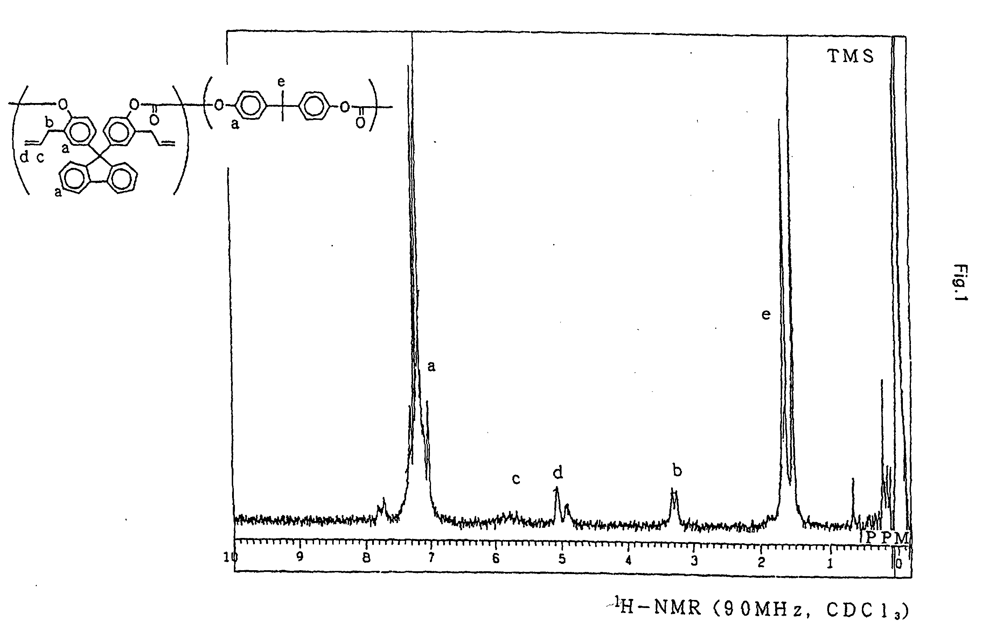

Fig. 1 is a chart of an ¹H-NMR spectrum of the polycarbonate resin synthesized in Example 1.

### BEST MODE FOR CARRYING OUT THE INVENTION

### [Polycarbonate resin]

The polycarbonate resins of the present invention may be linear or cyclic, and may have specific ends or branching structures introduced by synthesis using endcappers or branching agents.

In the following description of the units of the polycarbonate resins of the present invention the terms "general formula (1) and (1a)" as well as the definition of "Ar" comprise both (1) and (1'), (1a) and (1a') and Ar and Ar'. The definition of (1') applies for the polycarbonate resin having crosslinking functional groups, while the definition of formula (1) applies in the case of the electrophotographic photoreceptor.

### 1. Polycarbonate resins having crosslinking functional groups in the side chains;

The polycarbonate resin of the present invention having crosslinking functional groups in the side chains comprises the repeating units (1) and the repeating units (2a) and/or (2b) in a molar ratio of the repeating units (1) to the total of the repeating units (1), the repeating units (2a) and the repeating units (2b), (1)/[(1)+(2a)+(2b)], of 0.001-1, preferably 0.01-0.4, more preferably 0.1-0.3. The repeating units (2a) and repeating units (2b) have no crosslinking functional groups, and introducing such repeating units can give polycarbonate resins which have various properties in addition to the ability of crosslinking or graft polymerization and are suited for various applications. For example, in the production of electrophotographic photoreceptors, such polycarbonate resins can give electrophotographic photoreceptors applicable for various types of machines.

The polycarbonate resins of the present invention may further contain other repeating units than the repeating units (1), (2a) and (2b), so far as the object of the present invention can be attained.

Examples of R¹ and R² in the general formula (1a) are as follows.

Preferred halogenos represented by R¹ and R² are fluoro and chloro.

Examples of the saturated hydrocarbon groups of 1 to 10 carbon atoms represented by R¹ and R² include alkyl groups, such as methyl, ethyl, propyl, butyl, pentyl, hexyl, isopropyl, isobutyl, sec-butyl, tert-butyl, heptyl, octyl, nonyl and decyl, and cycloalkyl groups, such as cyclopentyl and cyclohexyl.

Examples of the aryl groups of 6 to 18 carbon atoms represented by R¹ and R² include phenyl, tolyl, styryl, biphenylyl, naphthyl, terphenyl, phenanthryl and anthryl.

Examples of the alkyloxy groups of 1 to 10 carbon atoms represented by R¹ and R² include methoxy, ethoxy, n-propyloxy, isopropoxy, n-butoxy, sec-butoxy, tert-butoxy, isobutoxy, pentyloxy, hexyloxy, heptyloxy, octyloxy, nonyloxy and decyloxy, with methoxy, ethoxy, isopropoxy and tert-butoxy preferred.

Examples of the alkylthio groups of 1 to 10 carbon atoms represented by R¹ and R² include methylthio, ethylthio, n-propylthio, isopropylthio, n-butylthio, sec-butylthio, tert-butylthio, isobutylthio, pentylthio, hexylthio, heptylthio, octylthio, nonylthio and decylthio, with methylthio, ethylthio, isopropylthio and tert-butylthio preferred.

Examples of the aryloxy groups of 6 to 12 carbon atoms represented by R¹ and R² include phenyloxy, naphthyloxy and 5 biphenylyloxy, with phenyloxy preferred.

Examples of the arylthio groups of 6 to 12 carbon atoms represented by R¹ and R² include phenylthio, naphthylthio and biphenylylthio, with phenylthio preferred.

Examples of the aryl groups of 6 to 18 carbon atoms ) substituted by an alkoxyl group of 1 to 10 carbon atoms include methoxyphenyl and dimethoxyphenyl.

Examples of X in the general formula (1a) are as follows.

In -CR³R⁴- represented by X, examples of the alkyl groups of 1 to 10 carbon atoms and aryl groups of 6 to 36 carbon atoms represented by R³ and R⁴ include methyl, ethyl, propyl, butyl, heptyl, octyl, nonyl decyl, phenyl, tolyl, biphenylyl, naphthyl terphenyl, phenanthryl and anthryl.

Examples of the cycloalkylene groups of 5 to 12 carbon atoms represented by X include cyclopentylene and cyclohexylene.

Examples of the cycloalkylidene group of 5 to 12 carbon atoms represented by X include cyclopentylidene and cyclohexylidene.

Examples of the α,ω-alkylene groups of 2 to 12 carbon atoms represented by X include dimethylene, trimethylene, tetramethylene, pentamethylene and hexamethylene.

In -CR⁵R⁶- represented by X, the alkyl groups of 1 to 10 carbon atoms represented by R⁵ and R⁶ include methyl, ethyl, propyl, butyl, pentyl, hexyl, isopropyl, isobutyl, sec-butyl, tert-butyl, heptyl, octyl, nonyl and decyl.

The aryl groups of 6 to 36 carbon atoms represented by R⁵ and R⁶ include phenyl, tolyl, biphenylyl, naphthyl, terphenyl, phenanthryl and anthryl.

Examples of the aliphatic hydrocarbon groups of 2 to 10 carbon atoms having one or more unsaturated bonds, which are represented by R⁵ and R⁶ (with the proviso that the aliphatic hydrocarbon groups represented by R⁵ and R⁶ do not include linear alkenyl groups of 2 to 6 carbon atoms having a double bond only at end and linear alkynyl groups having a triple bond only at end), include 1-propenyl, 1-butenyl, 2-butenyl, 1-pentenyl, 2-pentenyl, 3-pentenyl, 1-hexenyl, 2-hexenyl, 3-hexenyl, 4-hexenyl, heptenyl, octenyl, nonenyl and decenyl.

In FG represented by R⁵ and R⁶, the alkyl groups of 1 to 6 carbon atoms and aryl groups of 6 to 12 carbon atoms represented by R⁷ and R⁸ include methyl, ethyl, propyl, butyl, pentyl, hexyl, isopropyl, isobutyl, sec-butyl, tert-butyl, phenyl, tolyl, biphenylyl and naphthyl, and examples of the substituents on the substituted aryl groups include halogeno, such as fluoro, chloro, bromo and iodo, alkyl groups of 1 to 4 carbon atoms, such as methyl, ethyl, propyl, isopropyl, butyl, sec-butyl, tert-butyl and isobutyl, alkoxyls of 1 to 4 carbon atoms, such as methoxy, ethoxy, propoxy, isopropoxy, butoxy, sec-butoxy, tert-butoxy and isobutoxy, alkylthio groups of 1 to 4 carbon atoms, such as methylthio, arylthio groups of 6 to 12 carbon atoms, such as phenylthio, and one or more substituents may be each bonded to any position where they can bond.

In the cycloalkylidene groups of 5 to 12 carbon atoms which are represented by X and substituted by an aliphatic hydrocarbon group of 2 to 12 carbon atoms having one or more unsaturated groups, examples of the aliphatic hydrocarbon groups of 2 to 12 carbon atoms having one or more unsaturated bonds include vinyl, allyl and 2-propenyl, and examples of the cycloalkylidene groups of 5 to 12 carbon atoms include cyclopentylidene, 3,3,4,4-tetramethylcyclopentylidene, 4,4-dimethylcyclohexylidene and 3,3,5,5-tetramethylcyclohexylidene.

In the cycloalkylidene groups of 5 to 12 carbon atoms which are represented by X and substituted by an alicyclic hydrocarbon group of 5 to 12 carbon atoms having one or more unsaturated groups, examples of the alicyclic hydrocarbon groups of 5 to 12 carbon atoms having one or more unsaturated bonds include 1-cyclohexenyl, and examples of the cycloalkylidene group of 5 to 12 carbon atoms include cyclohexylidene.

Examples of the fluorenylidenes which are represented by X and substituted by an aliphatic hydrocarbon group of 2 to 12 carbon atoms having one or more unsaturated bonds include 9,9-fluorenylidene.

Examples of the groups represented by R⁹, R¹⁰, R⁷ and R⁸ in the general formula (1b) are as follows. Examples of the alkyl groups of 1 to 6 carbon atoms include methyl, ethyl, n-propyl, isopropyl, n-butyl, sec-butyl, tert-butyl, isobutyl, n-pentyl, neopentyl and n-hexyl, with methyl, ethyl, n-propyl, isopropyl, n-butyl and tert-butyl preferred. Examples of the alkyloxy groups of 1 to 4 carbon atoms include methoxy, ethoxy, n-propyloxy, isopropoxy, n-butoxy, sec-butoxy, tert-butoxy and isobutoxy, with methoxy, ethoxy, isopropoxy and tert-butoxy preferred. Examples of the aryl groups of 6 to 12 carbon atoms include phenyl, naphthyl and biphenylyl, with phenyl preferred. Examples of the aryloxy groups of 6 to 12 carbon atoms include phenoxy, naphthoxy and biphenylyloxy, with phenoxy preferred. Examples of the substituents on the aryl groups and aryloxy groups include halogeno, alkyl groups of 1 to 4 carbon atoms, alkyloxy groups of 1 to 4 carbon atoms, aryl groups of 6 to 12 carbon atoms and aryloxy groups of 6 to 12 carbon atoms, with alkyl or alkoxyl groups of 1 to 4 carbon atoms and aryl groups of 6 to 12 carbon atoms preferred.

Examples of the divalent groups containing an arylene group and having no crosslinking functional groups in the side chains, which are represented by Y in the general formula (2a), include xylylene, phenylene, tolylene, naphthylene, anthracenylene, phenanthrenylene, pyrenylene and the groups represented by the following general formula (4): 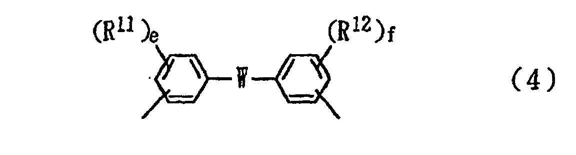 wherein R¹¹ and R¹² are each a halogeno, a saturated hydrocarbon group of 1 to 10 carbon atoms, an aromatic hydrocarbon group of 6 to 12 carbon atoms, an alkyloxy group of 1 to 10 carbon atoms, an alkylthio group of 1 to 10 carbon atoms, an aryloxy group of 6 to 12 carbon atoms or an arylthio group of 6 to 12 carbon atoms, e and f are each an integer of 0 to 4, W is a single bond, -O-, -CO-, -S-, -SO-, -SO₂-, -CR¹³R¹⁴-, a cycloalkylidene group of 5 to 12 carbon atoms or an α,ω-alkylene group of 2 to 12 carbon atoms (R¹³ and R¹⁴ being each hydrogen, trifluoromethyl, an alkyl group of 1 to 10 carbon atoms or an aromatic hydrocarbon group of 6 to 36 carbon atoms), or a group represented by the following general formula (5) 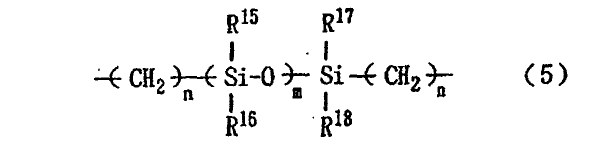 R¹⁵, R¹⁶, R¹⁷ and R¹⁸ being each an alkyl group of 1 to 4 carbon atoms or an aryl group of 6 to 36 carbon atoms, n being a number of 1 to 6 and m being a number of 1 to 150.

Examples of R¹¹, R¹², R¹³ and R¹⁴ in the general formula (2a) are as follows.

Preferred examples of the halogens represented by R¹¹ and R¹² are fluoro, chloro and bromo.

Examples of the saturated hydrocarbon groups of 1 to 10 carbon atoms and aromatic hydrocarbon groups of 6 to 12 carbon atoms include methyl, ethyl, propyl, butyl, sec-butyl, tert-butyl, pentyl, hexyl, heptyl, octyl, nonyl, decyl, cyclopentyl, cyclohexyl, phenyl, tolyl, biphenylyl and naphthyl.

Examples of the alkyloxy groups of 1 to 10 carbon atoms represented by R¹¹ and R¹² include methoxy, ethoxy, n-propyloxy, isopropoxy, n-butoxy, sec-butoxy, tert-butoxy, isobutoxy, pentyloxy, hexyloxy, heptyloxy, octyloxy, nonyloxy and decyloxy, with methoxy, ethoxy, isopropoxy and tert-butoxy preferred.

Examples of the alkylthio group of 1 to 10 carbon atoms represented by R¹¹ and R¹² include methylthio, ethylthio, n-propylthio, isopropylthio, n-butylthio, sec-butylthio, tert-butylthio, isobutylthio, pentylthio, hexylthio, heptylthio, octylthio, nonylthio and decylthio, with methylthio, ethylthio, isopropylthio and tert-butylthio preferred.

Examples of the aryloxy groups of 6 to 12 carbon atoms represented by R¹¹ and R¹² include phenyloxy, naphthyloxy and biphenylyloxy, with phenyloxy preferred.

Examples of the arylthio group of 6 to 12 carbon atoms represented by R¹¹ and R¹² include phenylthio, naphthylthio and biphenylylthio, with phenylthio preferred.

Examples of the alkyl groups of 1 to 10 carbon atoms and the aromatic hydrocarbon groups of 6 to 36 carbon atoms represented by R¹³ and R¹⁴ include methyl, ethyl, propyl, butyl, sec-butyl, tert-butyl, isobutyl, pentyl, hexyl, heptyl, octyl, nonyl, decyl, phenyl, tolyl, biphenylyl, naphthyl, terphenyl, phenanthryl and anthryl.

Examples of the groups represented by Z in the general formula (2b) are the same as those represented by the above general formula (5). Examples of R¹⁵, R¹⁶, R¹⁷ and R¹⁸ in the general formula (5) include methyl, ethyl, propyl, butyl and phenyl, and the phenyl may optionally be substituted by, for example, a halogeno or an alkyl group.

Among the above-described polycarbonate resins having crosslinking functional groups in the side chains, those particularly suitable as a binder resin material in crosslinked-type electrophotographic photoreceptors contain the repeating units (2a) represented by the general formula (2a) wherein Y is a divalent group represented by the general formula (3), namely the repeating units (3) represented by the following general formula (3) 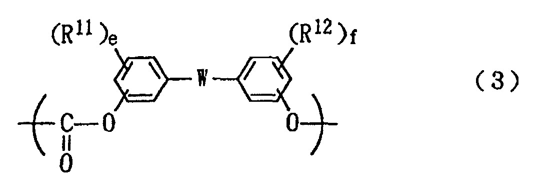 wherein R¹¹, R¹², e, f and W are as defined above.

Typical examples of the polycarbonate resins of the present invention are those containing at least one kind of the following repeating units as the repeating units (1) [(1a) and/or (1b)], particularly those containing at least one kind of these repeating units and at least one kind of the following repeating units as the repeating units (2a) and/or (2b).

### EXAMPLES OF REPEATING UNITS (1)

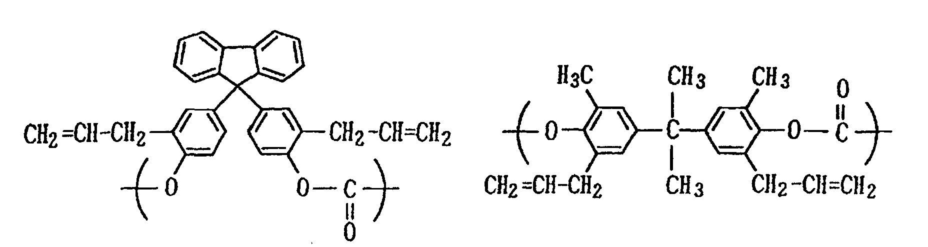

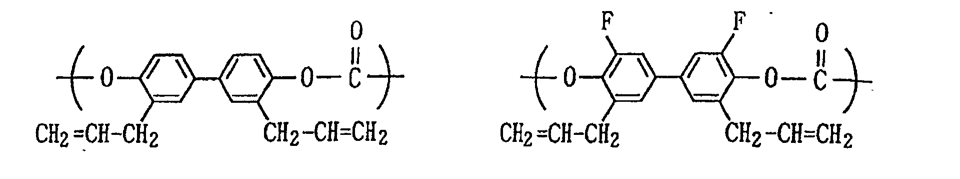

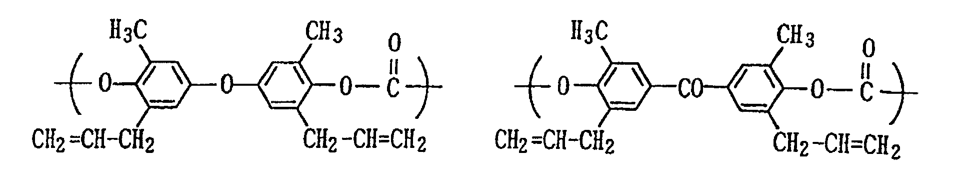

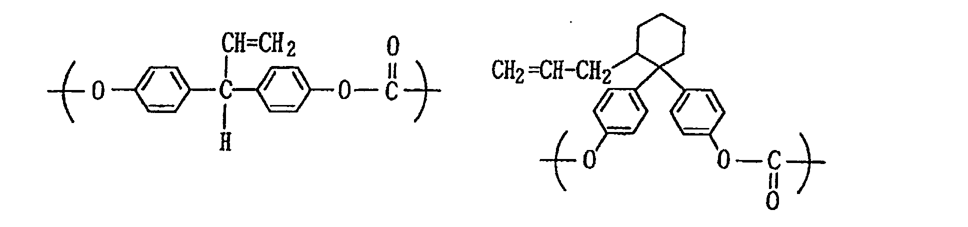

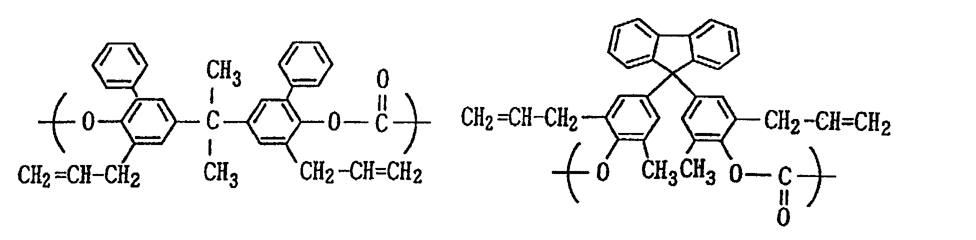

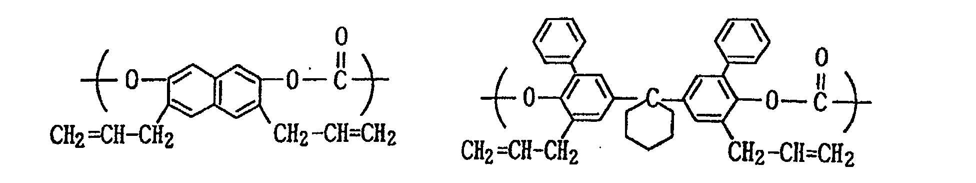

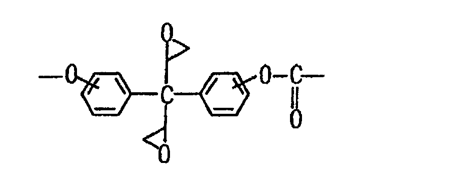

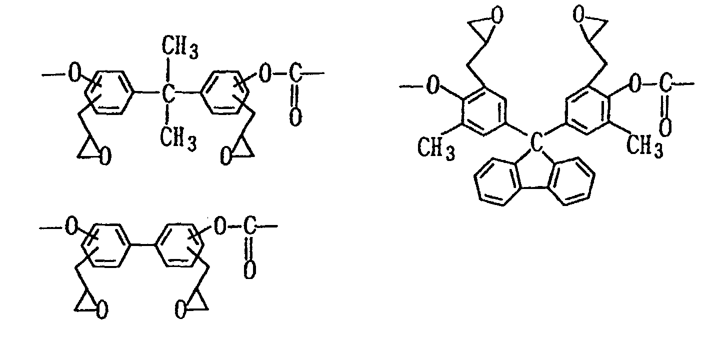

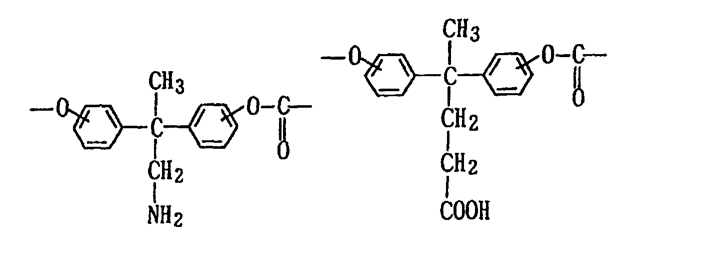

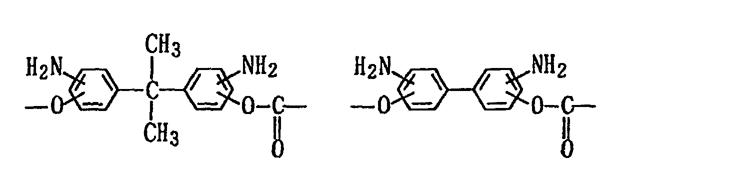

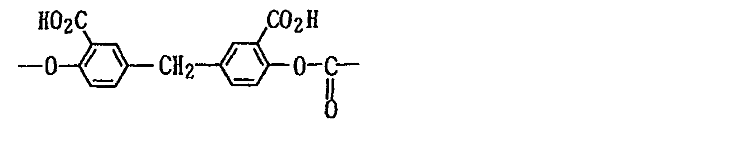

### EXAMPLES OF REPEATING UNITS (2a) AND (2b)

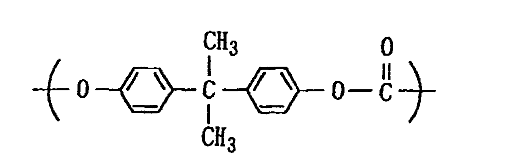

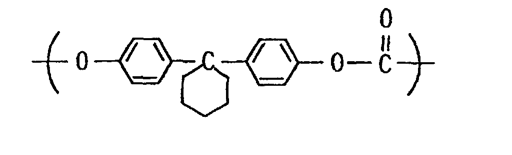

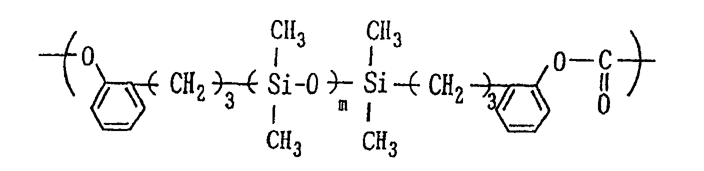

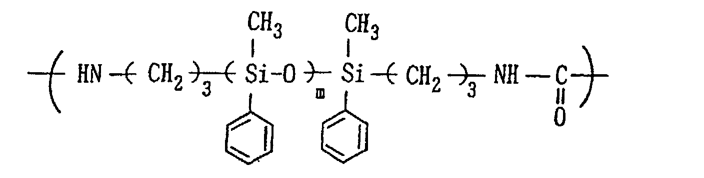

The polycarbonate resin of the present invention having crosslinking functional groups in the side chains may be synthesized, for example, by allowing a dihydric phenol (I) represented by the general formula HO-Ar-OH (I) together with a dihydric phenol (IIa) represented by the general formula HO-Y-OH (IIa) and/or a diamine (IIb) represented by the general formula NH₂-Z-NH₂ (IIb) to react with a carbonate precursor. The dihydric phenols (I) are specifically represented by the following general formulae (Ia) and (Ib). Preferred examples of the dihydric phenols (IIa) are represented by the following general formula (III).

According to a preferred method of synthesis, a carbonate precursor, such as phosgene, is polycondensed with the above-described dihydric phenols in the presence of an appropriate acid acceptor. An alternative is transesterification using a bisaryl carbonate as the carbonate precursor. These reactions are carried out in the optional presence of endcappers and/or branching agents. 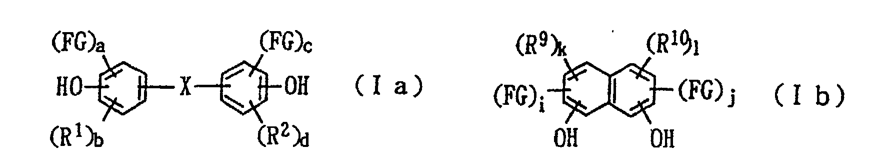 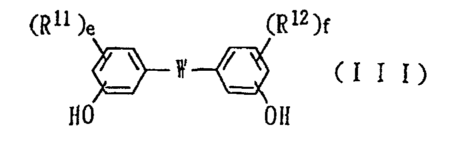 wherein, in the general formula (Ia), X, R¹, R², FG, a, b, c and d are as defined above, and in the general formula (Ib), FG, R⁹, R¹⁰, i, j, k and l are as defined above, and in the general formula (IIa), Y is as defined above, and in the general formula (III), W, R¹¹, R¹², e and f are as defined above, and in the general formula (IIb), Z is as defined above.

The above (IIa) and (IIb) may be used individually or in combination of two or more.

Examples of the dihydric phenols (Ia) represented by the general formula (Ia) are as follows.

Examples of the dihydric phenols (Ia) wherein X is single bond, fluorenylidene or a diphenylmethylidene wherein two phenyl groups are bonded by a methylene of 1 to 4 carbon atoms include the following compounds.

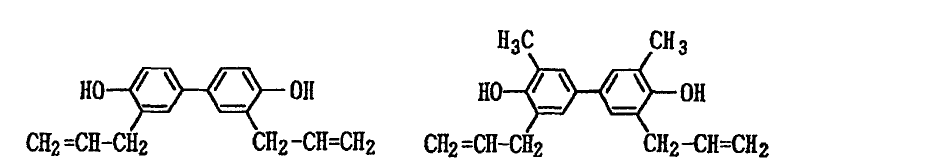

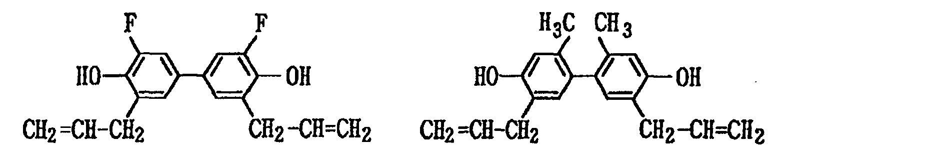

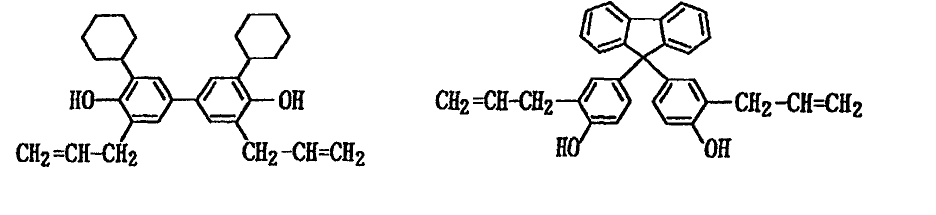

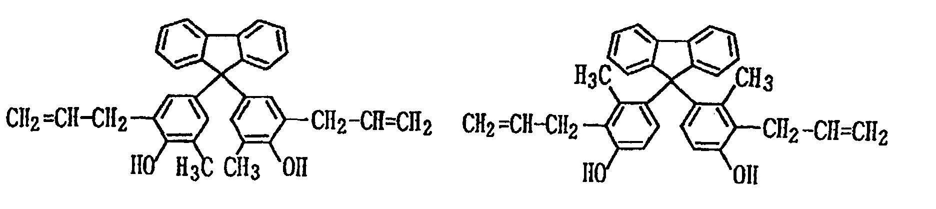

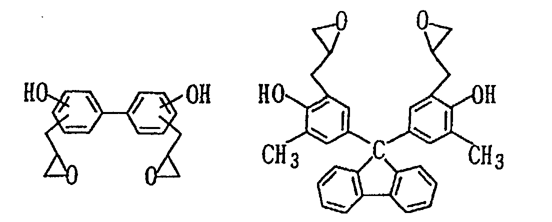

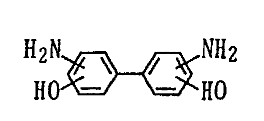

Other examples include 3,3'-divinyl-4,4'-dihydroxy-5,5'-dimethoxybiphenyl, 3,3'-diglycidyl-4,4'-dihydroxy-5,5'-diphenylbiphenyl, 3,3'-diglycidyl-4,4'-dihydroxy-5,5'-dimethylbiphenyl, 3,3'-diglycidyl-4,4'-dihydroxy-5,5'-dimethoxybiphenyl, 3,3'-diglycidyl-4,4'-dihydroxy-5,5'-dichlorobiphenyl, and 3,3'-diepoxy-4,4'-dihydroxybiphenyl.

Examples of the dihydric phenols (Ia) wherein X is -CO-, -S-, -SO-, -SO₂-, -O-, -CR³R⁴-, a cycloalkylene group of 5 to 12 carbon atoms, a cycloalkylidene group of 5 to 12 carbon atoms or an α,ω-alkylene group of 2 to 12 carbon atoms include the following compounds.

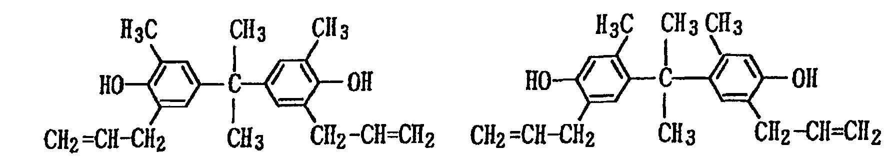

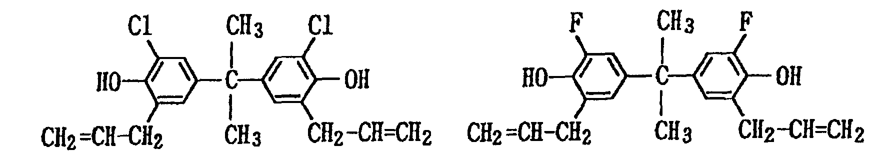

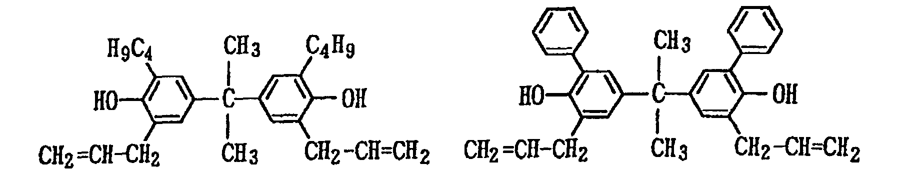

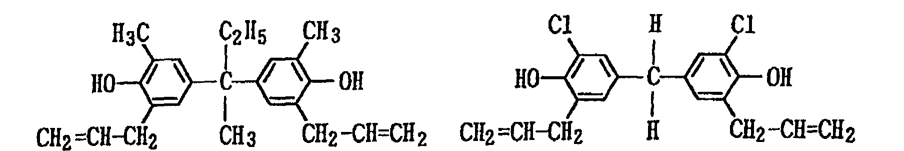

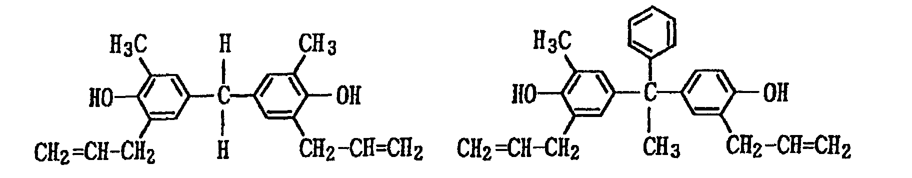

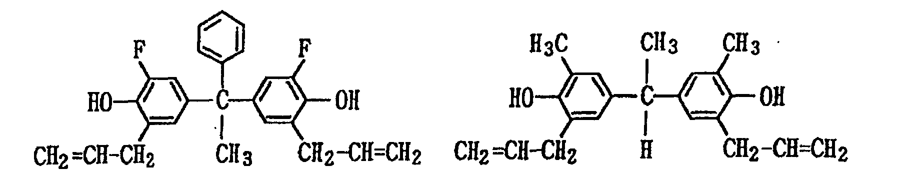

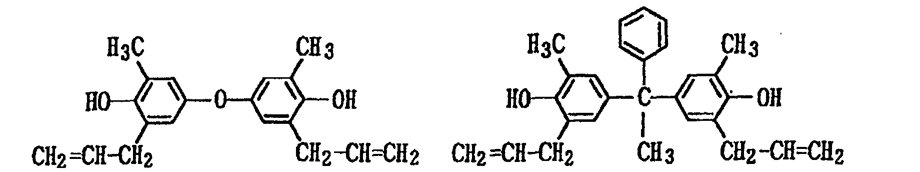

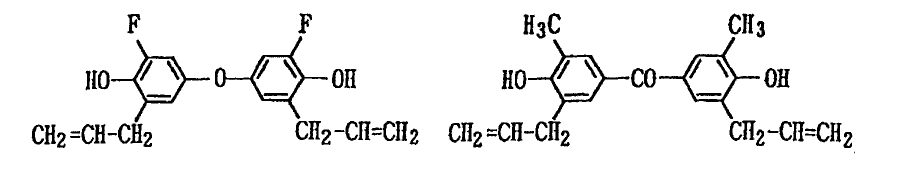

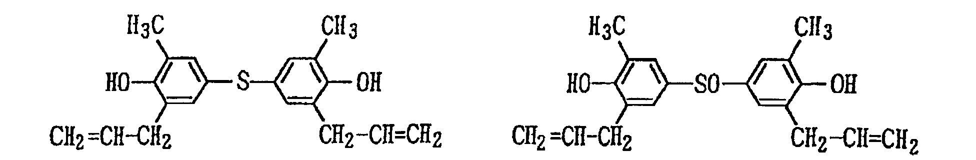

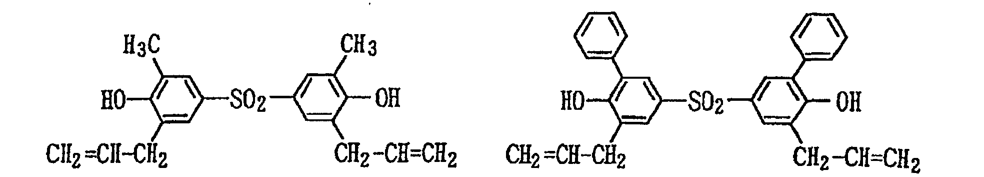

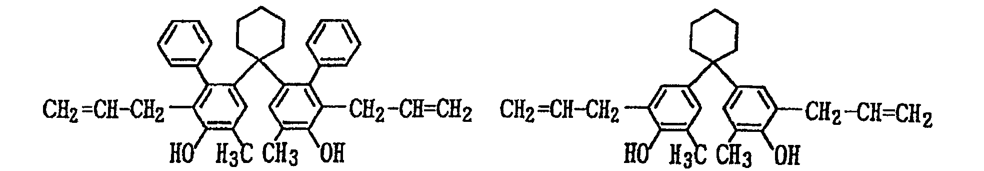

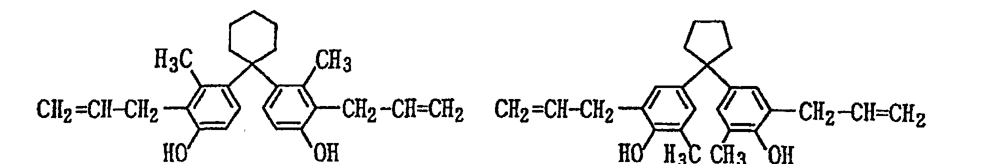

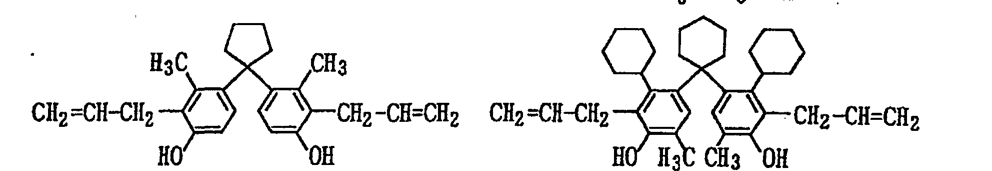

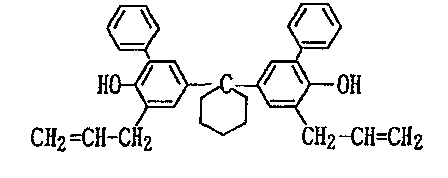

These dihydric phenols having allyl groups may be obtained by the Claisen rearrangement of corresponding allyl ethers.

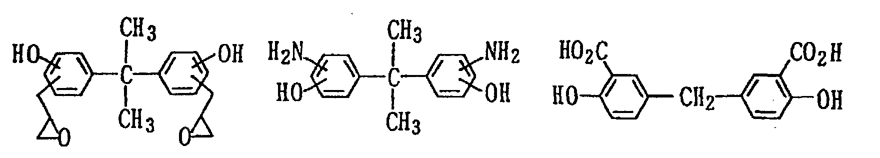

Examples the dihydric phenols (Ia) wherein X is -CR⁵R⁶-, a cycloalkylidene group of 5 to 12 carbon atoms which is substituted by an aliphatic hydrocarbon group of 2 to 12 carbon atoms having one or more unsaturated bonds, or a fluorenylidene which is substituted by an aliphatic hydrocarbon group of 2 to 12 carbon atoms having one or more unsaturated bonds, are as follows.

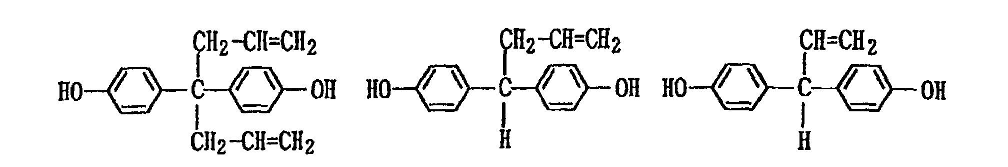

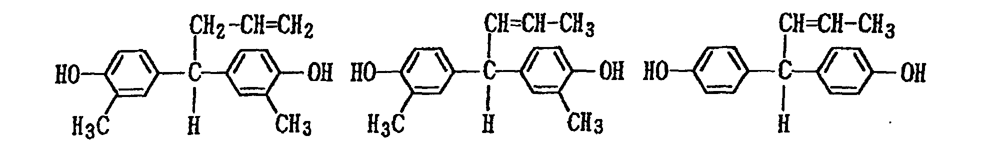

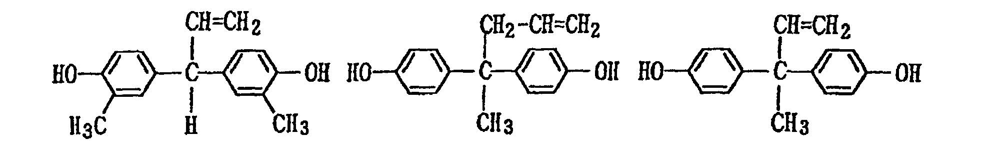

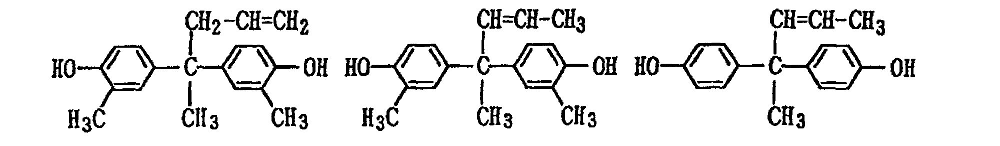

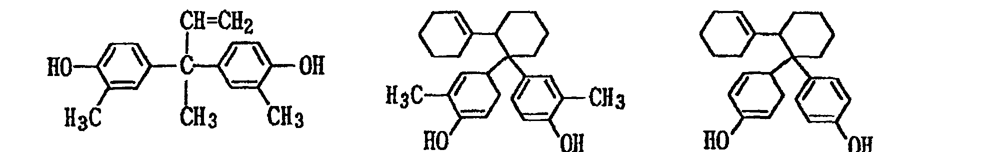

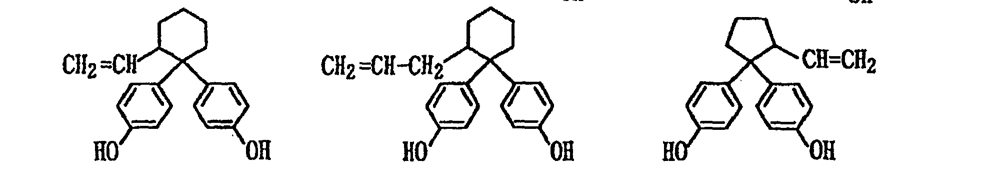

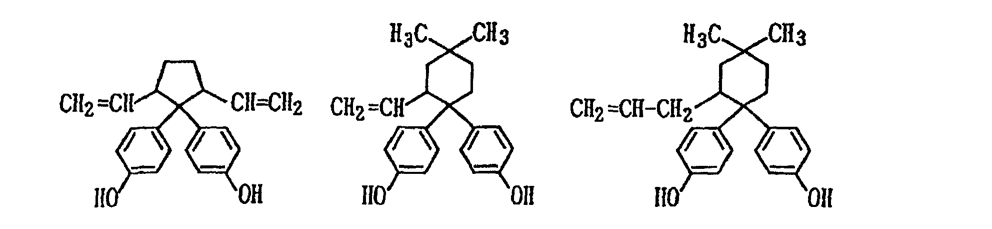

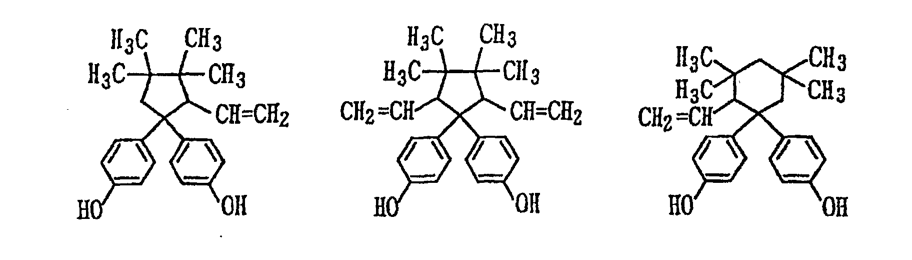

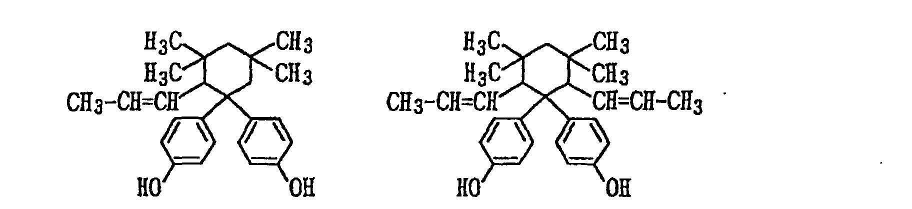

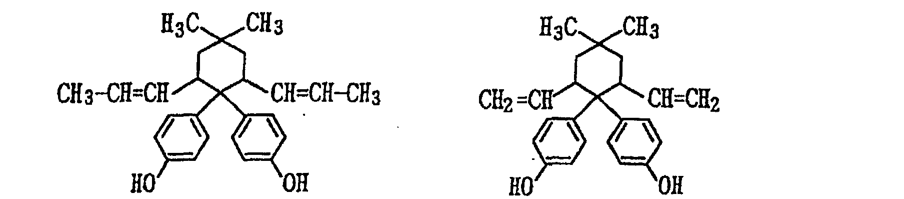

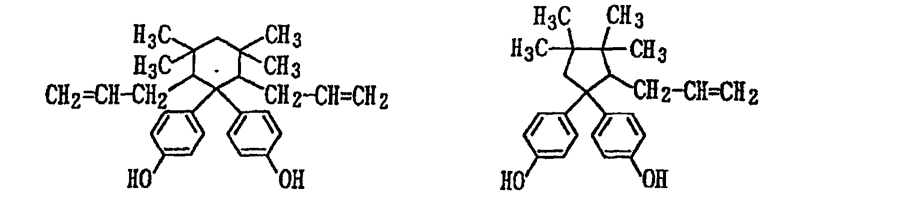

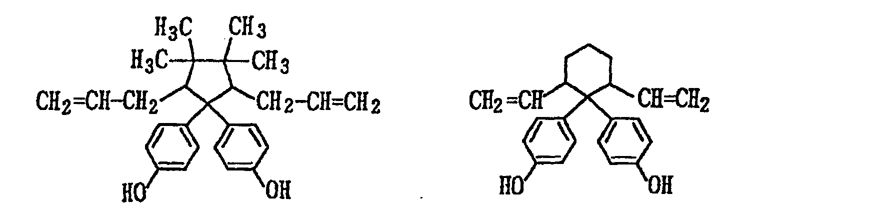

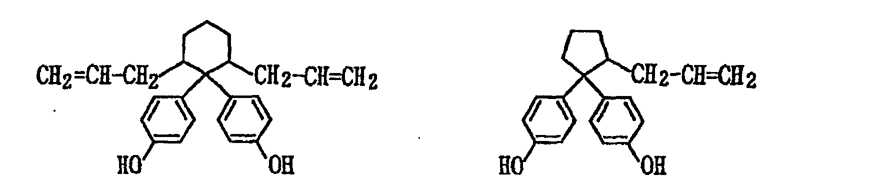

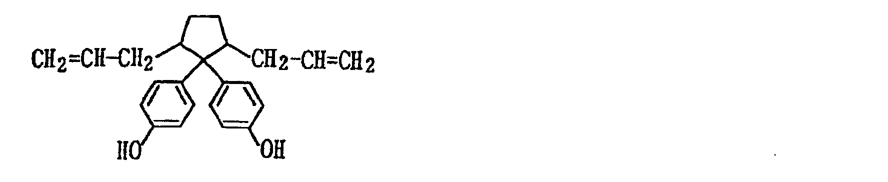

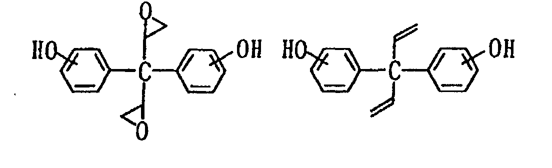

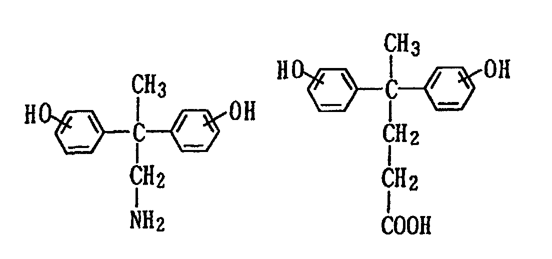

The above-described dihydric phenols (Ia) are obtainable by the condensation of corresponding ketones having reactive unsaturated bonds with phenols, such as phenol or cresol.

Examples of the dihydric phenols (Ib) represented by the general formula (Ib) include 2,7-diallyl-3,6-dihydroxyhaphthalene, 3,6-divinyl-2,7-dihydroxyhaphthalene, 1,8-diallyl-2,7-dihydroxynaphthalene, 2,5-diallyl-3,6-dihydroxynaphthalene, 2,6-diallyl-3,7-dihydroxynaphthalene, 1,6-diallyl-2,7-dihydroxynaphthalene, 3,6-diallyl-2,7-dihydroxynaphthalene, 3,8-diallyl-2,7-dihydroxynaphthalene, 3,6-diglycidyl-2,7-dihydroxynaphthalene, 1,8-diglycidyl-2,7-dihydroxynaphthalene and 3,8-diglycidyl-2,7-dihydroxynaphthalene.

These dihydric phenols (I) may be used individually or in combination of two or more.

Preferred diamines represented by the general formula NH₂-Z-NH₂ (IIb) are the following diamines having a siloxane skeleton.

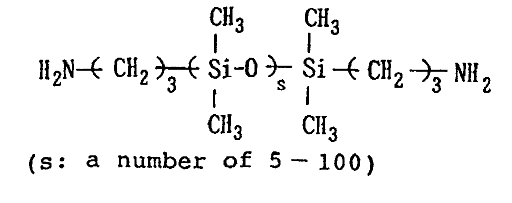

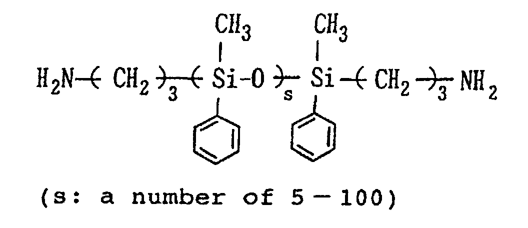

Examples of the dihydric phenols (III) represented by the general formula (III) include 4,4'-dihydroxybiphenyls, such as 4,4'-dihydroxybiphenyl, 3,3'-difluoro-4,4'-dihydroxybiphenyl, 4,4'-dihydroxy-3,3'-dimethylbiphenyl, 4,4'-dihydroxy-2,2'-dimethylbiphenyl and 4,4'-dihydroxy-3,3'-dicyclohexylbiphenyl; bis(4-hydroxyphenyl)alkanes, such as bis(4-hydroxyphenyl)methane, 1,1-bis(4-hydroxyphenyl)ethane, 1,2-bis(4-hydroxyphenyl)ethane, 2,2-bis(4-hydroxyphenyl)propane (alias bisphenol A), 2,2-bis(3-methyl-4-hydroxyphenyl)butane, 2,2-bis(4-hydroxyphenyl)butane, 2,2-bis(4-hydroxyphenyl)octane, 4,4-bis(4-hydroxyphenyl)heptane, 1,1-bis(4-hydroxyphenyl)-1,1-diphenylmethane, 1,1-bis(4-hydroxyphenyl)-1-phenylethane, 1,1-bis(4-hydroxyphenyl)-1-phenylmethane, 1,1-bis(4-hydroxyphenyl)cyclopentane, 1,1-bis(4-hydroxyphenyl)cyclohexane, 2,2-bis(3-methyl-4-hydroxyphenyl)propane, 2-(3-methyl-4-hydroxyphenyl)-2-(4-hydroxyphnenyl)-1-phenylethane, bis(3-methyl-4-hydroxyphenyl)methane, 1,1-bis(3-methyl-4-hydroxyphenyl)cyclohexane, 2,2-bis(2-methyl-4-hydroxyphenyl)propane, 1,1-bis(2-butyl-4-hydroxy-5-methylphenyl)butane, 1,1-bis(2-tert-butyl-4-hydroxy-3-methylphenyl)ethane, 1,1-bis(2-tert-butyl-4-hydroxy-5-methylphenyl)propane, 1,1-bis(2-tert-butyl-4-hydroxy-5-methylphenyl)butane, 1,1-bis(2-tert-butyl-4-hydroxy-5-methylphenyl)isobutane, 1,1-bis(2-tert-butyl-4-hydroxy-5-methylphenyl)heptane, 1,1-bis(2-tert-butyl-4-hydroxy-5-methylphenyl)-1-phenylmethane, 1,1-bis(4-hydroxy-2-methyl-5-tert-pentylphenyl)butane, bis(3-chloro-4-hydroxyphenyl)methane, bis(3,5-dibromo-4-hydroxyphenyl)methane, 2,2-bis(3-chloro-4-hydroxyphenyl)propane, 2,2-bis(3-fluoro-4-hydroxyphenyl)propane, 2,2-bis(3-bromo-4-hydroxyphenyl)propane, 2,2-bis(3,5-difluoro-4-hydroxyphenyl)propane (alias tetrafluorobisphenol A), 2,2-bis(3,5-dichloro-4-hydroxyphenyl)propane (alias tetrachlorobisphenol A), 2,2-bis(3,5-dibromo-4-hydroxyphenyl)propane (alias tetrabromobisphenol A), 2,2-bis(3-bromo-4-hydroxy-5-chlorophenyl)propane, 2,2-bis(3,5-dichloro-4-hydroxyphenyl)butane, 2,2-bis(3,5-dibromo-4-hydroxyphenyl)butane, 1-phenyl-1,1-bis(3-fluoro-4-hydroxyphenyl)ethane, 1,1-bis(3-cyclohexyl-4-hydroxyphenyl)cyclohexane, 2,2-bis(3-hydroxyphenyl)-1,1,1,3,3,3-hexafluoropropane, 2,2-bis(3-phenyl-4-hydroxyphenyl)propane and 1,1-bis(3-phenyl-4-hydroxyphenyl)cyclohexane; bis(4-hydroxyphenyl)ethers, such as bis(4-hydroxyphenyl)ether and bis(3-fluoro-4-hydroxyphenyl)ether; bis(4-hydroxyphenyl)sulfides, such as bis(4-hydroxyphenyl)sulfide and bis(3-methyl-4-hydroxyphenyl)sulfide; bis(4-hydroxyphenyl)sulfones, such as bis(4-hydroxyphenyl)sulfone, bis(3-methyl-4-hydroxyphenyl)sulfone and bis(3-phenyl-4-hydroxyphenyl)sulfone; ketones, such as bis(4-hydroxyphenyl) ketone;

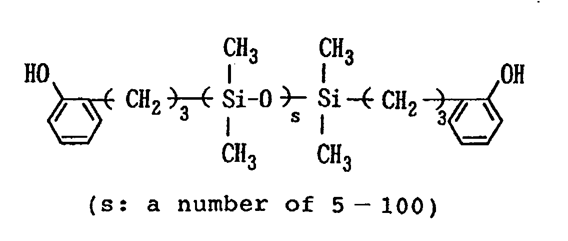

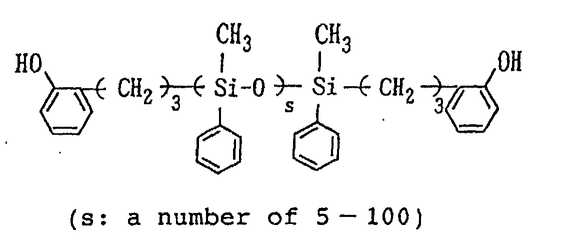

Preferred among these are bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl) ketone, 1,1-bis(4-hydroxyphenyl)ethane, 2,2-bis(4-hydroxyphenyl)propane, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane and the bisphenols having the siloxane skeletons.

These dihydric phenols (IIa), such as the dihydric phenols (III) and, the diamines (IIb) may be used individually or in combination of two or more.

Endcappers useful for the production of the polycarbonate resins of the present invention are monocarboxylic acids and derivatives thereof and monohydric phenols. Preferred examples of such endcappers include p-(tert-butyl)phenol, p-phenylphenol, p-(perfluorononylphenyl)phenol, p-(perfluoroxylphenyl)phenol, p-tert-perfluorobutylphenol, 1-(p-hydroxybenzyl)perfluorodecane, p-(2-(1H,1H-perfluorotridecyloxy)-1,1,1,3,3,3-hexafluoropropyl)phenol, 3,5-bis(perfluorohexyloxycarbonyl)phenol, perfluorodecenyl p-hydroxybenzoate, p-(1H,1H-perfluorooctyloxy)phenol and 2H,2H,9H-perfluorononanoic acid.

The copolymerization ratio of the total of the endcappers is preferably 1 to 30 mol%, more preferably 1 to 10 mol%. If it is more than 30 mol%, photosensitive layers may be subject to abrasion due to poor surface hardness and have shorter printing life, and if less than 1 mol%, solution viscosity may become too high to produce photoreceptors by liquid-coating methods.

Useful branching agents are phenols or carboxylic acids of trivalent or more. Examples of such branching agents include phloroglucinol, pyrogallol, 4,6-dimethyl-2,4,6-tris(4-hydroxyphenyl)-2-heptene, 2,4-dimethyl-2,4,6-tris(4-hydroxyphenyl)heptane, 2,6-dimethyl-2,4,6-tris(4-hydroxyphenyl)-3-heptene, 1,3,5-tris(2-hydroxyphenyl)benzene, 1,3,5-tris(4-hydroxyphenyl)benzene, 1,1,1-tris(4-hydroxyphenyl)ethane, tris(4-hydroxyphenyl)phenylmethane, 2,2-bis{4,4-bis(4-hydroxyphenyl)cyclohexyl}propane, 2,4-bis{2-(4-hydroxyphenyl)-2-propyl}phenol, 2,6-bis(2-hydroxy-5-methylbenzyl)-4-methylphenol, 2-(4-hydroxyphenyl)-2-(2,4-dihydroxyphenyl)propane, tetrakis (4-hydroxyphenyl)methane, tetrakis(4-(4-hydroxyphenylisopropyl)phenoxy)methane, 1,4-bis(4',4''-dihydroxytriphenylmethyl)benzene, 2,4-dihydroxybenzoic acid, trimesic acid, cyanuric acid, 3,3-bis(3-methyl-4-hydroxyphenyl)-2-oxo-2,3-dihydroindole, 3,3-bis(4-hydroxyaryl)oxyindoles, 5-chloroisatin, 5,7-dichloroisatin and 5-bromoisatin.

Preferred examples among these are phloroglucinol, 1,3,5-tris(4-hydroxyphenyl)benzene and 1.1.1-tris(4-hydroxyphenyl)ethane.

The copolymerization ratio of the branching agents is preferably 30 mol% or less, more preferably 5 mol% or less. If it is more than 30 mol%, solution viscosity may become too high to produce photoreceptors by liquid-coating methods.

The polycondensation in the presence of an acid acceptor by using a carbonate precursor, for example, a carbonyl dihalide such as phosgene, a haloformate, such as chloroformate, or a carbonate compound, is ordinarily carried out in a solvent. In cases where a gaseous carbonate precursor, such as phosgene, is used, it is preferable to blow it into the reaction system.

The amount of the carbonate precursor may be determined based on the stoichiometric ratio (equivalent) for the reaction.

Examples of usable acid acceptors are alkali metal hydroxides, such as sodium hydroxide and potassium hydroxide, alkali metal carbonates, such as sodium carbonate and potassium carbonate, organic bases, such as pyridine, and mixtures thereof.

The amount of the acid acceptor may be determined based on the stoichiometric ratio (equivalent) for the reaction. That is, it is desirable to use at least two equivalents, preferably 2 to 10 equivalents of the acid acceptor per mole (generally, one mole corresponds to two equivalents) of the total of dihydric phenols and diamines.

Various solvents may be used, including the common solvents for the production of known polycarbonate resins, and may be used individually or as a solvent mixture. Typical solvents are hydrocarbons, such as toluene and xylene, and hydrocarbon halides, such as methylene chloride, chloroform and chlorobenzene. Interfacial polycondensation may also be carried out by using two solvents non-compatible with each other.

To accelerate the polycondensation, it is desirable to add a catalyst, for example a tertiary amine, such as triethylamine, or a quaternary ammonium salt, to the reaction system. A small amount of an antioxidant, such as sodium sulfite or hydrosulfide, may also be added according to demands. The reaction is generally carried out at a temperature of 0 to 150°C, preferably 5 to 40°C. The reaction may be carried out at a reduced pressure, atmospheric pressure or an applied pressure, and generally proceeds sufficiently at atmospheric pressure or at the pressure in the reaction system. The reaction time depends on the reaction temperature or the like, and is generally 0.5 minutes to 10 hours, preferably one minutes to two hours.

The reduced viscosity of the product polycarbonate resin can be adjusted within the above-described range by various methods, for example, by optimizing the above-described reaction conditions or the amounts of the branching agents and endcappers. The product polycarbonate resin may optionally be treated mechanically (mixing, fractionation or the like) and/or chemically (polymer reactions, partial decomposition or the like), to obtain a polycarbonate of a directed reduced viscosity.

### 2. Polycarbonate resins having crosslinking functional groups in the main chain;

The polycarbonate resin of the present invention having crosslinking functional groups in the main chain comprises the repeating units (7) or (8) represented by the general formula (7) or (8) and the repeating units (2a) represented by the general formula (2a) and/or the repeating units (2b) represented by the general formula (2b), in a molar ratio of the repeating units (7) or (8) to the total of the repeating units (7) or (8), the repeating units (2a) and the repeating units (2b), (7) or (8)]/{[(7) or (8)]+(2a)+(2b)}, of 0.001-1, preferably 0.01-1. The molar ratio of [(7) or (8)]/{((7) or (8)]+(2a)+(2b)} is preferably 0.05-0.70, more preferably 0.1-0.5.

The repeating units (7) represented by the general formula (7) have crosslinking epoxy groups in the main chain.

The halogenos represented by R²⁵, R²⁶, R²⁷ and R²⁸ in the general formula (7) are fluoro, chloro, bromo and iodo, with chloro preferred.

Examples of the alkyl groups of 1 to 10 carbon atoms represented by R²⁵, R²⁶, R²⁷ and R²⁸ in the general formula (7) include methyl, ethyl, n-propyl. isopropyl, n-butyl, sec-butyl, tert-butyl, isobutyl, n-pentyl, neopentyl, n-hexyl, heptyl, octyl. nonyl and decyl, with methyl, ethyl, n-propyl, isopropyl, n-butyl and tert-butyl preferred.

Examples of the cycloalkyl groups of 5 to 11 carbon atoms represented by R²⁵, R²⁶, R²⁷ and R²⁸ in the general formula (7) include cyclopentyl, cyclohexyl and cycloheptyl.

Examples of the alkyloxy groups of 1 to 10 carbon atoms represented by R²⁵, R²⁶, R²⁷ and R²⁸ in the general formula (7) include methoxy, ethoxy, n-propyloxy, isopropoxy, n-butoxy, sec-butoxy, tert-butoxy, isobutoxy, pentyloxy, hexyloxy, heptyloxy, octyloxy, nonyloxy and decyloxy, with methoxy, ethoxy, isopropoxy and tert-butoxy preferred.

Examples of the alkylthio groups of 1 to 10 carbon atoms represented by R²⁵, R²⁶, R²⁷ and R²⁸ in the general formula (7) include methylthio, ethylthio, propylthio. isopropylthio, butylthio, sec-butylthio, tert-butylthio, isobutylthio, pentylthio, hexylthio, heptylthio, octylthio, nonylthio and decylthio, with methylthio, ethylthio, isopropylthio and tert-butylthio preferred.

Examples of the aryl groups of 6 to 24 carbon atoms represented by R²⁵, R²⁶, R²⁷ and R²⁸ in the general formula (7) include phenyl, naphthyl, biphenylyl, terphenyl, quaterphenyl, anthracenyl and phenanthrenyl, with phenyl preferred.

Examples of the aryloxy groups of 6 to 12 carbon atoms represented by R²⁵, R²⁶, R²⁷ and R²⁸ in the general formula (7) include phenyloxy, naphthyloxy and biphenylyloxy, with phenyloxy preferred.

Examples of the arylthio groups of 6 to 12 carbon atoms represented by R²⁵, R²⁶, R²⁷ and R²⁸ in the general formula (7) include phenylthio, naphthylthio and biphenylylthio, with phenylthio preferred.

Examples of the substituents on the alkyl groups and alkyloxy groups represented by R²⁵, R²⁶, R²⁷ and R²⁸ include halogenos including fluoro, chloro, bromo and iodo, aromatic hydrocarbons of 6 to 12 carbon atoms, such as phenyl, naphthyl and biphenyl, alkoxyls of 1 to 4 carbon atoms, such as methoxy, ethoxy, propoxy, isopropoxy, butoxy, sec-butoxy, tert-butoxy and isobutoxy, alkylthio groups of 1 to 4 carbon atoms, such as methylthio and arylthio groups of 6 to 12 carbon atoms, such as phenylthio, and one or more of these substituents may optionally be bonded to any replaceable positions.

Examples of the substituents on the aryl groups and aryloxy groups represented by R²⁵, R²⁶, R²⁷ and R²⁸ include halogenos including fluoro, chloro, bromo and iodo, alkyl groups of 1 to 4 carbon atoms, such as methyl, ethyl, propyl, isopropyl, butyl, sec-butyl, tert-butyl and isobutyl, aromatic hydrocarbons of 6 to 12 carbon atoms, such as phenyl, naphthyl and biphenylyl, alkoxyls of 1 to 4 carbon atoms, such as methoxy, ethoxy, propoxy, isopropoxy, butoxy, sec-butoxy, tert-butoxy and isobutoxy, alkylthio groups of 1 to 4 carbon atoms, such as methylthio and arylthio groups of 6 to 12 carbon atoms, such as phenylthio, and one or more of these substituents may optionally be bonded to any replaceable positions.

Examples of the repeating units (7) include the following units:

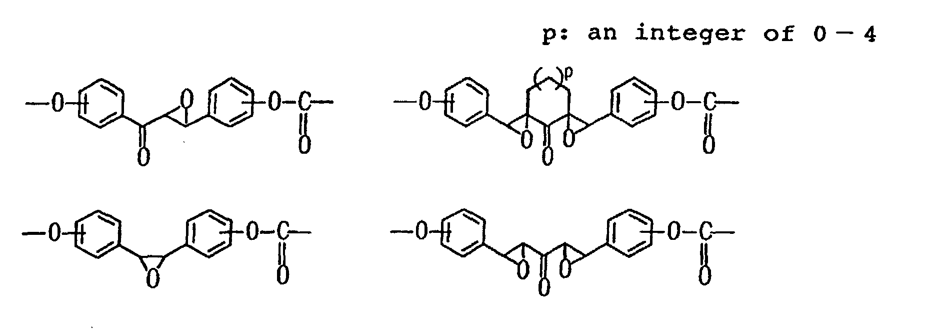

To introduce the repeating units (7) represented by the general formula (7), the dihydric phenols (VII-1) or (VII-2) represented by the following general formula (VII-1) or (VII-2) are used. 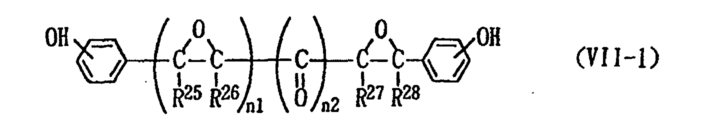 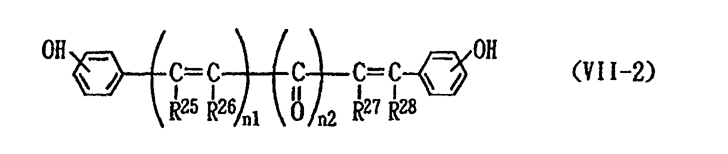 wherein R²⁵, R²⁶, R²⁷, R²⁸, n1 and n2 are as defined above.

Examples of the dihydric phenols (VII-1) and (VII-2) include the following compounds.

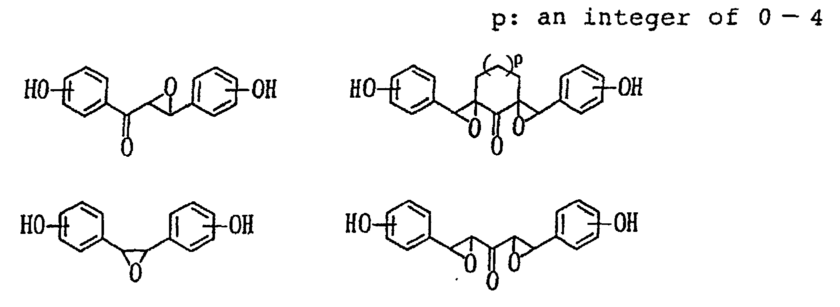

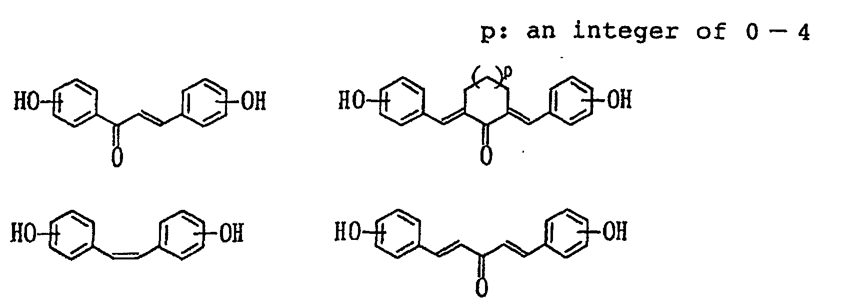

In cases where the repeating units (7) are introduced by using the dihydric phenols (VII-2), polycarbonate resins having epoxy groups in the main chain can be produced by synthesizing a polycarbonate resin by using a dihydric phenols (VII-2), and then reacting the obtained precursor polycarbonate resin in methylene chloride with excess metachloroperbenzoic acid per double bond.

The repeating units (8) represented by the general formula (8) contain crosslinking secondary amino groups in the main chain.

The halogenos represented by R in the general formula (8) are fluoro, chloro, bromo and iodo, with chloro preferred.

Examples of the alkyl groups of 1 to 10 carbon atoms represented by R in the general formula (8) include methyl, ethyl, n-propyl, isopropyl, n-butyl, sec-butyl, tert-butyl, isobutyl, n-pentyl, neopentyl, n-hexyl, heptyl, octyl, nonyl and decyl, with methyl, ethyl, n-propyl, isopropyl, n-butyl and tert-butyl preferred.

Examples of the cycloalkyl groups of 5 to 11 carbon atoms represented by R in the general formula (8) include cyclopentyl, cyclohexyl and cycloheptyl.

Examples of the alkyloxy groups of 1 to 10 carbon atoms represented by R in the general formula (8) include methoxy, ethoxy, n-propyloxy, isopropoxy, n-butoxy, sec-butoxy, tert-butoxy, isobutoxy, pentyloxy, hexyloxy, heptyloxy, octyloxy, nonyloxy and decyloxy, with methoxy, ethoxy, isopropoxy and tert-butoxy preferred.

Examples of the alkylthio groups of 1 to 10 carbon atoms represented by R in the general formula (8) include methylthio, ethylthio, propylthio, isopropylthio, butylthio, sec-butylthio, tert-butylthio, isobutylthio, pentylthio, hexylthio, heptylthio, octylthio, nonylthio and decylthio, with methylthio, ethylthio, isopropylthio and tert-butylthio preferred.

Examples of the aryl groups of 6 to 24 carbon atoms represented by R in the general formula (8) include phenyl, naphthyl, biphenylyl, terphenyl, quaterphenyl, anthracenyl and phenanthrenyl, with phenyl preferred.

Examples of the aryloxy groups of 6 to 12 carbon atoms represented by R in the general formula (8) include phenyloxy, naphthyloxy and biphenylyloxy, with phenyloxy preferred.

Examples of the arylthio groups of 6 to 12 carbon atoms represented by R in the general formula (8) include phenylthio, naphthylthio and biphenylylthio, with phenylthio preferred.

Examples of the substituents on the alkyl groups and alkyloxy groups represented by R include halogenos including fluoro, chloro, bromo and iodo, aromatic hydrocarbons of 6 to 12 carbon atoms, such as phenyl, naphthyl and biphenyl, alkoxyls of 1 to 4 carbon atoms, such as methoxy, ethoxy, propoxy, isopropoxy, butoxy, sec-butoxy, tert-butoxy and isobutoxy, alkylthio groups of 1 to 4 carbon atoms, such as methylthio, and arylthio groups of 6 to 12 carbon atoms, such as phenylthio, and one or more of these substituents may optionally be bonded to any replaceable positions.

Examples of the substituents on the aryl groups, cycloalkyl groups and aryloxy groups represented by R include halogenos including fluoro, chloro, bromo and iodo, alkyl groups of 1 to 4 carbon atoms, such as methyl, ethyl, propyl, isopropyl, butyl, sec-butyl, tert-butyl and isobutyl, aromatic hydrocarbons of 6 to 12 carbon atoms, such as phenyl, naphthyl and biphenylyl, alkoxyls of 1 to 4 carbon atoms, such as methoxy, ethoxy, propoxy, isopropoxy, butoxy, sec-butoxy, tert-butoxy and isobutoxy, alkylthio groups of 1 to 4 carbon atoms, such as methylthio, and arylthio groups of 6 to 12 carbon atoms, such as phenylthio, and one or more of these substituents may optionally be bonded to any replaceable positions.

An example of the repeating units (8) is shown below:

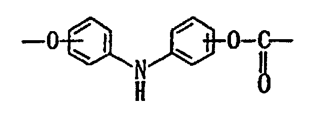

To introduce the repeating units (8) represented by the general formula (8), the dihydric phenols (VIII) represented by the following general formula (VIII) are used: 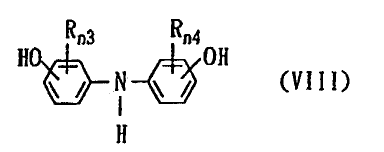 wherein R, n3 and n4 are as defined above.

An example of the dihydric phenols (VIII) is shown below.

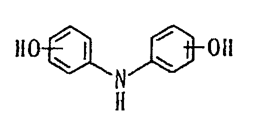

The method of producing the polycarbonate resins having crosslinking functional groups in the main chain is similar to those described above, and the dihydric phenols and the preferred examples thereof to be used for the introduction of the repeating units (2a) and/or (2b) are the same as those described above.

### 3. Polycarbonate resins having crosslinking functional groups in the ends

The present invention further provides polycarbonate resins which have not only the above-described crosslinking functional groups in the side chains or main chain but also the crosslinking functional groups represented by the following general formula (E1'), (E2) or (E3) at the ends.

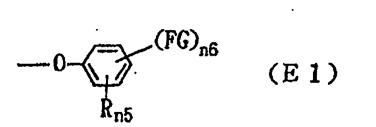

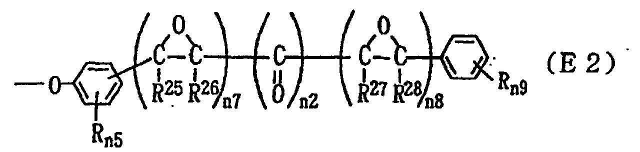

―O-FG (E 3)

wherein, in the general formulae (E1'), (E2) and (E3), R is as defined above, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are as defined above, n7 and n8 are each 0 or 1, n7+n8 is 1 or 2, n2 is 0 or 1, FG is as defined above, and two -COOH in one end group may form the following structure.

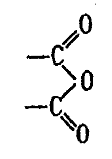

Examples of the end groups (E1') include the following:

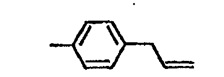

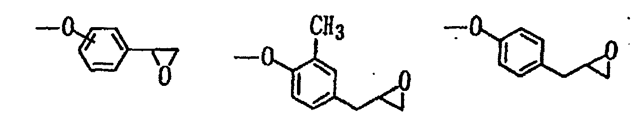

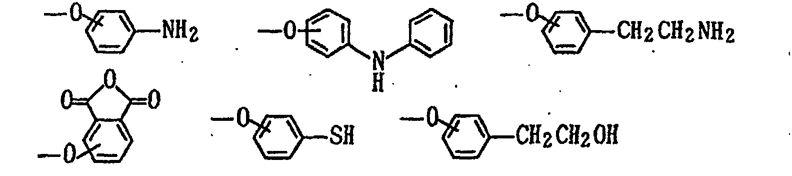

An example of the end groups (E2) is shown below:

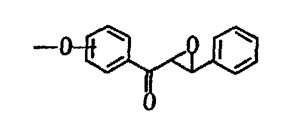

Examples of the end groups (E3) include the following groups:

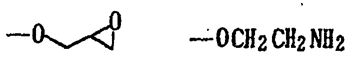

To introduce the end groups (E1'), the monohydric phenols (EI-1) represented by the following general, formula (EI-1) is used. (E1') having FG containing an epoxy group can also be introduced by introducing a reactive carbon-carbon double bond into the ends of a polycarbonate resin by using the monohydric phenols (EI-2) represented by the following general formula (EI-2), and then epoxidizing the carbon-carbon double bonds as described above. 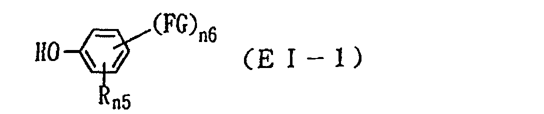 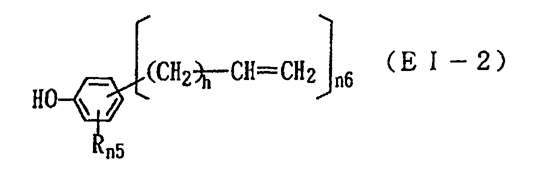 (wherein R, FG, h, n5 and n6 are as defined above)

Examples of the monohydric phenols (EI-1) and (EI-2) include the following compounds:

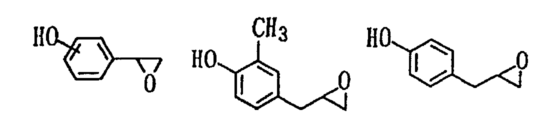

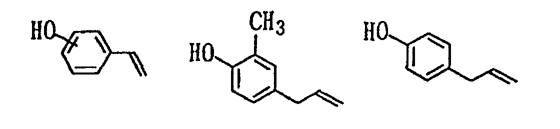

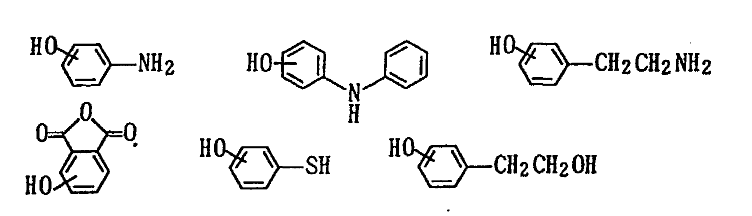

To introduce the end groups (E2), the monohydric phenols (EII-1) represented by the following general formula (EII-1) are used. (E2) having FG containing an epoxy group can also be introduced by introducing a reactive carbon-carbon double bond into the ends of a polycarbonate resin by using a monohydric phenol (EII-2) represented by the following general formula (EII-2), and then epoxidizing the carbon-carbon double bonds as described above. 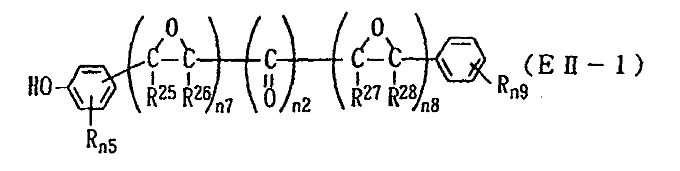 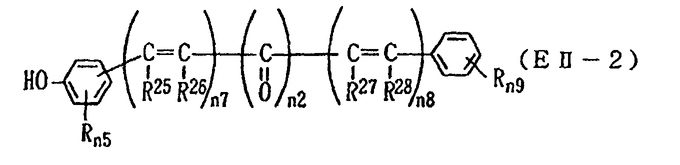 (wherein R, R²⁵, R²⁶, R²⁷, R²⁸, n2, n5, n7, n8 and n9 are as defined above)

Examples of the monohydric phenols (EII-1) and (EII-2) include the following compounds:

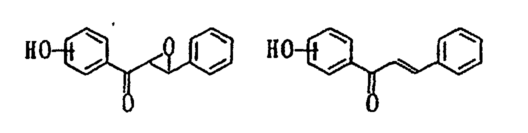

To introduce the end groups (E3), the monohydric phenols (EIII-1) represented by the general formula (EIII-1) are used. (E3) having FG containing an epoxy group can also be introduced by introducing a reactive carbon-carbon double bond into the ends of a polycarbonate resin by using a monohydric phenol (EIII-2) represented by the following general formula (EIII-2), and then epoxidizing the carbon-carbon double bonds as described above.

HO-FG (E III - 1)

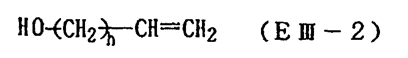

(wherein FG is as defined above)

Examples of the monohydric phenols (EIII-1) and (EIII-2) include the following compounds:

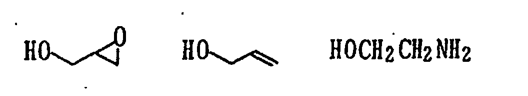

The present invention further provides a polycarbonate resin which comprises the following repeating units (2a) and/or (2b), each having no crosslinking functional groups, and the following end groups (E1'), (E2) or (E3) each having crosslinking functional groups:

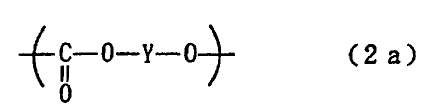

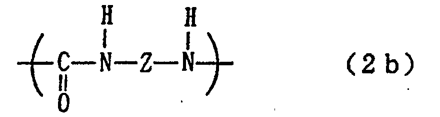

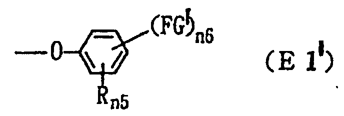

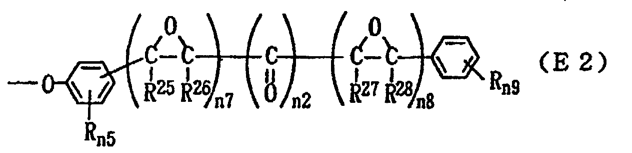

―O-FG (E 3)

wherein Y, Z, R, R²⁵, R²⁶, R²⁷, R²⁸, FG, n2, n5, n7, n8 and n9 are as defined above.

Examples of the repeating units (2a), (2b), (E1'), (E2) and (E3) and examples of dihydric phenols and monohydric phenols to be used for the introduction of these units are the same as those described above.

An alternative for the introduction of reactive carbon-carbon double bonds in the ends of a polycarbonate resin is the use of endcappers having unsaturated groups, for example, unsaturated carboxylic acids, such as acrylic acid, methacrylic acid, vinyl acetate, 2-pentenoic acid, 3-pentenoic acid, 5-hexenoic acid and 9-decenoic acid, add chlorides or chloroformates thereof, such as acrylic chloride, methacrylic chloride, sorbic chloride, allyl alcohol chloroformate and isopropenylphenol chloroformate, and phenols having unsaturated groups, such as eugenol, isopropenylphenol, N-(4-hydroxyphenyl)maleimide, allyl hydroxybenzoate and allyl (hydroxymethyl)benzoate.

In the production of the polycarbonate resins having crosslinking functional groups in the ends, the amount of the above-described monohydric phenols to be used for the introduction of the end groups having crosslinking functional groups is generally 0.01 to 0.25 mol per mol of dihydric phenols. These endcappers having unsaturated groups may be used together with endcappers having no unsaturated groups.

### [Crosslinked polycarbonate resins]

The crosslinked polycarbonate resins of the present invention are produced by crosslinking the above-described polycarbonate resins of the present invention.

All crosslinking functional groups of the polycarbonate resins to be crosslinked for the production of the crosslinked polycarbonate resins, preferably, are the same in kind or are derivatives of a group.

Among the above-described polycarbonates, those with crosslinking functional groups having carbon-carbon unsaturated bonds can be crosslinked by common radical polymerizations with heat or irradiation with UV light, IR light, electron rays or microwave.

Examples of thermal polymerization initiators suitable for the crosslinking with heat (thermal polymerization) include azo compounds, such as 2,2'-azobisisobutyronitrile and 2,2'-azo-di-(2,4-dimethylvaleronitrile), peroxides, such as benzoyl peroxide, di-t-butyl peroxide, acetyl peroxide, t-butyl perbenzoate and methyl ethyl ketone peroxide, and persulfates, such as ammonium persulfate and potassium persulfate. Redox initiators, such as combinations of the above-described peroxides and cobalt naphthenate or aromatic amines, may also be used.

Examples of photo-initiators suitable for the crosslinking with irradiation with UV light include benzoin and derivatives thereof, such as benzoin and benzoin methyl ether, 4,4'-bis(dimethylamino)benzophenone, 2-chloroanthracene, 2-methylanthraquinone, thioxanthone, diphenyl disulfide and dimethyl dithiocarbamate, and the UV light intensity is generally 1 to 100 mJ/cm².

The crosslinking with ionizing radiation, such as electron rays, generally needs no catalysts, and the radiation intensity is generally 2 to 10 MeV.

These crosslinkings may be carried out in the presence of a monomer having ethylene double bonds. The amount of the monomer is preferably 1 to 50 % by weight of the total of the polycarbonate of the present invention and the monomer. Examples of the monomers having ethylene double bonds which are suitable for the present invention include diallyl isophthalate, diallyl carbonate, diallyl ether, divinylbenzene, styrene, acrylonitrile, methacrylonitrile, methyl acrylate, methyl methacrylate and acrylamide.

The amount of the above-described initiator is generally 0.01 to 20 % by weight, preferably 0.1 to 10 % by weight of the polycarbonate resin of the present invention or of the total of the polycarbonate resin and the monomer having ethylene double bonds. If it is less than 0.01 % by weight, crosslinking will proceed but take a long time.

The crosslinking by thermal polymerization is carried out generally at 50 to 160°C, preferably 60 to 140°C, the crosslinking by irradiation of UV light, etc. generally at 0 to 50°C, preferably 20 to 40°C.

The time of the crosslinking of the polycarbonate resin depends on the method of crosslinking, the kind and concentration of the monomer having ethylene double bonds and the kind of the initiator, and is generally 0.1 to 50 hours, preferably 0.1 to 25 hours. Reaction time of more than 50 hours is costly.

The crosslinking can proceed under any pressure ranging from reduced pressure to applied pressure, preferably under reduced pressure or atmospheric pressure.

Crosslinking can be confirmed by the polycarbonate resin's becoming insoluble in solvents, such as methylene chloride or dimethyl sulfoxide.

The polycarbonate resins having functional groups other than carbon-carbon unsaturated bonds can be crosslinked by an ionic crosslinking.

Ionic crosslinkings are classified into the crosslinking of polycarbonate resins having nucleophilic groups with electrophilic crosslinking agents, the crosslinking of polycarbonate resins having electrophilic groups with nucleophilic crosslinking agents, the crosslinking of polycarbonate resins having reactive groups polymerizable in the presence of Lewis acids with Lewis acid crosslinking agents, and the crosslinking of polycarbonate resins having nucleophilic groups with polycarbonate resins having electrophilic groups.

Examples of nucleophilic groups include -OH (including -OH occurring by the ring-opening of epoxy groups), -SH, -COOH, -NH₂, -NR'H, -NR'₂ (R' being, for example, an alkyl group or an aryl group), and -NH-. Examples of electrophilic groups include epoxy, halogeno, carbonyl, cyano, isocyanato, imino and sulfonic ester. Examples of reactive groups polymerizable in the presence of Lewis acids include epoxy, carbonyl and vinyl.

Examples of nucleophilic crosslinking agents include aliphatic polyamines, such as diethylenetriamine, triethylenetetramine, tetraethylenepentamine, hexamethylenediamine, N-aminoethylpiperazine, bis-aminopropylpiperazine, dicyandiamide, polyoxypropylenediamine, 3,3'-dimethyl-4,4'-diaminodicyclohexylmethane, 4,4'-diaminodicyclohexylmethane and isophoronediamine, aromatic amines, such as 4,4'-diaminodiphenylmethane, 4,4'-diaminodiphenylether, diaminodiphenylsulfone, phenylenediamine, toluylenediamine and xylylenediamine, tertiary amines, such as dimethylaminomethylphenol, and, ketimine, imidazoles, melamine resins, urea resins and phenolic resins.

Examples of electrophilic crosslinking agents include acid anhydrides, such as maleic anhydride, dodecenylsuccinic anhydride, chlorendic anhydride, sebacic anhydride, phthalic anhydride, pyromellitic anhydride, trimellitic anhydride, cyclopentanetetracarboxylic dihydrate, hexahydrophthalic anhydride, methylhexahydrophthalic anhydride, tetramethylenemaleic anhydride, tetrahydrophthalic anhydride, methyl-tetrahydrophthalic anhydride, endomethylenetetrahydrophthalic anhydride, methylendomethylenetetrahydrophthalic anhydride and methylnadic anhydride, isocyanates, blocked isocyanates, epoxy resins, such as bisphenol A epoxy resin (epoxy equivalent: generally 150 to 4000), novolac epoxy resins (epoxy equivalent; generally 150 to 4000), glycidyl-type resins, such as glycidyl esters of polybasic acids, glycidyl ethers of polyhydric alcohols, and glycidyl-addition products of polyamines, and non-glycidyl-type resins, such as dicyclopentadiene dioxide and vinylcyclohexene dioxide.

Examples of Lewis acid crosslinking agents include boron halide complexes, such as boron trifluoride·monomethylamine complex, boron trifluoride·triethanolamine complex, boron trifluoride·piperidine complex, boron trifluoride n-butyl etherate and boron trifluoride·amine complexes.

The crosslinked polycarbonate resins of the present invention can be produced by every combination of a nucleophilic group and an electrophilic crosslinking agent, every combination of an electrophilic group and a nucleophilic crosslinking agent, and every combination of a reactive group polymerizable in the presence of a Lewis acid and a Lewis acid crosslinking agent, each selected from those described above. Preferred combinations are as follows.
(1) a combination of a polycarbonate resin containing, as nucleophilic groups, amino groups, particularly -NH-, -NH₂- or -NHR⁷, and an epoxy resin as an electrophilic crosslinking agent;
(2) a combination of a polycarbonate resin containing, as nucleophilic groups, -CO₂H or -(CO₂)O and an epoxy resin as an electrophilic crosslinking agent;
(3) a combination of a polycarbonate resin containing, as nucleophilic groups, -OH and an epoxy resin as an electrophilic crosslinking agent;
(4) a combination of a polycarbonate resin containing, as nucleophilic groups, -SH and an epoxy resin as an electrophilic crosslinking agent;
(5) a combination of a polycarbonate resin containing, as electrophilic groups, epoxy groups and an aliphatic polyamine as a nucleophilic crosslinking agent; and
(6) a combination of a polycarbonate resin containing, as reactive groups polymerizable in the presence of a Lewis acid, epoxy groups and a boron halide as a Lewis acid crosslinking agent.

The amount of the crosslinking agents is generally 0.01 to 1.0 part by weight, preferably 0.05 to 0.5 parts by weight, per part by weight of the polycarbonate resins. If it is less than 0.01 part by weight, crosslinking may be insufficient, and if more than 1.0 part by weight, unreacted crosslinking agents may deteriorate the abrasion resistance of the crosslinked polycarbonate resins or the electrophotographic properties of electrophotographic photoreceptors.

Cure accelerators, such as phenols, triphenyl phosphates, tertiary amines, imidazoles or polymercaptans may be added according to demands.

The ionic crosslinking of the polycarbonate resins can be performed after a photosensitive layer material containing a polycarbonate resin of the present invention is applied on a conductive substrate, according to any known technique described in known literature relating to crosslinking agents (Taiseisha, "Crosslinking Agent Handbook", p244-257, 1981, etc.) or known literature relating to polycarbonate resins (Nikkan Kogyo Co., Ltd., "Plastic Material Course [5]", Polycarbonate Resin, p39-43, etc.) or known literature relating to epoxy resins ("Techniques of Adhesion", 14, 3, p1-33, 1994, etc.).

For example, the conditions of crosslinking depend on the combinations of the polycarbonate resins and the crosslinking agents or the like, and it is desirable to select combinations which have a crosslinking temperature of 50 to 250°C, preferably 100 to 200°C, and a crosslinking time of 50 hours or less, preferably 1 to 10 hours. If the crosslinking temperature is lower than 50°C, the resin solutions may have poor storage stability, and if higher than 250°C, charge-generating substances, charge-transfer substances, etc. may be deteriorated with heat to adversely affect electrophotographic properties. If the crosslinking time is more than 50 hours, charge-generating substances, charge-transfer substances, etc. will be deteriorated with heat, to lower the productivity of electrophotographic photoreceptors.

### [Electrophotographic Photoreceptor]

The electrophotographic photoreceptor of the present invention has a photosensitive layer on a conductive substrate, and the photosensitive layer contains at least one of the above-described polycarbonate resins or the crosslinked products thereof.

As far as such a photosensitive layer is formed on a conductive substrate, the electrophotographic photoreceptor of the present invention may have any structure, such as a known single-layer-type or lamination-type. The photosensitive layer may have a surface protecting layer on its surface. Generally preferred are lamination-type electrophotographic photoreceptors wherein the photosensitive layer comprises at least one charge-generating layer and at least one charge-transfer layer, or lamination-type electrophotographic photoreceptors having at least one charge-generating layer, at least one charge-transfer layer and one surface protecting layer, and it is preferable that the charge-transfer layer contains the above crosslinked polycarbonate resin as a binder resin, and/or, the surface protecting layer of the photosensitive layer is made of the crosslinked polycarbonate resins.

In the electrophotographic photoreceptor of the present invention, the binder resin may comprise one or more kinds of the crosslinked polycarbonate resins, or may further contain other resins, such as other polycarbonate resins, which do not hinder the effects of the present invention.

The polycarbonate resin (not-crosslinked) of the present invention to be used for the production of the electrophotographic photoreceptor preferably has a reduced viscosity of 0.1 to 2.0 dl/g, more preferably 0.3 to 1.6 dl/g, as measured at 20°C at a concentration of 0.5 g/dl in methylene chloride. Polycarbonate resins of a reduced viscosity of less than 0.1 dl/g may form, even after crosslinking, a layer having poor surface hardness, and electrophotographic photoreceptors may be subject to surface abrasion. Polycarbonate resins of a reduced viscosity of more than 2.0 dl/g may have an increased solution viscosity, causing difficulties in the production of electrophotographic photoreceptors by the application of coating fluid, and may form crosslinked polycarbonate resins which are too fragile to improve the durability of electrophotographic photoreceptors.

In the electrophotographic photoreceptor of the present invention, the crosslinked polycarbonate resin in photosensitive layer preferably contains 0.1 to 75 % by weight, more preferably 20 to 50 % by weight of a methylene chloride-insoluble fraction. Crosslinked polycarbonate resins containing 0.1 to 75 % by weight of a methylene chloride-insoluble fraction can particularly improve the durability of electrophotographic photoreceptors. The content of the methylene chloride-insoluble fraction is the % by weight of crosslinked polycarbonate resin which remains insoluble when the photosensitive layer containing the crosslinked polycarbonate resin is dissolved in methylene chloride at 25°C, and is based on 100 % by weight of the crosslinked polycarbonate resin originally contained in the photosensitive layer.

Ionic crosslinking of the polycarbonate resins can prevent deterioration of charge-generating substances and charge-transfer substances which are sensitive to radicals, and gives electrophotographic photoreceptors which maintain particularly excellent electrophotographic properties during long-term repeated uses.

The conductive substrate to be used in the electrophotographic photoreceptor of the present invention may be of any material, such as a known material, and examples of usable substrates include a plate, drum or sheet of aluminum, nickel, chromium, palladium, titanium, gold, silver, copper, zinc, stainless steel, molybdenum, indium, platinum, brass, lead oxide, tin oxide, indium oxide, ITO or graphite; glass, cloth, paper or a sheet or seamless-belt of plastic film, which are endowed with conductivity by evaporation, spattering or coating of the above-described materials; and a plastic film, sheet or seamless-belt bearing metal foil, such as aluminum foil, and a metal drum oxidized by, for example, electrode oxidation.

The charge-generating layer of lamination-type electrophotographic photoreceptors contains at least a charge-generating substance, and may be produced by, for example, forming a layer of the charge-generating substance on an underlying layer by a vacuum evaporation technique, a spattering technique or a CVD method, or by forming on an underlying layer, a layer wherein the charge-generating substance is fixed by a binder resin. Various methods, including known methods, may be used for the production of the charge-generating layer containing the binder resin, and a suitable method is to apply a coating fluid prepared by dispersing or dissolving both a charge-generating substance and a binder resin in an appropriate solvent, followed by drying.

Usable charge-generating substances are various ones including known ones, for example, various inorganic materials, for example, selenium single substances, such as amorphous selenium and trigonal selenium, tellurium single substances, selenium alloys, such as selenium-tellurium alloy and selenium-arsenic alloy, selenium compounds or selenium-containing compositions, such as As₂Se₃, zinc oxide, cadmium sulfide, antimony sulfide, zinc sulfide, and inorganic materials composed of the elements of the Groups 12 and 16, such as CdS-Se alloy; various other inorganic materials, for example, oxide semiconductors, such as titanium oxide, and silicon materials, such as amorphous silicon; metal-free-phthalocyanines pigments, such as τ-metal-free-phthalocyanine and χ-metal-free-phthalocyanine; metallophthalocyanine pigments, such as α-copper-phthalocyanine, β -copper-phthalocyanine, γ-copper-phthalocyanine, ε-copper-phthalocyanine, X-copper-phthalocyanine, A-titanyl-phthalocyanine, B-titanyl-phthalocyanine, C-titanyl-phthalocyanine, D-titanyl-phthalocyaine, E-titanyl-phthalocyanine, F-titanyl-phthalocyanine, H-titanyl-phthalocyanine, G-titanyl-phthalocyanine, K-titanyl-phthalocyanine, L-titanyl-phthalocyanine, M-titanyl-phthalocyanine, N-titanyl-phthalocyanine, Y-titanyl-phthalocyanine, oxotitanium phthalocyanine and titanyl-phthalocyanines exhibiting a strong X-ray diffraction peak at a Bragg angle 2θ of 27.3±0.2 degree; cyanine dyes, anthracene pigments, bisazo pigments, pyrene pigments, polycyclic quinone pigments, quinacridone pigments, indigo pigments, perylene pigments, pyrylium dyes, thiapyrylium dyes, polyvinylcarbazole, squalium pigments, anthoanthorone pigments, benzimidazole pigments, azo pigments, thioindigo pigments, bisbenzimidazole pigments, quinoline pigments, lake pigments, oxazine pigments, dioxazine pigments, triphenylmethane pigments, azulenium dyes, squalium dyes, triarylmethane dyes, xanthine dyes and thiazine dyes.

For example, the compounds represented by the following general formulae are suitable. 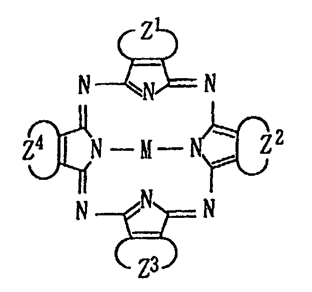 wherein Z¹, Z², Z³ and Z⁴ are each independently an atomic group which is linked to the two carbon atoms on each pyrrole ring to form an optionally substituted aromatic hydrocarbon ring or heterocyclic ring, and M is a metal atom or a metal compound containing optional two hydrogen atoms or ligands.

Ar⁶(̵N=N―Cp)ₜ

wherein Ar⁶ is a t-valent residue containing a conjugated system and an optional aromatic hydrocarbon ring or heterocyclic ring, t is a positive number of not less than 1, Cp is a coupler residue having an aromatic hydroxyl, and, when t is two or more, Cp's are identical with or different from each other. 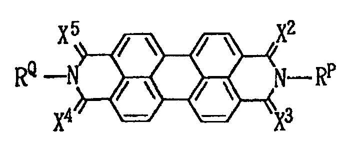 wherein X², X³, X⁴ and X⁵ are each oxygen, sulfur or selenium, R^{P} and R^{Q} are each an alkyl group or an aryl group of 1 to 12 carbon atoms, X² or X³ and R^{P}, or, X⁴ or X⁵ and R^{Q} may optionally be linked to each other to form an optionally substituted heterocyclic ring.

Examples of fluorene disazo pigments are given bellow.

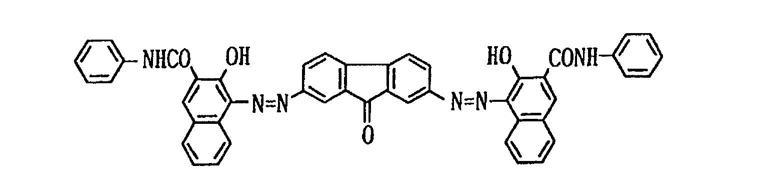

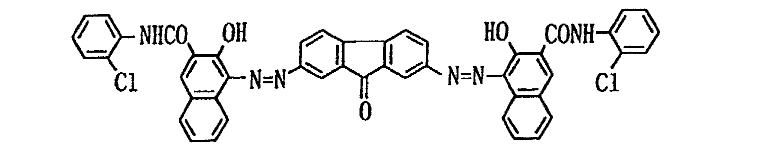

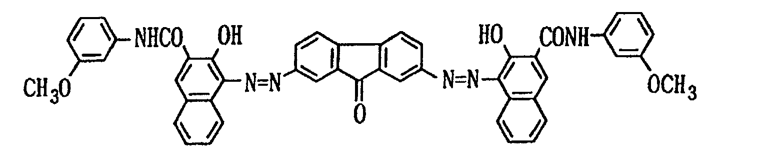

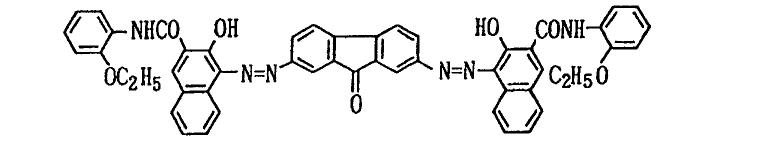

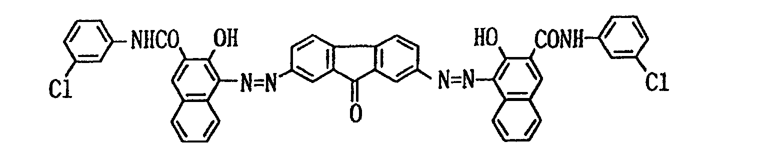

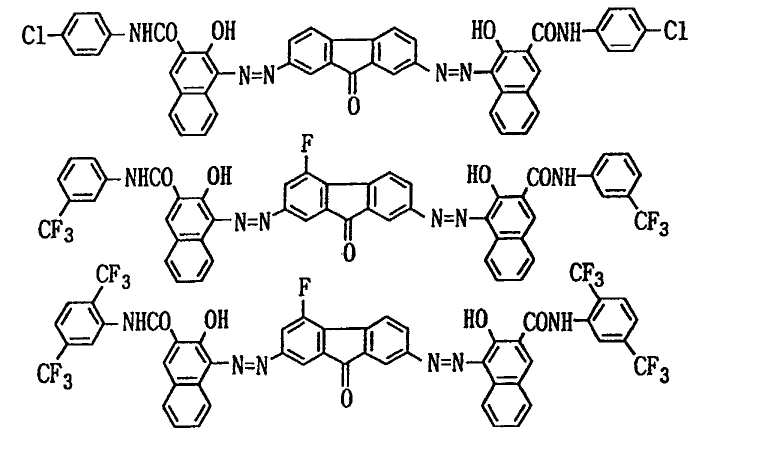

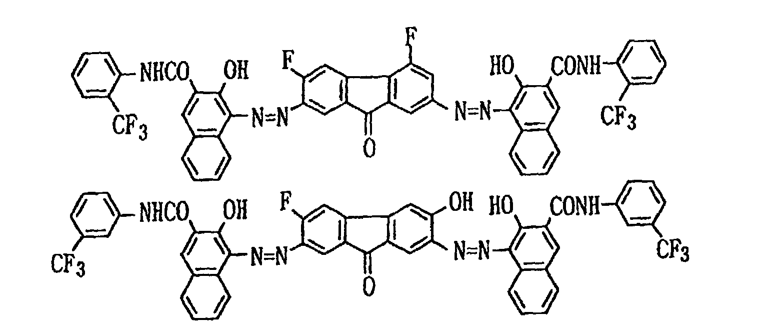

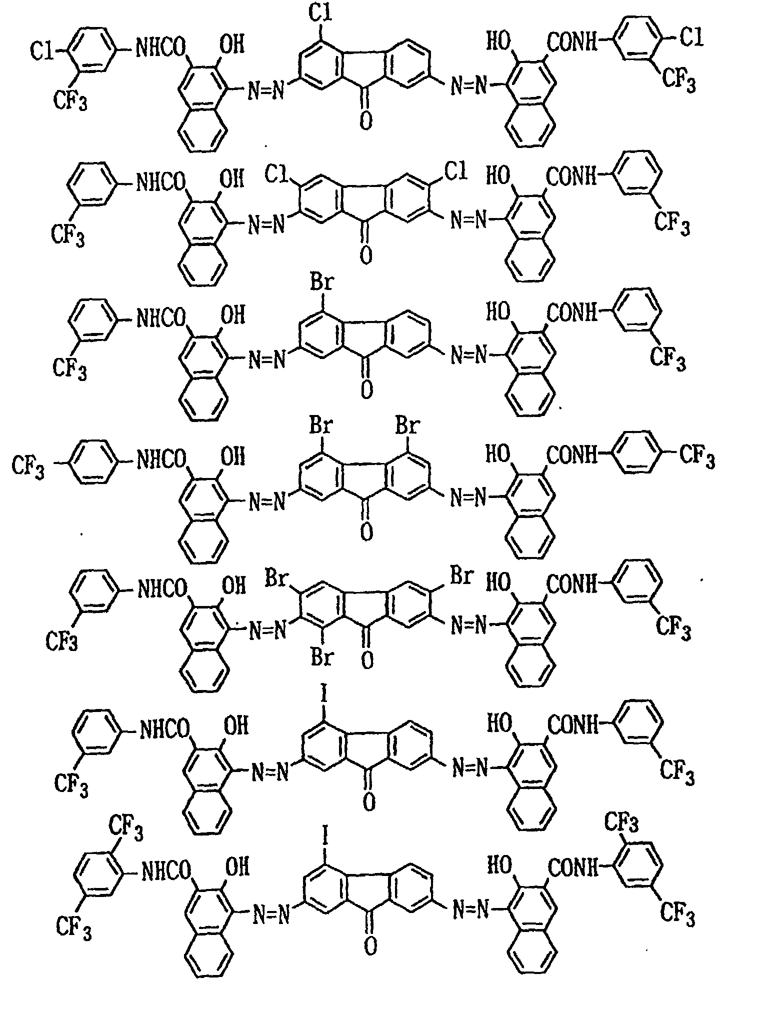

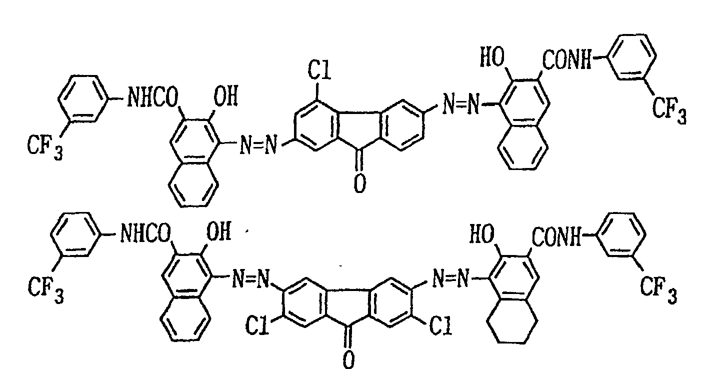

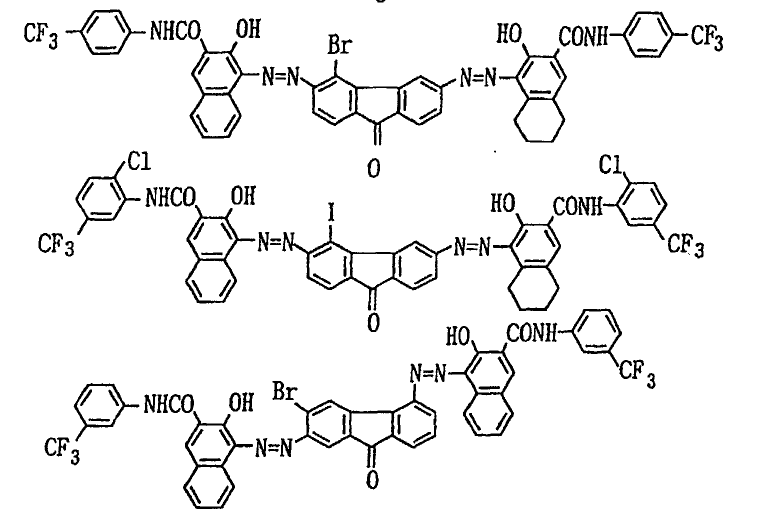

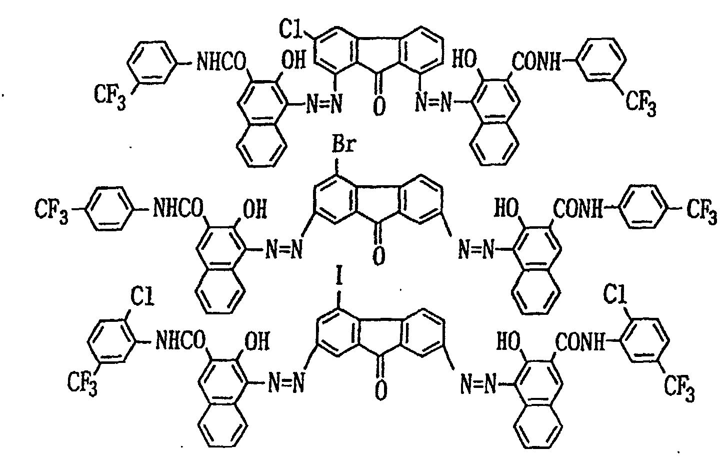

Examples of the perylene pigments are given bellow.

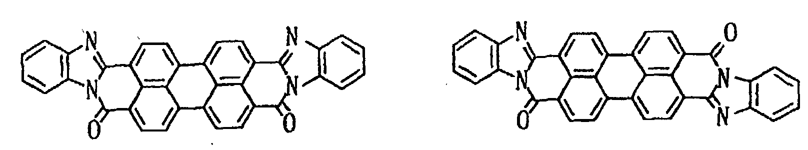

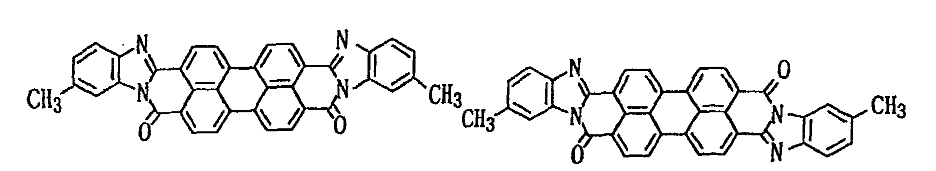

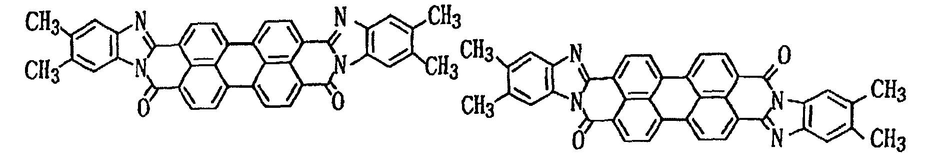

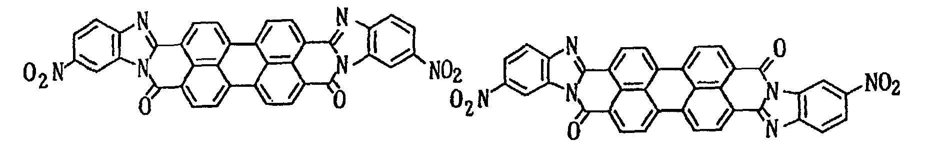

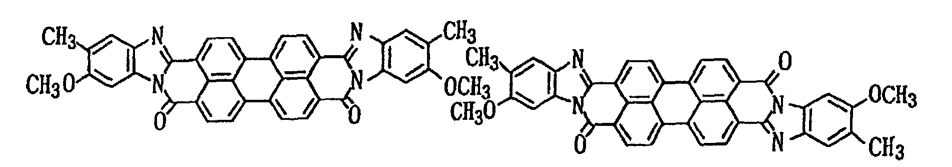

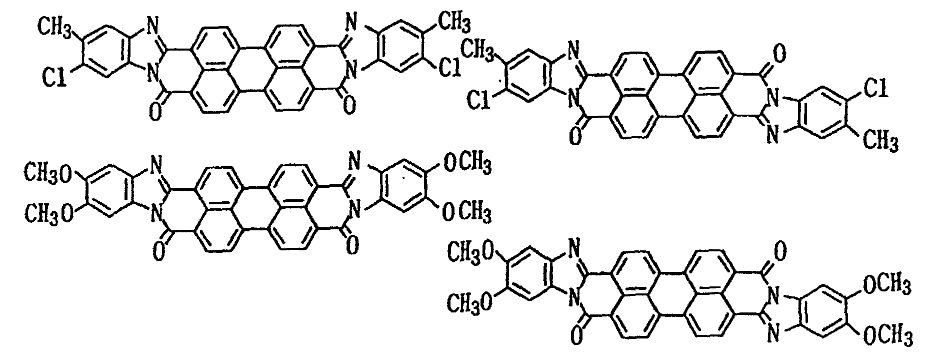

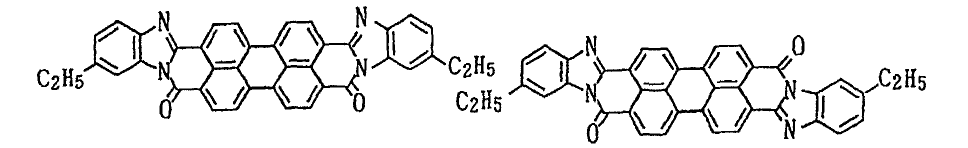

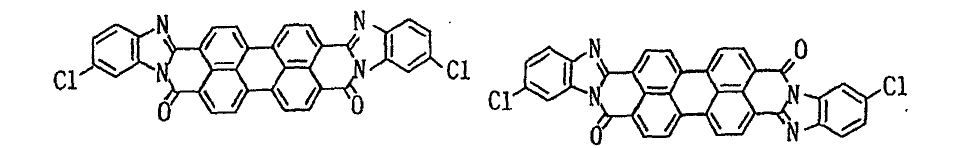

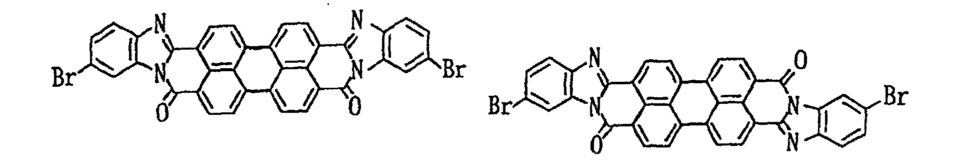

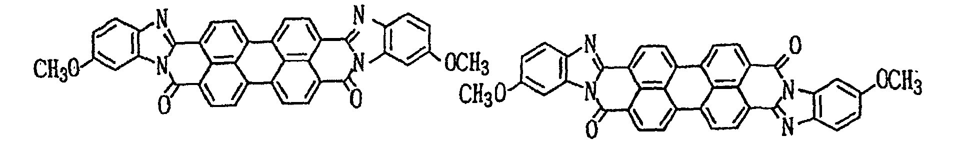

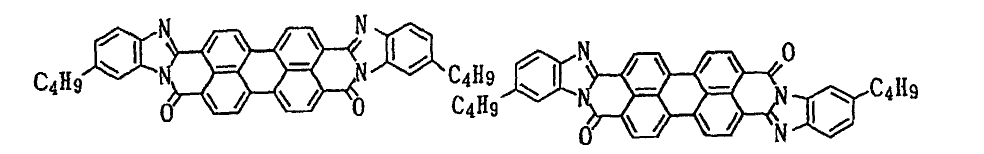

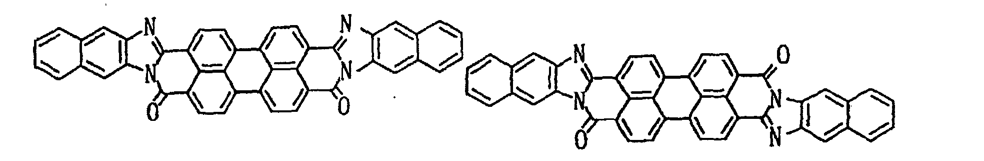

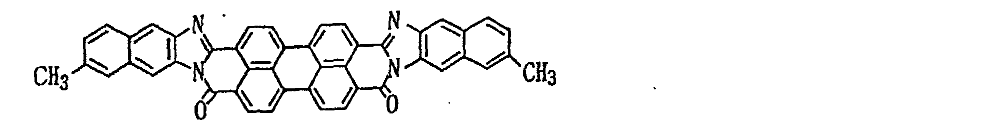

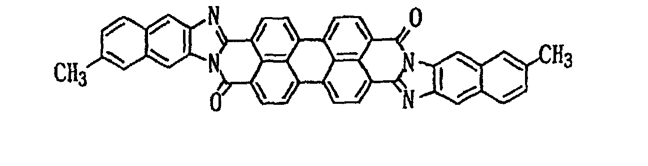

Examples of polycyclic quinone pigments are given bellow.

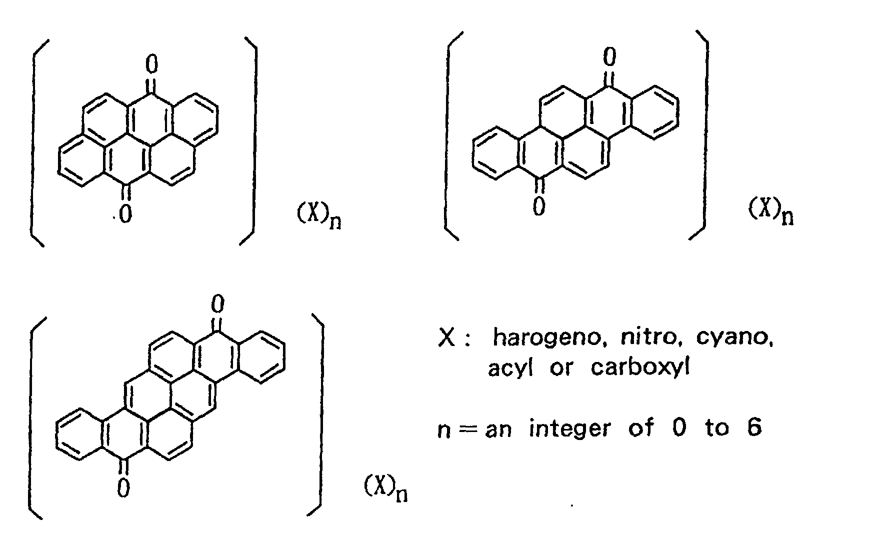

Examples of anthoanthrone pigments are given bellow.

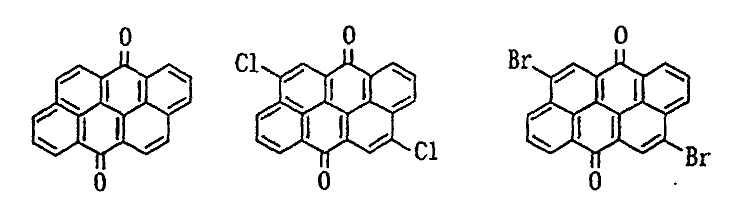

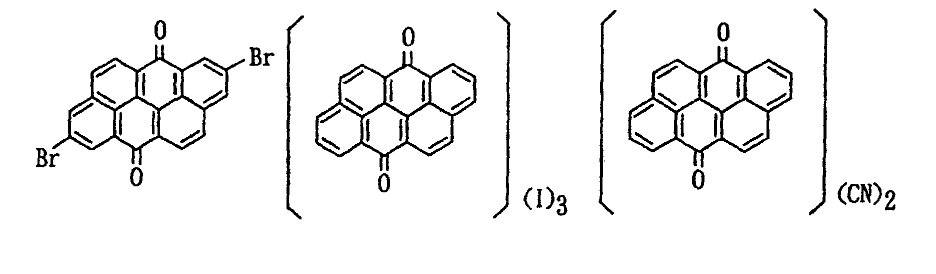

Examples of dibenzpyrenequinone pigments are given bellow.

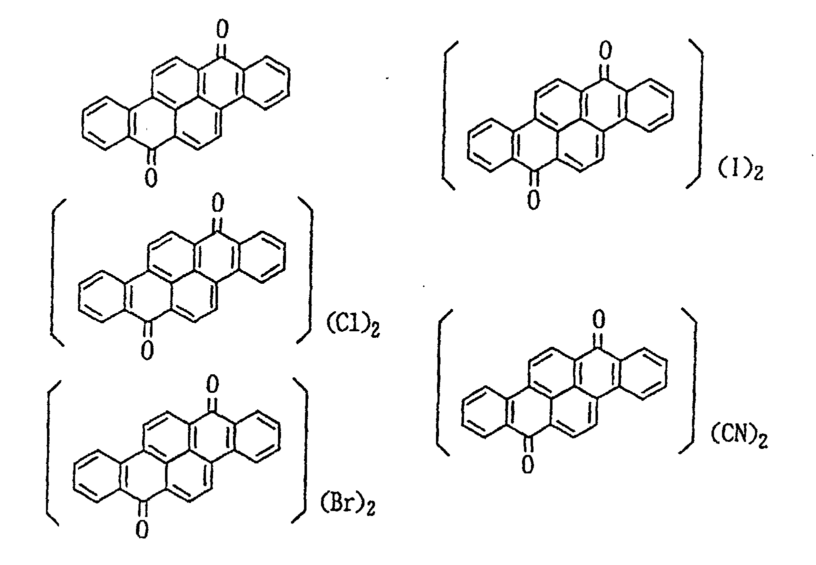

Examples of pyranthrone pigments are given bellow.

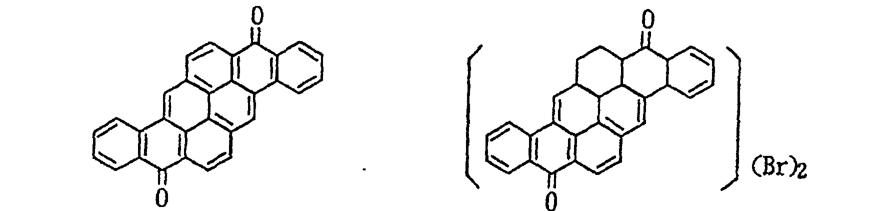

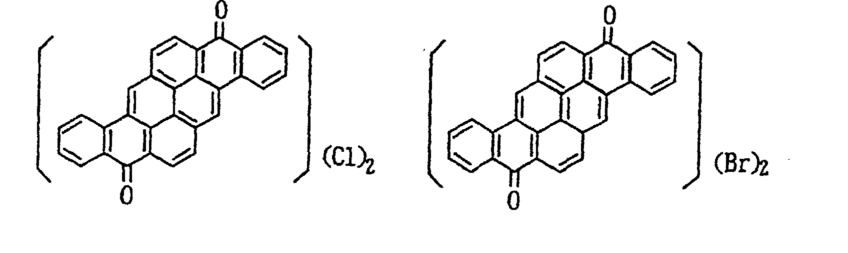

These pigments may be used individually or as a mixture of two or more.

The charge-generating layer is preferably 0.01 to 2.0µ m, more preferably 0.1 to 0.8µm in thickness. A charge-generating layer of less than 0.01µm is difficult to form evenly, and that of more than 2.0µm tends to deteriorate the electrophotographic properties.

The binder resins which may be used in the charge-generating layer are not particularly limited and may be various ones including known ones. Representative binder resins are thermosetting resins, such as polystyrene, polyvinyl chloride, polyvinyl acetate, vinyl chloride-vinyl acetate copolymer, polyvinyl acetal, alkyd resins, acrylic resins, polyacrylonitrile, polycarbonates, polyurethanes, epoxy resins, phenolic resins, polyamides, polyketones, polyacrylamides, butyral resins, polyesters, vinylidene chloride-vinyl chloride copolymer, methacrylic resins, polystyrene, styrene-butadiene copolymer, vinylidene chloride-acrylonitrile copolymer, vinyl chloride-vinyl acetate-maleic anhydride copolymer, silicone resins, silicone-alkyd resins, phenol-formaldehyde resins, styrene-alkyd resins, poly-N-vinylcarbazole, polyvinyl butyral, polyvinylformal, polysulfones, casein, gelatin, polyvinyl alcohol, ethyl cellulose, nitro cellulose, carboxy-methyl cellulose, vinylidene chloride-base polymer latex, acrylonitrile-butadiene copolymer, vinyltoluene-styrene copolymer, soybean oil-modified alkyd resins, nitrated polystyrene, polymethylstyrene, polyisoprene, polythiocarbonates, polyallylates, polyhaloallylates, polyallyl ethers, polyvinyl acrylate, melamine resins, polyether resins, benzoguanamine resin, epoxy acrylate resins, urethane acrylate resins and polyester acrylates.

The polycarbonate resins or crosslinked polycarbonate resins of the present invention may also be used as the binder resins in the charge-generating layer.

The charge-transfer layer may be produced by forming a layer wherein a charge-transfer substance is fixed by a binder resin on an underlying layer, for example, a charge-generating layer. The charge-transfer layer can be produced by various method including known methods, preferably by coating an underlying layer with a coating fluid prepared by dispersing or dissolving a charge-transfer substance and the non-crosslinked polycarbonate resin of the present invention in an appropriate solvent, optionally together with a crosslinking agent necessary for ionic crosslinking or a thermal polymerization initiator necessary for radical crosslinking, a photo-initiator and a monomer having ethylene double bonds, followed by drying and the crosslinking of the polycarbonate resin. In the charge-transfer layer, the weight ratios of the charge-transfer substance to the crosslinking polycarbonate resin of the present invention is preferably from 20:80 to 80:20, more preferably from 30:70 to 70:30.

In the charge-transfer layer, the polycarbonate resins of the present invention may be used individually or as a mixture of two or more. Other resins, such as the above-described binder resins for the charge-generating layer, may also be used along with the polycarbonate resins of the present invention, so far as the attainment of the object of the present invention is not hindered.

The charge-transfer substances which may be used are various ones including known ones. Typical examples are carbazole compounds, indole compounds, imidazole compounds, oxazole compounds, pyrazole compounds, oxadiazole compounds, pyrazoline compounds, thiadiazole compounds, aniline compounds, hydrazone compounds, aromatic amine compounds, aliphatic amine compounds, stilbene compounds, fluorenone compounds, quinone compounds, quinodimethane compounds, thiazole compounds, triazole compounds, imidazolone compounds, imidazolidine compounds, bisimidazolidine compounds, oxazolone compounds, benzothiazole compounds, benzimidazole compounds, quinazoline compounds, benzofuran compounds, acridine compounds, phenazine compounds, poly-N-vinylcarbazole, polyvinylpyrene, polyvinylanthracene, polyvinylacridine, poly-9-vinylphenylanthracene, pyrene-formaldehyde resin, ethylcarbazole resins, and polymers containing these structures in the main chain or side chains.

Preferred are those represented by the following general formulae. 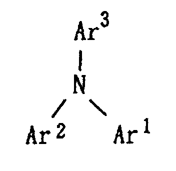 wherein Ar¹, Ar² and Ar³ are each a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, substituted or non-substituted condensed-polycyclic hydrocarbon group, a heterocyclic group, a polycyclic-heterocyclic group or a condensed-polycyclic-heterocyclic group, Ar¹ and Ar², Ar² and Ar³, and Ar³ and Ar¹ may optionally be linked to each other to form a ring, respectively. 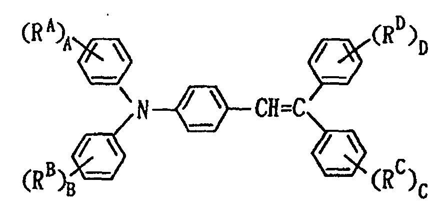 wherein R^{A}, R^{B}, R^{C} and R^{D} are each cyano, a halogeno, carboxyl, an acyl group, hydroxyl, nitro, amino, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and A, B, C and D are each an integer of 0 to 5. 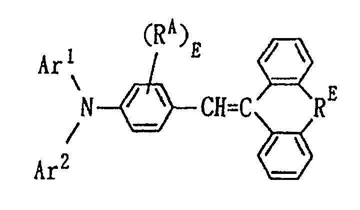 wherein Ar¹ and Ar² are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, Ar¹ and Ar² may optionally be linked to form a ring, R^{A} is cyano, a halogeno, carboxyl, an acyl group, hydroxyl, nitro, amino, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, R^{E} is ethylene or ethenylene group, and E is an integer of 0 to 4. 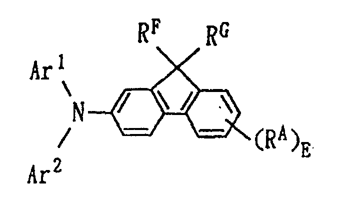 wherein Ar¹ and Ar² are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, Ar¹ and Ar² may optionally be linked to form a ring, R^{A} is cyano, a halogeno, carboxyl, an acyl group, hydroxyl, nitro, amino, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, R^{F} and R^{G} are each hydrogen, an alkyl group of 1 to 6 carbon atoms or a halogeno, and E is an integer of 0 to 4. 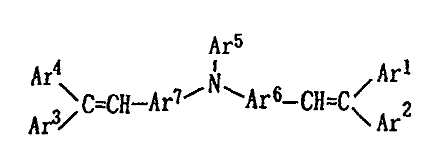 wherein Ar¹, Ar², Ar³, Ar⁴ and Ar⁵ are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, Ar⁶ and Ar⁷ are each a substituted or non-substituted alkylene group of 1 to 6 carbon atoms, or a divalent residue of a substituted or non-substituted aryl compound of 6 to 12 carbon atoms, a polycyclic hydrocarbon, a substituted or non-substituted condensed-polycyclic hydrocarbon compound, a heterocyclic compound, a polycyclic-heterocyclic compound or a condensed-polycyclic-heterocyclic compound, Ar¹ and Ar², and, Ar³ and Ar⁴ may optionally be linked to form a ring, respectively. 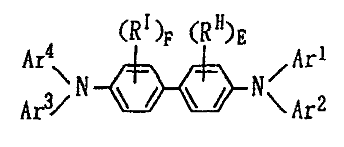 wherein Ar¹, Ar², Ar³ and Ar⁴ are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, Ar¹ and Ar², and, Ar³ and Ar⁴ may optionally be linked to form a ring, respectively, R^{H} and R^{I} are each cyano, a halogeno, carboxyl, an acyl group, hydroxyl, nitro, amino, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, E and F are each an integer of 0 to 4. 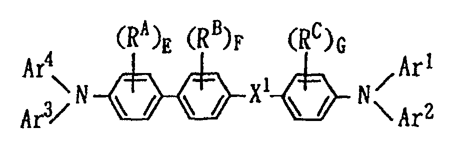 wherein Ar¹, Ar², Ar³ and Ar⁴ are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, Ar¹ and Ar², and, Ar³ and Ar⁴ may optionally be linked to form a ring, respectively, R^{A}, R^{B} and R^{C} are each cyano, a halogeno, carboxyl, an acyl group, hydroxyl, nitro, amino, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, E, F and G are each an integer of 0 to 4, X¹ is -O-, -S-, -Se-, -Te-, -CR^{J}R^{K}-, -SiR^{J}R^{K}-, -NR^{J}- or -PR^{J}- (wherein R^{J} and R^{K} are each hydrogen, a halogeno, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group). 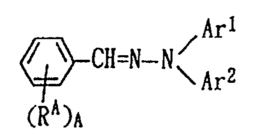 wherein Ar¹ and Ar² are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, Ar¹ and Ar² may optionally be linked to form a ring, R^{A} is cyano, a halogeno, carboxyl, an acyl group, hydroxyl, nitro, amino an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and A is an integer of 0 to 5. 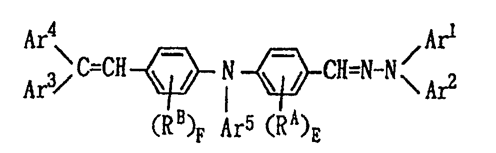 wherein Ar¹, Ar², Ar³, Ar⁴ and Ar⁵ are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, R^{A} and R^{B} are each cyano, a halogeno, carboxyl, an acyl group, hydroxyl, nitro, amino, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, Ar¹ and Ar², and, Ar³ and Ar⁴ may optionally be linked to form a ring, respectively, and F and E are each independently an integer of 0 to 4. 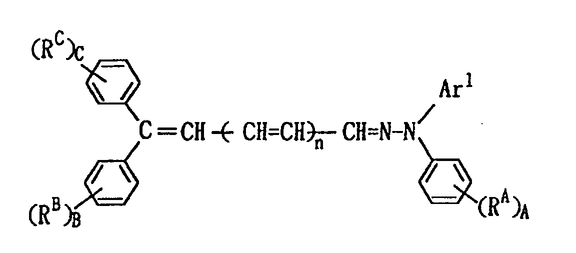 wherein Ar¹ is hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, R^{A}, R^{B} and R^{C} are each cyano, a halogeno, carboxyl, an acyl group, hydroxyl, nitro, amino, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and n is 0 or 1, A, B and C are each an integer of 0 to 5. 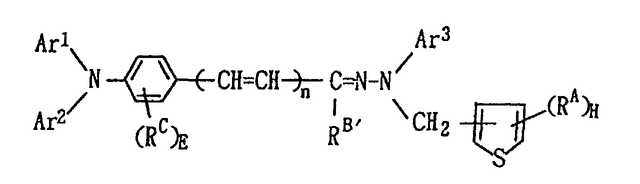 wherein Ar¹, Ar² and Ar³ are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, R^{A} and R^{C} are each cyano, a halogeno, carboxyl, an acyl group, hydroxyl, nitro, amino, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, R^{B}' is hydrogen, cyano, a halogeno, carboxyl, an acyl group, hydroxyl, nitro, amino, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, n is 0 or 1, E is an integer of 0 to 4, and H is an integer of 0 to 3. 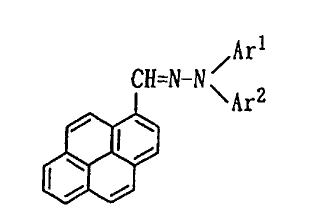 wherein Ar¹ and Ar² are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a ccndensed-pclycyclic-heterocyclic group, and Ar¹ and Ar² may optionally be linked to form a ring. 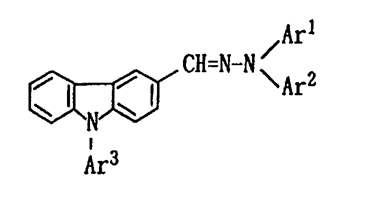 wherein Ar¹, Ar² and Ar³ are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and Ar¹ and Ar² may optionally be linked to form a ring. 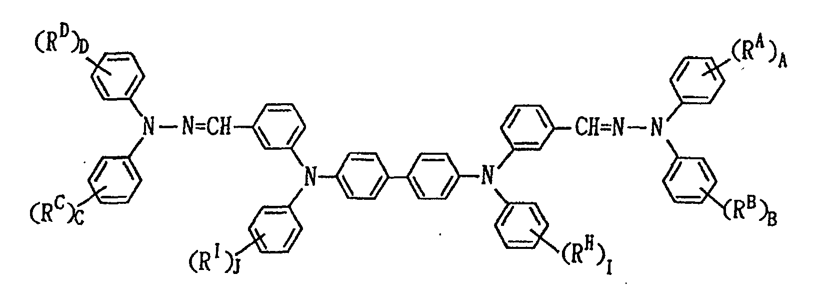 wherein R^{A}, R^{B}, R^{C}, R^{D}, R^{H} and R^{I} are each cyano, a halogeno, carboxyl, an acyl group, hydroxyl, nitro, amino, an alkylamino group, an arylamino group, an aralkylamino group, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, and A, B, C, D, I and J are each an integer of 0 to 5. 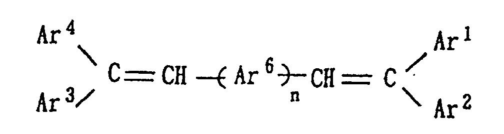 wherein Ar¹, Ar², Ar³ and Ar⁴ are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group, Ar⁶ is a substituted or non-substituted alkylene group of 1 to 6 carbon atoms or a divalent residue of a substituted or non-substituted aryl compounds of 6 to 12 carbon atoms, a polycyclic hydrocarbon, a substituted or non-substituted condensed-polycyclic hydrocarbon, a heterocyclic compound, a polycyclic-heterocyclic compound or a condensed-polycyclic-heterocyclic compound, Ar¹ and Ar², and, Ar³ and Ar⁴ may optionally be linked to form a ring, respectively, and n is 0 or 1. 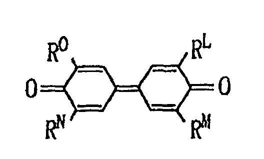 wherein R^{L}, R^{M}, R^{N} and R^{O} are each hydrogen, a substituted or non-substituted alkyl group of 1 to 10 carbon atoms, a substituted or non-substituted aralkyl group of 7 to 13 carbon atoms, a substituted or non-substituted aryl group of 6 to 12 carbon atoms, a polycyclic hydrocarbon group, a substituted or non-substituted condensed-polycyclic hydrocarbon group, a heterocyclic group, a polycyclic-heterocyclic group or a condensed-polycyclic-heterocyclic group.

Representative examples are the following compounds.

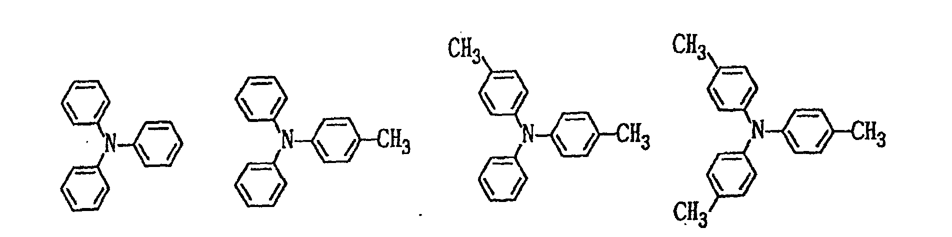

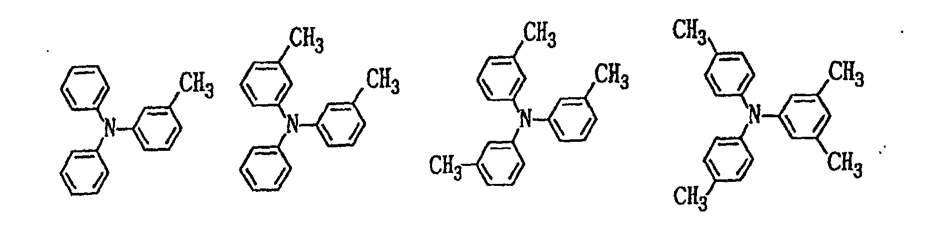

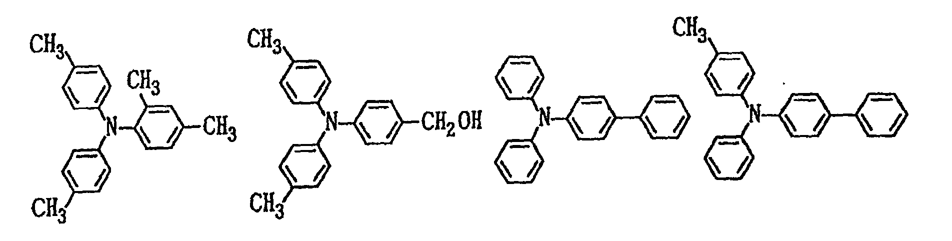

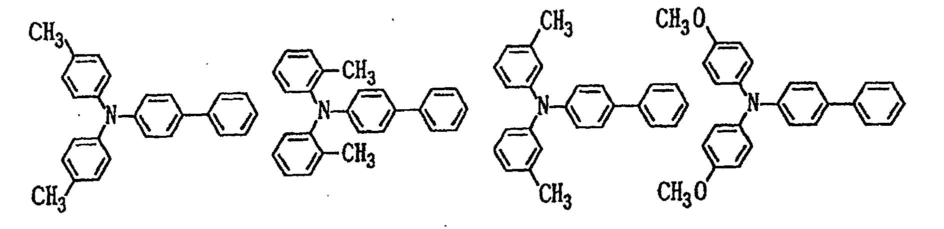

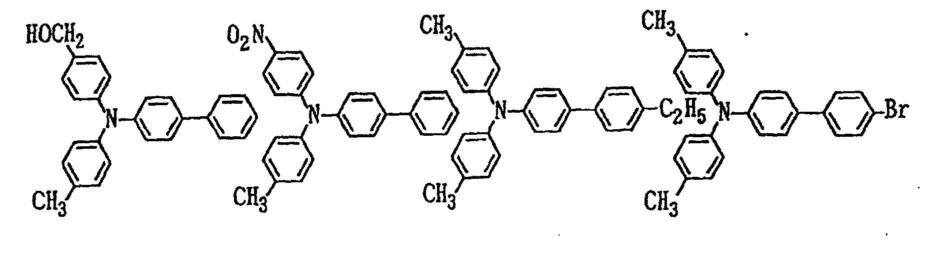

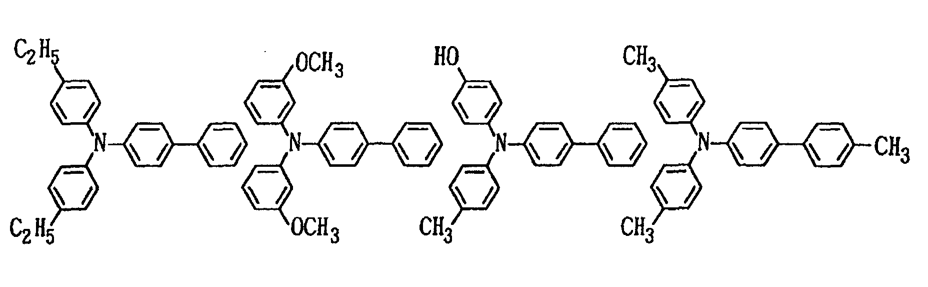

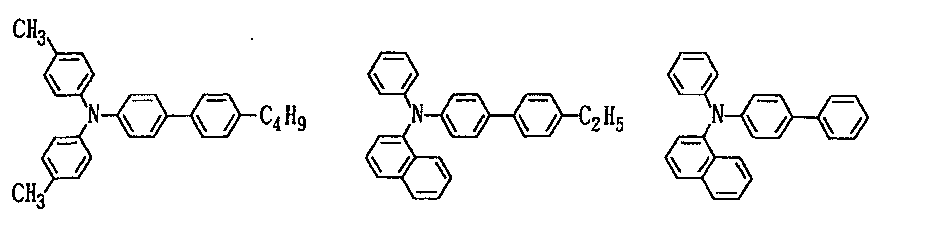

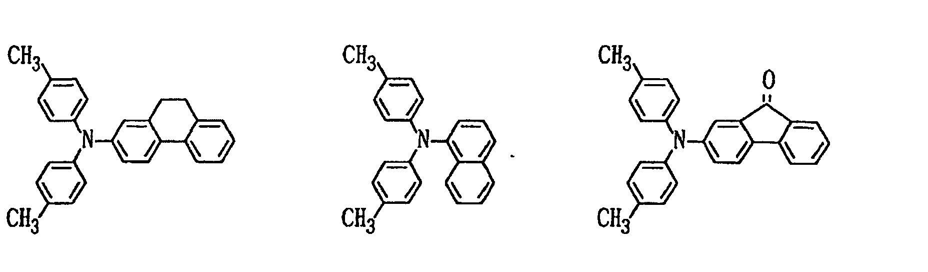

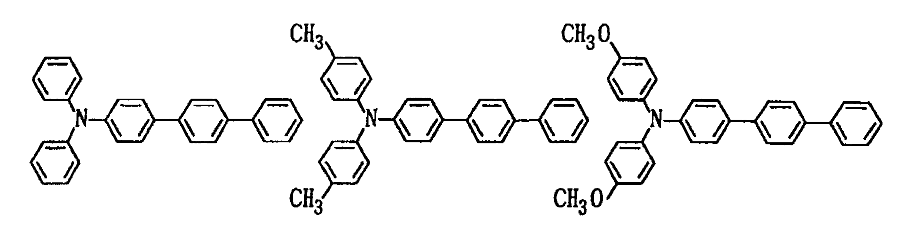

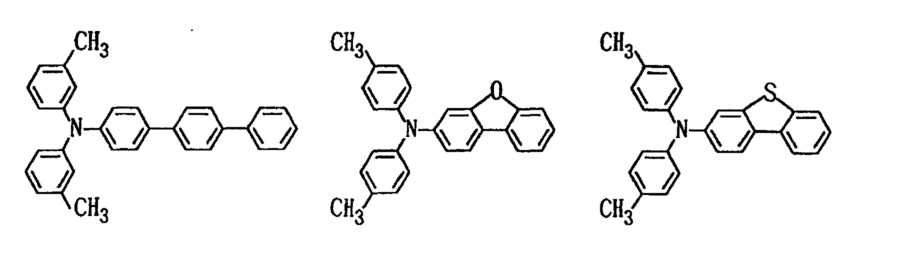

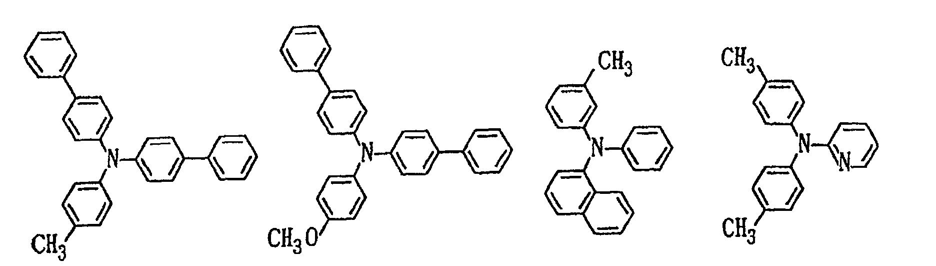

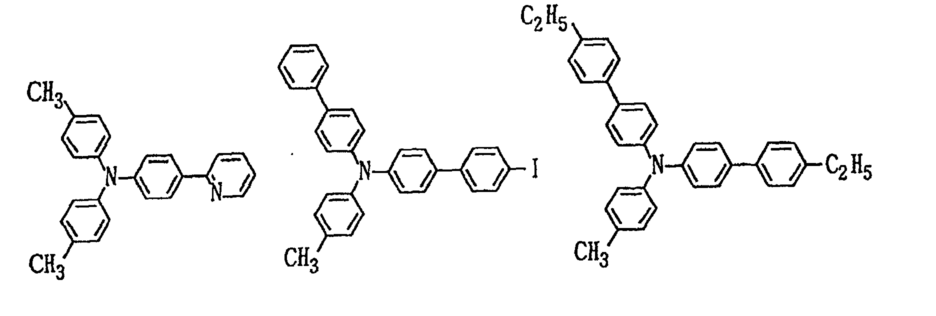

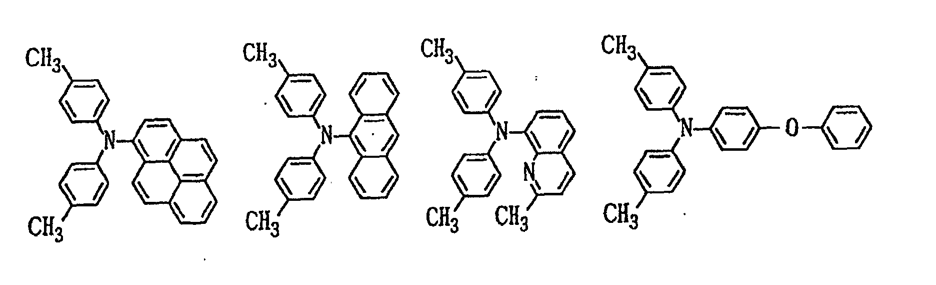

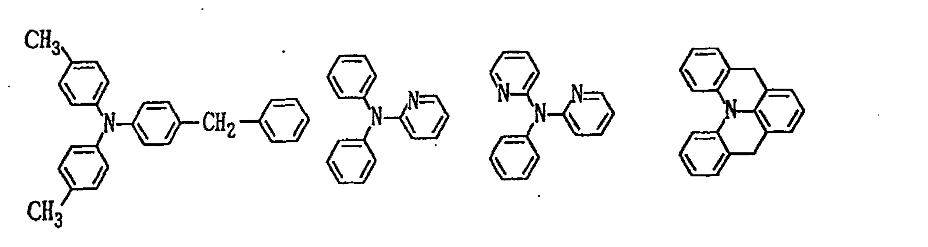

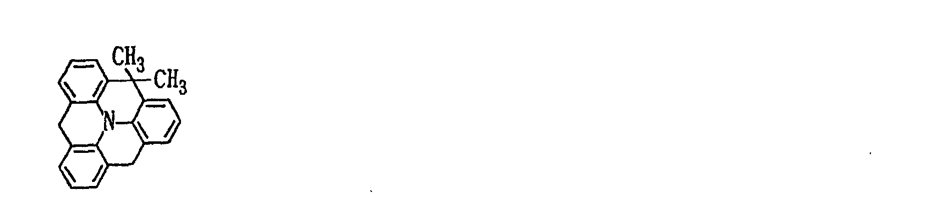

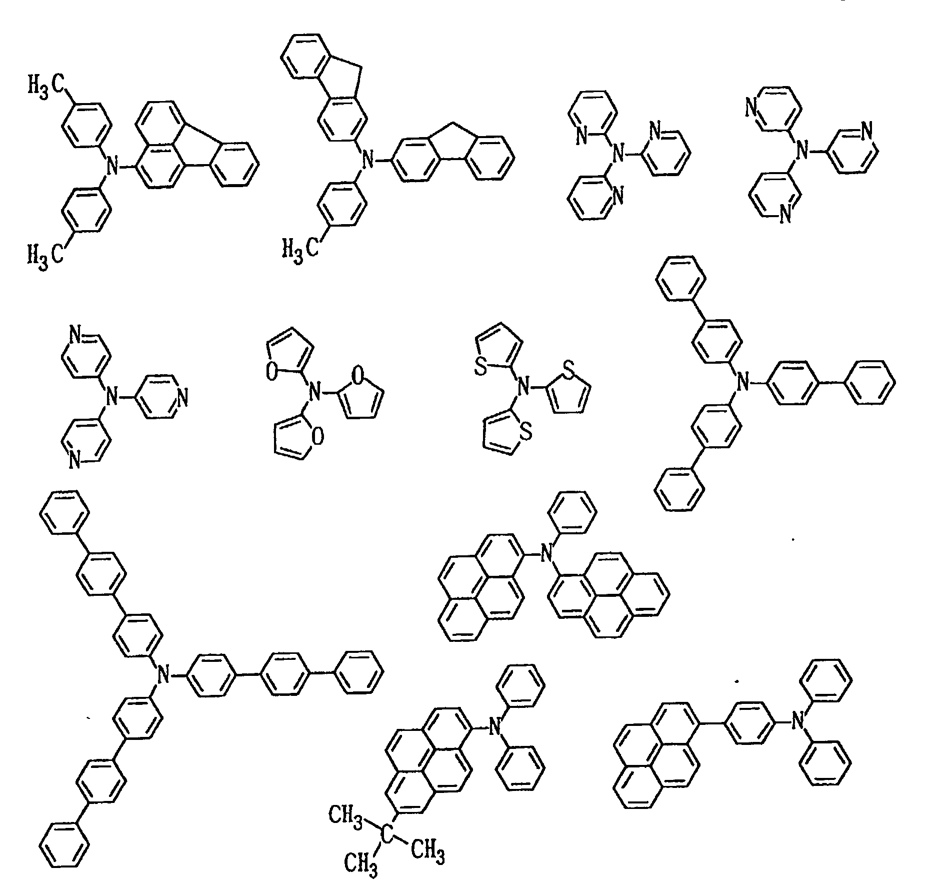

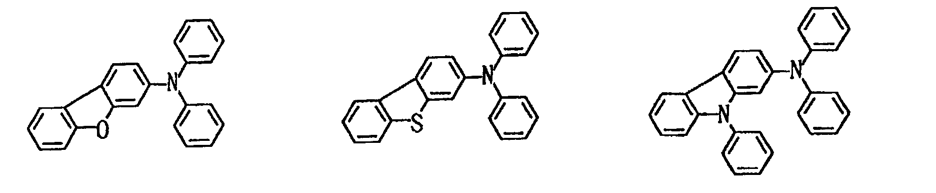

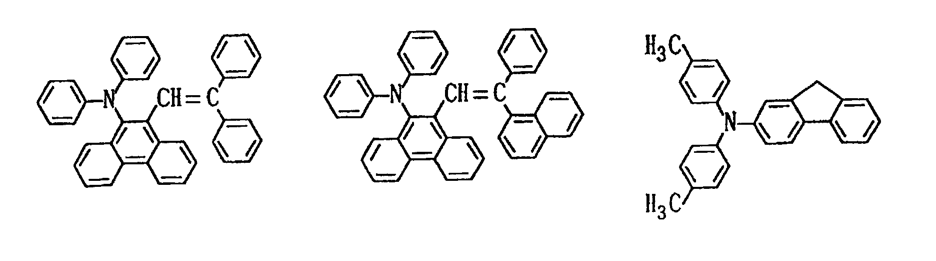

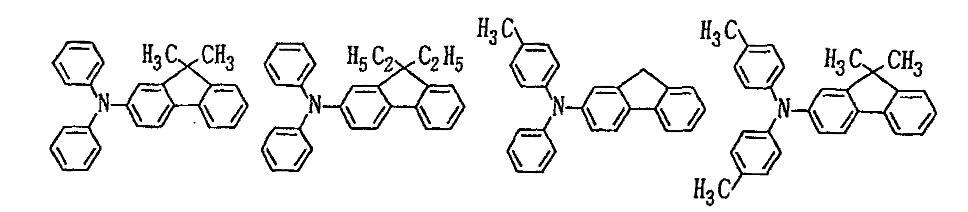

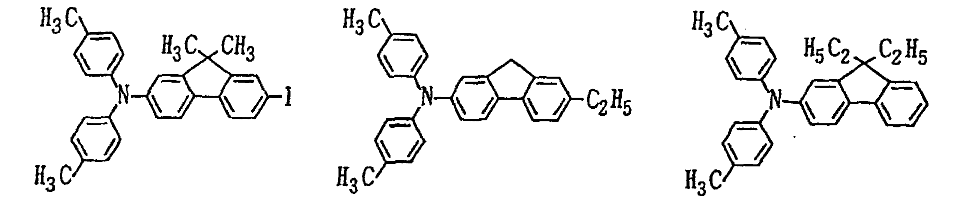

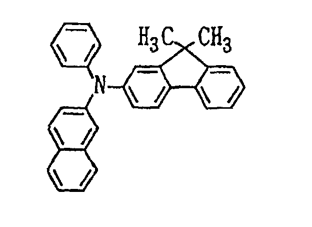

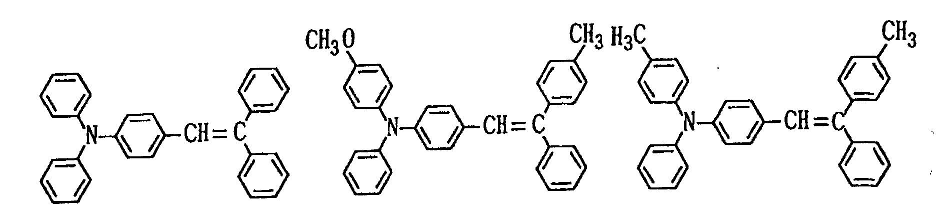

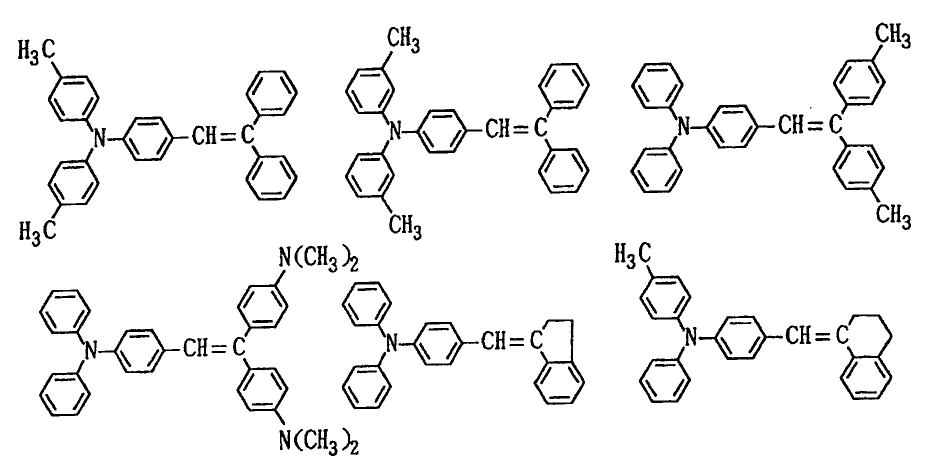

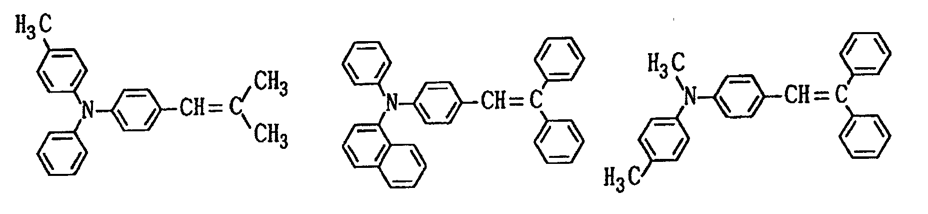

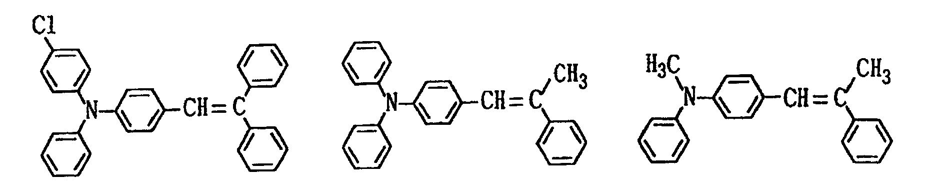

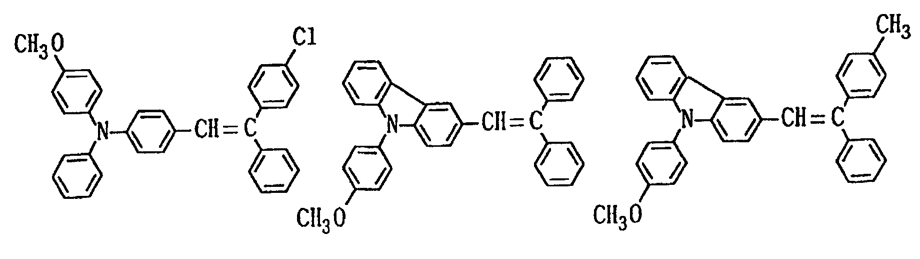

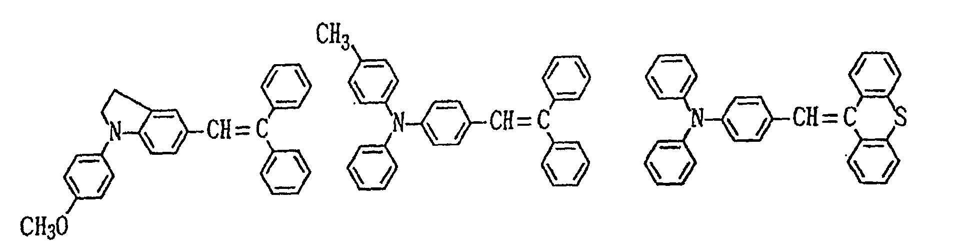

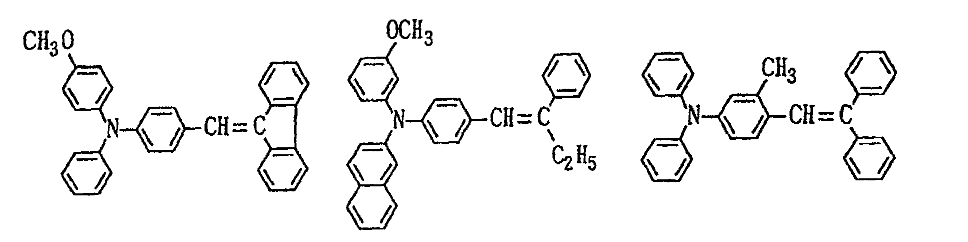

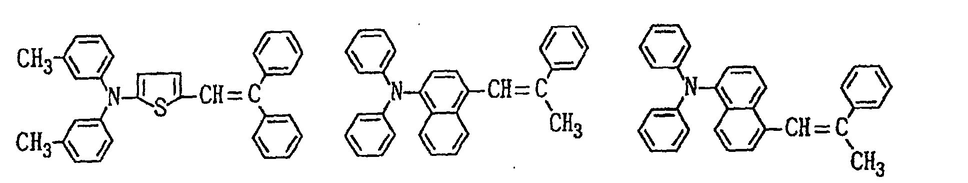

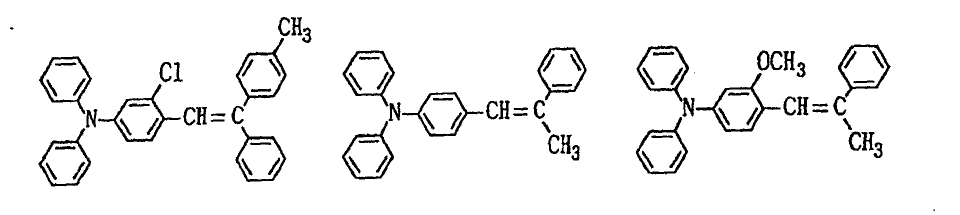

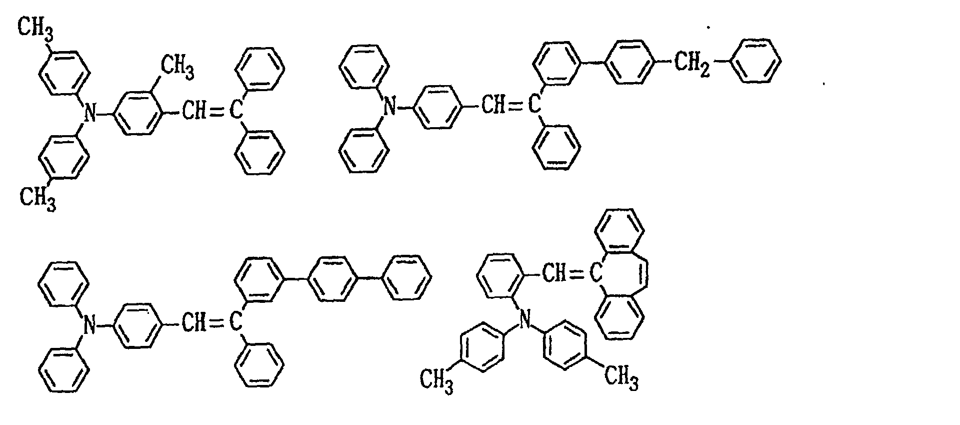

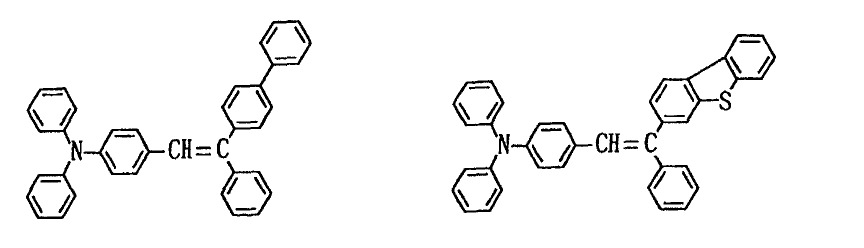

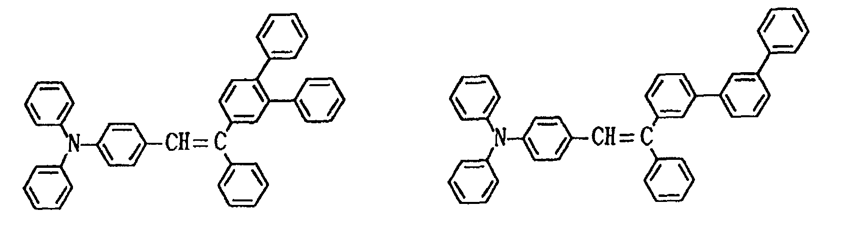

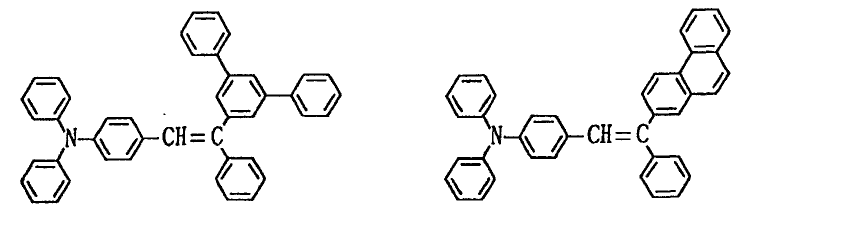

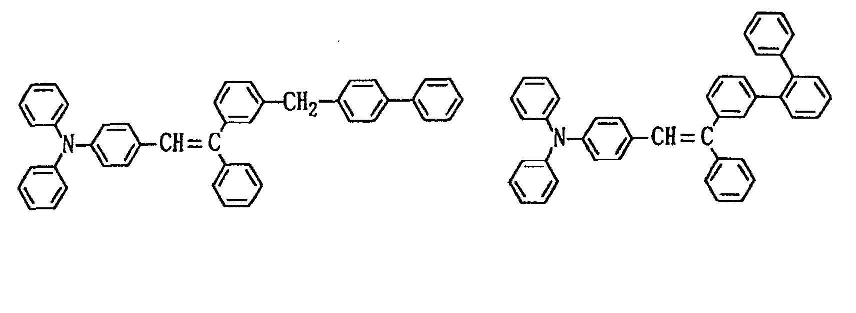

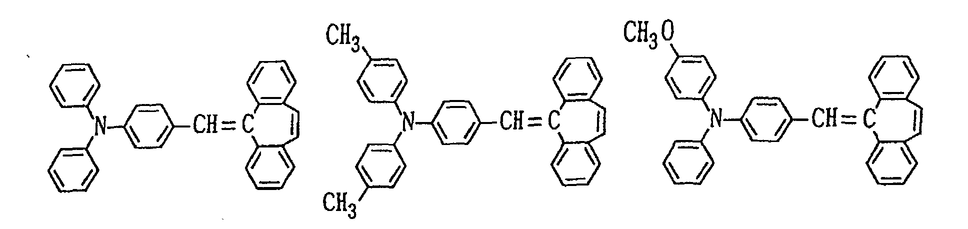

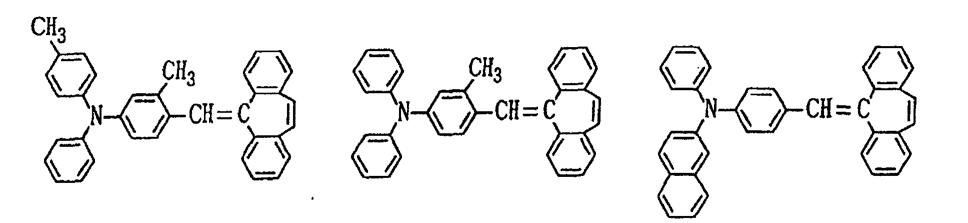

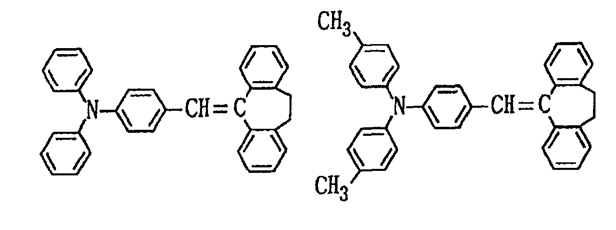

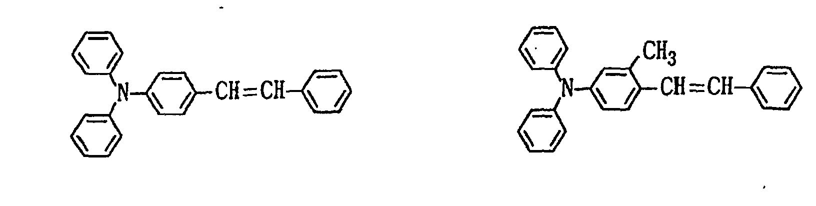

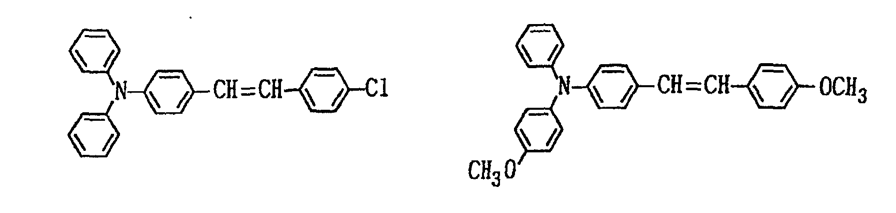

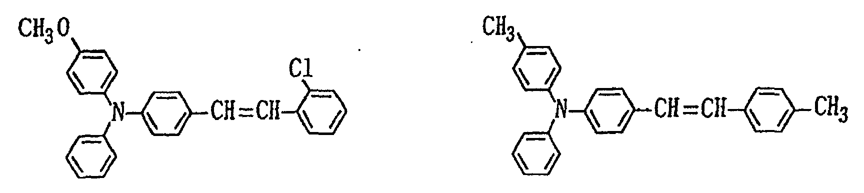

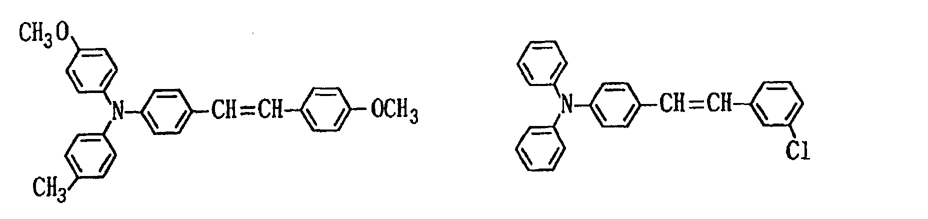

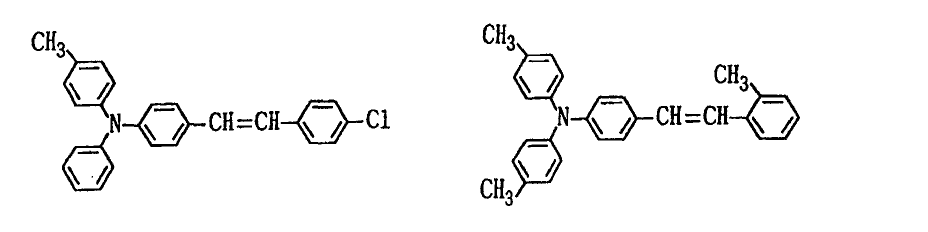

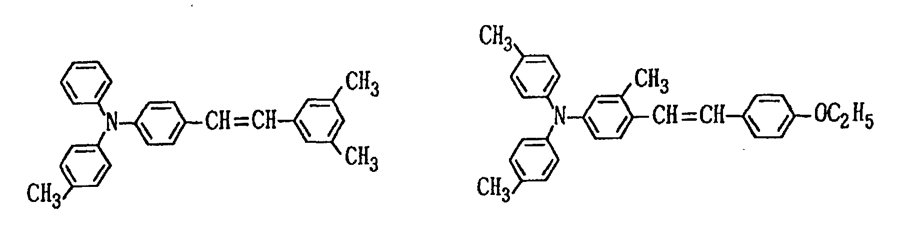

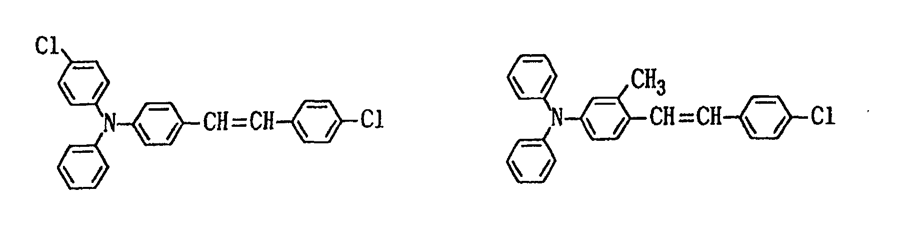

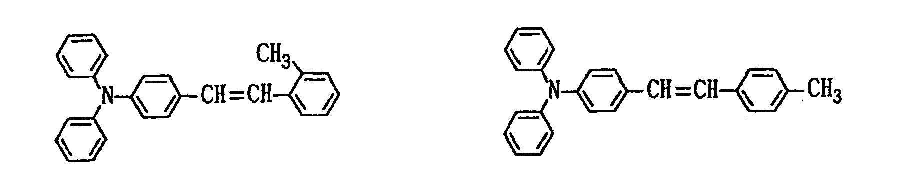

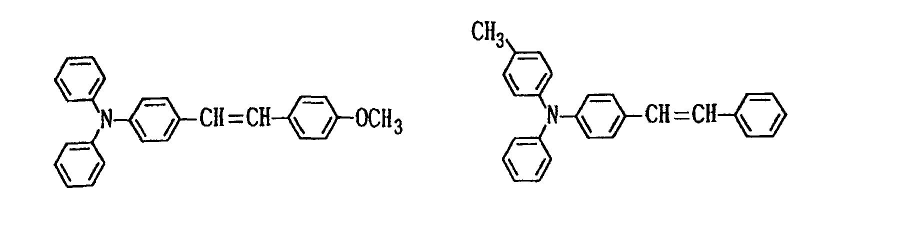

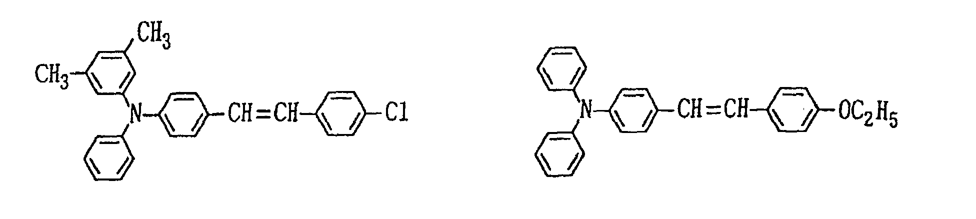

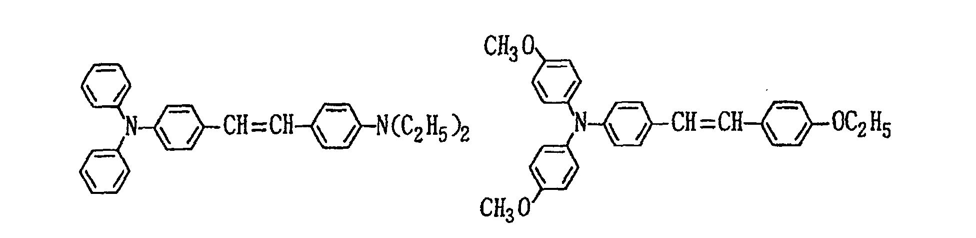

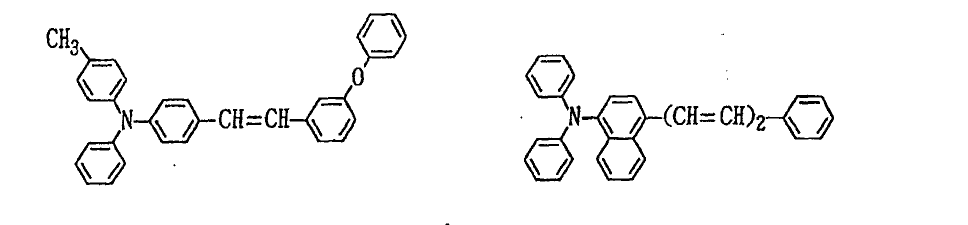

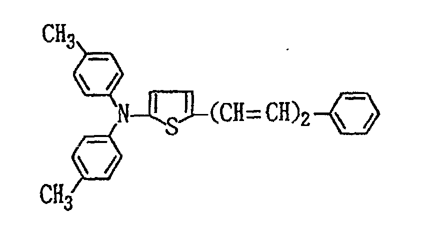

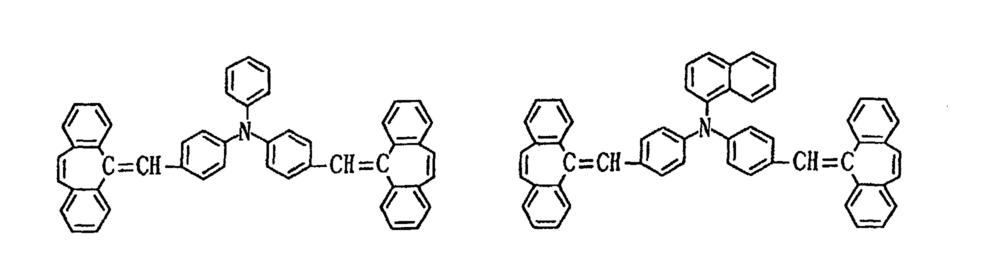

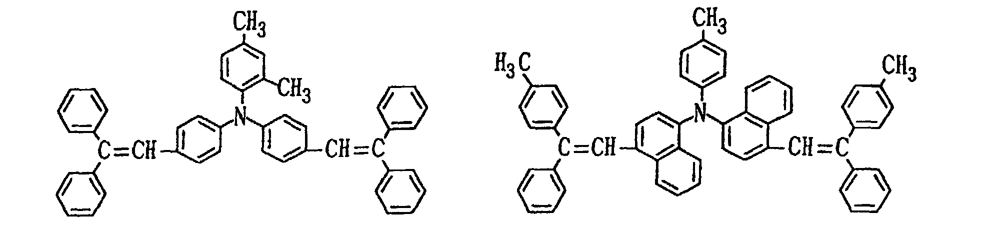

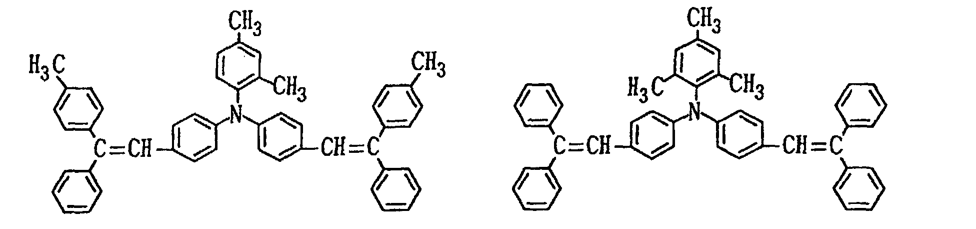

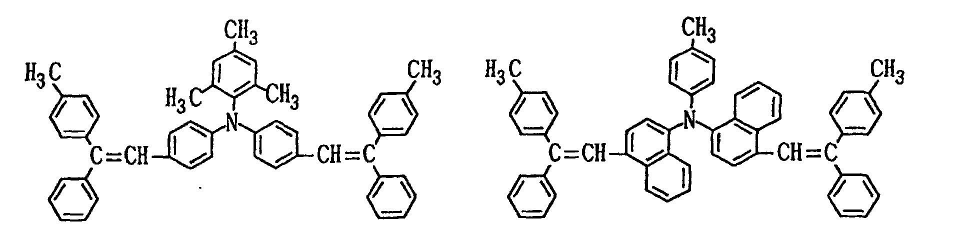

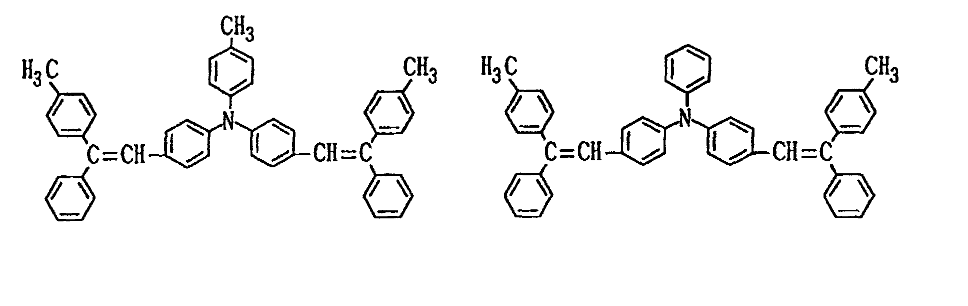

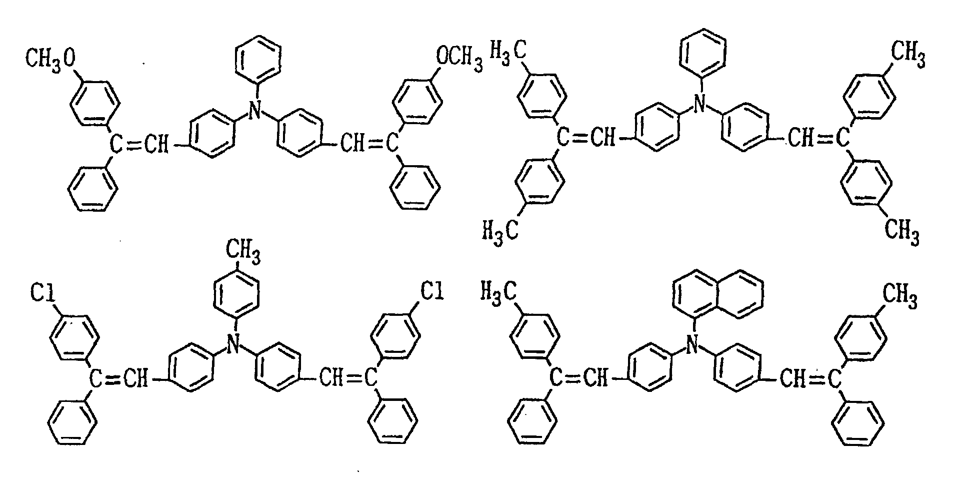

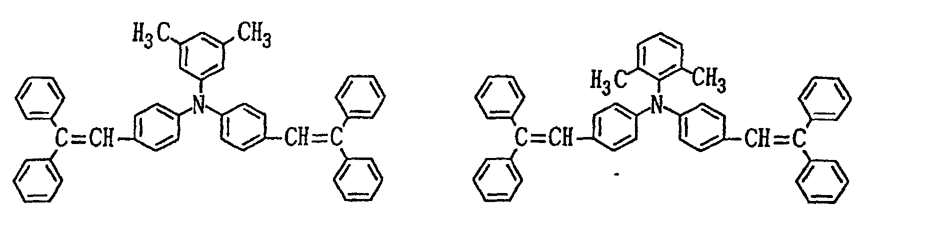

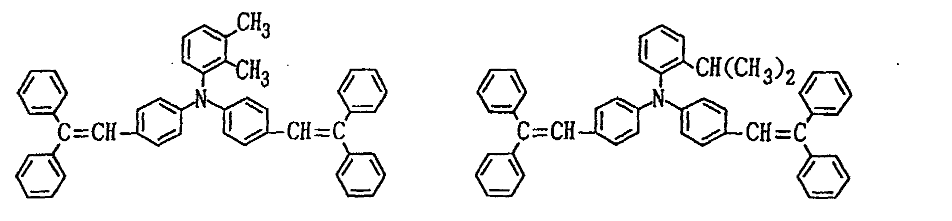

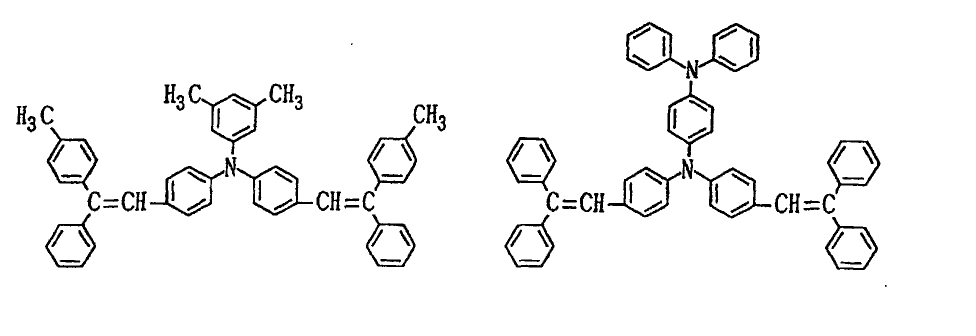

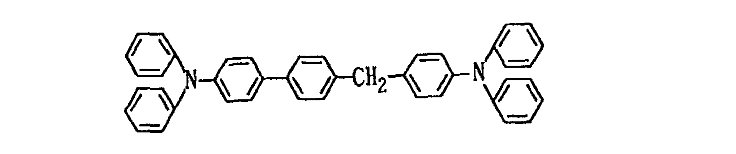

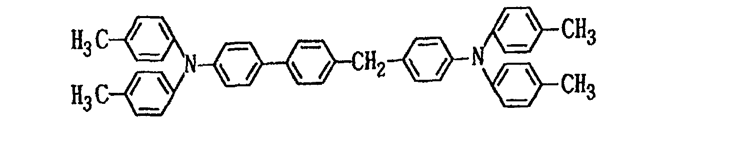

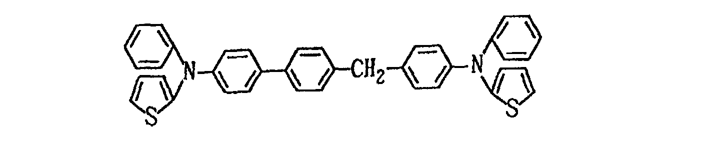

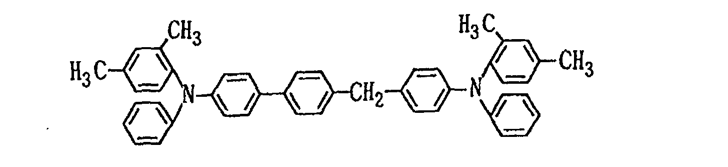

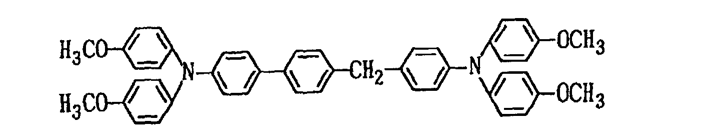

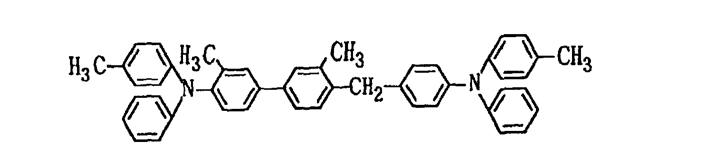

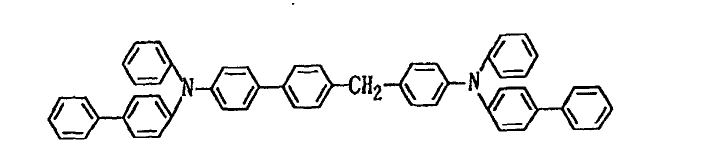

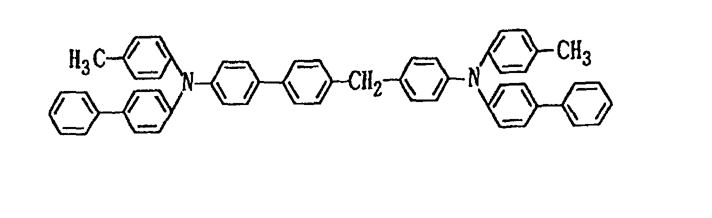

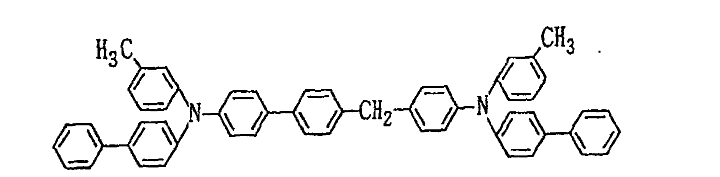

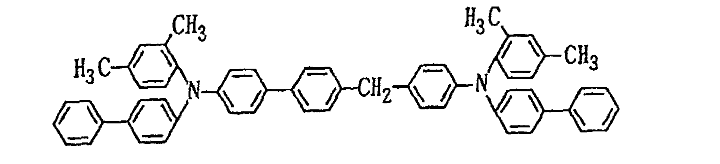

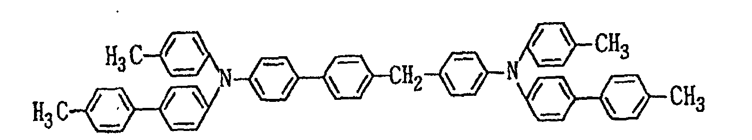

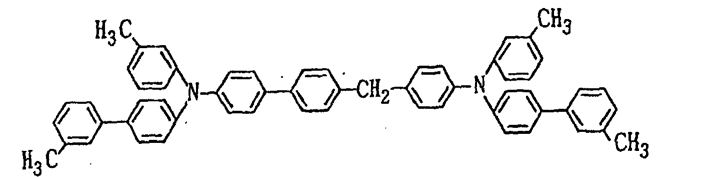

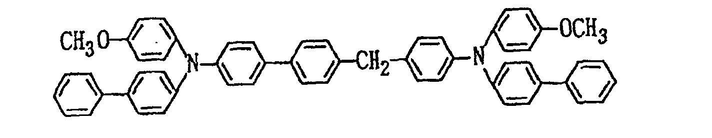

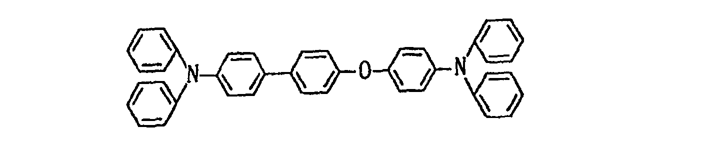

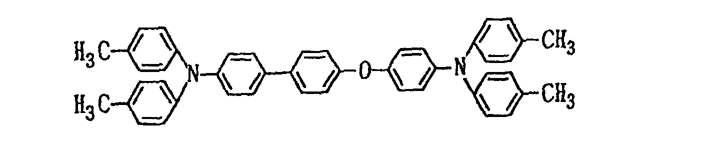

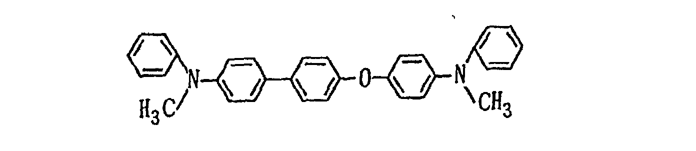

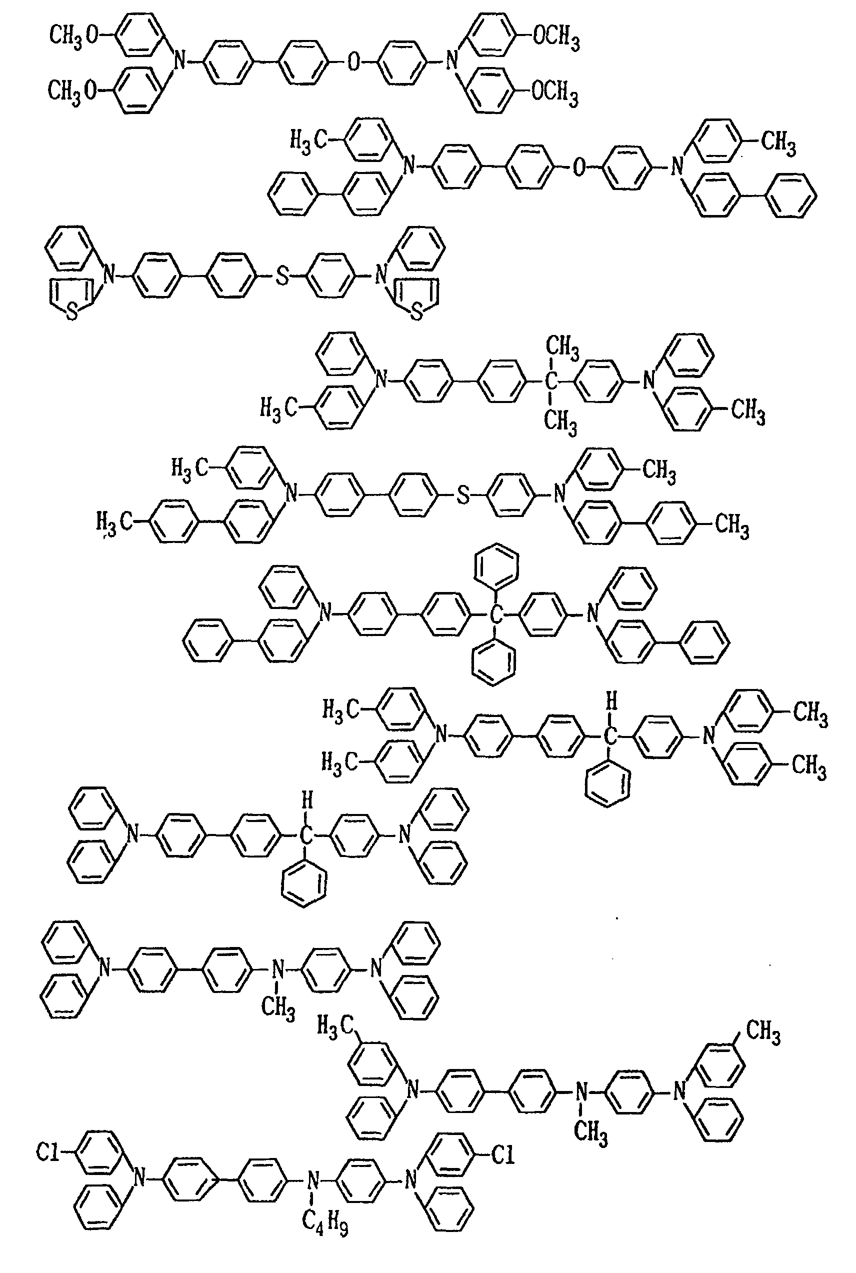

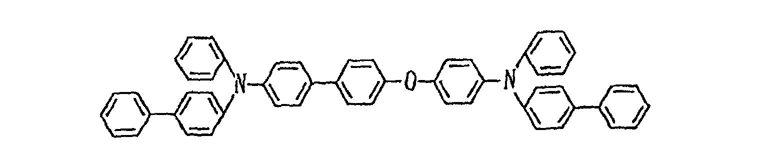

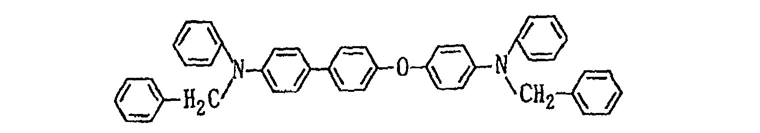

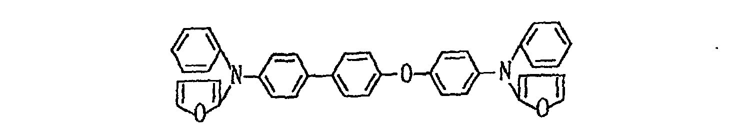

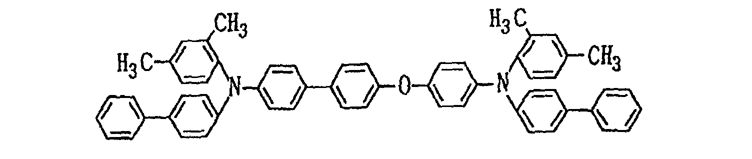

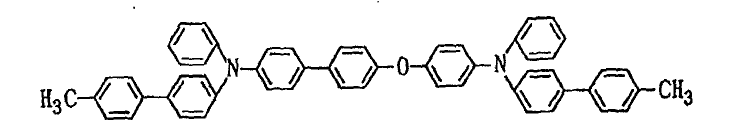

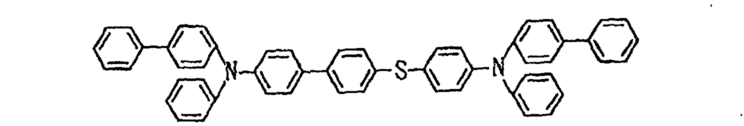

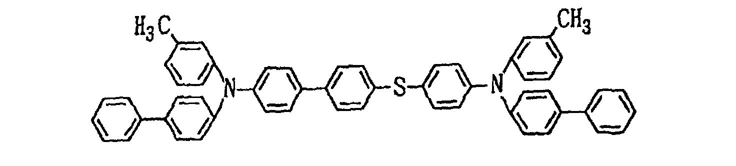

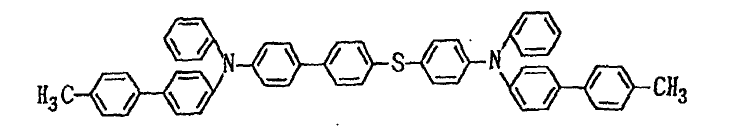

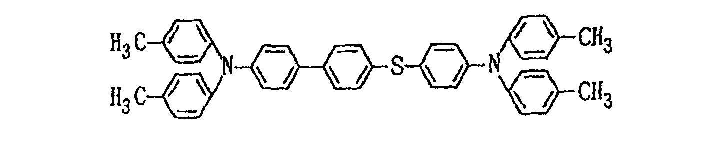

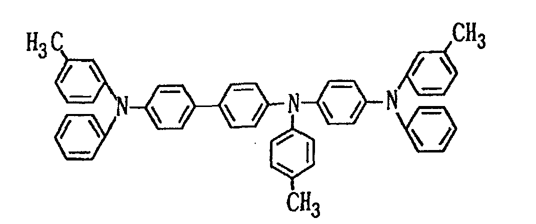

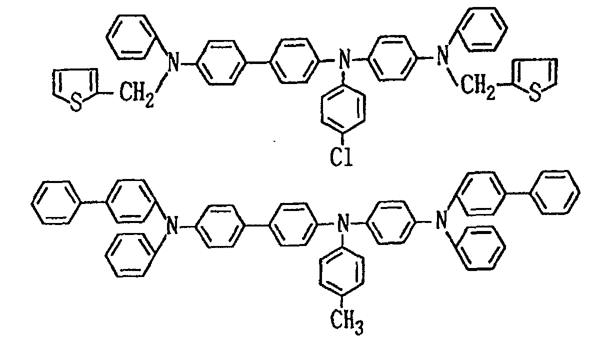

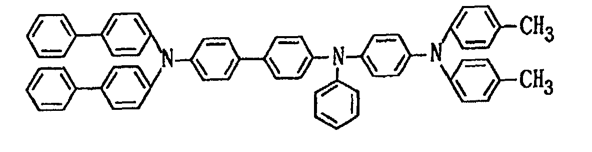

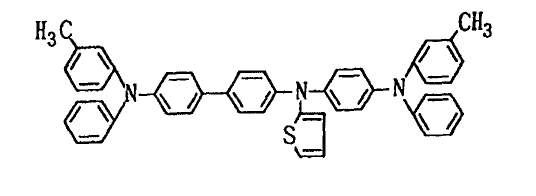

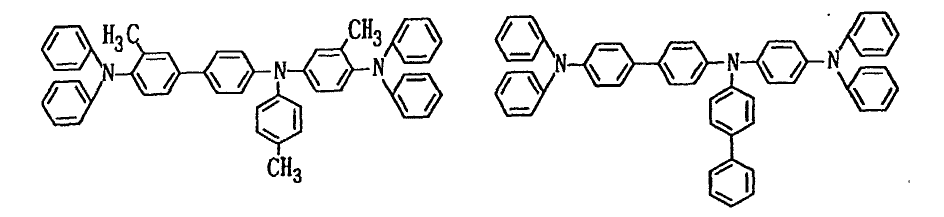

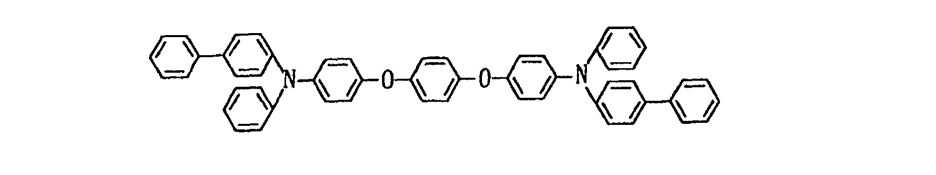

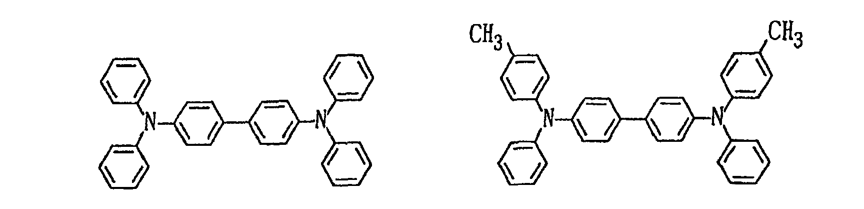

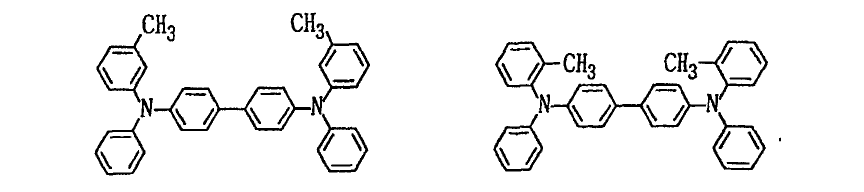

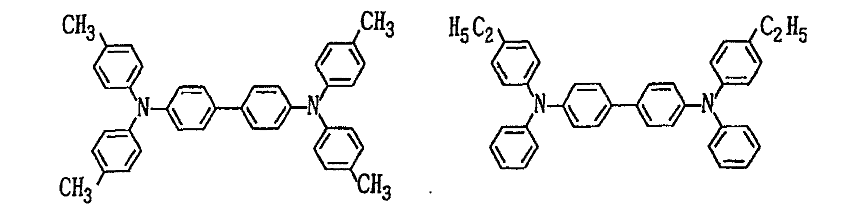

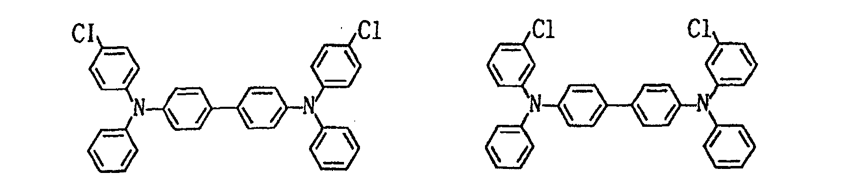

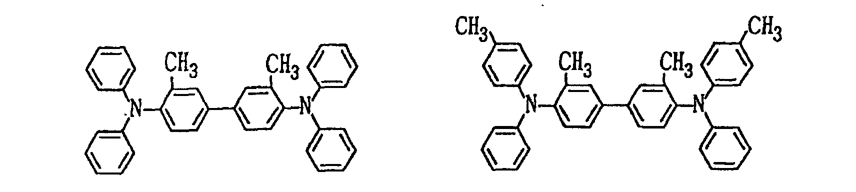

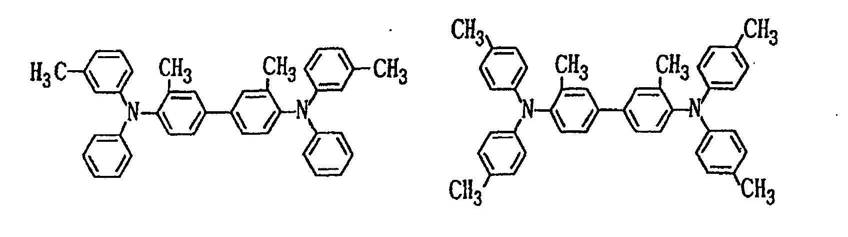

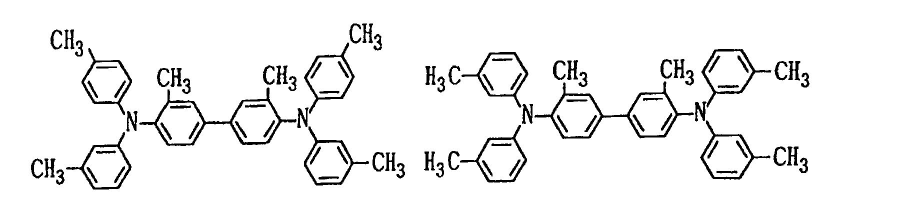

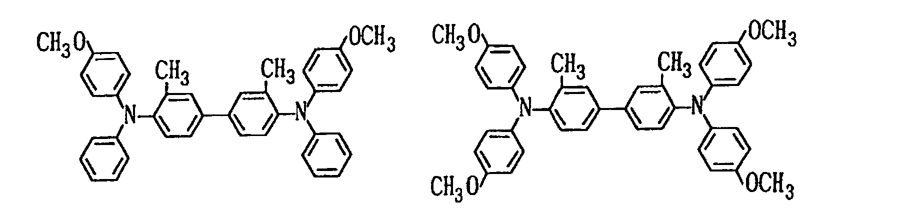

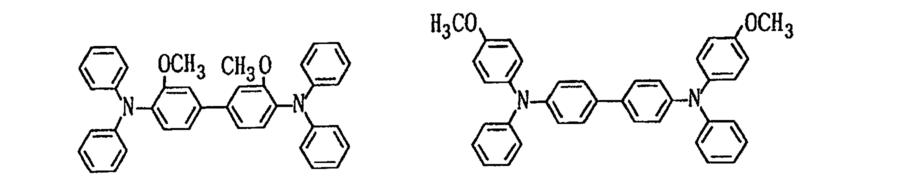

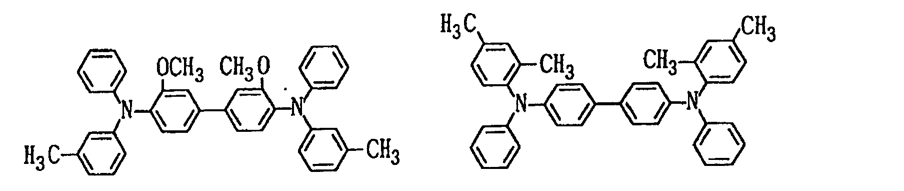

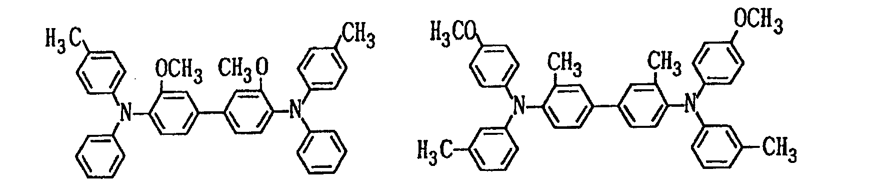

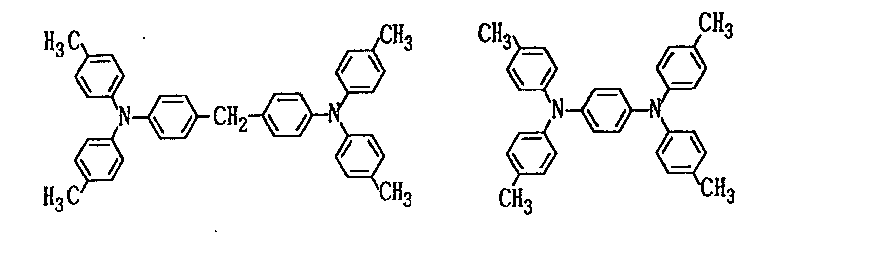

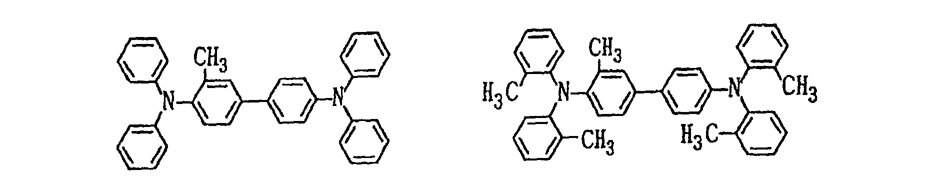

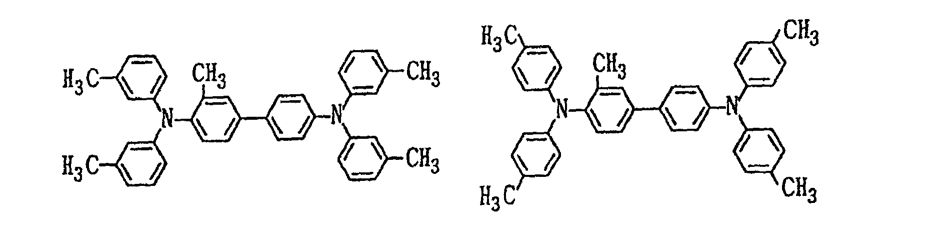

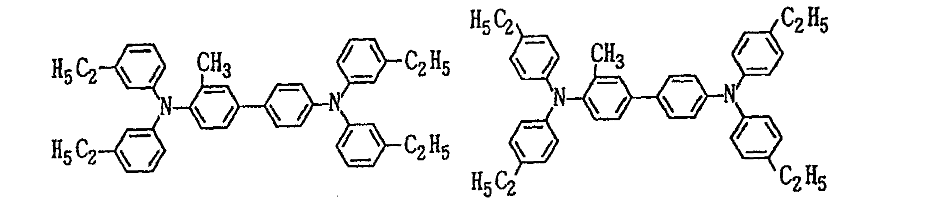

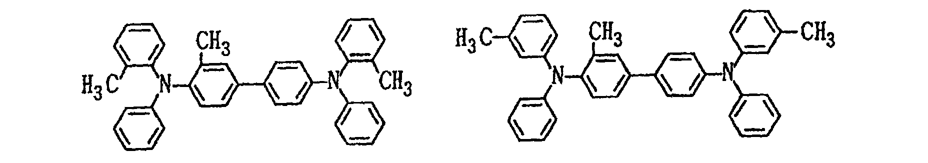

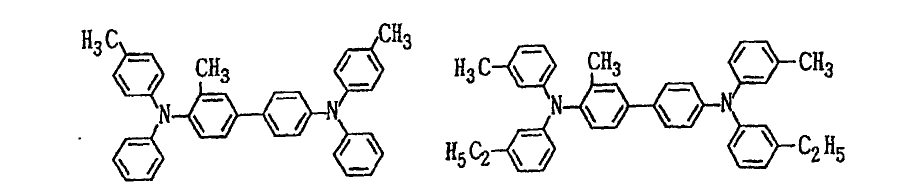

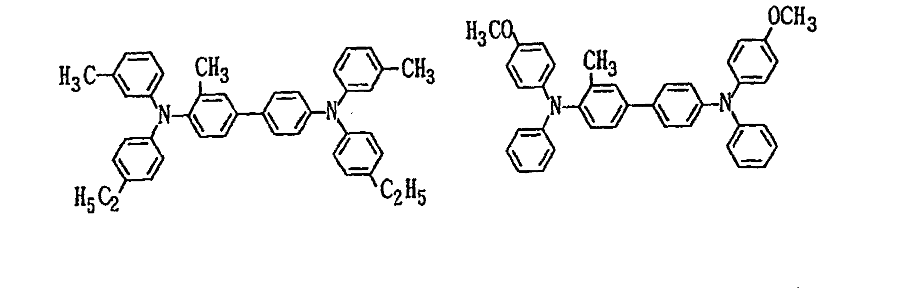

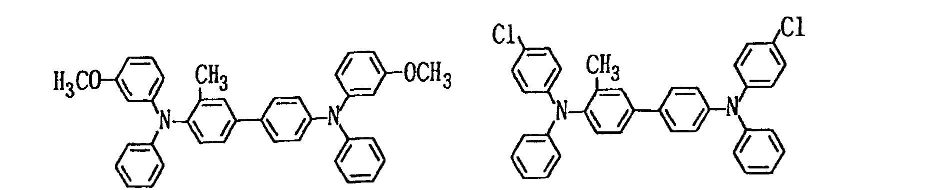

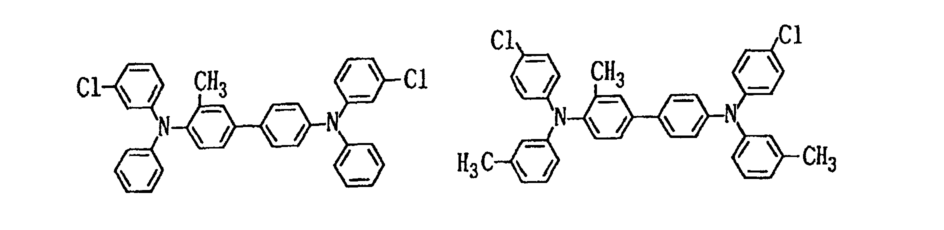

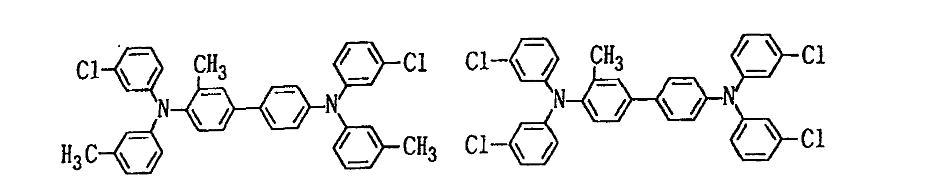

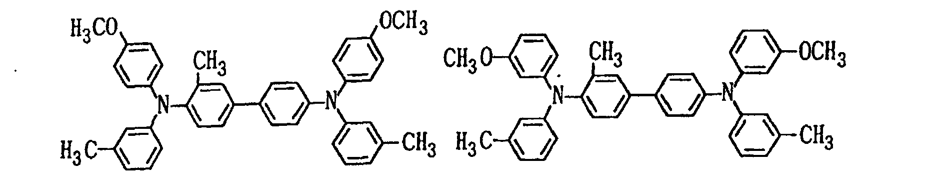

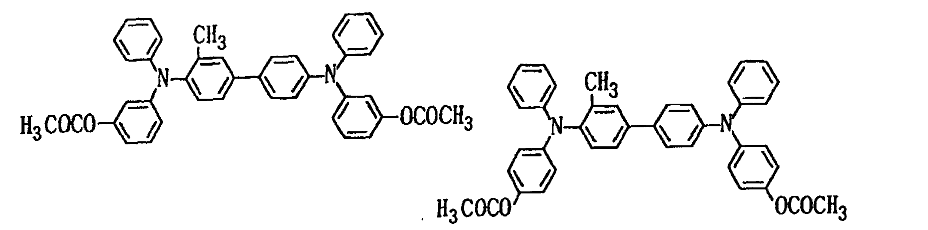

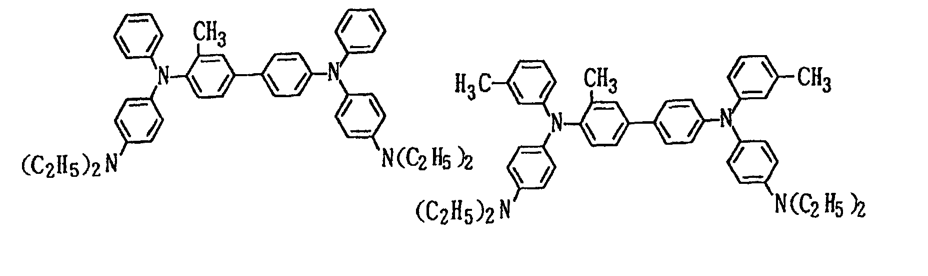

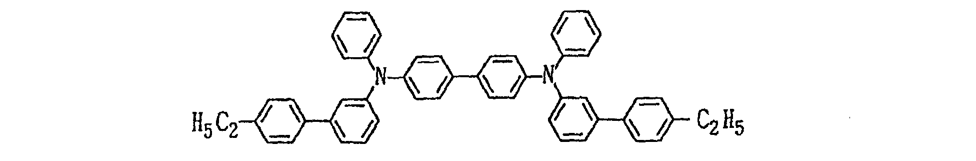

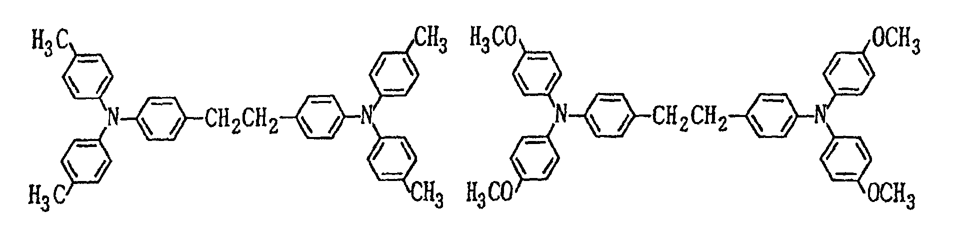

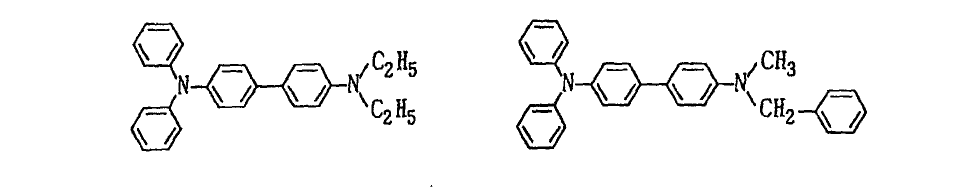

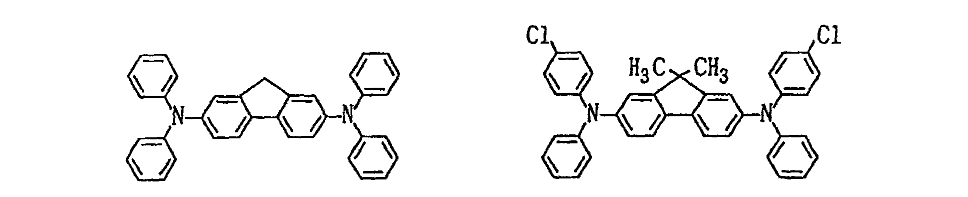

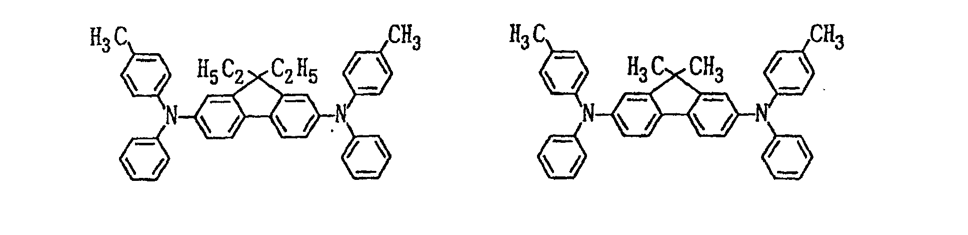

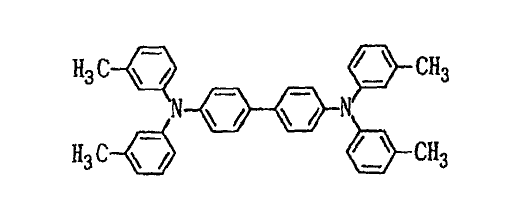

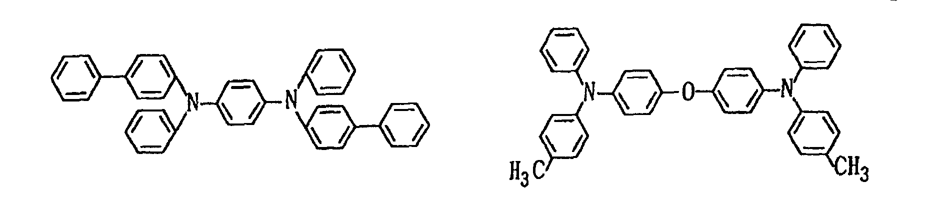

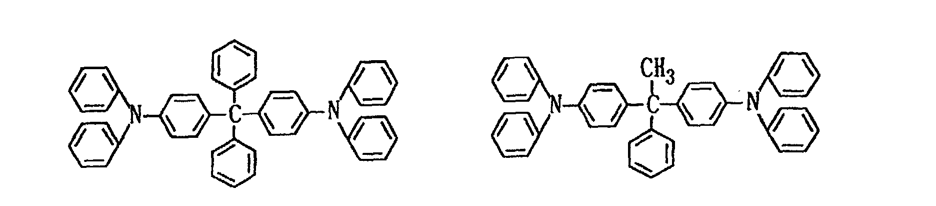

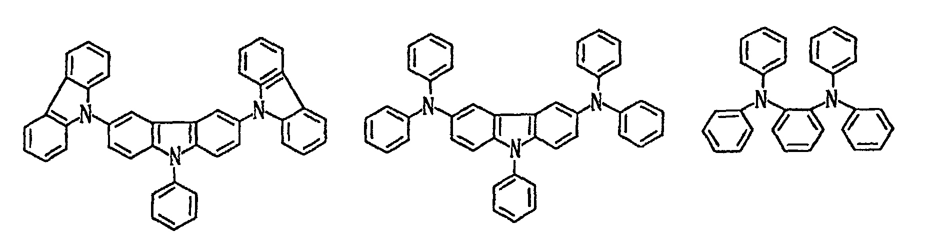

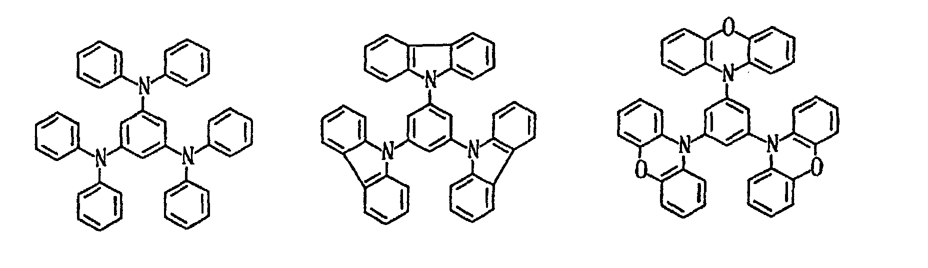

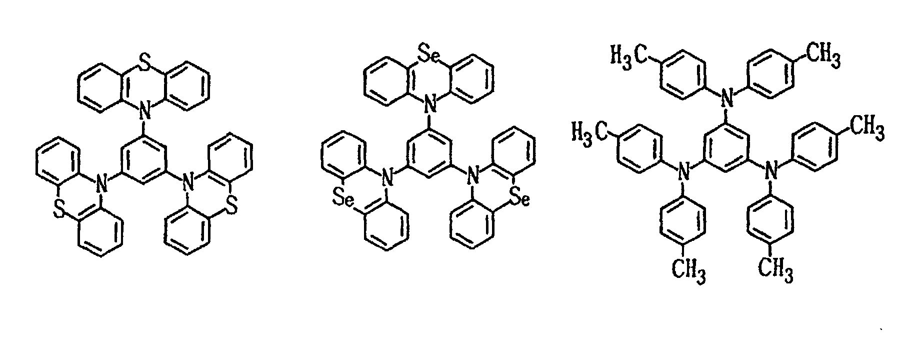

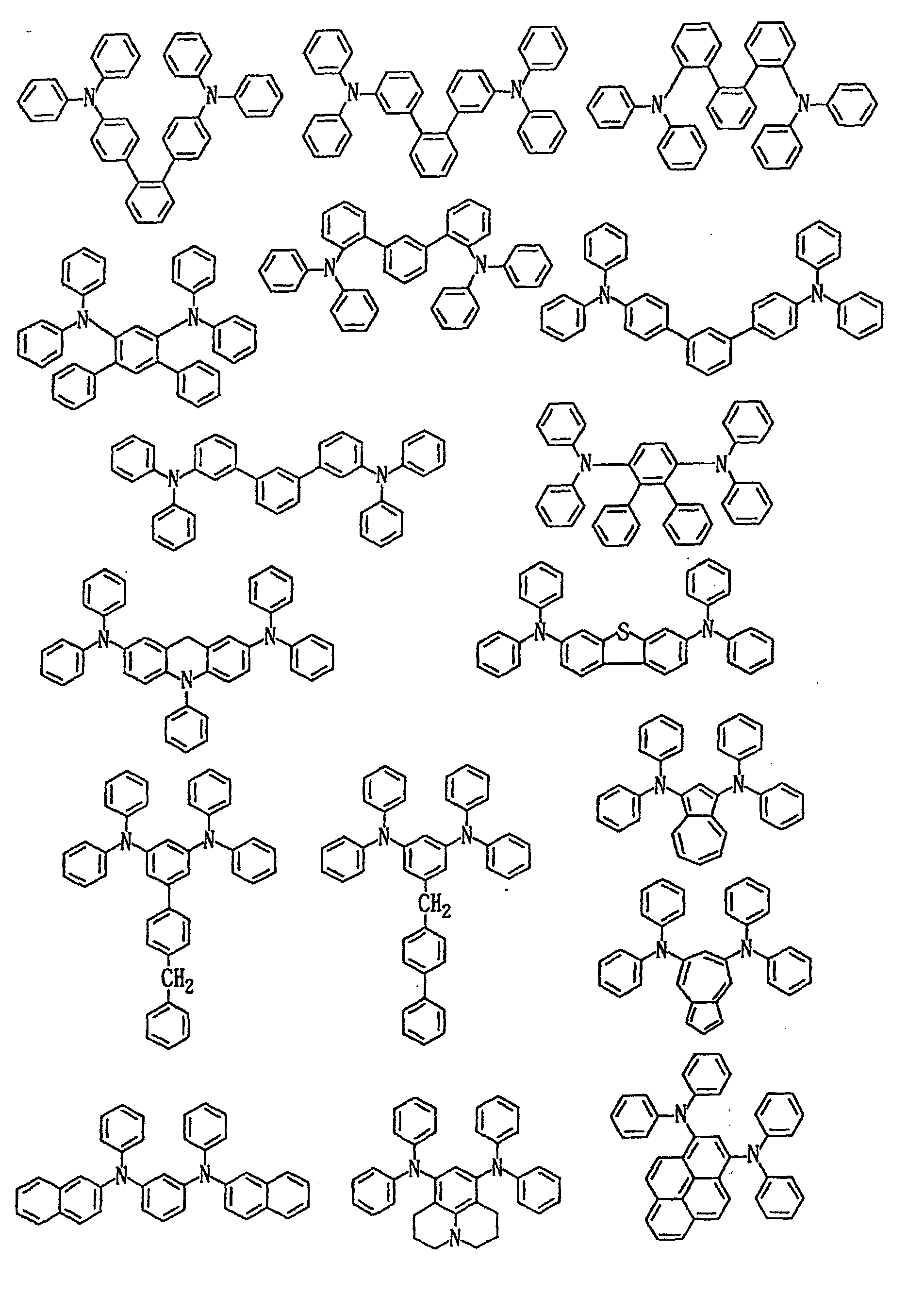

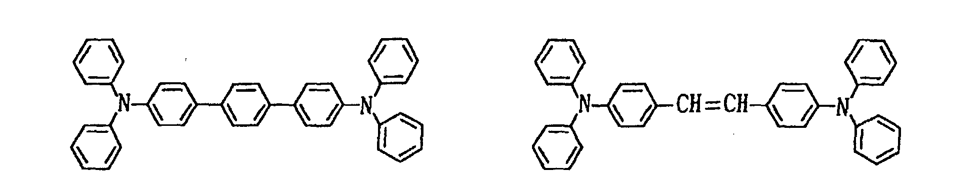

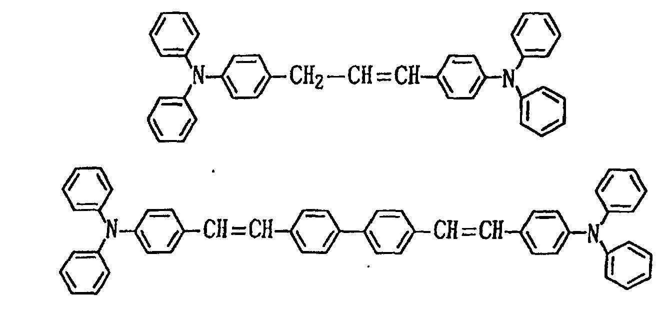

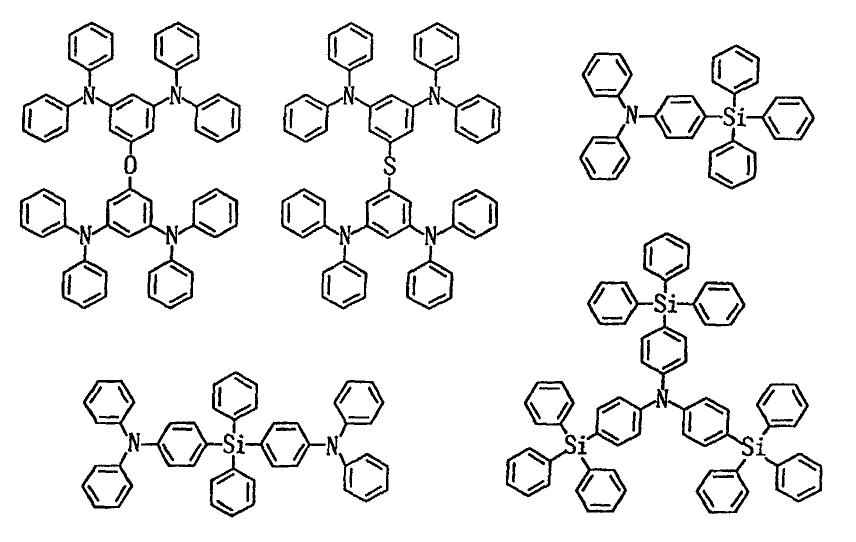

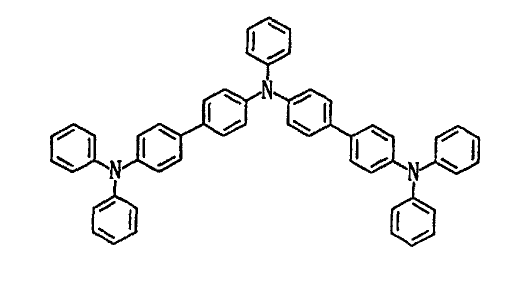

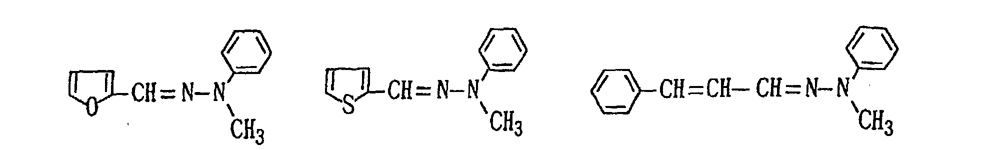

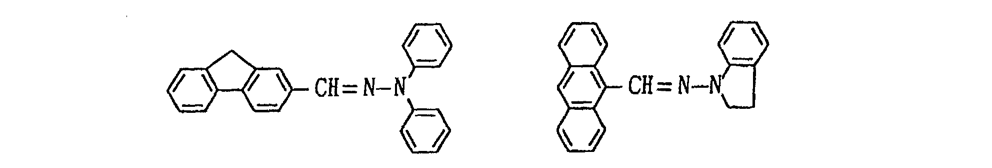

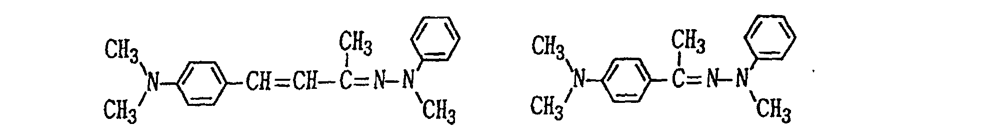

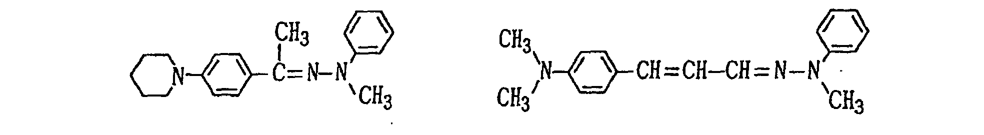

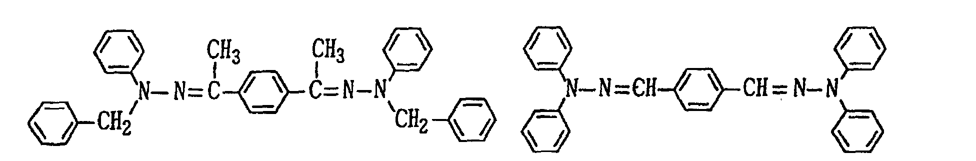

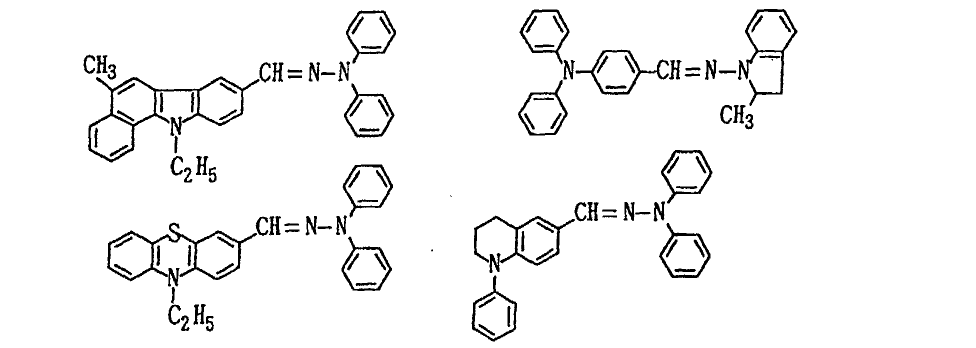

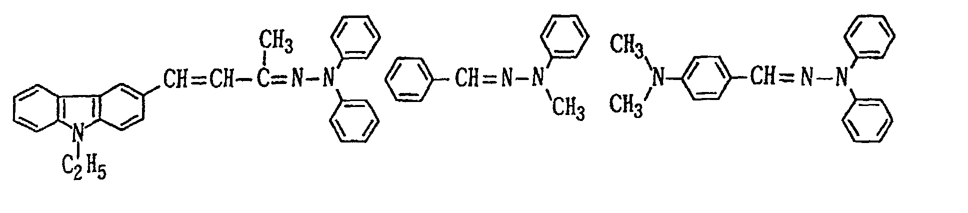

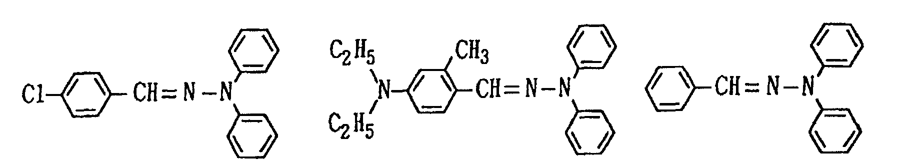

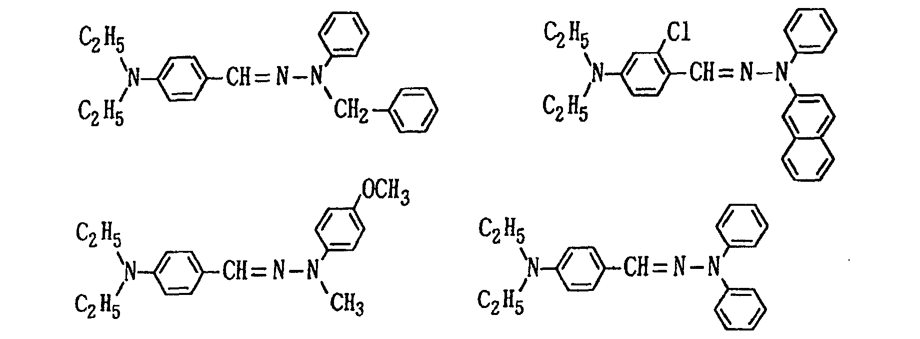

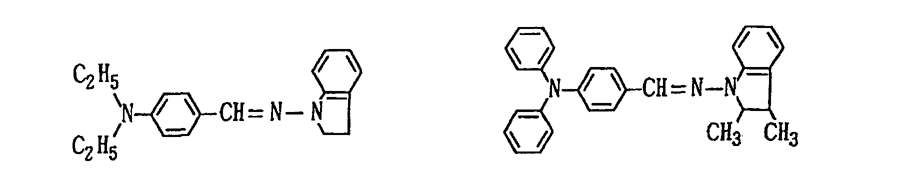

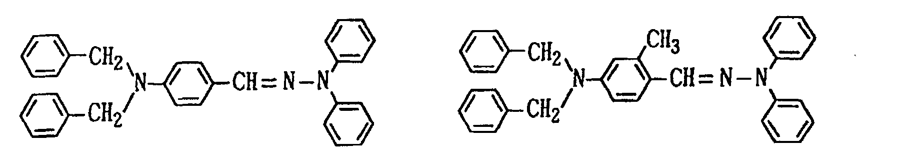

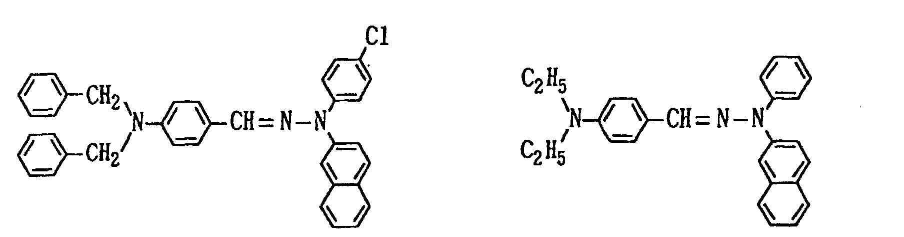

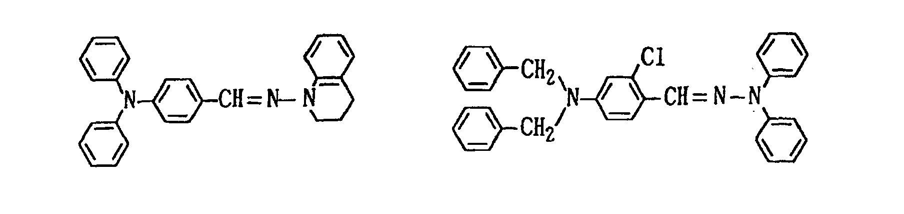

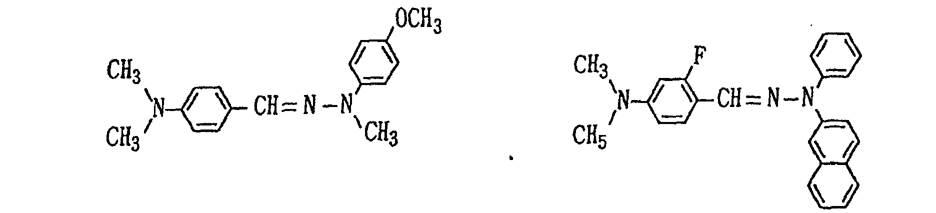

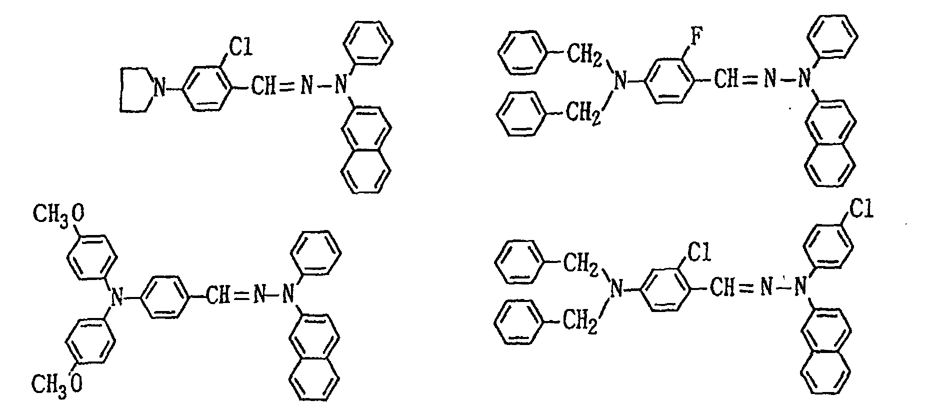

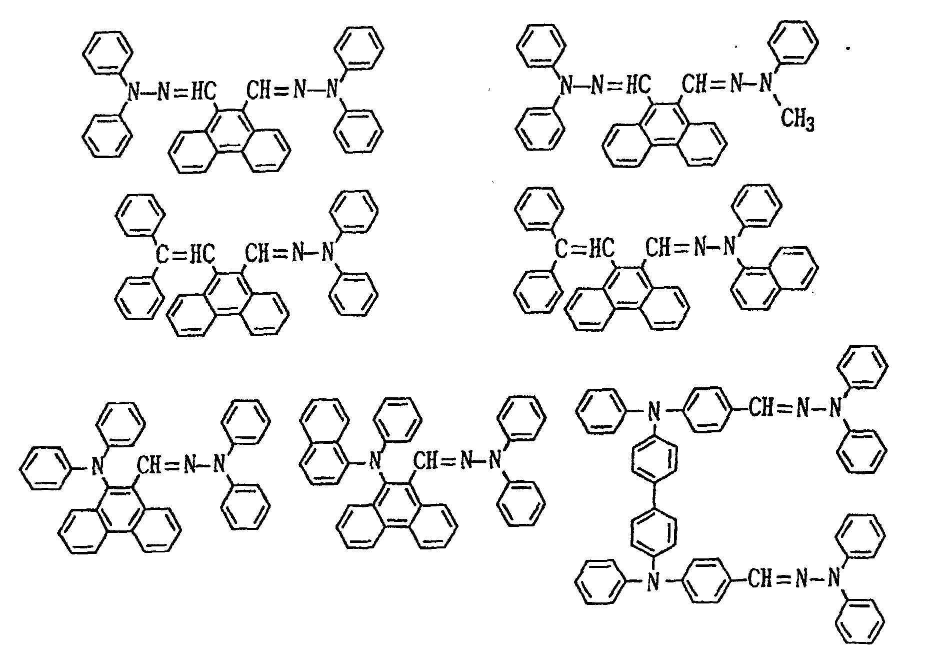

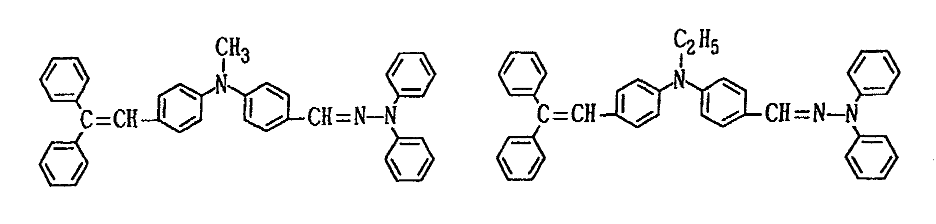

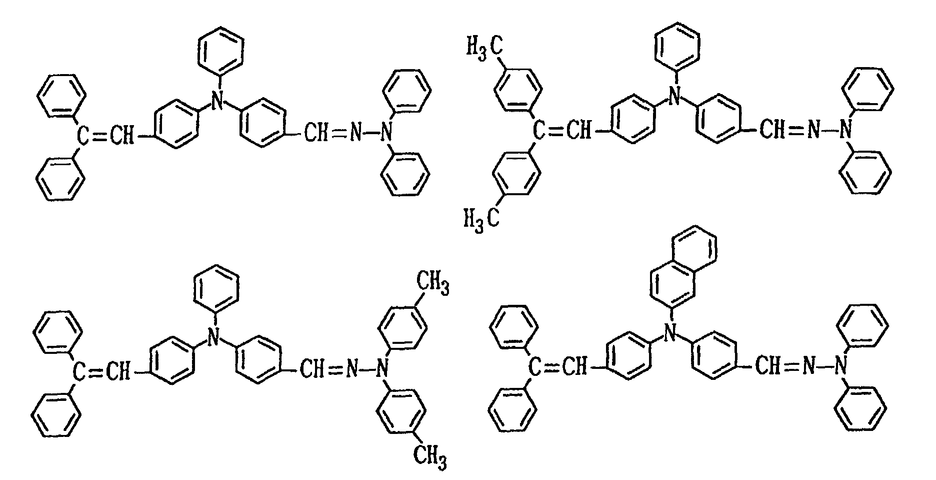

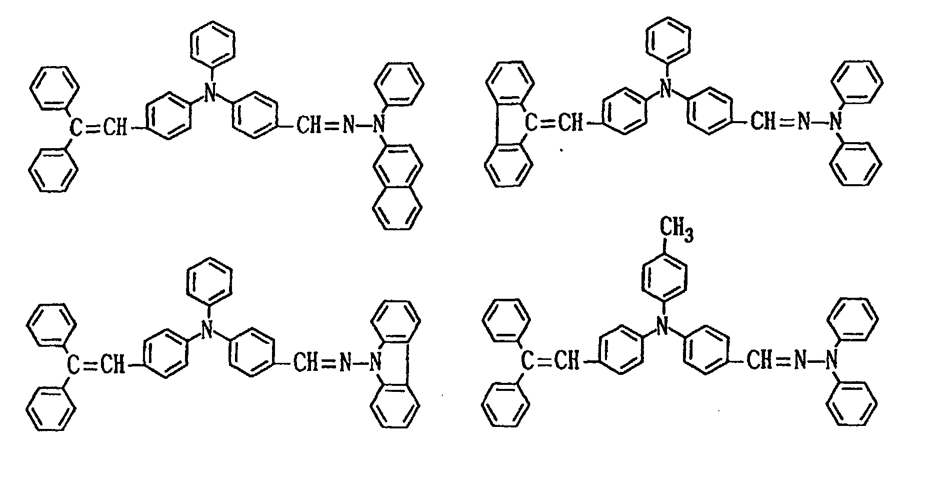

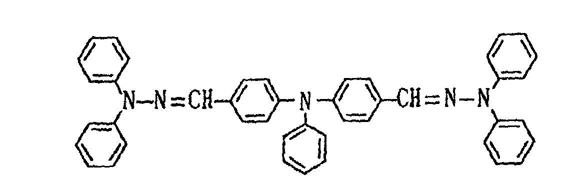

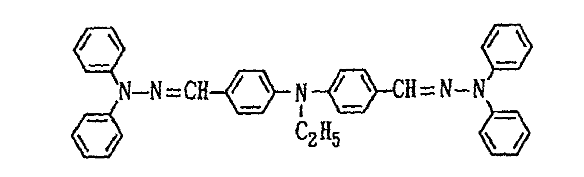

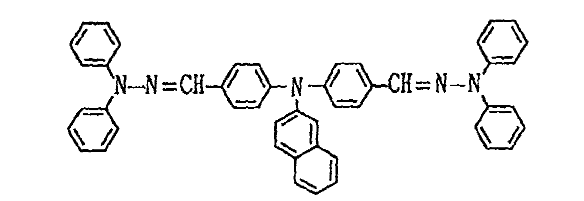

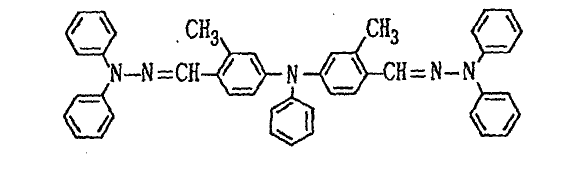

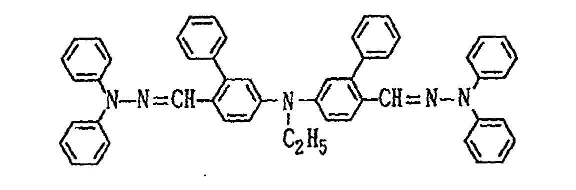

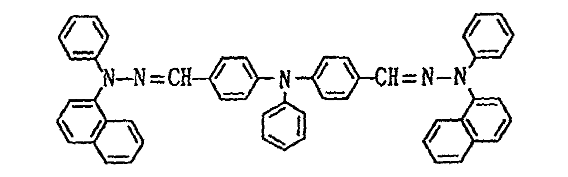

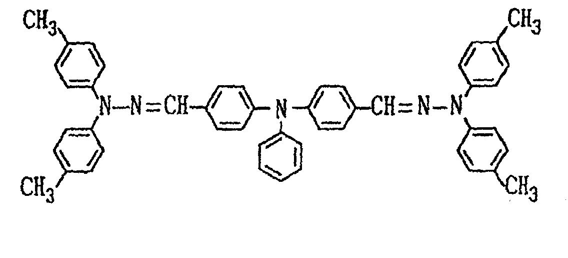

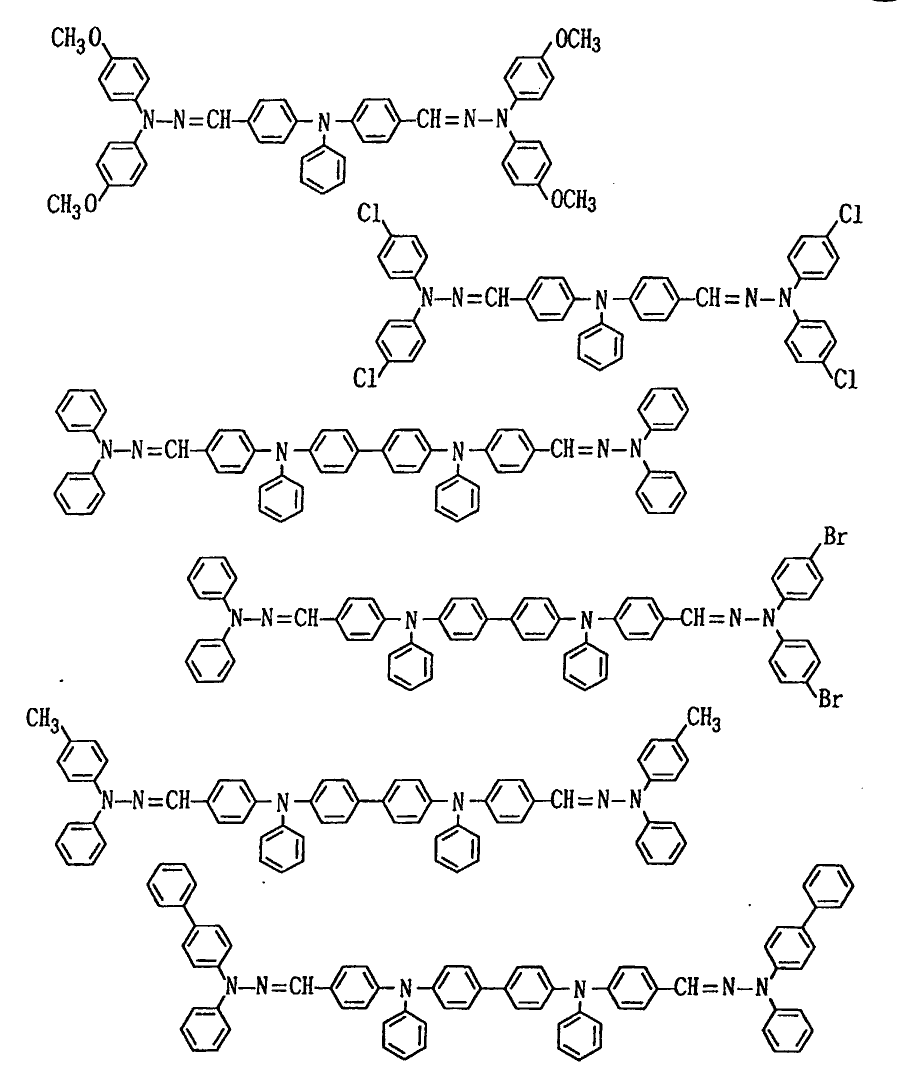

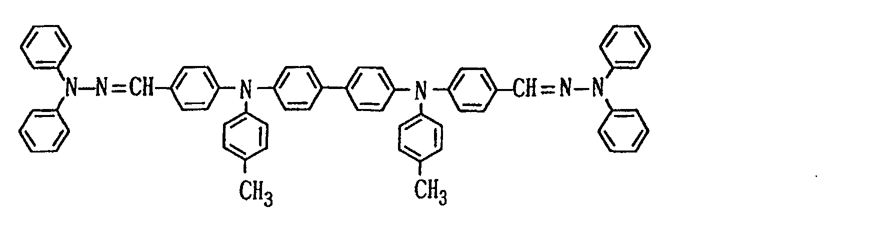

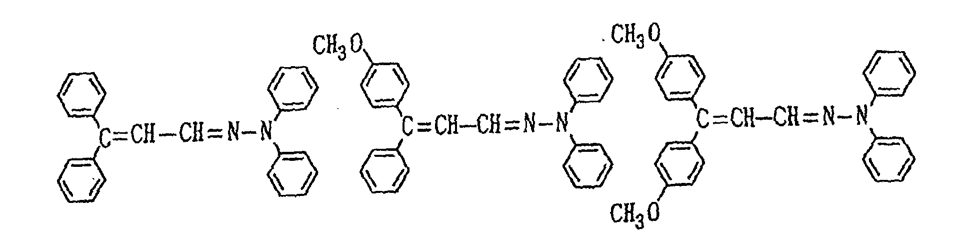

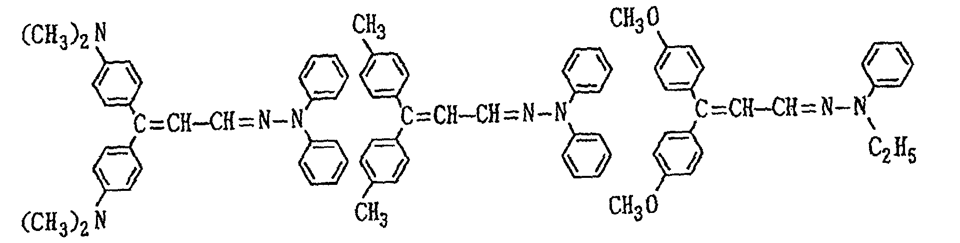

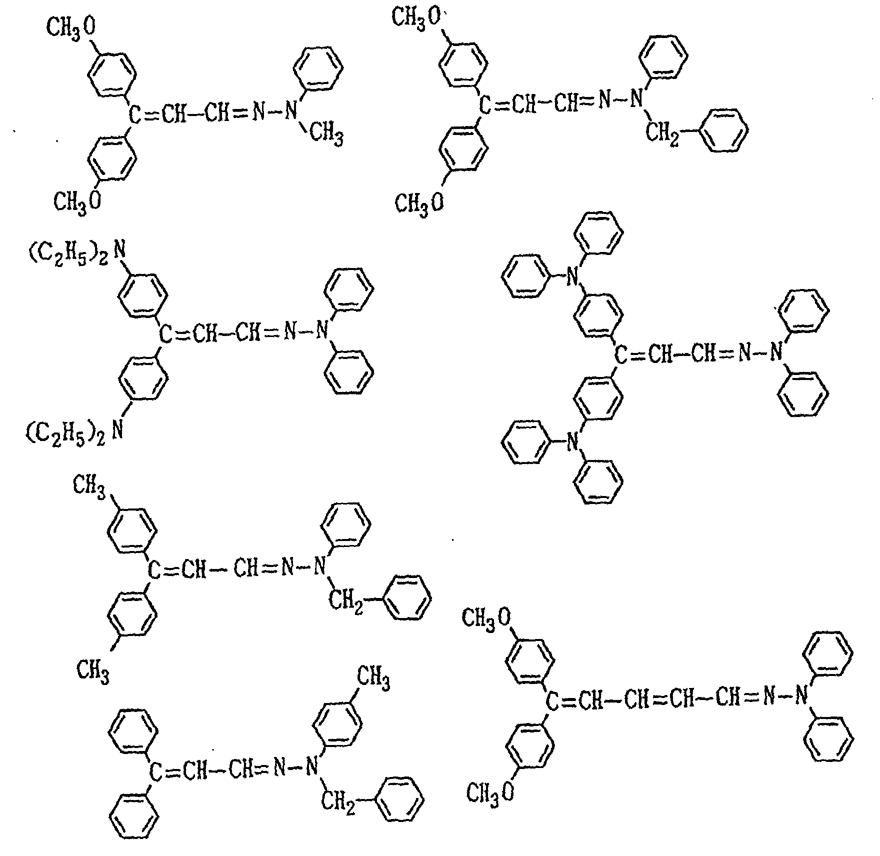

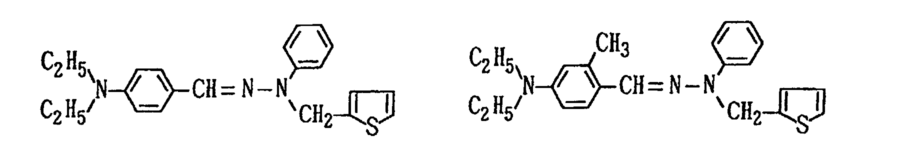

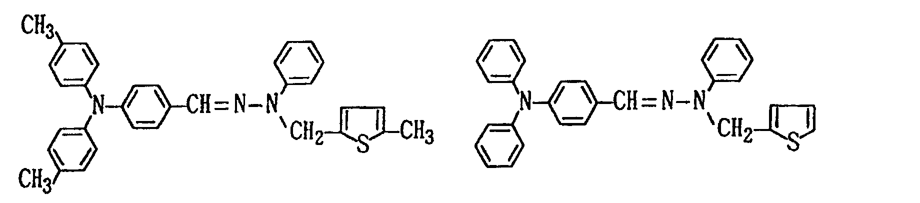

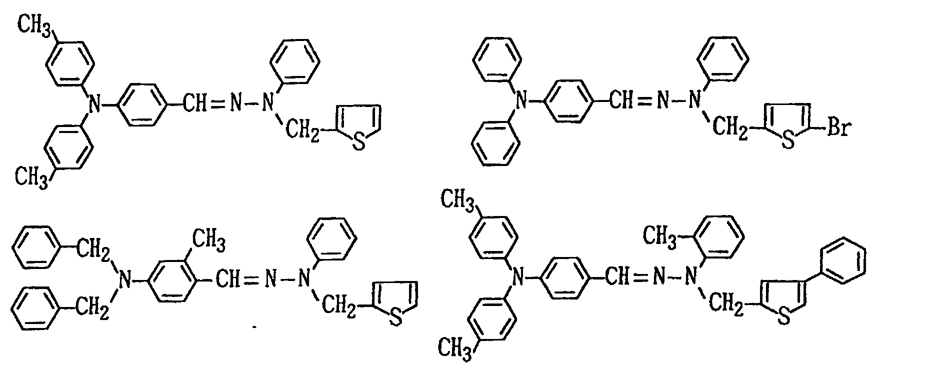

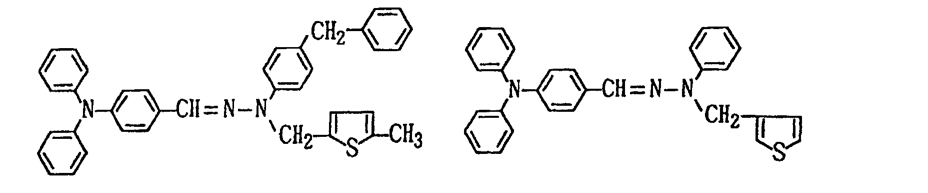

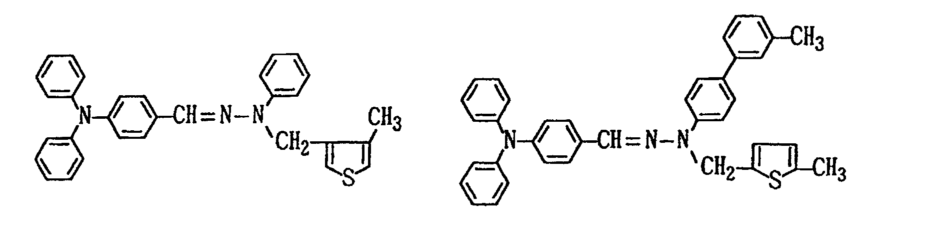

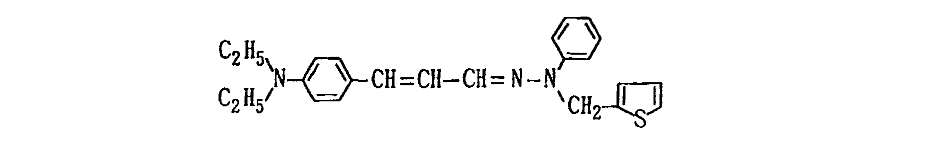

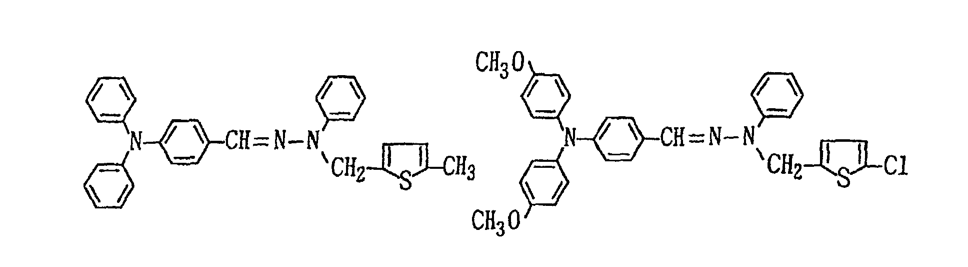

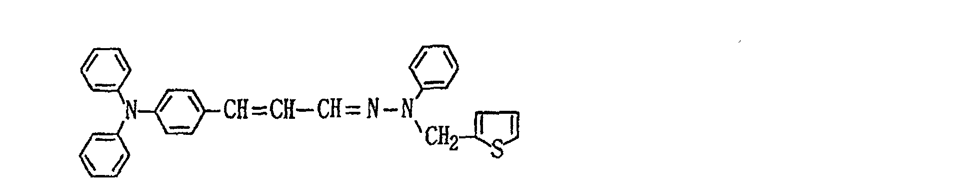

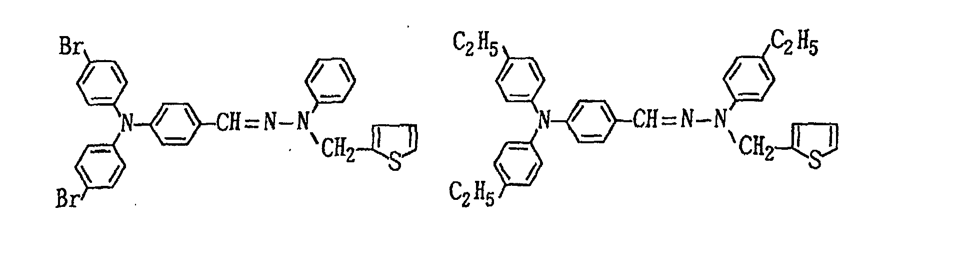

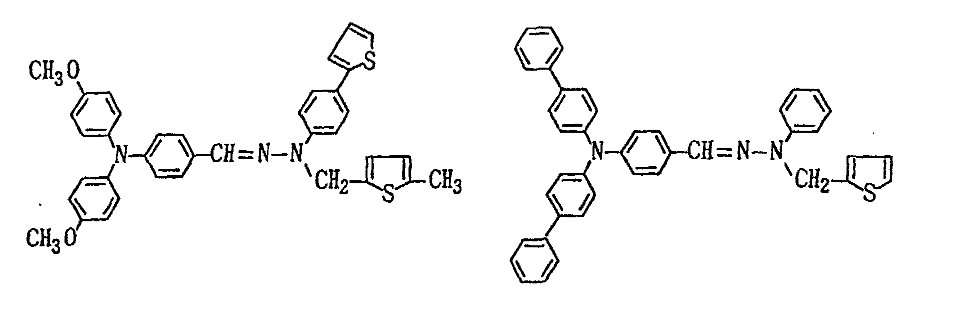

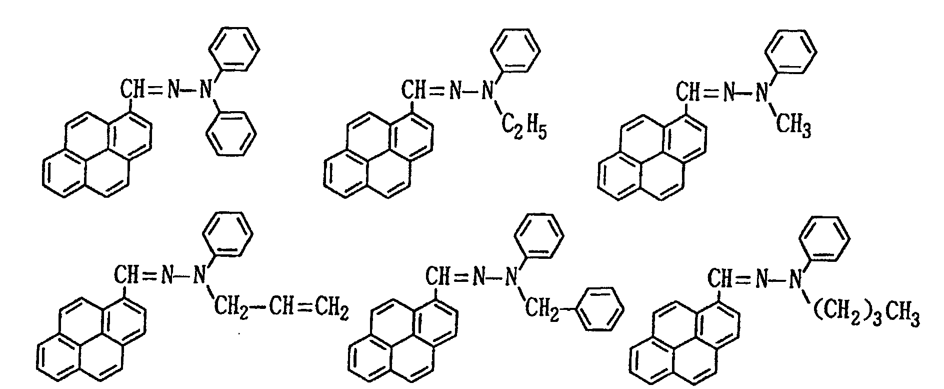

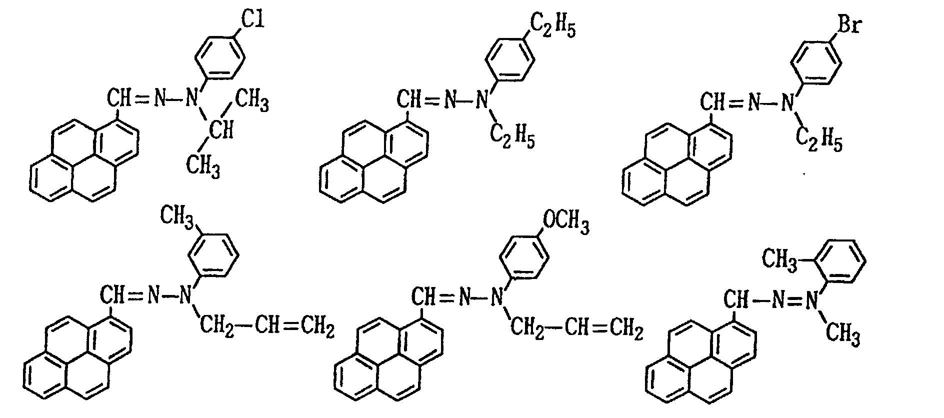

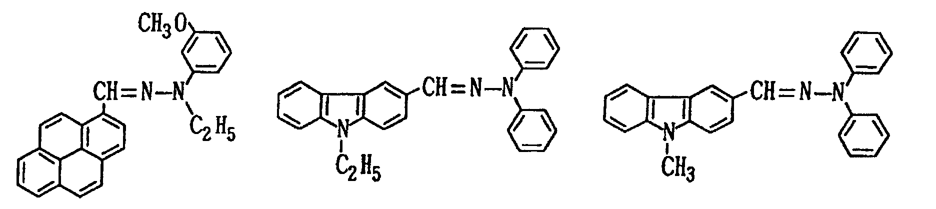

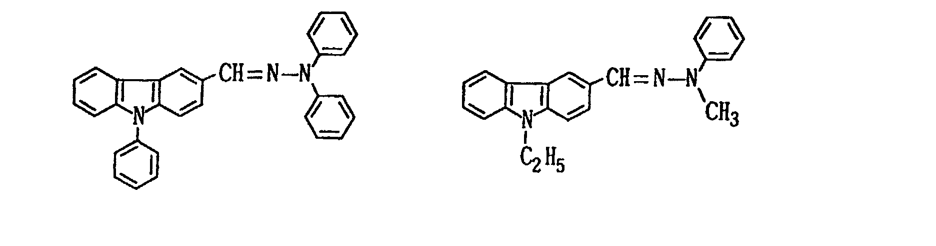

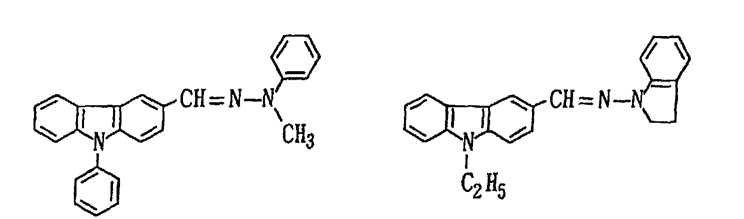

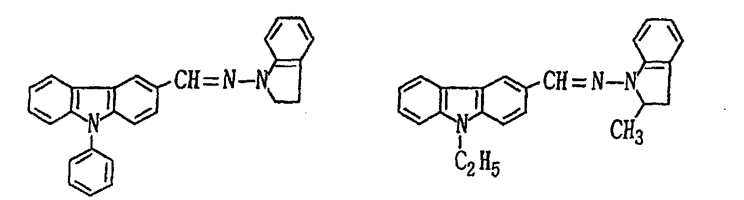

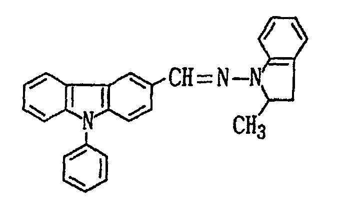

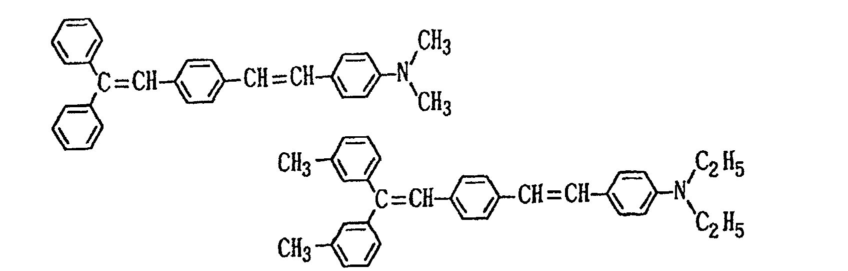

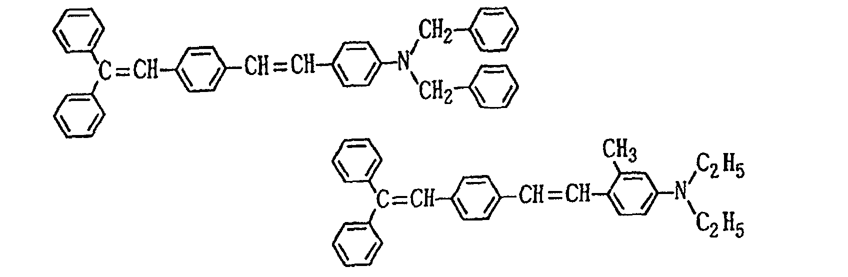

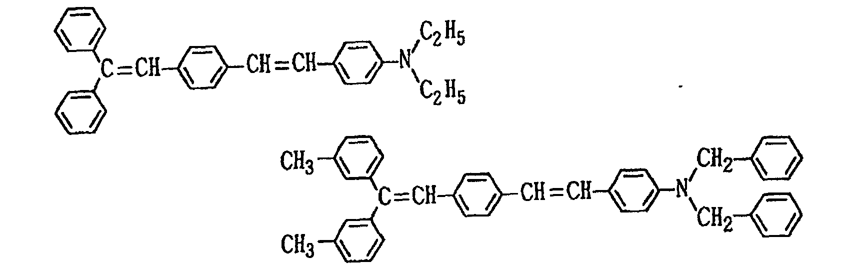

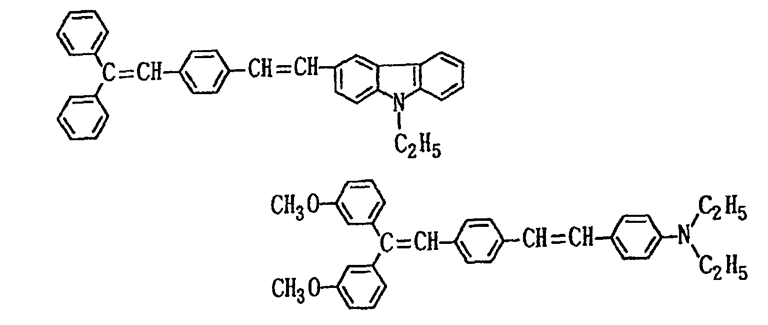

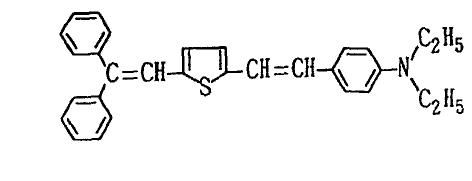

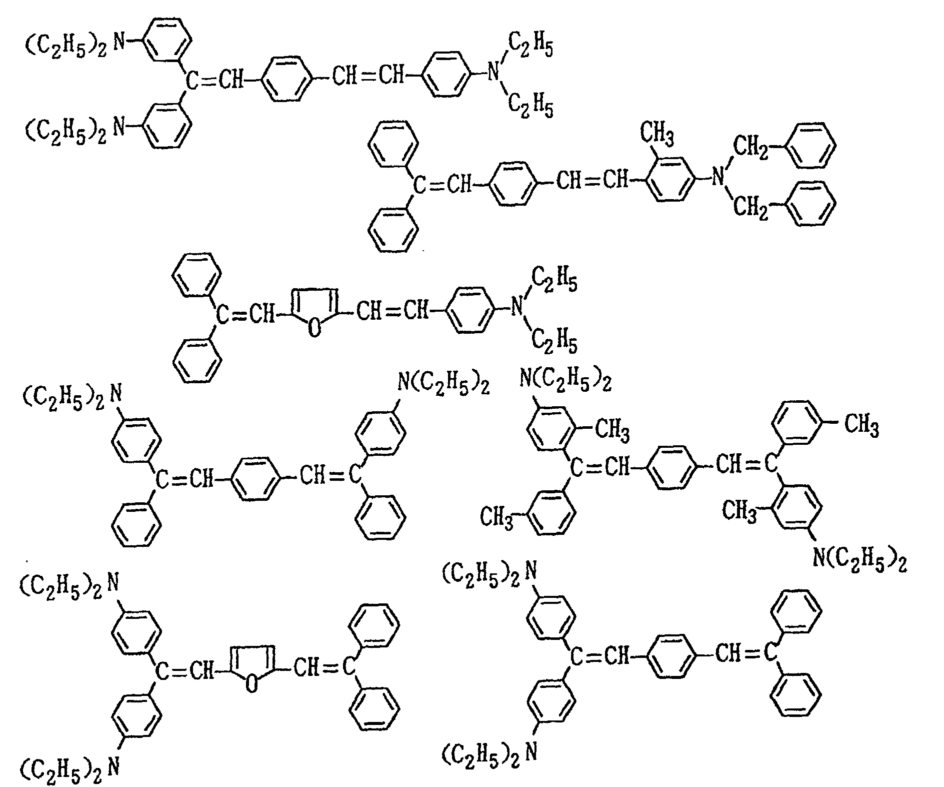

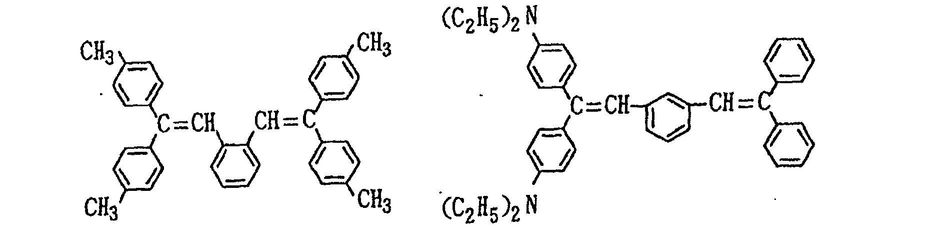

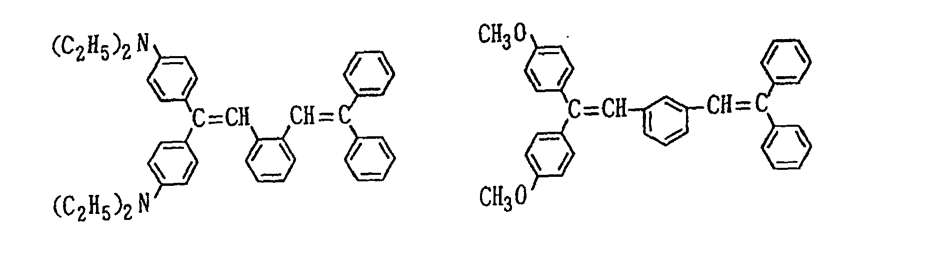

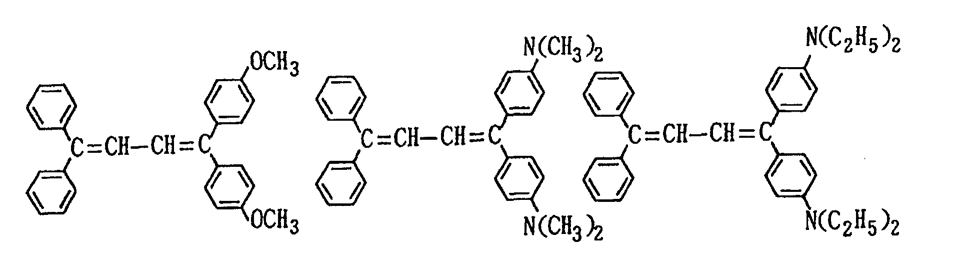

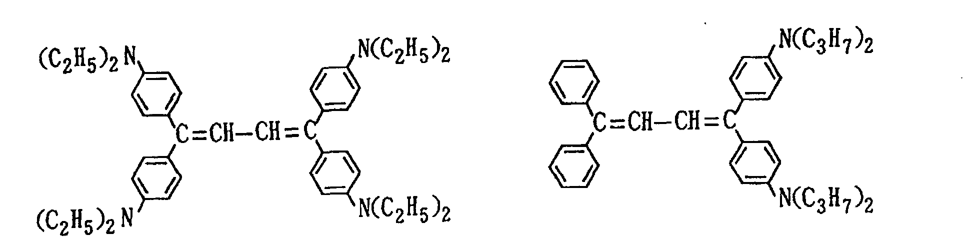

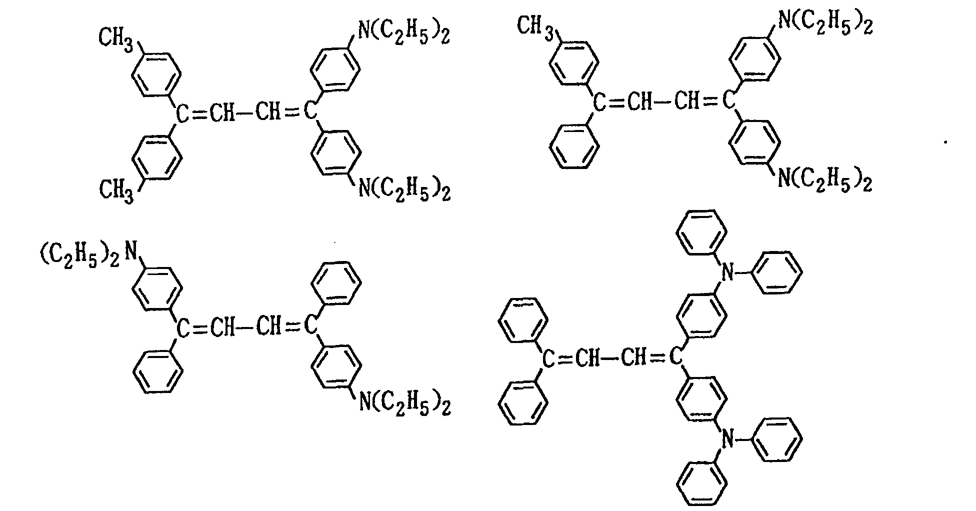

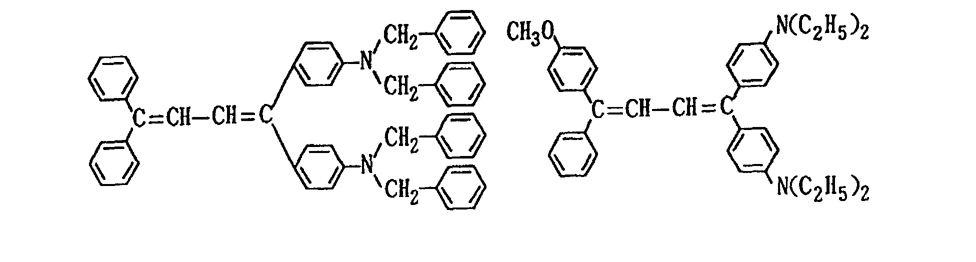

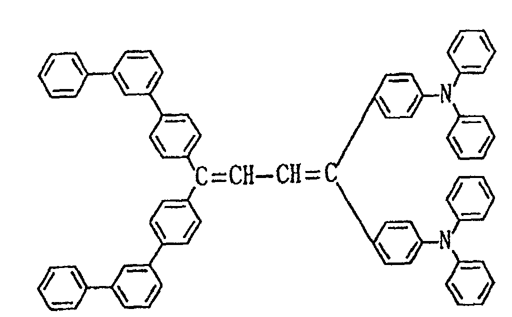

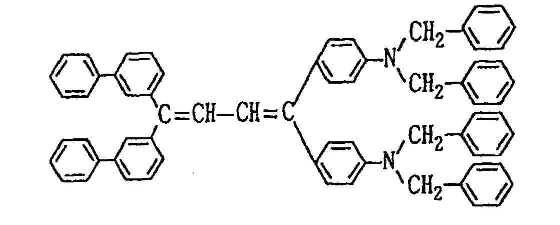

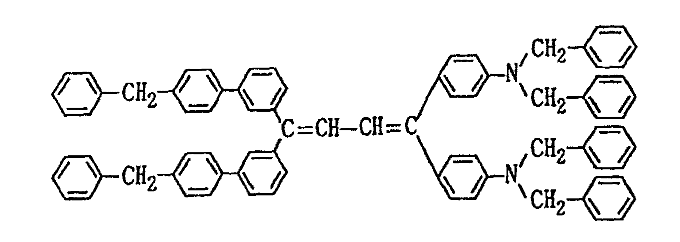

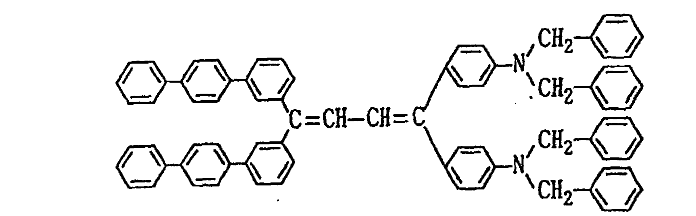

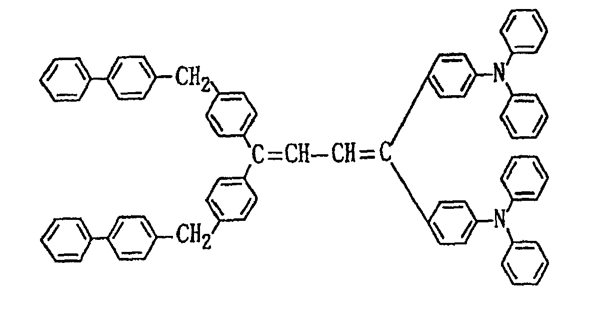

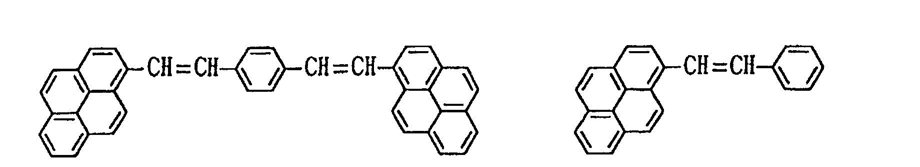

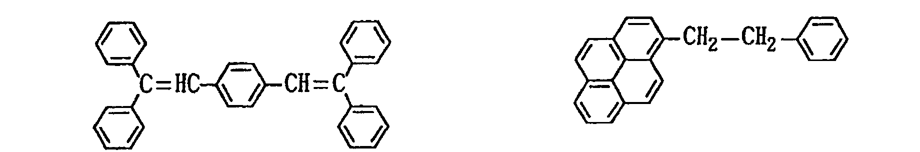

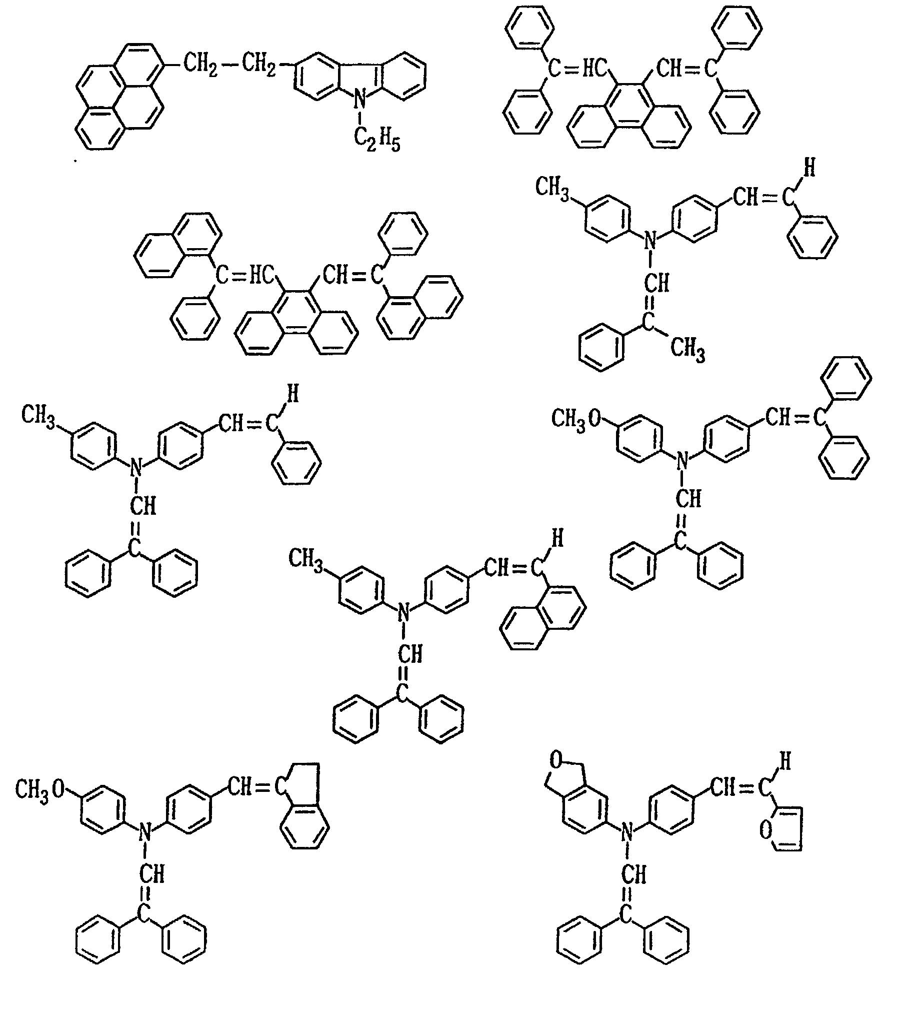

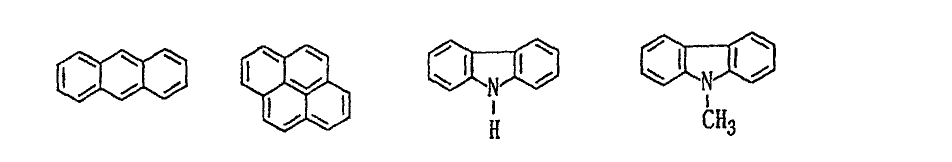

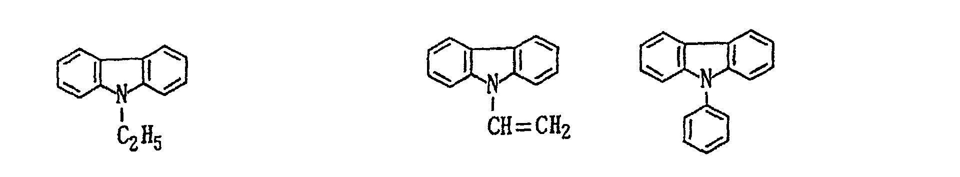

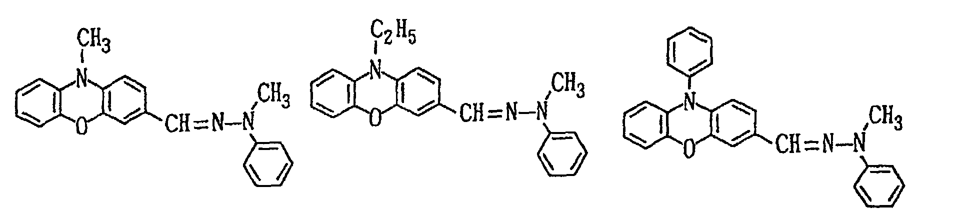

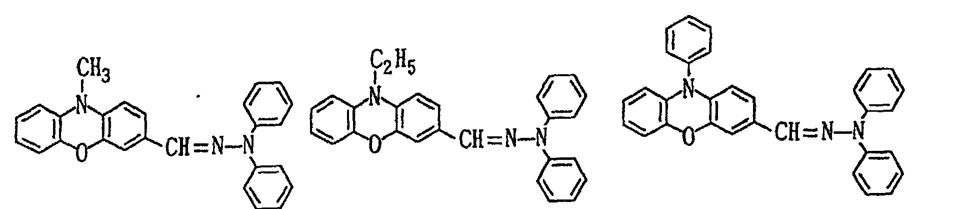

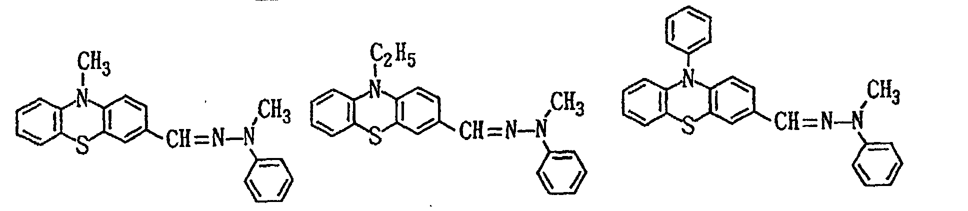

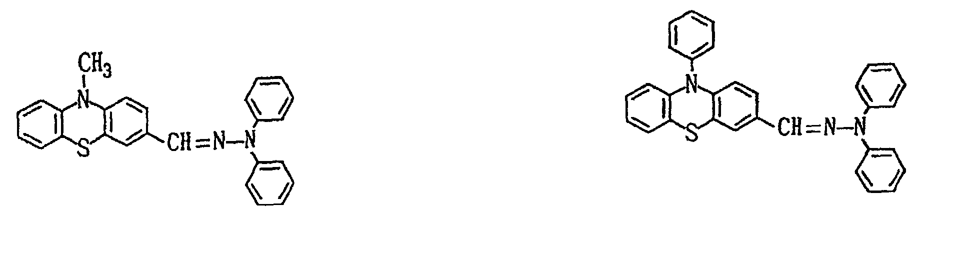

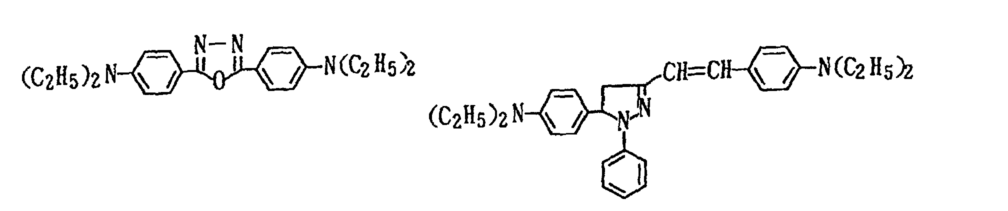

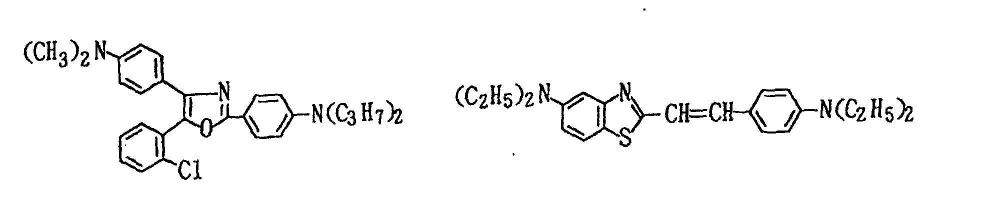

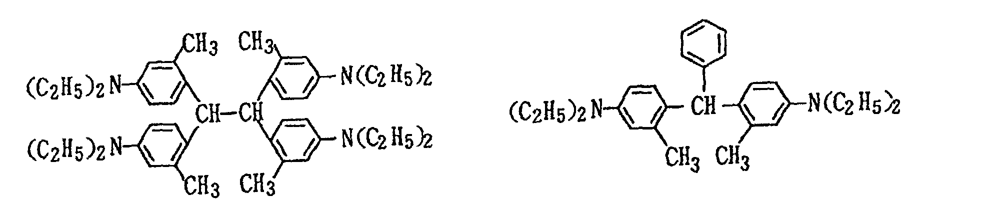

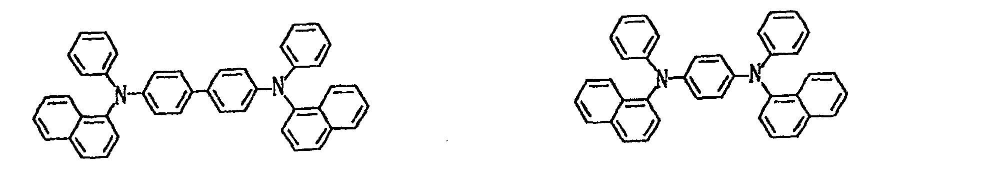

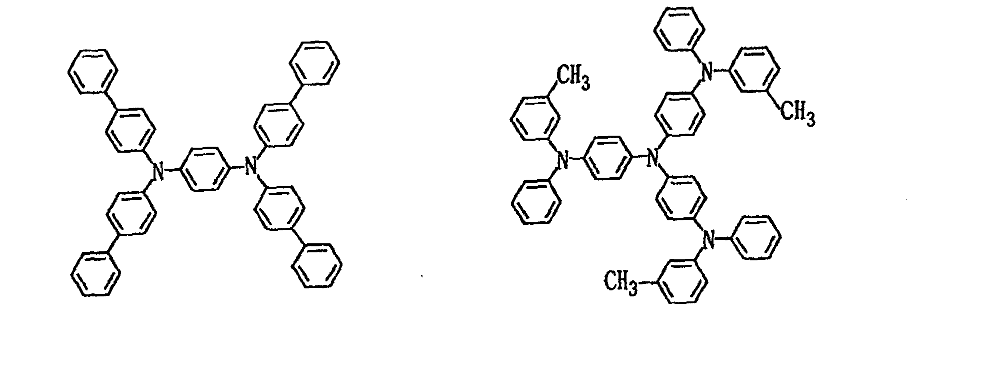

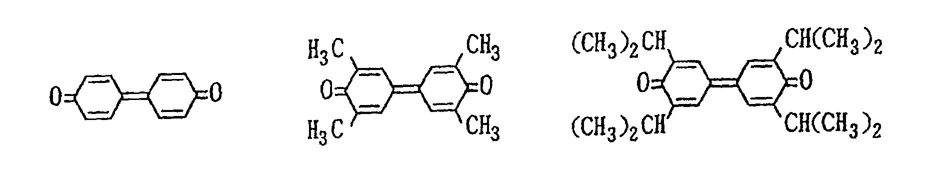

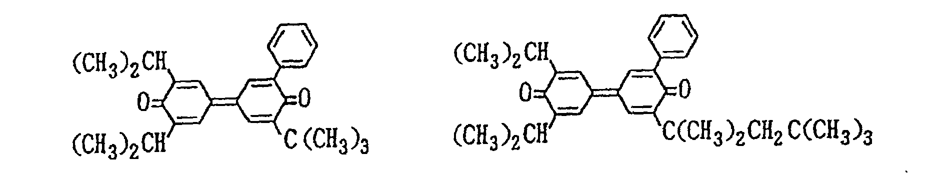

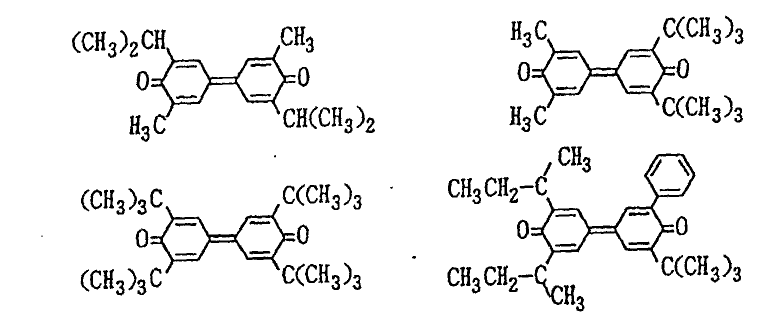

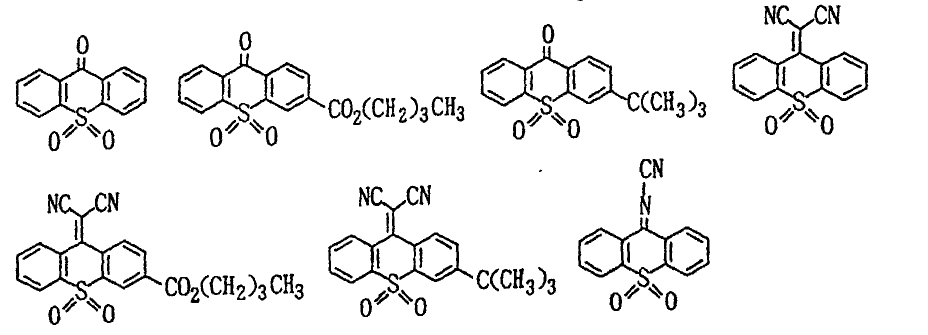

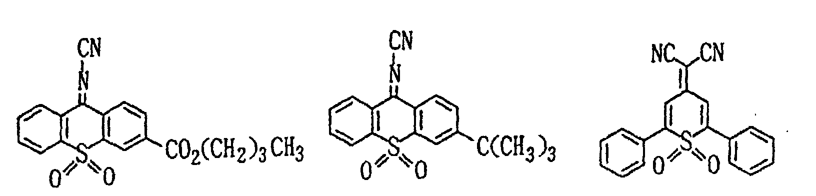

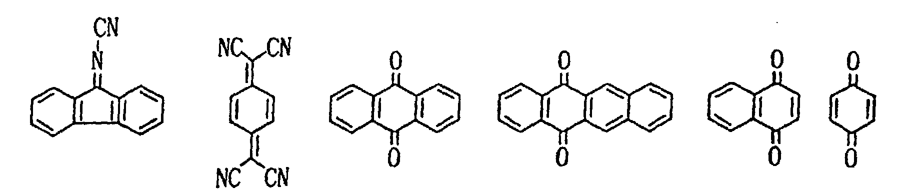

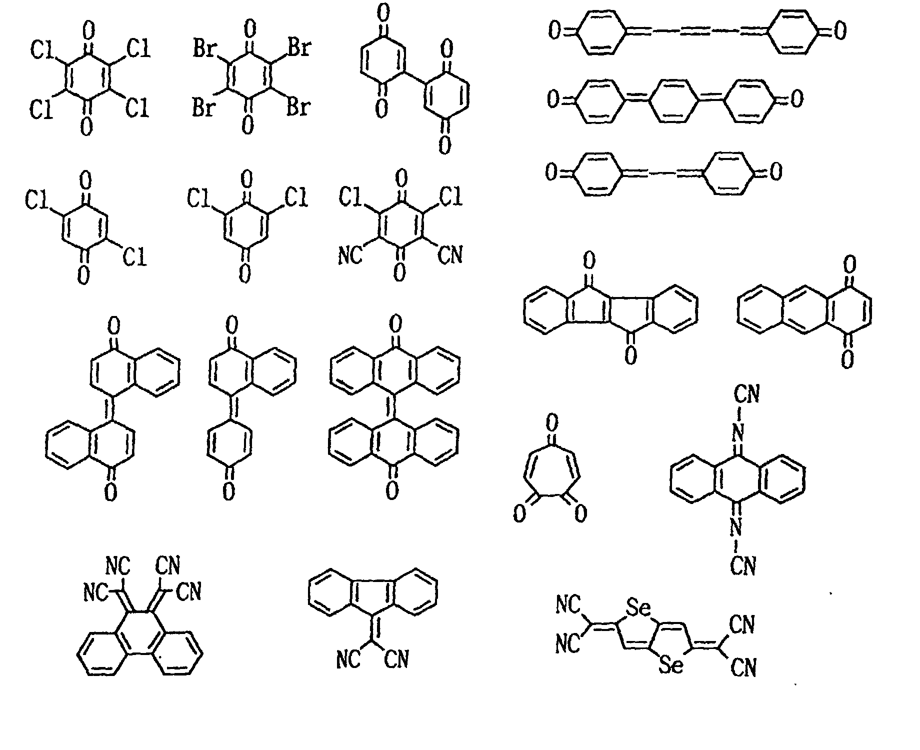

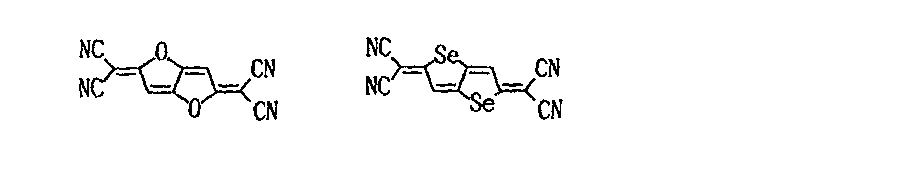

The charge-transfer substances may be used individually or as a mixture of two or more. The charge-transfer layer is preferably 5 to 100µm, more preferably 10 to 30µm, in thickness. If it is less than 5µm, the initial surface potential may be low, and if it is more than 100µm, the electrophotographic properties may be deteriorated.

Any conventional underlying layer may be interposed between the conductive substrate and the photosensitive layer. For example, the underlying layer may be composed of fine particles of titanium oxide, aluminum oxide, zirconia, titanic acid, zirconic acid, lanthanum lead, titanium black, silica, lead titanate, barium titanate, tin oxide, indium oxide or silicon oxide, polyamide resins, phenolic resins, casein, melamine resins, benzoguanamine resin, polyurethane resins, epoxy resins, cellulose, nitrocellulose, polyvinyl alcohol or polyvinyl butyral resin. These fine particles and resins may be used individually or as a mixture of two or more. It is desirable to use both the fine particles and the resins since the fine particles adsorb the resins to form uniform coating. The underlying layer may also contain the above-described binder resins. The polycarbonate resins or the crosslinked polycarbonate resins of the present invention may also be used.

The underlying layer is generally 0.01 to 10.0µm, preferably 0.01 to 1.0µm, in thickness. If it is less than 0.01µm, it may be difficult to form an even underlying layer, and if it is more than 10.0µm, the electrophotographic properties may be deteriorated.

Any conventional blocking layer may also be interposed between the conductive substrate and the photosensitive layer. The blocking layer may be a layer of the above-described binder resins. The blocking layer is generally 0.01 to 20.0µm, preferably 0.1 to 10.0µm, in thickness. If it is less than 0.01µm, it may be difficult to form an even blocking layer, and if it is more than 20.0µm, the electrophotographic properties may be deteriorated.

The electrophotographic photoreceptor of the present invention may have a protecting layer on the photosensitive layer. The protecting layer may be 0.01 to 20µm, preferably 0.1 to 10µm, in thickness. The protecting layer may be a layer of the above-described binder resins, particularly the polycarbonate resins or the crosslinked polycarbonate resins of the present invention. The protecting layer may contain conductive substances, such as the above-described charge-generating substances and charge-transfer substances, additives, metals, oxides, nitrides, salts and alloys thereof, and carbon.

To improve the properties of the electrophotographic photoreceptor of the present invention, the charge-generating layer and the charge-transfer layer may contain additives, such as binders, plasticizers, curing catalysts, fluidizing agents, anti-pinhole agents, spectral sensitizers (sensitizing dyes) for improving the electrophotographic sensitivity, other various chemical substances for preventing the increase of residual potential and the decreases of charging potential and sensitivity during repeated uses, antioxidants, surfactants, anti-curling agents and leveling agents.

Examples of the binders are silicone resins, polyamide resins, polyurethane resins, polyester resins, epoxy resins, polyketone resins, polycarbonate resins, polystyrene resins, polymethacrylate resins, polyacrylamide resins, polybutadiene resins, polyisoprene resin, melamine resin, benzoguanamine resin, polychloroprene resin, polyacrylonitrile resin, ethyl cellulose resin, nitrocellulose resin, urea resins, phenolic resins, phenoxy resins, polyvinyl butyral resins, formal resins, vinyl acetate resins, vinyl acetate/vinyl chloride copolymer and polyestercarbonate resins. Thermo- or photosetting resins may also be used. That is, it is possible to use any resin which is an insulator and can form coating in ordinary conditions.

The binders are preferably 5 to 200 % by weight, more preferably 10 to 100 % by weight, based on the charge-transfer substance used. Photosensitive layers containing less than 5 % by weight of binders may be so uneven as to deteriorate the image quality. Those containing more than 200 % by weight of binders may have poor sensitivity so as to increase the residual potential.

Examples of the plasticizers are biphenyl, biphenyl chloride, o-terphenyl, paraffin halides, dimethylnaphthalene, dimethyl phthalate, dibutyl phthalate, dioctyl phthalate, diethyleneglycol phthalate, triphenyl phosphate, diisobutyl adipate, dimethyl sebacate, dibutyl sebacate, butyl laurate, methylphthalyl ethyl glycolate, dimethylglycol phthalate, methylnaphthalene, benzophenone, polypropylene, polystyrene and various fluorohydrocarbons.

Examples of the curing catalysts are methanesulfonic acid, dodecylbenzenesulfonic acid and dinonylnaphthalenesulfonic acid.

Examples of the fluidizing agents are Modaflow and Acronal 4F.

Examples of the anti-pinhole agents are benzoin and dimethyl phthalate.

The total amount of the plasticizers, curing catalysts, the fluidizing agents and the anti-pinhole agents is preferably 5 % by weight or less, based on the charge-transfer substance.

Examples of the sensitizing dyes are triphenylmethane dyes, such as Methyl Violet, Crystal Violet, Night Blue and Victoria Blue, acridine dyes, such as Erythrosin, Rhodamine B, Rhodamine 3R, Acridine Orange and Flapeosin, thiazine dyes, such as Methylene Blue and Methylene Green, oxazine dyes, such as Capri Blue and Meldora Blue, cyanine dyes, merocyanine dyes, styryl dyes, pyrylium salt dyes and thiopyrylium salt dyes.

Electron acceptors may be added to the photosensitive layer to improve the sensitivity and to reduce the residual potential and fatigue during repeated uses.

Examples of the electron acceptors are compounds having high electron affinity, such as succinic anhydride, maleic anhydride, dibromomaleic anhydride, phthalic anhydride, tetrachlorophthalic anhydride, tetrabromophthalic anhydride, 3-nitrophthalic anhydride, 4-nitropyhthalic anhydride, pyromellitic anhydride, mellitic anhydride, tetracyanoethylene, tetracyanoquinodimethane, *o*-dinitrobenzene, *m*-dinitrobenzene, 1,3,5-trinitrobenzene, paranitrobenzonitrile, picryl chloride, quinonechloroimide, chloranyl, bromanyl, benzoquinone, 2,3-dichlorobenzoquinone, dichlorodicyanoparabenzoquinone, naphthoquinone, diphenoquinone, tropoquinone, anthraquinone, 1-chloroanthraquinone, dinitroanthraquinone, 4-nitrobenzophenone, 4,4-nitrobenzophenone, 4-nitrobenzalmalonodinitrile, ethyl α-cyano-β-(*p*-cyanophenyl)acrylate, 9-anthracenylmethylmalondinitrile, 1-cyano-(*p*-nitrophenyl)-2-(*p*-chlorophenyl)ethylene, 2,7-dinitrofluorenone, 2,4,7-trinitrofluorenone, 2,4,5,7-tetranitrofluorenone, 9-fluorenylidene-[dicyanomethylenemalononitrile], polynitro-9-fluorenylidene-[dicyanomethylenemalonodinitrile], picric acid, *o*-nitrobenzoic acid, *p*-nitrobenzoic acid, 3,5-dinitrobenzoic acid, pentafluorobenzoic acid, 5-nitrosalicylic acid, 3,5-dinitrosalicylic acid, phthalic acid and mellitic acid.

The electron acceptors may be added to either the charge-transfer layer or the charge-generating layer, and is generally 0.01 to 200 % by weight, preferably 0.1 to 50 % by weight, based on the charge-transfer substances or the charge-generating acceptors.

To improve the surface quality, tetrafluoroethylene resin, trifluoroethylene chloride resin, tetrafluoroethylene-hexafluoropropylene resin, fluorovinyl resins, fluorovinylidene resins, difluorodichloroethylene resin, copolymers thereof and fluorinated graft copolymers may also be used.

The amount of these surface modifiers is generally 0.1 to 60 % by weight, preferably 5 to 40 % by weight, based on the binder resin. If it is less than 0.1 % by weight, surface modification will be insufficient for improving the abrasion resistance and surface durability and for decreasing the surface energy, and if it is more than 60 % by weight, the electrophotographic properties may be deteriorated.

Examples of usable antioxidants are hindered phenol antioxidants, aromatic amine antioxidants, hindered amine antioxidants, sulfide antioxidants and organic phosphoric acid antioxidants.

These antioxidants are generally 0.01 to 10 % by weight, preferably 0.1 to 2 % by weight, based on the charge-transfer substances.

Examples of the hindered phenol antioxidants are given bellow.

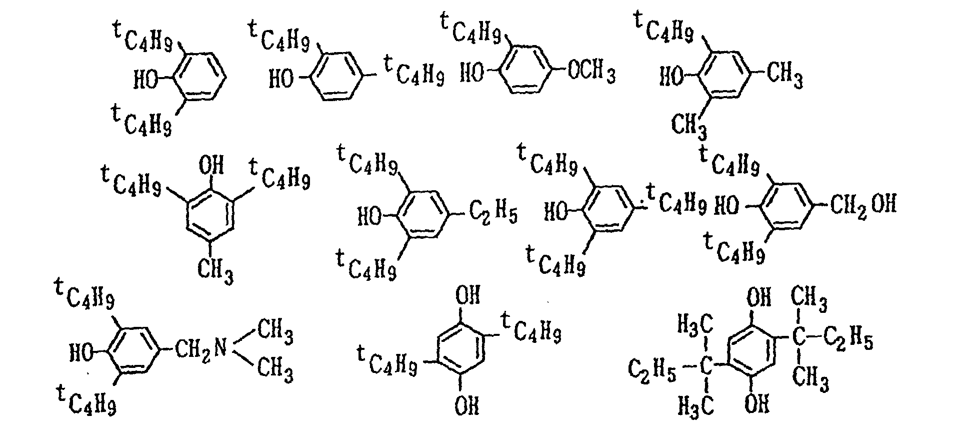

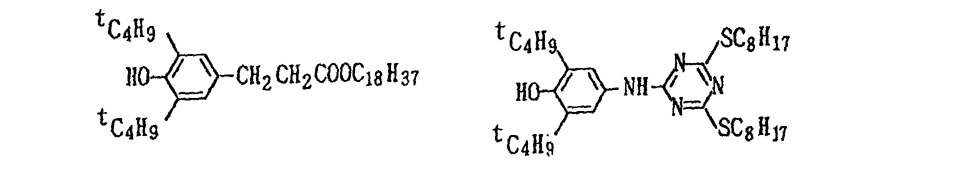

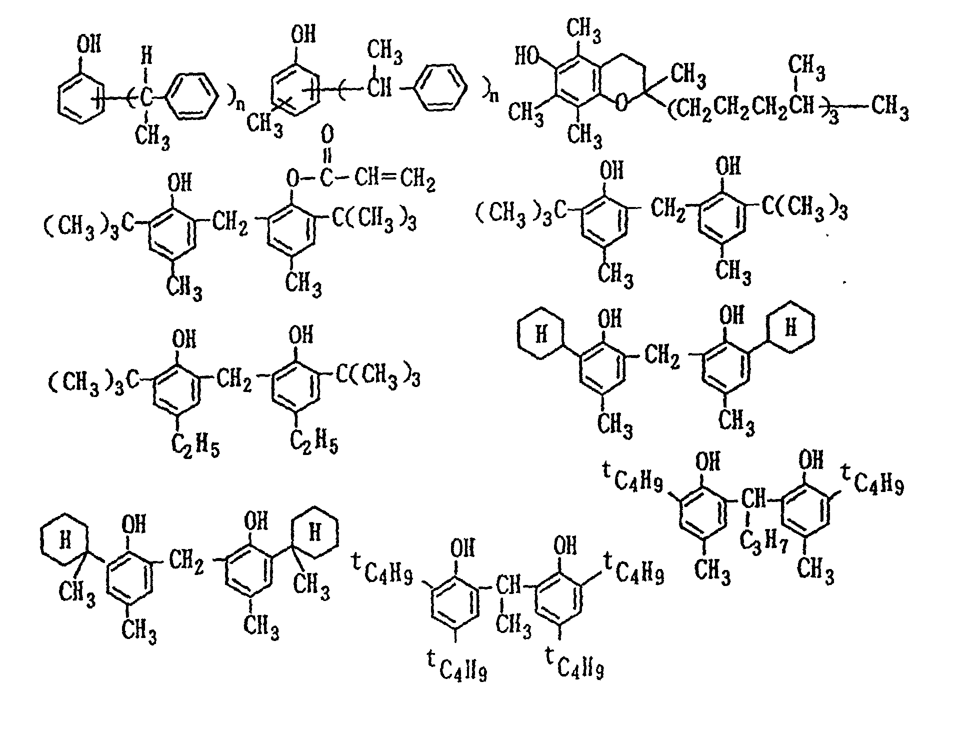

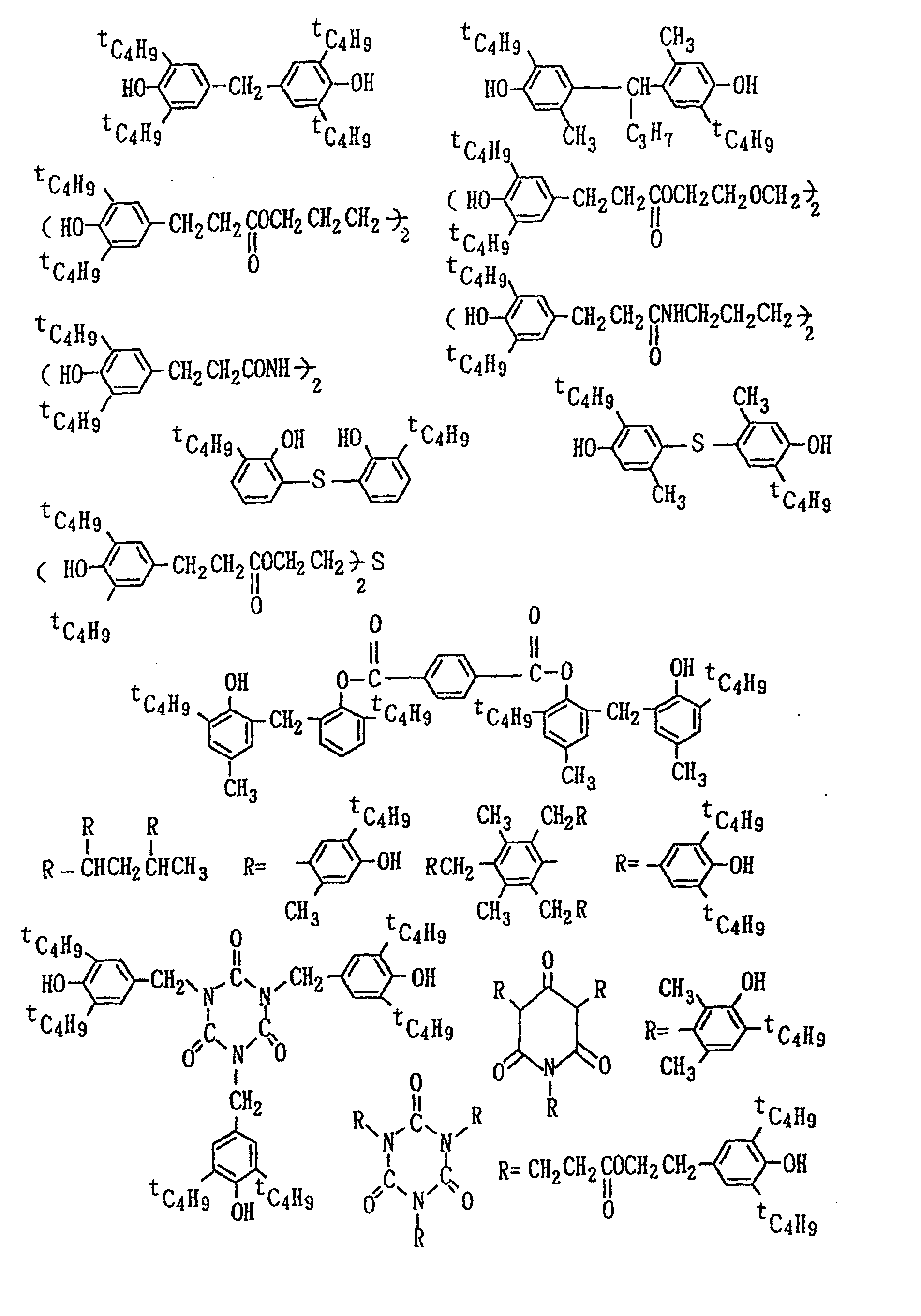

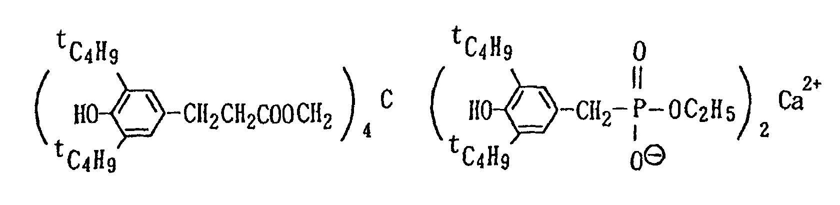

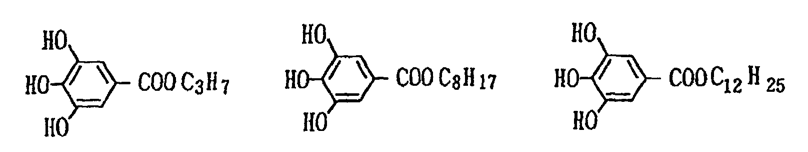

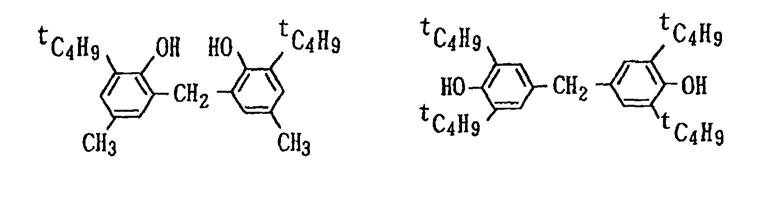

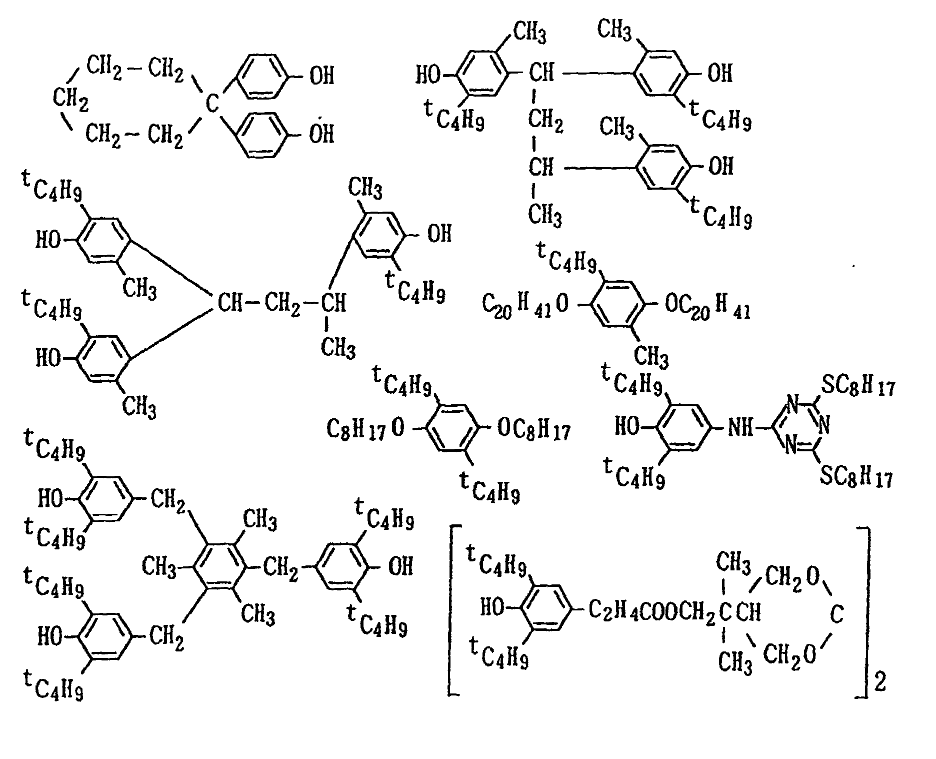

Examples of the aromatic amine antioxidants are given bellow.

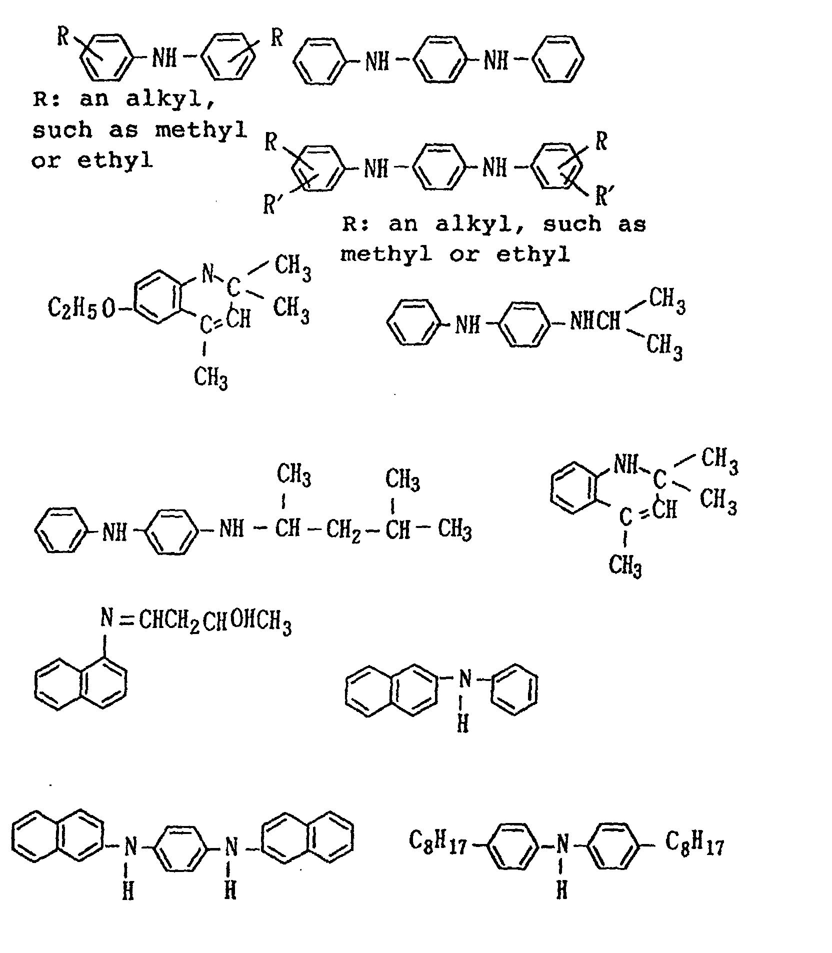

Examples of the hindered amine antioxidants are given bellow.

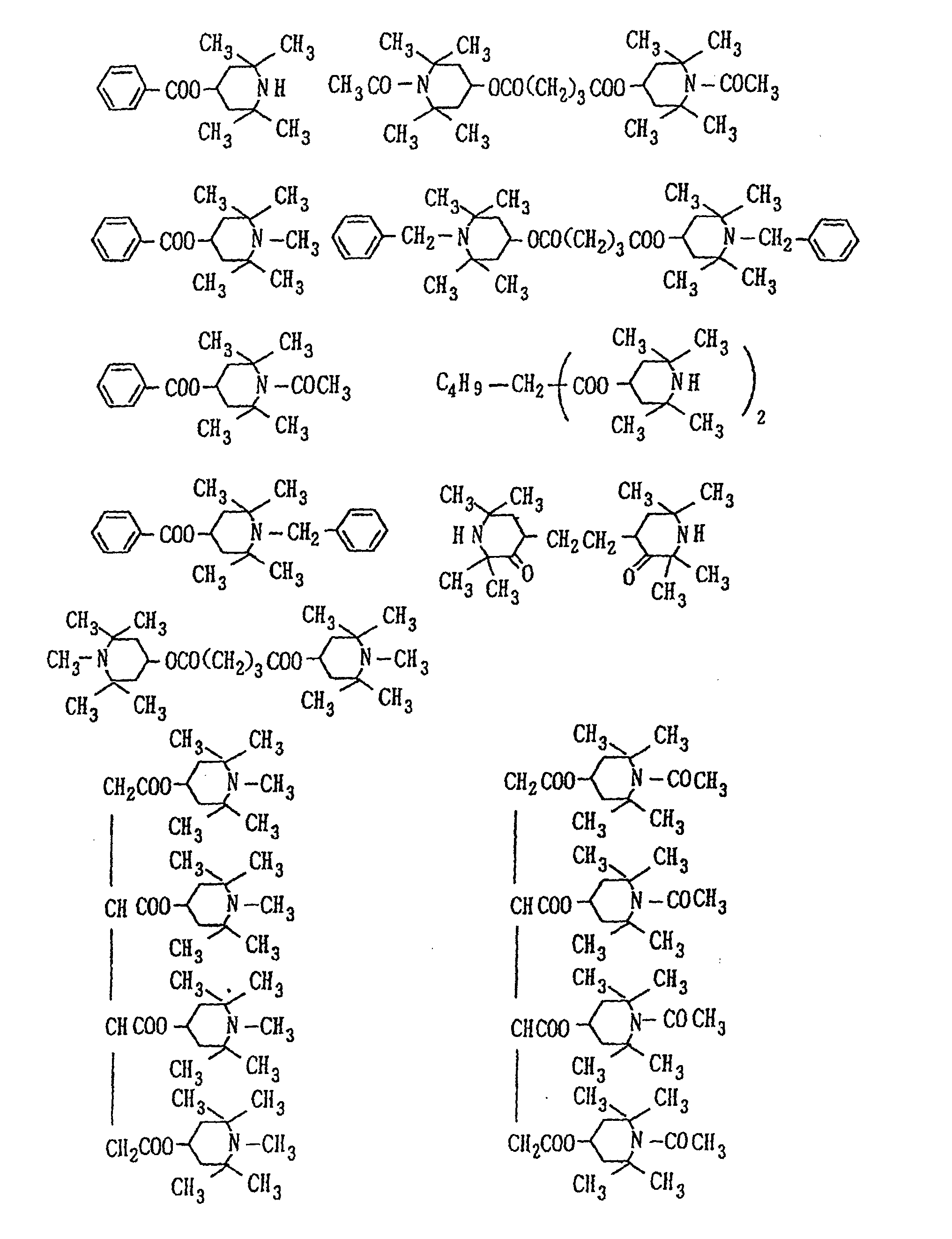

Examples of the sulfide antioxidants are given bellow.

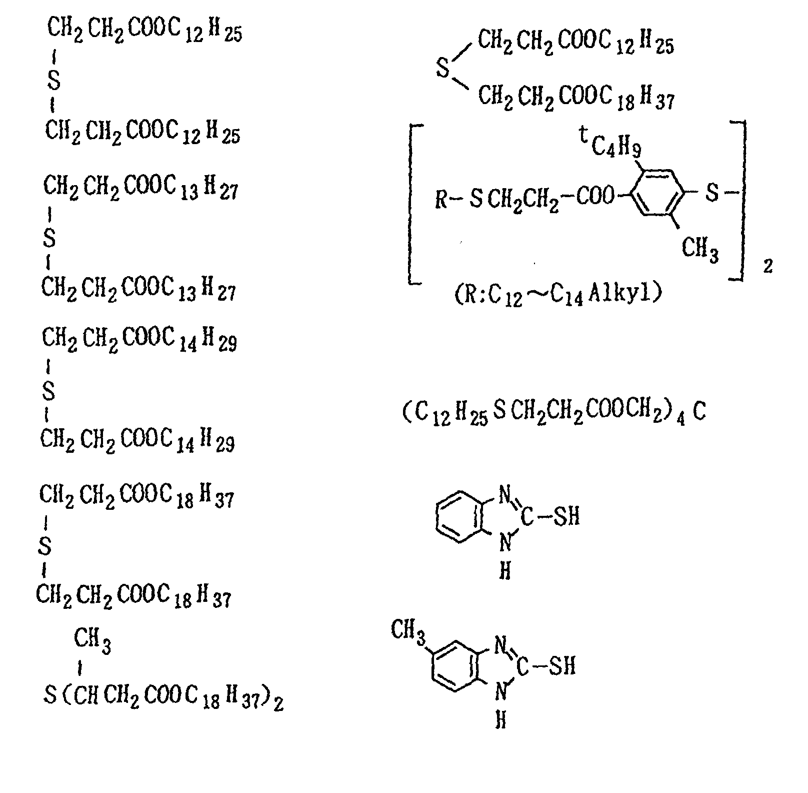

Examples of the organic phosphoric acid antioxidants are given bellow.

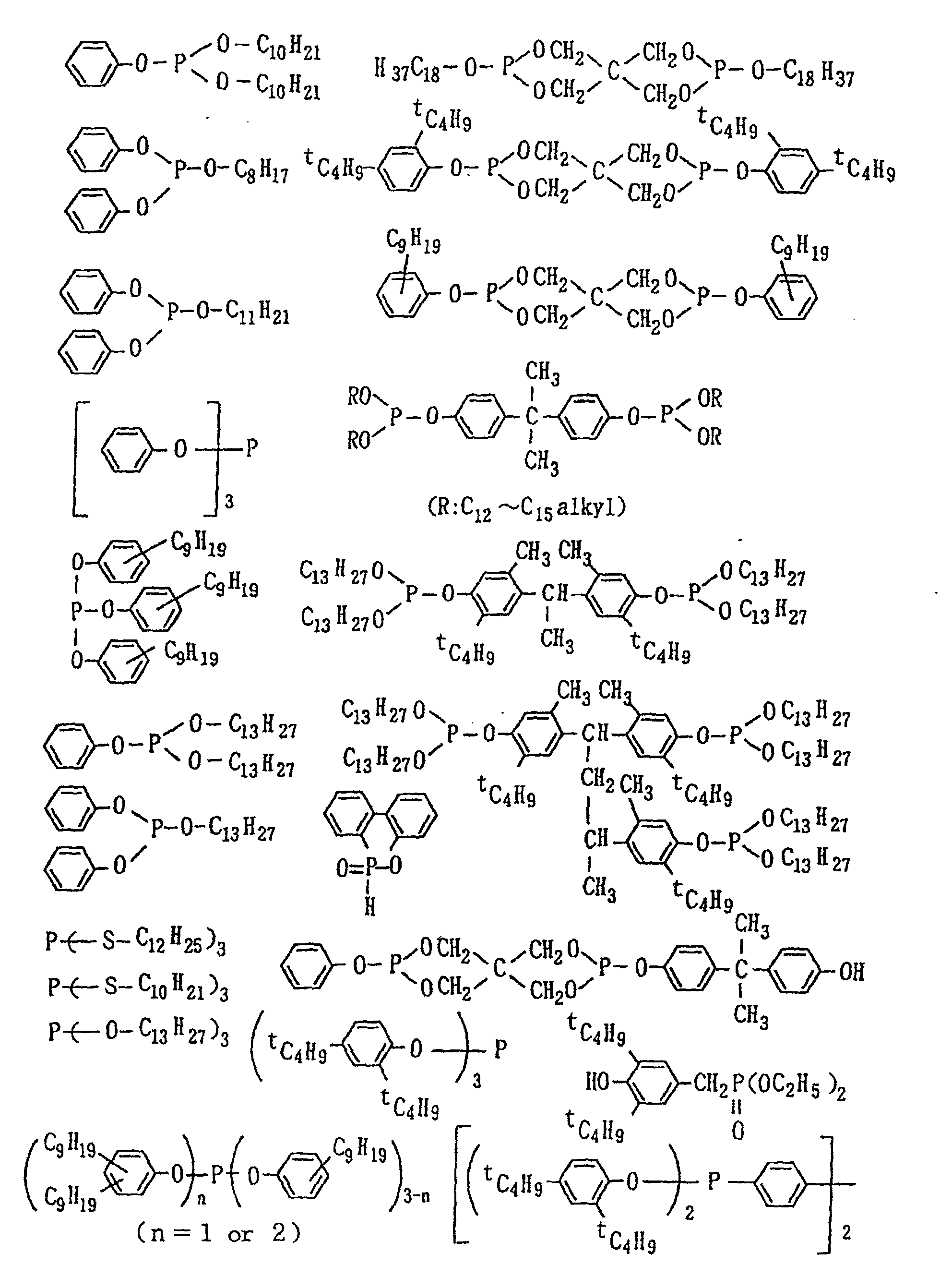

Examples of the antioxidants containing in molecules both hindered phenol structure units and hindered amine structure units are given bellow.

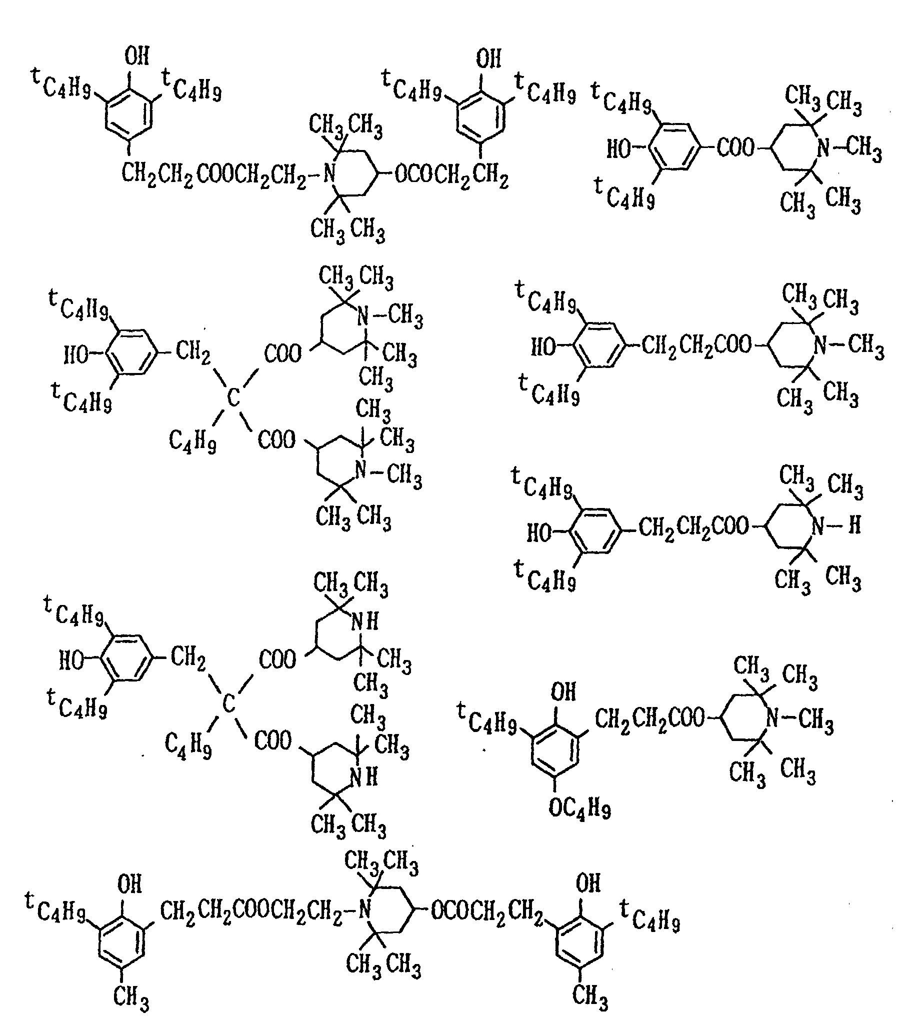

These additives may be used individually or in a combination thereof, for example, as a mixture of two or more. These additives may also be added to the protection layer, underlying layer and blocking layer.

Examples of the solvents, which may be used for the production of the charge-generating layer and charge-transfer layer are, aromatic solvents, such as benzene, toluene, xylene and chlorobenzene, ketones, such as acetone, methyl ethyl ketone and cyclohexanone, alcohols, such as methanol, ethanol and isopropanol, esters, such as ethyl acetate and ethyl cellosolve, hydrocarbon halides, such as carbon tetrachloride, chloroform, dichloromethane and tetrachloroethane, ethers, such as tetrahydrofuran and dioxane, dimethylformamide, dimethyl sulfoxide and diethylformamide.

These solvents may be used individually or as a solvent mixture of two or more.

The charge-transfer layer may be produced by coating an underlying substrate or layer with a solution wherein the above-described charge-transfer substance, additives, binder resin material and, optionally, a thermal polymerization initiator and a photo-initiator are dispersed or dissolved in a solvent, by dipping, statistic coating, powder coating, spraying, roll coating, applicator coating, spray-coater coating, bar-coater coating, roll-coater coating, dip-coater coating, doctor-blade coating, wire-bar coating, knife-coater coating, attritor coating, spinner coating, bead coating, blade coating or curtain coating, followed by drying and crosslinking the crosslinking polycarbonate resin.

The dispersing or dissolving may be performed by using, for example, a ball mill, ultrasound, a paint shaker, a red devil, a sand mill, a mixer or an attritor.

Crosslinking can be performed under various pressure ranging from reduced pressure to applied pressure, preferably under reduced pressure or atmospheric pressure.

After coating a coating fluid, the polycarbonate resin can be crosslinked according to the method described above in the production of crosslinked polycarbonate resins, by common radical polymerization induced by heating or the like, or by irradiation with UV light, IR light, electron rays or micro wave.

The photosensitive layer of single-layer type electrophotographic photoreceptors may be produced by coating the underlying substrate with a solution wherein the above-described charge-generating substance, charge-transfer substance, additives and binder resin material and, optionally, a thermal polymerization initiator, a photo-initiator and a monomer having ethylene double bonds are dispersed or dissolved in a solvent, followed by drying and crosslinking the crosslinking polycarbonate resin. The methods of coating and crosslinking and the additives are the same as those described above. As described above, a protecting layer, underlying layer and blocking layer may also be formed.

Single-layer type photoreceptors are preferably 5 to 100 µm, more preferably 8 to 50µm thick. If the thickness is less than 5µm, the initial surface potential may be low, and if it is more than 100µm, the electrophotographic properties may be deteriorated.

In single-layer type electrophotographic photoreceptors, the weight ratio of [charge-generating substance]:[crosslinked polycarbonate resin] is preferably from 1:99 to 30:70, more preferably from 3:97 to 15:85. The weight ratio of [charge-transfer substance]:[crosslinked polycarbonate resin] is preferably from 10:90 to 80:20, more preferably from 30:70 to 70:30.

Other resins may be used along with the polycarbonate resins of the present invention so far as the attainment of the objects of the present invention is not hindered.

The electrophotographic photoreceptor of the present invention preferably has a layer structure wherein the photosensitive layer has a surface layer containing the polycarbonate resin or crosslinked polycarbonate resin of the present invention. Such an electrophotographic photoreceptor of the present invention has high surface hardness and maintains excellent printing life, and is applicable in various electrophotographic fields, such as duplicators, (monochrome duplicators, multicolor duplicators, full-color duplicators; analog duplicators, digital duplicators), printers (laser printers, LED printers, liquid crystal shutter printers), FAX and plate making machines.

The electrophotographic photoreceptor of the present invention can be electrified by, for example, corona discharge (corotron or scotron), or contact electrification (electrification rollers, electrification brushes). Exposure is performed by, for example, a halogen lamp, a fluorescent lamp, laser (semiconductor, He-Ne), LED or an intra-photoreceptor exposure system. Development is performed by, for example, a dry development, such as cascade development, two-component magnetic brush development, one-component insulating toner development or one-component conductive toner development, or wet development. Image transfer is performed by, for example, electrostatic transfer, such as corona transfer, roller transfer or belt transfer, pressure transfer or adhesion transfer. Fixing is performed by, for example, hot-roller fixing, radiant-flash fixing, oven fixing or pressure fixing. Cleaning and discharging is performed by using, for example, a brush cleaner, a magnetic brush cleaner, a electrostatic brush cleaner, a magnetic roller cleaner or a blade cleaner.

The present invention will be described in detail referring to Examples of the present invention and Comparative Examples, which, however, should not be construed to limit the scope of the present invention.

In the following Examples and Comparative Examples, the structures of synthesized products were confirmed by measuring ¹H-NMR spectrum with EX-90 produced by Nippon Denshi Co., Ltd.

### EXAMPLE 1

Into a mixture of a solution of 2,2-bis(4-hydroxyphenyl)propane (74 g) in a 6 wt% Conc. of aqueous sodium hydroxide solution (550 ml) and methylene chloride (250 ml), phosgene gas was blown at a rate of 950 ml/sec for 15 minutes with stirring and cooling. The reaction fluid was then allowed to stand to separate the organic layer, which was a methylene chloride solution of an bisphenol A (2,2-bis(4-hydroxyphenyl)propane) polycarbonate oligomer of a polymerization degree of 2 to 4 having chloroformate groups at the polymer ends. The structure, polymerization degree and end groups of the oligomer were determined by ¹H-NMR, MS and GPC.

450 ml of a solution containing the methylene chloride solution of the oligomer (200 ml) and balance of methylene chloride was mixed with a solution of the following BP-1 (28.8 g) in a 8 wt% Conc. of aqueous sodium hydroxide solution (150 ml), and p-tert-butylphenol (2.0 g) was added as an agent for controlling molecular weight. While the mixture was stirred vigorously, a 7 wt% Conc. of aqueous triethylamine solution (2 ml) was added as a catalyst, and reaction was carried out at 28°C for 1.5 hours with vigorous stirring. After the completion of the reaction, the reaction product was diluted with methylene chloride (1 liter), washed twice with pure water (1.5 liter), once with 0.01N-hydrochloric acid (1 liter), and twice with pure water (1 liter). The organic phase was poured into methanol, to collect a polymer.

The polymer had a reduced viscosity (reduced viscosity: measured at a concentration of 0.5 g/dl at 20°C in methylene chloride using an Ubbelohde's improved viscometer (Model-RM); the same will be applied hereinafter) of 1.3 dl/g. Fig. 1 shows a chart of the ¹H-NMR spectrum the polymer. From the ¹H-NMR spectrum, the polymer was determined to contain BP-1 and bisphenol A structures in a molar ratio of 18:82 from the ratio of the integral value of the peaks near 5.0 ppm and 3.3 ppm due to allyl to that of the peak near 1.5 ppm due to the methyl of bisphenol A.

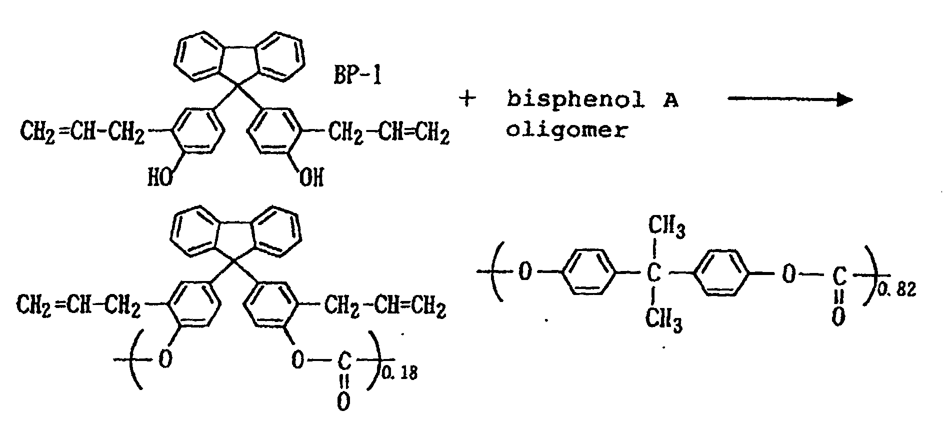

0.5 Parts (part by weight; the same will be applied hereinafter) of oxotitanium phthalocyanine and 0.5 parts of butyral resin were dispersed in 19 parts of methylene chloride with a ball mill, and the dispersion was applied to a conductive substrate, which was a PET film coated with aluminum by evaporation, with a bar coater, and dried to form a charge-generating layer (thickness: 0.5 µm). A coating fluid was prepared by using 1 part of a compound (C-1), which is a charge-transfer substance having the following structure, 1 part of the polycarbonate, 0.05 parts of azobisisobutyronitrile and 8 parts of methylene chloride. 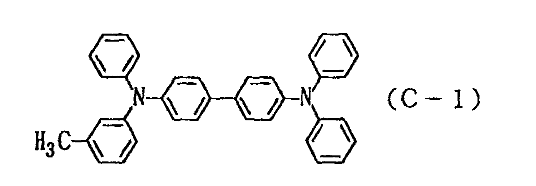 The coating fluid was applied on the above charge-generating layer using an applicator. On heating at 140°C for 10 minutes, a crosslinked-type organic electrophotographic photoreceptor containing a methylene chloride-insoluble fraction (crosslinked polycarbonate) was obtained.

### EXAMPLE 2

A polycarbonate was produced in the same manner as in Example 1 except that BP-1 was replaced by the following BP-2 (22.5 g). The polycarbonate had a reduced viscosity of 1.5 dl/g.

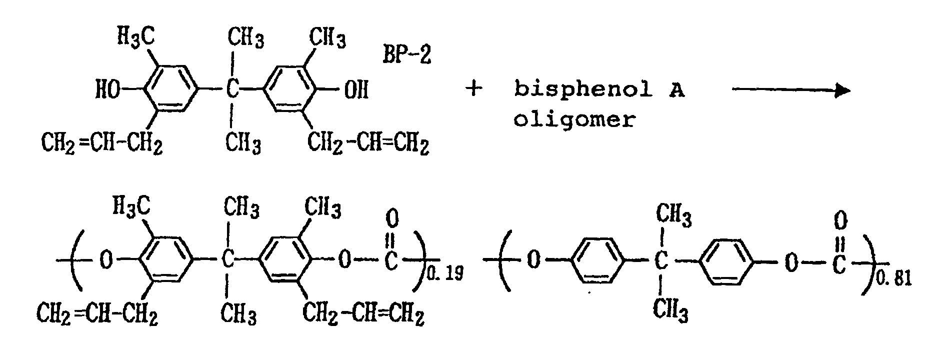

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 3

A polycarbonate was produced in the same manner as in Example 1 except that BP-1 was replaced by the following BP-3 (17.8 g). The polycarbonate had a reduced viscosity of 1.3 dl/g.

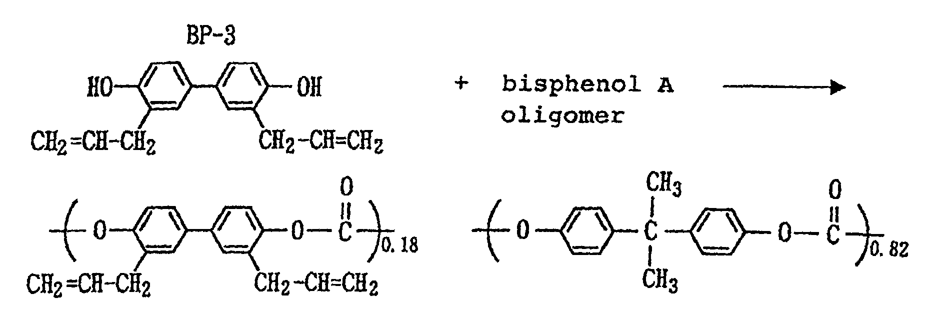

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 4

A polycarbonate was produced in the same manner as in Example 1 except that BP-1 was replaced by the following BP-4 (20.2 g). The polycarbonate had a reduced viscosity of 1.1 dl/g.

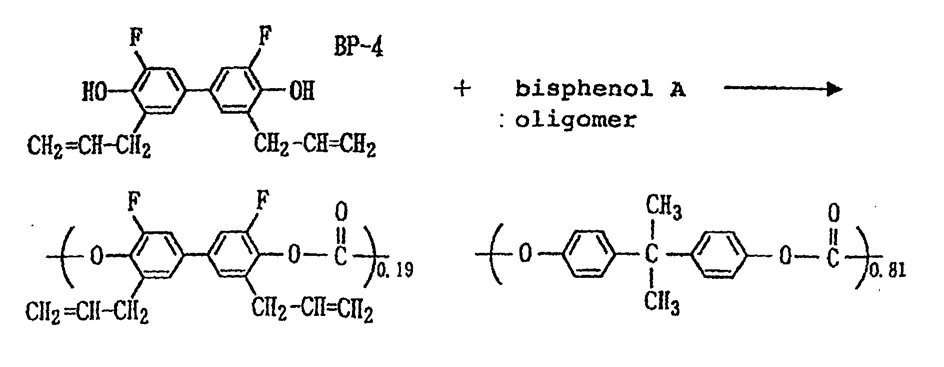

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 5

A polycarbonate was produced in the same manner as in Example 1 except that BP-1 was replaced by the following BP-5 (20.8 g). The polycarbonate had a reduced viscosity of 1.2 dl/g.

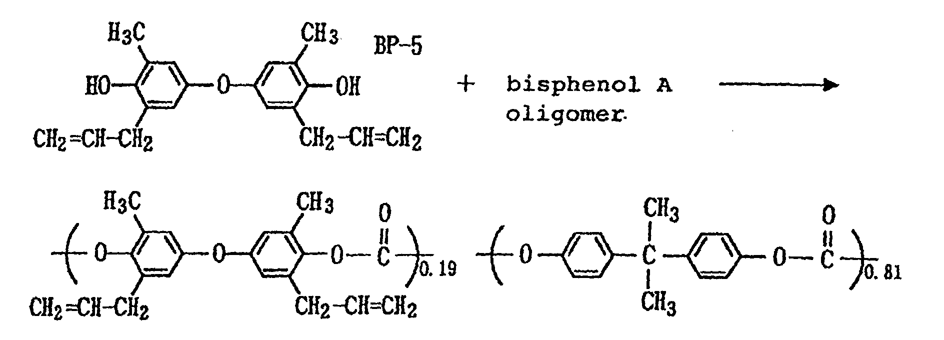

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 6

A polycarbonate was produced in the same manner as in Example 1 except that the bisphenol A (74 g) was replaced by BP-3 (86 g), and BP-1 by BP-3 (17.8 g). The polycarbonate had a reduced viscosity of 1.5 dl/g.

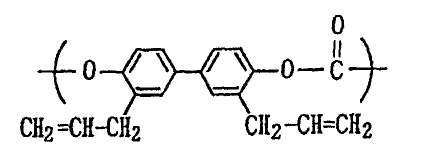

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 7

A polycarbonate was produced in the same manner as in Example 1 except that BP-1 was replaced by the following BP-6 (21.6 g). The polycarbonate had a reduced viscosity of 1.1 dl/g.

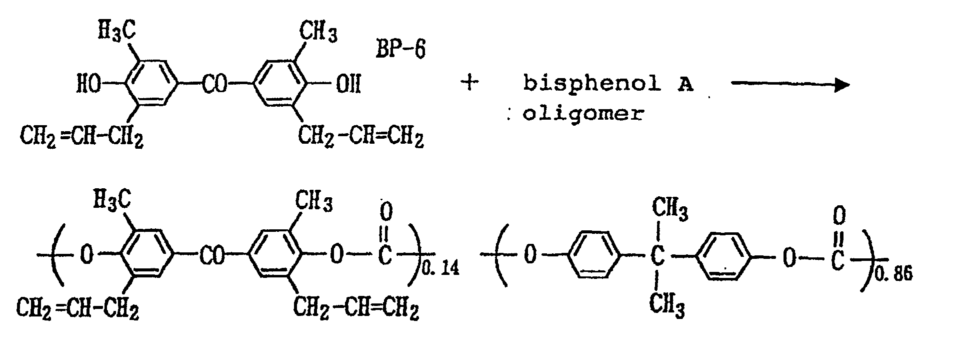

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 8

A polycarbonate was produced in the same manner as in Example 1 except that BP-1 was replaced by the following BP-7 (15.1 g). The polycarbonate had a reduced viscosity of 1.0 dl/g.

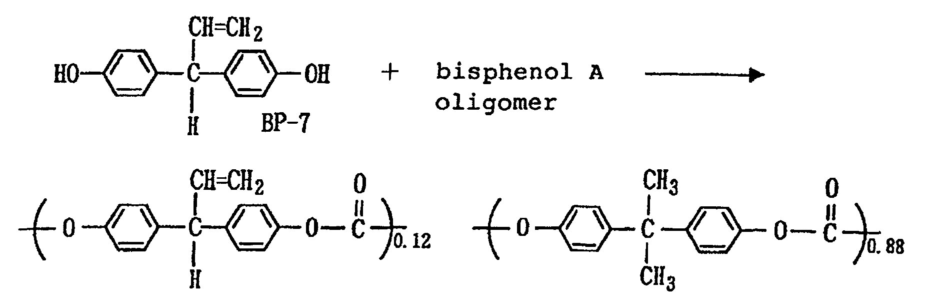

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 9

A polycarbonate was produced in the same manner as in Example 1 except that BP-1 was replaced by the following BP-8 (20.6 g). The polycarbonate had a reduced viscosity of 0.9 dl/g.

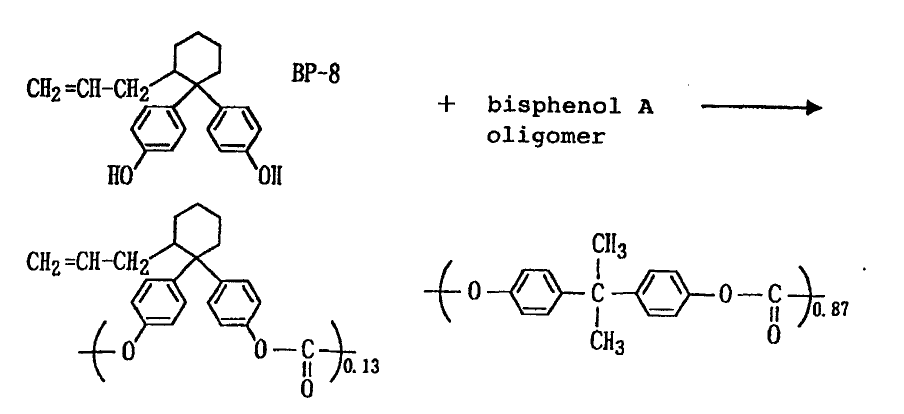

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 10

A polycarbonate was produced in the same manner as in Example 1 except that the 2,2-bis(4-hydroxyphenyl)propane (74 g) was replaced by 1,1-bis(4-hydroxyphenyl)cyclohexane: bisphenol Z (87.1 g), the 6 wt% Conc. of aqueous sodium hydroxide solution (550 ml) by a 8.4 wt% Conc. of aqueous potassium hydroxide solution (550 ml), BP-1 (28.8 g) by the following BP-9 (30.7 g) and BP-10 (5 g), and the 8 wt% Conc. of aqueous sodium hydroxide solution (150 ml) by a 11.2 wt% Conc. of aqueous potassium hydroxide solution (150 ml). The polycarbonate had a reduced viscosity of 1.2 dl/g.

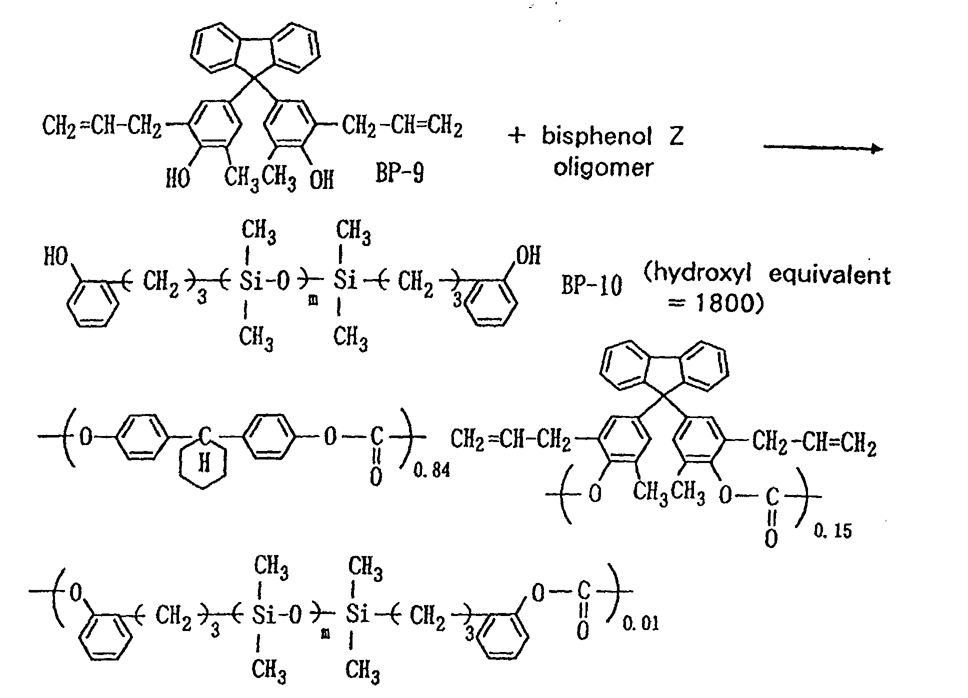

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 11

A polycarbonate was produced in the same manner as in Example 10 except that BP-9 (30.7 g) was replaced by the following BP-11 (27.3 g), and BP-10 (5 g) by the following BP-12 (10 g). The polycarbonate had a reduced viscosity of 1.1 dl/g.

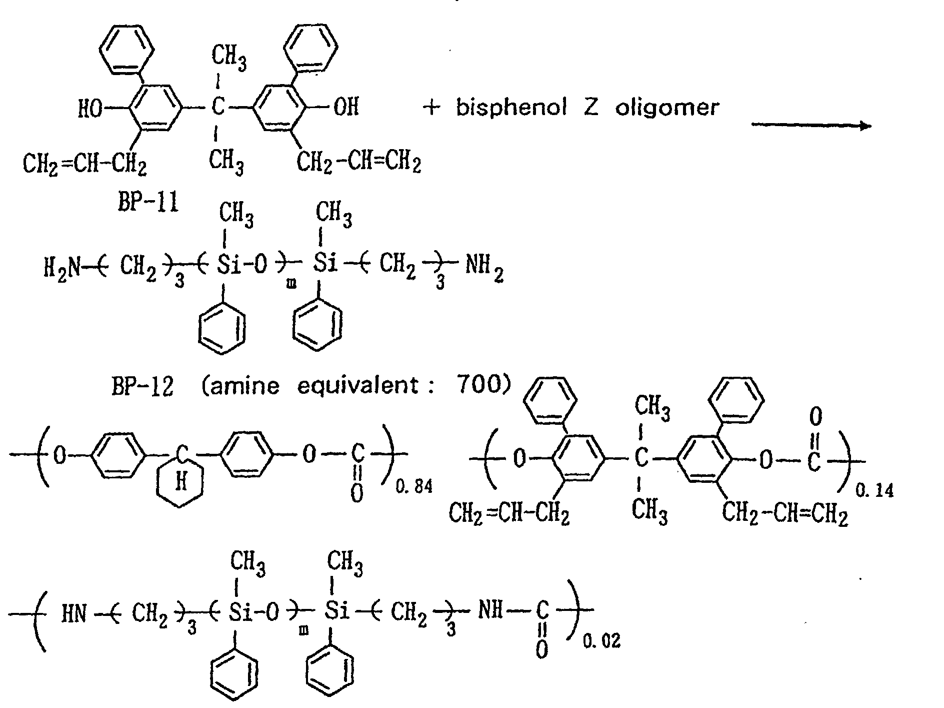

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 12

A polycarbonate was produced in the same manner as in Example 10 except that BP-9 (30.7 g) was replaced by the following BP-13 (30.0 g), and BP-10 (5 g) by BP-10 (1 g). The polycarbonate had a reduced viscosity of 1.3 dl/g.

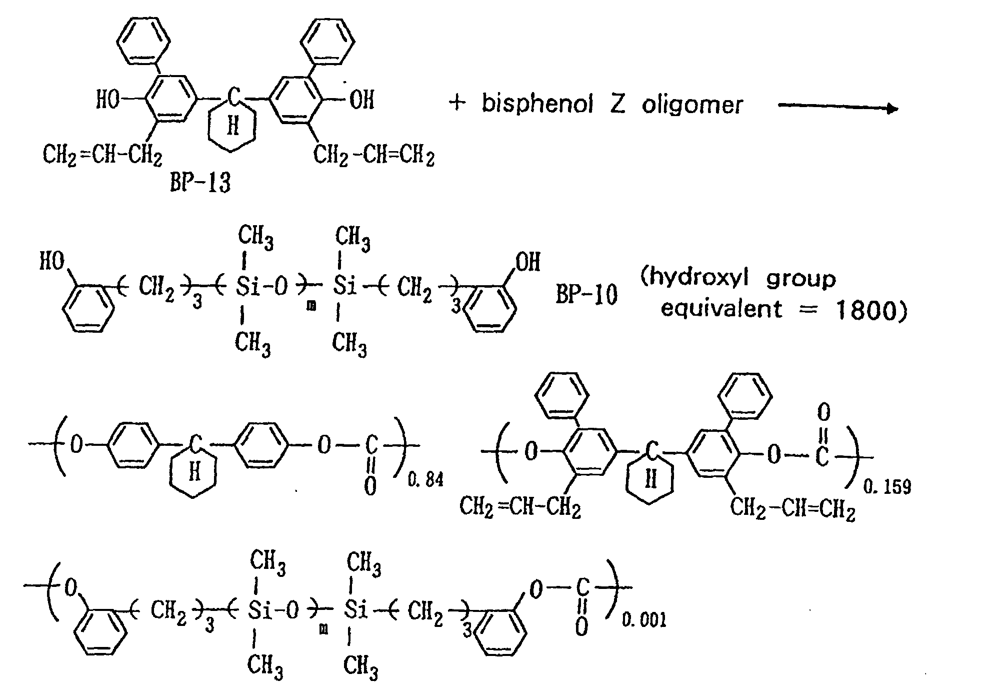

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### EXAMPLE 13

A polycarbonate was produced in the same manner as in Example 10 except that BP-9 (30.7 g) was replaced by the following BP-14 (15.0 g), and BP-10 (5 g) by BP-12 (20 g). The polycarbonate had a reduced viscosity of 1.1 dl/g.

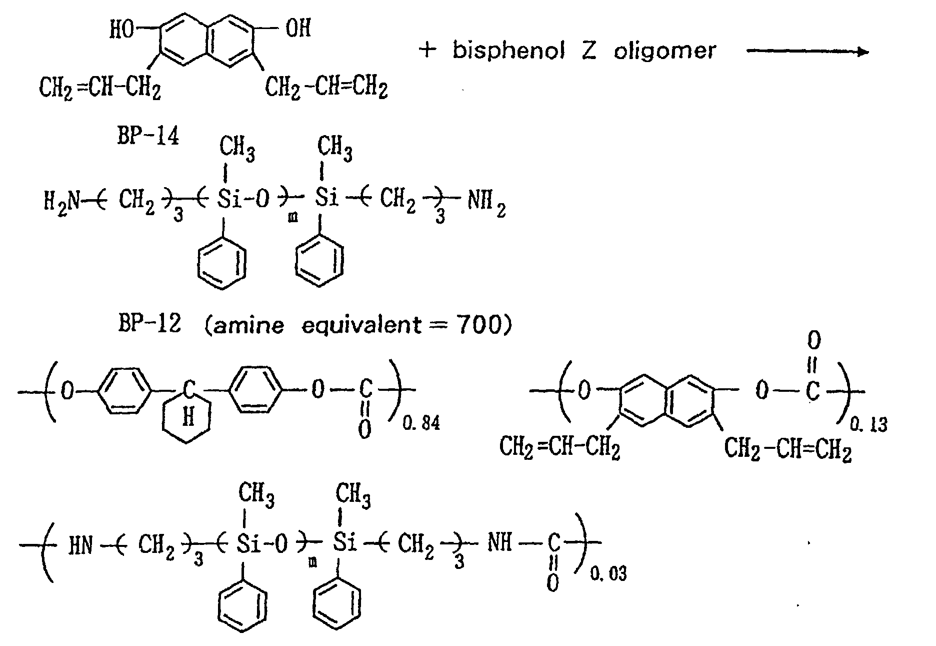

After a charge-generating layer was formed on a substrate in the same manner as in Example 1, a coating fluid was prepared in the same manner as in Example 1 by using the polycarbonate obtained above, and was applied as in Example 1. On heating at 140°C for 10 minutes, a crosslinked-type organic electrophotographic photoreceptor containing a methylene chloride-insoluble fraction was obtained.

### COMPARATIVE EXAMPLE 1

A polycarbonate was produced as follows in accordance with the method disclosed in Japanese Patent Application Unexamined Publication No. 4-291348.

Into a three-necked round-bottom flask equipped with a stirrer, a thermometer, a gas inlet and a reflux condenser were put 53.7 parts of a 48.5 wt% Conc. of aqueous sodium hydroxide solution, 230.8 parts of water, 31.4 parts of 3,3'-diallylbisphenol A and 27.3 parts of bisphenol Z and dissolved while dry nitrogen gas was blown through the flask. The solution was cooled to 20°C in an ice bath, and 26.2 parts of phosgene gas was introduced therein slowly over a 1 hour interval with stirring. After addition of 8.4 parts of a 48.5 wt% Conc. of aqueous sodium hydroxide solution followed by 0.61 parts of p-tert-butylphenol as a terminator, polymerization was carried at 30°C for 1 hour. After the completion of the reaction, the methylene chloride layer was separated and made acid with hydrochloric acid, and then washed with water repeatedly to remove dissolved salts. Methylene chloride was then evaporated to obtain a solid. The solid comprised the following repeating units in the following copolymerization ratios.

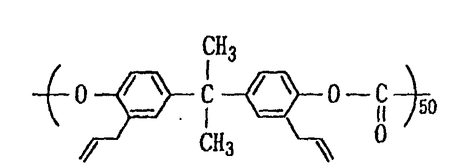

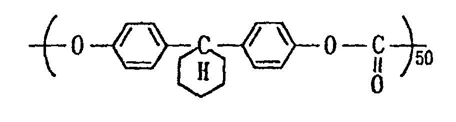

The polymer had a reduced viscosity of 1.2 dl/g.

After a charge-generating layer was formed on a substrate in the same manner as in Example 1, a coating fluid was prepared by dissolving 1 part of the polycarbonate, 0.05 part of azobisisobutylonitrile and 8 parts of methylene chloride. The coating fluid was applied on the charge-generating layer with an applicator. On crosslinking by heating at 140°C for 10 minutes, a crosslinked-type organic electrophotographic photoreceptor was obtained, which contained a methylene chloride-insoluble fraction.

### COMPARATIVE EXAMPLE 2

An organic electrophotographic photoreceptor was produced in the same manner as in Comparative Example 1 except that a polycarbonate (reduced viscosity: 0.77 dl/g) comprising the following repeating units was used as a binder resin.

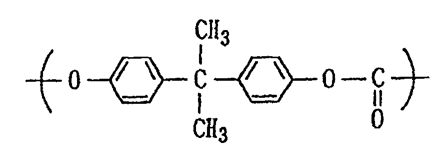

### COMPARATIVE EXAMPLE 3

An organic electrophotographic photoreceptor was produced in the same manner as in Comparative Example 1 except that a polycarbonate (reduced viscosity: 0.73 dl/g) comprising the following repeating units was used as a binder resin.

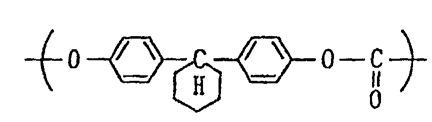

### Abrasion Resistant Test

The charge-transfer layers formed in the above Examples and Comparative Examples were tested for abrasion resistance using a Suga abrasion tester NUS-ISO-3 (produced by Suga Shikenki Co., Ltd.). The abrasion resistances were evaluated by measuring the reductions in weight caused by putting samples into 2000-times reciprocating motion on an abrasive paper (abrasive paper: Al₂O₃, 3 µm, produced by Suga Shikenki Co., Ltd.), applying a load of 500 g. The results are listed in Table 1.

**TABLE 1**

| | Abrasion (mg) |
|---|---|
| Example 1 | 1.2 |
| Example 2 | 1.3 |
| Example 3 | 1.2 |
| Example 4 | 1.4 |
| Example 5 | 1.6 |
| Example 6 | 1.5 |
| Example 7 | 1.4 |
| Example 8 | 1.6 |
| Example 9 | 1.5 |
| Example 10 | 1.1 |
| Example 11 | 1.2 |
| Example 12 | 0.9 |
| Example 13 | 1.2 |
| Comparative Example 1 | 2.7 |
| Comparative Example 2 | 3.5 |
| Comparative Example 3 | 3.0 |

In the following Examples 14-17 and Comparative Example 4, the percentages of the methylene chloride-insoluble fraction in the crosslinked polycarbonate resins used in the electrophotographic photoreceptors were determined as follows.

The photosensitive layer of an electrophotographic photoreceptor was washed at 25°C with methylene chloride to remove the charge-generating substance (oxotitanium phthalocyanine) and binder resin (butyral resin) contained in the charge-generating layer, and the charge-transfer substance, the methylene chloride-soluble fraction of the binder resin (crosslinked polycarbonate resins and other methylene chloride-soluble ingredients contained in the charge-transfer layer, and then the portion remaining insoluble in methylene chloride was dried and weighed. From the weight of the coating fluid coated on the charge-generating layer to form the charge-transfer layer and the ratios of the compositions of the coating fluid, the total weight of the components to be included in the structure of the crosslinked polycarbonate resin, such as crosslinking polycarbonates, monomers having ethylene double bonds and curing agents, were calculated. The content of the methylene chloride-insoluble fraction is the percentage of the weight of the fraction remaining insoluble in methylene chloride based on the above total weight.

### EXAMPLE 14

Into a mixture of a solution of 2,2-bis(4-hydroxyphenyl)propane (45 g) in a 5 % sodium hydroxide aqueous solution (550 ml) and methylene chloride (250 ml), phosgene gas was blown at a rate of 950 ml/sec for 15 minutes with stirring and cooling. The reaction fluid was then allowed to stand to separate a methylene chloride solution of an oligomer of a polymerization degree of 2 to 4 having chloroformate groups at the polymer ends.

450 ml of a solution containing the methylene chloride solution (200 ml) of the oligomer and balance of methylene chloride was mixed with a solution of 3,3'-diallyl-4,4'-dihydroxybiphenyl (BP-1) (12.5 g) in 8 wt% Conc. of aqueous sodium hydroxide solution (150 ml), and 2-allylphenol (1.6 g) was added. While the mixture was stirred vigorously, a 7 wt% Conc. of aqueous triethylamine solution (2 ml) was added as a catalyst, and reaction was carried out at 28°C for 1.5 hours with vigorous stirring. After the completion of the reaction, the reaction product was diluted with methylene chloride (1 liter), washed twice with pure water (1.5 liter), once with 0.01N-hydrochloric acid (1 liter), and twice with pure water (1 liter). The organic phase was poured into methanol, to collect a polymer.

The polymer had a reduced viscosity (reduced viscosity: measured at 20°C at a concentration of 0.5 g/dl in methylene chloride; the same will be applied hereinafter) of 0.9 dl/g. From a ¹H-NMR spectrum, the polymer was determined to be a polycarbonate containing the following repeating units in the following copolymerization ratios, which contained the structures of 3,3'-diallyl-4,4'-dihydroxybiphenyl (BP-1), bisphenol A and 2-allylphenol in a molar ratio of 80:17:3 from the ratios of the integral value of the peak near 7.3 ppm due to aromatics, that of the peak near 5-6 ppm due to allyl and that of the peak near 1.7 ppm due to the methyl of bisphenol A.

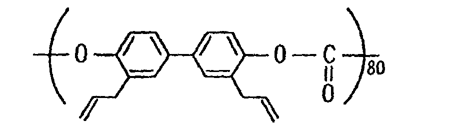

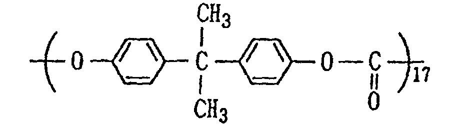

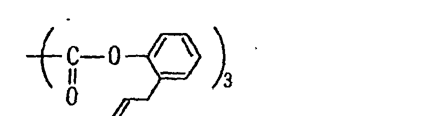

0.5 Parts (part by weight; the same will be applied hereinafter) of oxotitaniumphthalocyanine and 0.5 parts of butyral resin were dispersed in 19 parts of methylene chloride with a ball mill, and the dispersion was applied to a conductive substrate, which was a PET film coated with aluminum by evaporation, with a bar coater, and dried to form a charge-generating layer (thickness: about 0.5 µm). A coating fluid was prepared by using 1 part of the polycarbonate, 1 part of a compound (C-1), which is a charge transfer substance having the following structure, 0.3 parts of diallyl isophthalate, 0.05 parts of azobisisobutyronitrile and 8 parts of methylene chloride. 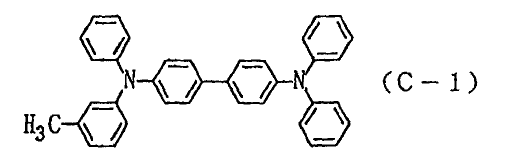 The coating fluid was applied on the above charge-generating layer using an applicator. On heating at 120°C for 10 minutes, a crosslinked-type organic electrophotographic photoreceptor containing a methylene chloride-insoluble fraction was obtained.

The content of the methylene chloride-insoluble fraction in the crosslinked polycarbonate resin, which was a binder resin in the crosslinked-type organic electrophotographic photoreceptor was determined to be 12 % by weight.

### EXAMPLE 15

A polymer comprising the following repeating units was produced in the same manner as in Example 14 except that the following BP-3 (52.5 g) 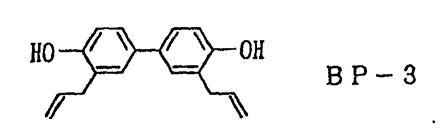 was used in place of the bisphenol A (45 g) for the production of an oligomer and that 2-allylphenol was not used. The polymer had a reduced viscosity of 1.1 dl/g. 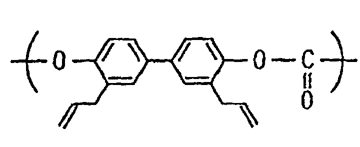 100 Parts of the polycarbonate and 200 parts of metachloroperbenzoic acid were reacted in 500 parts of methylene chloride for 24 hours at room temperature, and the resulting polymer was precipitated in methanol, to obtain a 95 yield of a polycarbonate comprising the following repeating units with allyl groups almost epoxidized. The structure was confirmed from the peaks in ¹H-NMR due to aromatics (7-8 ppm) and epoxy groups (near 4 ppm). The polymer had a reduced viscosity of 1.2 dl/g.

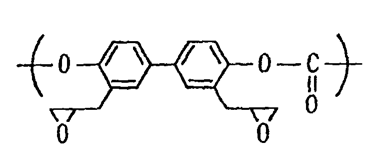

A charge-generating layer was formed on a substrate in the same manner as in Example 14, and a coating fluid prepared by using 1 part of the polycarbonate, 1 part of (C-1), 0.3 parts of phthalic anhydride and 8 parts of methylene chloride was applied on the charge-generating layer in the same manner as in Example 14. On heating at 160°C for 1 hour, a crosslinked-type organic electrophotographic photoreceptor insoluble in methylene chloride was obtained. The crosslinked-type electrophotographic photoreceptor was washed with methylene chloride to remove the charge-generating substance, the charge-transfer substance, butyral resin and other methylene chloride-soluble ingredients, and dried.

The content of the methylene chloride-insoluble fraction in the crosslinked polycarbonate, which was contained in the crosslinked-type electrophotographic photoreceptor as a binder resin, was determined to be 72 % by weight.

### EXAMPLE 16

A polymer was produced in the same manner as in Example 15 except that an oligomer was produced by using the following BP-15 (60.8 g) in place of BP-3 (52.5 g) and that the additionally added BP-3 (12.5 g) was replaced by BP-15 (14.5 g). The polymer had a reduced viscosity of 0.9 dl/g. 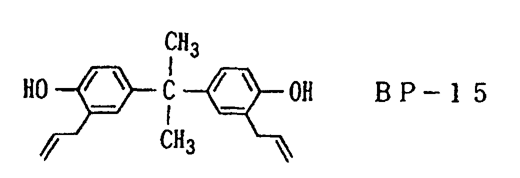 100 Parts of the polycarbonate and 200 parts of metachloroperbenzoic acid were reacted in the same manner as in Example 15, and the resulting polymer was precipitated in methanol, to obtain a 90 % yield of a polycarbonate comprising the following repeating units with allyl groups almost epoxidized. The polymer had a reduced viscosity of 1.0 dl/g.

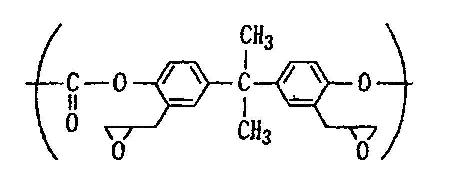

A charge-generating layer was formed on a substrate in the same manner as in Example 14, and a coating fluid prepared by using 1 part of the polycarbonate, 1 part of (C-1), 0.3 parts of phthalic anhydride and 8 parts of methylene chloride was applied on the charge-generating layer in the same manner as in Example 14. On heating at 160°C for 1 hour, a crosslinked-type organic electrophotographic photoreceptor insoluble in methylene chloride was obtained.

The content of the methylene chloride-insoluble fraction in the crosslinked polycarbonate, which was contained in the crosslinked-type electrophotographic photoreceptor as a binder resin, was determined to be 60 % by weight.

### EXAMPLE 17

A polymer was produced in the same manner as in Example 15 except that an oligomer was produced by using the following BP-1 (84.9 g) in place of BP-3 (52.5 g) and that the additionally added BP-3 (12.5 g) was replaced by BP-1 (20.2 g). The polymer had a reduced viscosity of 1.2 dl/g. 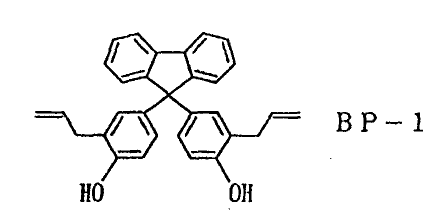 100 Parts of the polycarbonate and 200 parts of metachloroperbenzoic acid were reacted, and the resulting polymer was precipitated in methanol, to obtain a 93 % yield of a polycarbonate comprising the following repeating units with allyl groups almost epoxidized. The polymer had a reduced viscosity of 1.3 dl/g.

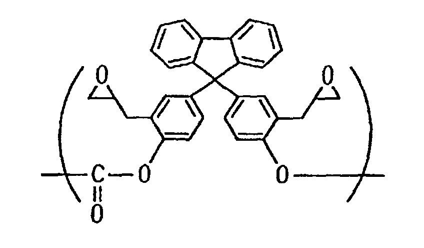

A charge-generating layer was formed on a substrate in the same manner as in Example 14, and a coating fluid prepared by using 1 part of the polycarbonate, 1 part of (C-1), 0.3 parts of phthalic anhydride and 8 parts of methylene chloride was applied on the charge-generating layer in the same manner as in Example 14. On heating at 160°C for 1 hour, a crosslinked-type organic electrophotographic photoreceptor insoluble in methylene chloride was obtained.

The content of the methylene chloride-insoluble fraction in the crosslinked polycarbonate contained in the crosslinked-type electrophotographic photoreceptor as a binder resin was determined to be 52 % by weight.

### COMPARATIVE EXAMPLE 4

A crosslinking polycarbonate was produced as follows in accordance with the method of producing a non-crosslinked polycarbonate disclosed in Japanese Patent Application Unexamined Publication No. 4-291348.

Into a three-necked round-bottom flask equipped with a stirrer, a thermometer, a gas inlet and a reflux condenser were put 53.7 parts of a 48.5 wt% Conc. of aqueous sodium hydroxide solution, 230.8 parts of water, 31.4 parts of 3,3'-diallylbisphenol A and 27.3 parts of bisphenol Z and dissolved while dry nitrogen gas was blown through the flask. The solution was cooled to 20°C in an ice bath, and 26.2 parts of phosgene gas was introduced therein slowly over a 1 hour interval with stirring. After addition of 8.4 parts of a 48.5 wt% Conc. of aqueous sodium hydroxide solution followed by 0.61 parts of p-tert-butylphenol as a terminator, polymerization was carried at 30°C for 1 hour. After the completion of the reaction, the methylene chloride layer was separated and made acid with hydrochloric acid, and then washed with water repeatedly to remove dissolved salts. Methylene chloride was then evaporated to obtain a solid. The solid comprises the following repeating units in the following copolymerization ratios.

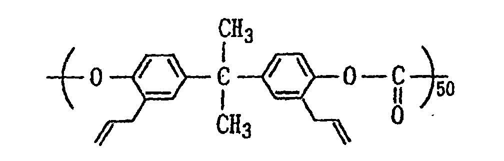

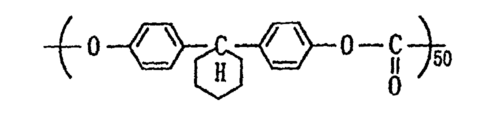

The polymer had a reduced viscosity of 1.5 dl/g.

After a charge-generating layer was formed on a substrate in the same manner as in Example 14, a coating fluid was prepared in the same manner as in Example 14 except that the polycarbonate obtained above was used in place of the polycarbonate used in Example 1, and the coating fluid was then coated on the charge-generating layer in the same manner as in Example 14. On crosslinking by heating at 140°C for 10 minutes, a crosslinked-type organic electrophotographic photoreceptor containing a methylene chloride-insoluble fraction was obtained.

The content of the methylene chloride-insoluble fraction in the crosslinked polycarbonate contained in the crosslinked-type electrophotographic photoreceptor as a binder resin was determined to be 90 % by weight.

The crosslinked-type electrophotographic photoreceptor was tested for abrasion resistance, and the result is shown in Table 2.

**TABLE 2**

| | Abrasion (mg) |
|---|---|
| Example 14 | 0.8 |
| Example 15 | 1.0 |
| Example 16 | 1.1 |
| Example 17 | 1.3 |
| Comparative Example 4 | 2.7 |

### EXAMPLE 18

Into a mixture of a solution of 2,2-bis(4-hydroxyphenyl)propane (74 g) in a 6 wt% Conc. of aqueous sodium hydroxide solution (550 ml) and methylene chloride (250 ml), phosgene gas was blown at a rate of 950 ml/sec for 15 minutes with stirring and cooling. The reaction fluid was then allowed to stand to separate the organic layer that was a methylene chloride solution of a bisphenol A (2,2-bis(4-hydroxyphenyl)propane) polycarbonate oligomer of a polymerization degree of 2 to 4 having chloroformate groups at the polymer ends. The structure, polymerization degree and end groups of the oligomer were determined by ¹H-NMR, MS and GPC.

450 ml of a solution containing the methylene chloride solution (200 ml) of the oligomer and balance of methylene chloride was mixed with a solution of the 4,4'-biphenol (12.5 g) in a 8 wt% Conc. of aqueous sodium hydroxide solution (150 ml), and eugenol (2.0 g) was added. A 7 wt% Conc. of aqueous triethylamine solution (2 ml) as a catalyst was added to the mixed solution with vigorous stirring, and reaction was carried out at 28°C for 1.5 hours with stirring. After the completion of the reaction, the reaction product was diluted with methylene chloride (1 liter), washed twice with pure water (1.5 liter), once with 0.01N-hydrochloric acid (1 liter), and twice with pure water (1 liter). The organic phase was poured into methanol, to collect a polymer.

The polymer had a reduced viscosity (reduced viscosity: measured at 20°C at a concentration of 0.5 g/dl in methylene chloride; the same will be applied hereinafter) of 1.2 dl/g. From an ¹H-NMR spectrum of the polymer, the polymer was determined to contain bisphenol A, 4,4'-biphenol and eugenol structures in a molar ratio of 80:17:3 from the ratios of the integral value of the peak near 7.3 ppm due to aromatics, that of the peak near 3.7 ppm due the methoxy of eugenol and that of the peak near 1.7 ppm due to the methyl of bisphenol A.

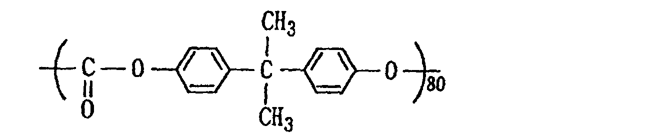

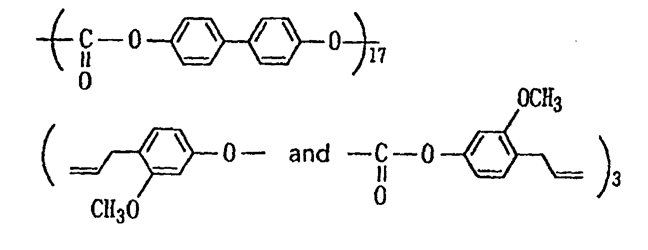

0.5 Parts (part by weight; the same will be applied hereinafter) of oxotitaniumphthalocyanine and 0.5 parts of butyral resin were dispersed in 19 parts of methylene chloride with a ball mill, and the dispersion was applied to a conductive substrate, which was a PET film coated with aluminum by evaporation, with a bar coater, and dried to form a charge-generating layer (thickness: 0.5 µm). A coating fluid was prepared by using 1 part of a compound (C-1), which is a charge-transfer substance having the following structure, 1 part of the polycarbonate, 0.3 parts of diallyl isophthalate, 0.05 parts of azobisisobutyronitrile and 8 parts of methylene chloride. 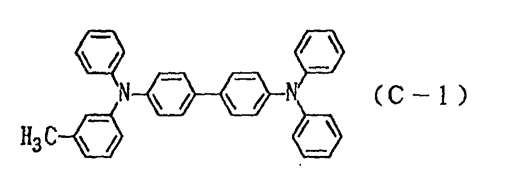 The coating fluid was applied on the above charge-generating layer using an applicator. On heating at 140°C for 10 minutes, a crosslinked-type organic electrophotographic photoreceptor containing a methylene chloride-insoluble fraction was obtained.

### EXAMPLE 19

Polymerization was carried out in the same manner as in Example 18 except that 4,4'-biphenol and eugenol were replaced by the following bisphenol (BP-16) (21.9 g) 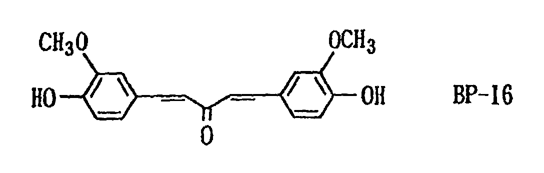 and 4-allylphenol (1.6 g), to obtain a polycarbonate comprising the following repeating units and end groups in the following copolymerization ratios wherein bisphenol A, BP-16 and 4-allylphenol structures were present in a molar ratio of 82:15:3.

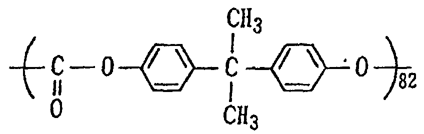

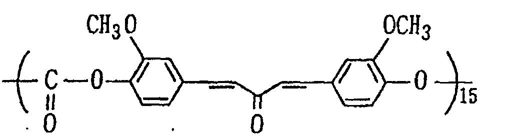

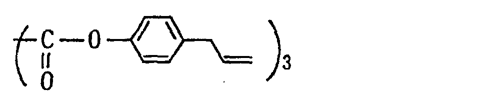

The polymer had a reduced viscosity of 1.0 dl/g.

A charge-generating layer was formed on a substrate in the same manner as in Example 18, which was then coated in the same manner as in Example 18 with a coating fluid prepared by using 1 part of the polycarbonate, 1 part of (C-1), 0.3 parts of diallyl isophthalate, 0.05 parts of azobisisobutyronitrile and 8 parts of methylene chloride. On heating at 140°C for 10 minutes, a crosslinked-type electrophotographic photoreceptor containing a methylene chloride-insoluble fraction was obtained.

### EXAMPLE 20

Polymerization was carried out in the same manner as in Example 18 except that 4,4'-biphenol and eugenol were replaced by the following bisphenol (BP-17) (16.1 g), 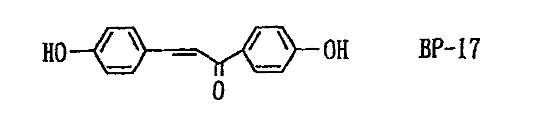 to obtain a polycarbonate comprising the following repeating units in the following copolymerization ratios wherein bisphenol A and BP-17 structures were present in a molar ratio of 83:17.

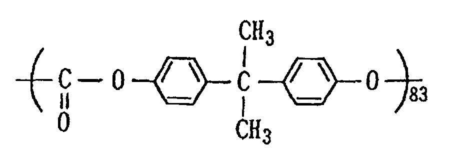

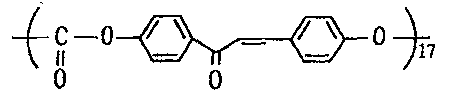

The polymer had a reduced viscosity of 1.3 dl/g.

A charge-generating layer was formed on a substrate in the same manner as in Example 18, which was then coated in the same manner as in Example 18 with a coating fluid prepared by using 1 part of the polycarbonate, 1 part of (c-1), 0.5 parts of diallyl isophthalate, 0.10 parts of azobisisobutyronitrile and 8 parts of methylene chloride. On heating at 140°C for 10 minutes, a crosslinked-type electrophotographic photoreceptor containing a methylene chloride-insoluble fraction was obtained.

### EXAMPLE 21

Polymerization was carried out in the same manner as in Example 20 except that BP-17 was replaced by (BP-18) (22.4 g), 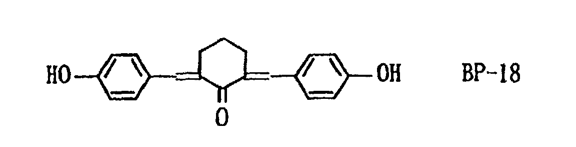 to obtain a polycarbonate comprising the following repeating units in the following copolymerization ratios wherein bisphenol A and BP-18 structures were present in a molar ratio of 85:15.

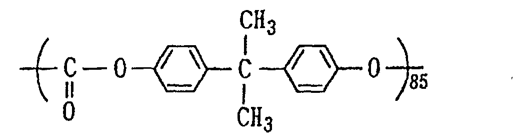

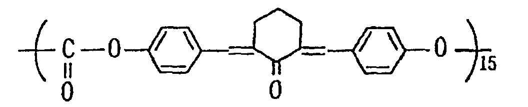

The polymer had a reduced viscosity of 1.1 dl/g.

A charge-generating layer was formed on a substrate in the same manner as in Example 18, which was then coated in the same manner as in Example 18 with a coating fluid prepared by using 1 part of the polycarbonate, 1 part of (C-1), 0.5 parts of diallyl isophthalate, 0.10 part of azobisisobutyronitrile and 8 parts of methylene chloride. On heating at 140°C for 10 minutes, a crosslinked-type electrophotographic photoreceptor containing a methylene chloride-insoluble fraction was obtained.

### EXAMPLE 22

Polymerization was carried out in the same manner as in Example 18 except that the eugenol was replaced by methacrylic chloride (1.3 g), and 4,4'-biphenol by BP-17 (16.1 g) to obtain a polycarbonate comprising the following repeating units and end groups in the following copolymerization ratios wherein bisphenol A and BP-17 structures and endcapping methacryloyl were present in a molar ratio of 78:19:3.

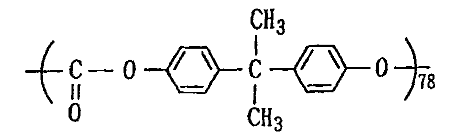

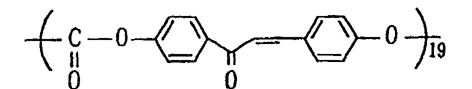

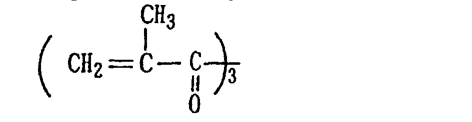

The polymer had a reduced viscosity of 0.9 dl/g.

A charge-generating layer was formed on a substrate in the same manner as in Example 18, which was then coated in the same manner as in Example 18 with a coating fluid prepared by using 1 part of the polycarbonate, 1 part of (C-1), 0.5 parts of diallyl isophthalate, 0.10 part of azobisisobutyronitrile and 8 parts of methylene chloride. On heating at 140°C for 10 minutes, a crosslinked-type electrophotographic photoreceptor containing a methylene chloride-insoluble fraction was obtained.

### EXAMPLE 23

Polymerization was carried out in the same manner as in Example 18 except that the eugenol was replaced by N-(4-hydroxyphenyl)maleimide (2.3 g), and 4,4'-biphenol by BP-17 (16.1 g), to obtain a polycarbonate comprising the following repeating units and end groups in the following copolymerization ratios wherein bisphenol A, BP-17 and endcapping maleimide structures are present in a molar ratio of 77:19:4.

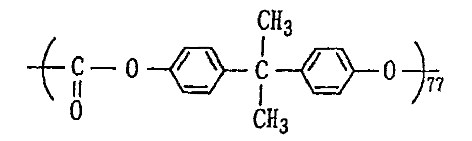

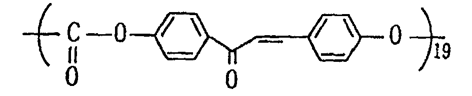

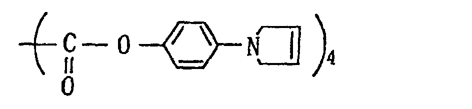

The polymer had a reduced viscosity of 1.1 dl/g.

A charge-generating layer was formed on a substrate in the same manner as in Example 18, which was then coated in the same manner as in Example 18 with a coating fluid prepared by using 1 part of the polycarbonate, 1 part of (C-1), 0.5 parts of diallyl isophthalate, 0.10 part of azobisisobutyronitrile and 8 parts of methylene chloride. On heating at 140°C for 10 minutes, a crosslinked-type electrophotographic photoreceptor containing a methylene chloride-insoluble fraction was obtained.

### COMPARATIVE EXAMPLE 5

A crosslinking polycarbonate having the following structure was produced in the same manner as in Comparative Example 4 according to the method disclosed in Japanese Patent Application Unexamined Publication No. 4-291348.

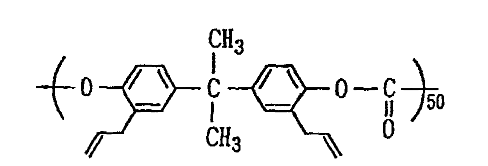

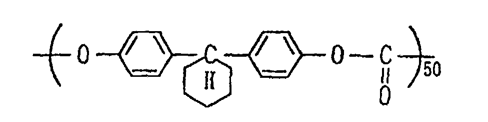

The polymer had a reduced pressure of 1.5 dl/g.

A crosslinked-type electrophotographic photoreceptor containing a methylene chloride-insoluble fraction was produced in the same manner as in Example 18 except that the above polymer was used in place of the polycarbonate used in Example 18.

The crosslinked-type electrophotographic photoreceptor was tested for abrasion resistance in the same manner as in Example 1, and the results are shown in Table 3.

**TABLE 3**

| | Abrasion (mg) |
|---|---|
| Example 18 | 1.3 |
| Example 19 | 1.2 |
| Example 20 | 1.2 |
| Example 21 | 1.4 |
| Example 22 | 1.2 |
| Example 23 | 1.3 |
| Comparative Example 5 | 2.7 |

### SYNTHESIS 1 (Synthesis of a biphenyl-type crosslinking polycarbonate (PC-1))

To 1 liter of water were added 5% Pd/C (100 g), followed by water (1 liter) containing NaOH (200 g) dissolved therein. 1 Liter of methanol containing 4-Bromo-2-phenylphenol (456 g, 1.83 mol) dissolved therein was added thereto, and reflux was carried out for 3 hours. After removal of the methanol by distillation, filtration of the catalyst and neutralization with hydrochloric acid, extraction with methylene chloride was carried out. The organic layer was washed with water, concentrated and distilled at 330°C in a metal bath. The distillate was recrystallized from a mixture of toluene:cyclohexane-1:3 (weight ratio), to obtain a precursor (66 g, yield: 21%) of the compound of the following formula A.

The precursor was dissolved in a methanol solution (500 ml) of NaOH (30 g), allyl bromide (50.4 g) was added thereto slowly, and then reflux was carried out for 5 hours. The resulting solution was evaporated to dryness in vacuum, dissolved again in methylene chloride, washed with 0.1N-hydrochloric acid, and then washed twice with water. The organic layer was collected, dried over magnesium sulfate, and after the solvent was distilled out, heated as it is at 200°C for 5 hours in a stream of nitrogen, to give a compound (BP-19) (65 g) of the formula A.

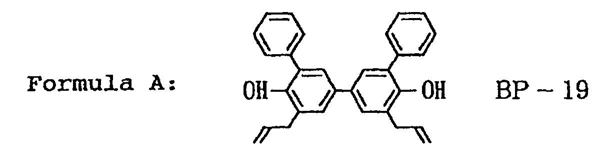

A solution of 74 g of 2,2-bis(4-hydroxyphenyl)propane in 550 ml of a 6 wt% Conc. of aqueous sodium hydroxide solution was mixed with 250 ml of methylene chloride. While the solution mixture was stirred and cooled, phosgene gas was blown therein at 950 ml/min for 15 minutes. The reaction liquid was allowed to stand to separate the organic layer, which was a methylene chloride solution of a bisphenol A (2,2-bis(4-hydroxyphenyl)propane) polycarbonate oligomer endcapped by chloroformate groups.

To 450 ml of a mixture of the methylene chloride solution of the oligomer and balance of methylene chloride was added 150 ml of a 8 wt% Conc. of aqueous sodium hydroxide solution, and then 32.1 g of the compound (BP-19) of the formula A and 3.0 g of p-tert-butylphenol as an agent for controlling molecular weight were added thereto. While the mixture was stirred vigorously, 2 ml of a 7 wt% Conc. of aqueous triethylamine solution was added, and reaction was carried out at 28°C for 1.5 hours with stirring. After the completion of the reaction, the reaction product was diluted with 1 liter of methylene chloride, and washed twice with 1.5 liter of water. The obtained solution was cooled in an ice bath, and 51.6 g of metachloroperbenzoic acid was added slowly by portions. After the addition was completed, the mixture was warmed to room temperature and stirred for 24 hours. It was then washed with a 0.01N-NaOH aqueous solution, once with 1 liter of 0.01N-hydrochloric acid and twice with 1 liter of water sequentially, and the organic layer was poured into methanol to precipitate a polymer, which was then filtered and dried to give 103 g of a polycarbonate (PC-1).

The polycarbonate had a reduced viscosity [ηₛₚ/c] of 0.75 dl/g as measured at 20°C at a concentration of 0.5 g/dl in methylene chloride. Measurements of reduced viscosities were carried out by using an automatic viscosity measuring instrument VMR-042 produced by Rigosha Co., Ltd. using an automatic Ubbelohde's improved viscometer (Model-RM).

The IR spectrum of the polycarbonate (PC-1) was characterized by absorptions at 3030 cm⁻¹, 1590 cm⁻¹ and 830 cm⁻¹ due to benzene rings, an absorption at 1730 cm⁻¹ due to carbonate groups and an absorption at 1130 cm⁻¹ due to epoxy groups, indicating the presence of carbonate bonds and epoxy groups. The copolymerization ratios of the polycarbonate (PC-1) were determined by an ¹H-NMR analysis. From these results, the polycarbonate (PC-1) was determined to comprise the following repeating units in the following ratios.

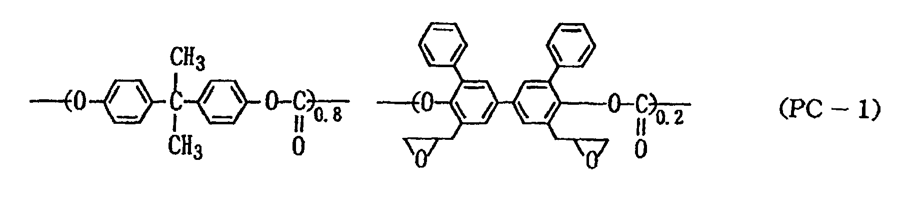

### SYNTHESIS 2 (Synthesis of a naphthalene-type crosslinking polycarbonate (PC-2))

The procedures of Synthesis 1 were repeated except that the compound (BP-19) of the formula A was replaced by 25.2 g of a compound (BP-14) of the formula (B), 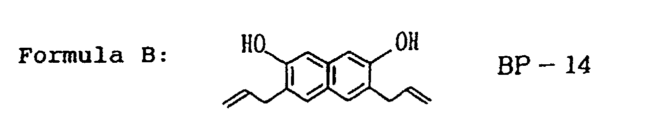 and that the reaction using metachloroperbenzoic acid and the washing with the NaOH aqueous solution were not carried out to obtain 102 g of a polycarbonate (PC-2) ([ηₛₚ/c]=0.77 dl/g having the following structure.

The synthesis of the compound (BP-14) was the same as the synthesis of the compound (BP-19) except that 2,7-naphthalenediol (produced by Sugai Kagaku Kogyo Co., Ltd.) was used in place of the precursor produced in the first step.

The IR spectrum of the polycarbonate (PC-2) was characterized by absorptions at 3030 cm⁻¹, 1590 cm⁻¹ and 830 cm⁻¹ due to benzene rings, an absorption at 1730 cm⁻¹ due to carbonate groups and absorptions at 910 cm⁻¹ and 990 cm⁻¹ due to vinyl groups, indicating the presence of carbonate bonds and vinyl groups. The copolymerization ratios of the polycarbonate (PC-2) was determined by an ¹H-NMR analysis. From these results, the polycarbonate (PC-2) was determined to comprise the following repeating units in the following ratios.

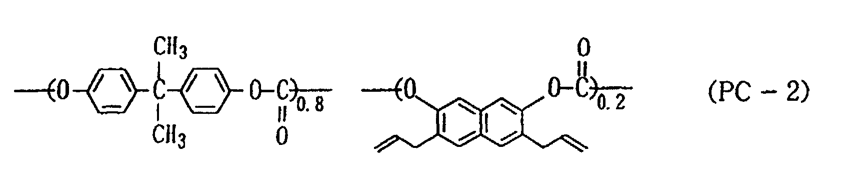

### SYNTHESIS 3 (Synthesis of a biphenyl-type crosslinking polycarbonate (PC-3))

The procedures of Synthesis 1 were repeated except that the compound (BP-19) of the formula A was replaced by 22.7 g of 3,3'-dihydroxy-4,4'-diaminobiphenyl (BP-20) and that the reaction using metachloroperbenzoic acid and the washing with the NaOH aqueous solution were not carried out, to obtain 102 g of a polycarbonate (PC-3) ([ηₛₚ/c]=0.77 dl/g]). The IR spectrum of the polycarbonate (PC-3) was characterized by absorptions at 3030 cm⁻¹, 1590 cm⁻¹ and 830 cm⁻¹ due to benzene rings, an absorption at 1730 cm⁻¹ due to carbonate groups and an absorption at 3300 cm⁻¹ due to amino groups, indicating the presence of carbonate bonds and amino groups. The copolymerization ratios of the polycarbonate (PC-3) were determined by an ¹H-NMR analysis. From these results, the polycarbonate (PC-3) was determined to comprise the following repeating units in the following ratios.

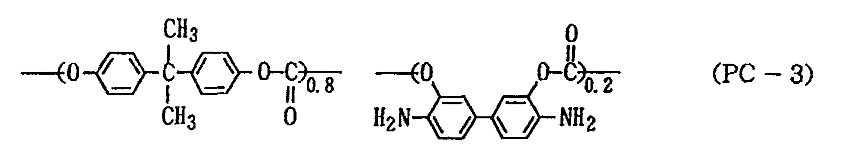

### SYNTHESIS 4 (Synthesis of a naphthalene-type crosslinking polycarbonate (PC-4))

The procedures of Synthesis 1 were repeated except that the compound (BP-19) of the formula A was replaced by 25.2 g of the compound (BP-14) of the formula B, to obtain 105 g of a polycarbonate (PC-4) ([ηₛₚ/c]=0.79 dl/g]). The IR spectrum of the polycarbonate (PC-4) was characterized by absorptions at 3030 cm⁻¹, 1590 cm⁻¹ and 830 cm⁻¹ due to benzene rings, an absorption at 1730 cm⁻¹ due to carbonate groups and an absorption at 1130 cm⁻¹ due to epoxy groups, indicating the presence of carbonate bonds and epoxy groups. The copolymerization ratios of the polycarbonate (PC-4) were determined by an ¹H-NMR analysis. From these results, the polycarbonate (PC-4) was determined to comprise the following repeating units in the following ratios.

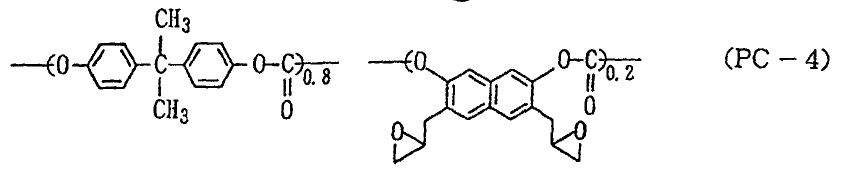

### EXAMPLE 24 (Biphenyl type-ionic crosslinking type)

By using 1-phenyl-1,2,3,4-tetrahydroquinoline-6-carboxyaldehyde-1',1'-diphenylhydrazone (C-2) as a charge-transfer substance, (PC-1) as a binder resin material and xylylenediamine (MXDA) as a crosslinking agent, a solution of (C-2):(PC-1):MXDA:methylene chloride=1:1:0.2:8 (weight ratio) was produced to use it as a coating fluid. On standing for one month, the coating fluid did not whiten nor set to gel.

Two aluminum conductive substrates (a flat plate of 50 mm x 50 mm and a cylinder of φ168 mm x 360 mm) were each coated with a dispersion of oxotitanium phthalocyanine:butyral resin:methylene chlroride=1:1:38 (weight ratio) by dip coating to form charge-generating layers (about 0.5 µm) of oxotitanium phthalocyanine. The above-described coating fluid was applied on the charge-generating layers by dip coating, dried and then crosslinked at 150°C for 10 hours, to produce laminate-type organic electrophotographic photoreceptors each having a charge-transfer layer of about 20 µm thick. The charge-transfer layers did not crystallize from coating to crosslinking.

The flat-plate organic electrophotographic photoreceptor was subjected to a deterioration test to evaluate the center-line average roughness Ra value and the electrophotographic properties. The measurements of the center-line average roughness Ra value was carried out according to JIS B 0601.

The deterioration test was carried using a Suga abrasion testing machine NUS-ISO-3 (produced by Suga Shikenki Co., Ltd.) by reciprocating a sample of the electrophotographic photoreceptor 2000 times on an abrasion test paper (produced by Suga Shikenki Co., Ltd. Al₂O₃, 3 µm abrasive paper) applied with a load of 500 g and then measuring the weight loss and center-line average roughness Ra value of the surface (according to JIS-B-0601, using a surface roughness measuring instrument SURFCOM 575A produced by Tokyo Seimitsu Co., Ltd.). Before and after the deterioration test, the electrophotographic properties were evaluated by discharging corona (-6kV) using an electrostatic charge testing instrument EPA-8100 (produced by Kawaguchi Denki Seisakusho Co., Ltd.), and measuring the initial surface potential (V₀), the residual potential (V_{R}) 5 seconds after the irradiation of light (10 Lux), and the half-value exposure (E_{1/2}). The results are shown in Tables 4 and 5.

The cylindrical organic electrophotographic photoreceptor was examined for the deterioration in resistance to toner filming caused by repeated uses in a working machine.

The evaluations were carried out by making copies of a test pattern on 30,000 sheets of A4-size paper fed in their longitudinal direction at 22-27°C at a humidity of 10-30% by using a testing set produced by mounting the organic electrophotographic photoreceptor in a commercial copying machine (a Carlson system using an organic electrophotographic photoreceptor, a cylindrical drum (φ168 mm x 360 mm, aluminum), corona charging system (voltage-800V), blade cleaning (urethane blade, blade pressure: 1 kg/cm²), two-components developer (styrene-acrylic toner, ferrite carrier), and then observing the organic electrophotographic photoreceptor for the number of visible black dots (the toner adhered to the organic electrophotographic photoreceptor by toner filming) present in an area of 10 mm x 10 mm. The results are shown in Table 6.

### EXAMPLE 25 (Naphthalene type-radical crosslinking type)

A laminate-type organic electrophotographic photoreceptor was produced in the same manner and in the same ratios of starting materials as in Example 24 except that (PC-1) was replaced by (PC-2), MXDA by azobisisobutylonitrile (AIBN), and the conditions of the reaction after the drying were changed to 120°C, 1 hour.

The organic electrophotographic photoreceptor was examined in the same manner as in Example 24 for deterioration, electrophotographic properties before and after the deterioration test and resistance to toner-filming. The results are shown in table 6.

The coating fluid prepared in this example did not whiten nor set to gel on standing for one month.

### EXAMPLE 26 (biphenyl type-ionic crosslinking type)

A laminate-type organic electrophotographic photoreceptor was produced in the same manner and in the same ratios of starting materials as in Example 24 except that (PC-1) was replaced by (PC-3), MXDA by bisphenol A epoxy resin (epoxy equivalent: 1300).

The organic electrophotographic photoreceptor was examined in the same manner as in Example 24 for deterioration, electrophotographic properties before and after the deterioration test and resistance to toner-filming. The results are shown in table 6.

The coating fluid prepared in this example did not whiten nor set to gel on standing for one month.

### EXAMPLE 27 (Naphthalene type-ionic crosslinking type)

A laminate-type organic electrophotographic photoreceptor was produced in the same manner and ratios of starting materials as in Example 24 except that (PC-1) was replaced by (PC-4).

The organic electrophotographic photoreceptor was examined in the same manner as in Example 24 for deterioration, electrophotographic properties before and after the deterioration test and resistance to toner-filming. The results are shown in table 6.

The coating fluid prepared in this example did not whiten nor set to gel on standing for one month.

### COMPARATIVE EXAMPLE 6

A polycarbonate (PC-5) was produced in the same manner as in Comparative Example 4 according to the method disclosed in Japanese Patent Application Unexamined Publication No. 4-291348. The solid thus obtained comprised the following repeating units in the following copolymerization ratios.

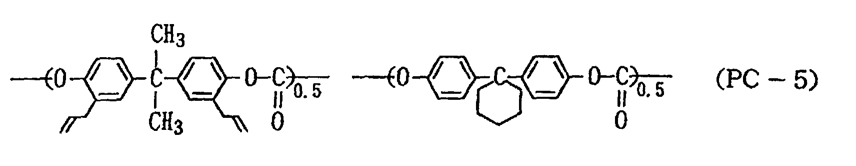

A solution of (PC-5):(C-2):pentaerythritol tetrakis(3-mercaptopropionate)(crosslinking agent):IRGACURE 907 (radical initiator, produced by Ciba-Geigy AG):methylene chloride = 1:1:0.1:0.01:8 (weight ratio) was prepared to use it as a coating fluid for forming charge-transfer layers. By using the coating fluid, the procedures in Example 24 from coating to drying were repeated. After the drying, irradiation of an irradiation energy of 80 W/cm² was carried out for 5 seconds using a high pressure mercury lamp, to give a crosslinked laminate-type organic electrophotographic photoreceptor.

The organic electrophotographic photoreceptor was examined in the same manner as in Example 24 for deterioration, electrophotographic properties before and after the deterioration test and resistance to toner-filming. The results are shown in table 6.

**TABLE 4**

| | Initial surface potential V₀ (V) | | Residual potential V_{R} (V) | | Half-value exposure E_{1/2} (lux·sec) | |
|---|---|---|---|---|---|---|
| | A | B | A | B | A | B |
| Example 24 | -742 | -739 | -4 | -4 | 0.75 | 0.77 |
| Example 25 | -749 | -745 | -4 | -5 | 0.74 | 0.75 |
| Example 26 | -751 | -747 | -5 | -5 | 0.77 | 0.79 |
| Example 27 | -745 | -740 | -5 | -5 | 0.73 | 0.74 |
| Comparative Example 6 | -732 | -620 | -45 | -49 | 1.14 | 1.22 |
| A: before the deterioration test B: after the deterioration test | | | | | | |

**TABLE 5**

| | Abrasion (mg) | Surface roughness Ra value (µm) | |
|---|---|---|---|
| | | Before deterioration test | After deterioration test |
| Example 24 | 1.21 | 0.02 | 0.13 |
| Example 25 | 1.26 | 0.02 | 0.12 |
| Example 26 | 1.19 | 0.02 | 0.12 |
| Example 27 | 1.24 | 0.02 | 0.15 |
| Comparative Example 6 | 2.65 | 0.02 | 0.72 |

**TABLE 6**

| | After 5,000 copies (dots/cm²) | After 30,000 copies (dots/cm²) |
|---|---|---|
| Example 24 | 0, 0, 0 | 2, 0, 0 |
| Example 25 | 0, 0, 0 | 0, 1, 1 |
| Example 26 | 0, 0, 0 | 2, 1, 4 |
| Example 27 | 0, 0, 0 | 2, 0, 3 |
| Comparative Example 6 | 3, 14, 11 | 53, 42, 73 |
| In each evaluation, three separate areas were observed. | | |

In each evaluation, three separate areas were observed.

### SYNTHESIS 5 (synthesis of (PC-6))

Into a mixture of a solution of 74 g of 2,2-bis(4-hydroxyphenyl)propane in 550 ml of a 6 wt% Conc. of aqueous sodium hydroxide solution and 250 ml of methylene chloride, phosgene gas was blown at a rate of 950 ml/sec for 15 minute with stirring and cooling. The reaction fluid was then allowed to stand to separate the organic layer, which was a methylene chloride solution of an bisphenol A (2,2-bis(4-hydroxyphenyl)propane) polycarbonate oligomer endcapped by chloroformate groups.

450 ml of a solution containing the methylene chloride solution of the oligomer and balance of methylene chloride was mixed with 150 ml of a 8 wt% Conc. of aqueous sodium hydroxide solution, and 27.9 g of a compound (BP-3) of the formula A (3,3'-bis(2-propenyl)-4,4'-biphenol): 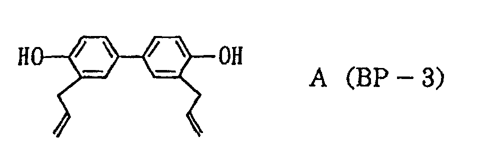 and 3.0 g of p-tert-butylphenol as an agent for controlling molecular weight were added thereto. To the mixture was added 2 ml of a 7 wt% Conc. of aqueous triethylamine solution as a catalyst with vigorous stirring, and reaction was carried out at 28°C for 1.5 hours with stirring. After the completion of the reaction, the reaction product was diluted with 1 liter of methylene chloride, and then washed twice with 1.5 liter of water. The resulting solution was cooled in an ice bath, and 51.6 g of metachloroperbenzoic acid (MCPBA) was added slowly by portions. The resulting mixture was warmed to room temperature, and then stirred for 24 hours. Then it was washed successively once with a 0.01N-NaOH aqueous solution, once with 0.01N-hydrochloric acid, and twice with 1 liter of water, and the organic layer was poured into methanol, and the precipitated polymer was filtered and dried to give 93 g of a polycarbonate (PC-6).

The polycarbonate had a reduced viscosity [ηₛₚ/c] of 0.75 dl/g as measured at 20°C at a concentration of 0.5 g/dl in methylene chloride. Measurements of reduced viscosity was carried out by using an automatic viscosity measuring instrument VMR-042 produced by Rigosha Co., Ltd. using an automatic Ubbelohde's improved viscometer (Model-RM).

From an IR spectrum analysis, the polycarbonate (PC-6) was determined to contain carbonate bonds and epoxy bonds from absorptions at 3030cm⁻¹, 1590 cm⁻¹ and 830 cm⁻¹ due to benzene rings, an absorption at 1730 cm⁻¹ due to carbonate groups and an absorption at 1130 cm⁻¹ due to epoxy groups. The copolymerization ratios of the polycarbonate (PC-6) were determined by ¹H-NMR spectrum analysis. From the results of these analysis, the polycarbonate (PC-6) was determined to comprise the following repeating units in the following copolymerization ratios.

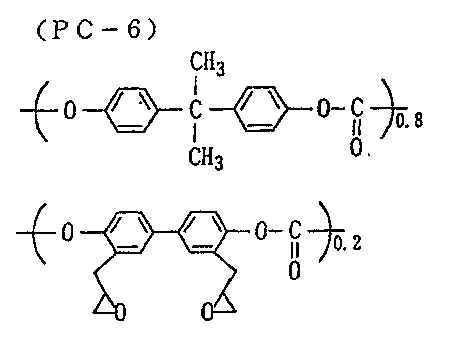

### SYNTHESIS 6 (Synthesis of (PC-7))

The procedures of Synthesis 5 were repeated except that 27.9 g of the compound (BP-3) of the formula A was replaced by 32.3 g of the compound (BP-2) (2,2-bis(3-(2-propenyl)-4-hydroxyphenyl)propane) of the formula B: 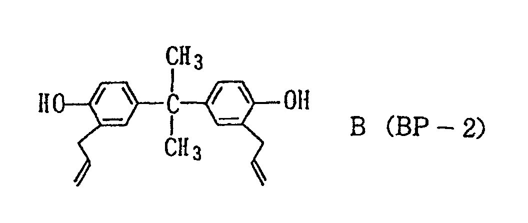 to obtain 102 g of a polycarbonate (PC-7)([ηₛₚ/c]=0.77 dl/g).

From an IR spectrum analysis, the polycarbonate (PC-7) was determined to contain carbonate bonds and epoxy bonds from absorptions at 3030cm⁻¹, 1590 cm⁻¹ and 830 cm⁻¹ due to benzene rings, an absorption at 1730 cm⁻¹ due to carbonate groups and an absorption at 1130 cm⁻¹ due to epoxy groups. The copolymerization ratios of the polycarbonate (PC-7) were determined by ¹H-NMR spectrum analysis. From the results of these analysis, the polycarbonate (PC-7) was determined to comprise the following repeating units in the following copolymerization ratios.

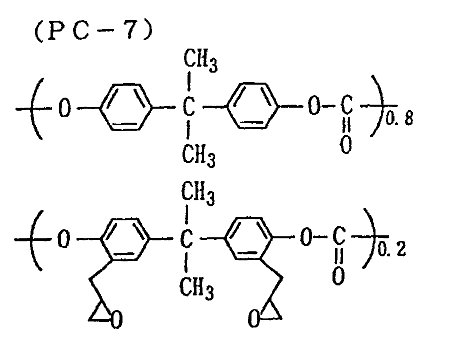

### SYNTHESIS 7 (Synthesis of (PC-8))

The procedures of Synthesis 5 were repeated except that 27.9 g of the compound (BP-3) of the formula A was replaced by 48.1 g of a compound (BP-21) of the formula C: 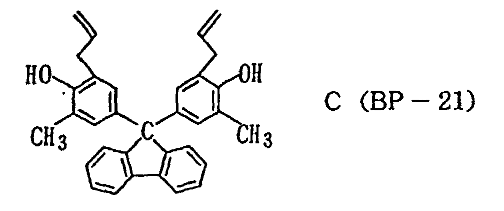 to obtain 95 g of a polycarbonate (PC-8) ([ηₛₚ/c]=0.75 dl/g).

From an IR spectrum analysis, the polycarbonate (PC-8) was determined to contain carbonate bonds and epoxy bonds from absorptions at 3030cm⁻¹, 1590 cm⁻¹ and 830 cm⁻¹ due to benzene rings, an absorption at 1730 cm⁻¹ due to carbonate groups and an absorption at 1130 cm⁻¹ due to epoxy groups. The copolymerization ratios of the polycarbonate (PC-8) were determined by ¹H-NMR spectrum analysis. From the results of these analysis, the polycarbonate (PC-8) was determined to comprise the following repeating units in the following copolymerization ratios.

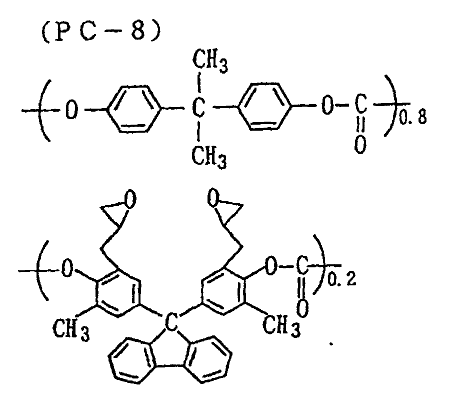

### SYNTHESIS 8 (Synthesis of (PC-9))

The procedures of Synthesis 5 were repeated except that 27.9 g of the compound (BP-3) of the formula A was replaced by 19.5 g of 4,4'-biphenol and 2.2 g of 3-aminophenol, and that the reaction with MCPBA and the following washing with the NaOH aqueous solution were not carried out, to obtain 87 g of a polycarbonate (PC-9) ([ηₛₚ/c]=0.46 dl/g).

From an IR spectrum analysis, the polycarbonate (PC-9) was determined to contain carbonate bonds and amino groups from absorptions at 3030cm⁻¹, 1590 cm⁻¹ and 830 cm⁻¹ due to benzene rings, an absorption at 1730 cm⁻¹ due to carbonate groups and a wide absorption near 3300 cm⁻¹ due to amino groups. The copolymerization ratios of the polycarbonate (PC-9) were determined by ¹H-NMR spectrum analysis. From the results of these analysis, the polycarbonate (PC-9) was determined to comprise the following repeating units in the following copolymerization ratios.

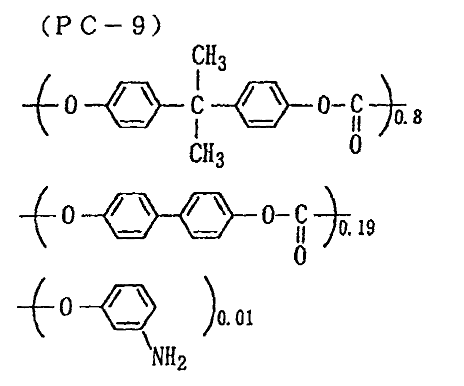

### SYNTHESIS 9 (Synthesis of (PC-10))

The procedures of Synthesis 5 were repeated except that 27.9 g of the compound (BP-3) of the formula A was replaced by 19.5 g of 4,4'-biphenol and 3.3 g of 3-hydroxyphthalic anhydride, and that the reaction with MCPBA and the following washing with the NaOH aqueous solution were not carried out, to obtain 91 g of a polycarbonate (PC-10) ([ηₛₚ/c]=0.43 dl/g).

From an IR spectrum analysis, the polycarbonate (PC-10) was determined to contain carbonate bonds and acid anhydride units from absorptions at 3030cm⁻¹, 1590 cm⁻¹ and 830 cm⁻¹ due to benzene rings, an absorption at 1730 cm⁻¹ due to carbonate groups and an absorption at 1820 cm⁻¹ due to acid anhydride. The copolymerization ratios of the polycarbonate (PC-10) were determined by ¹H-NMR spectrum analysis. From the results of these analysis, the polycarbonate (PC-10) was determined to comprise the following repeating units in the following copolymerization ratios.

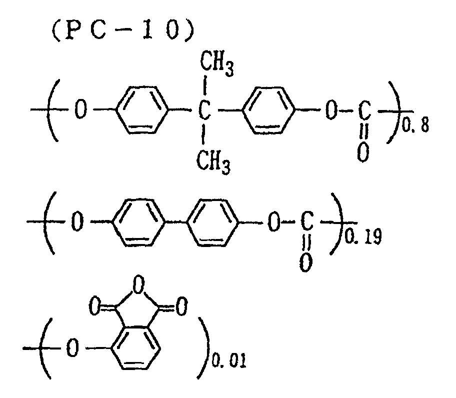

### SYNTHESIS 10 (Synthesis of (PC-11))

The procedures of Synthesis 5 were repeated except that 27.9 g of the compound (BP-3) of the formula A was replaced by 23.5 g of 4,4'-dihydroxychalcone, to obtain 93 g of a polycarbonate (PC-11) ([ηₛₚ/c]=0.74 dl/g).

From an IR spectrum analysis, the polycarbonate (PC-11) was determined to contain carbonate bonds and epoxy bonds from absorptions at 3030cm⁻¹, 1590 cm⁻¹ and 830 cm⁻¹ due to benzene rings, an absorption at 1730 cm⁻¹ due to carbonate groups and an absorption at 1130 cm⁻¹ due to epoxy groups. The copolymerization ratios of the polycarbonate (PC-11) were determined by ¹H-NMR spectrum analysis. From the results of these analysis, the polycarbonate (PC-11) was determined to comprise the following repeating units in the following copolymerization ratios.

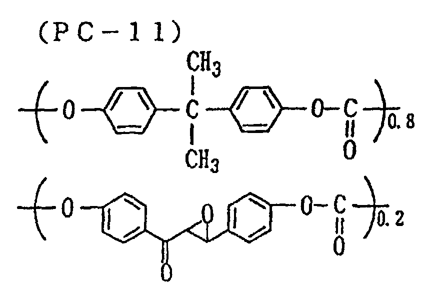

### SYNTHESIS 11 (Synthesis of (PC-12))

The procedures of Synthesis 5 were repeated except that 27.9 g of the compound (BP-3) of the formula A was replaced by 30.0 g of 4,4-bis(4-hydroxyphenyl)pentanoic acid (BP-23), and that the reaction with MCPBA and the following washing with the NaOH aqueous solution were not carried out, to obtain 93 g of a polycarbonate (PC-12) ([ηₛₚ/c]=0.75 dl/g).

From an IR spectrum analysis, the polycarbonate (PC-12) was determined to contain carbonate bonds and carboxylic acid units from absorptions at 3030cm⁻¹, 1590 cm⁻¹ and 830 cm⁻¹ due to benzene rings, an absorption at 1730 cm⁻¹ due to carbonate groups and an absorption at 3300 cm⁻¹ due to carboxylic acid. The copolymerization ratios of the polycarbonate (PC-12) were determined by ¹H-NMR spectrum analysis. From the results of these analysis, the polycarbonate (PC-12) was determined to comprise the following repeating units in the following copolymerization ratios.

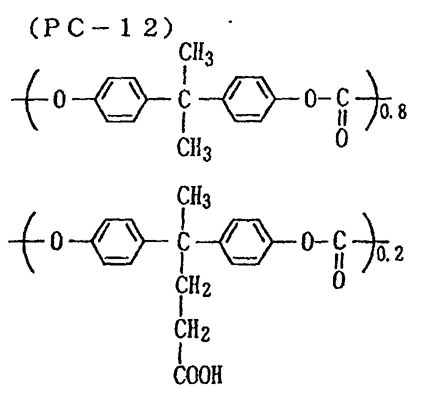

### SYNTHESIS 12 (Synthesis of (PC-13))

The procedures of Synthesis 5 were repeated except that 27.9 g of the compound (BP-3) of the formula A was replaced by 21.1 g of bis(4-hydroxyphenyl)amine (BP-24), and that the reaction with MCPBA and the following washing with the NaOH aqueous solution were not carried out, to obtain 83 g of a polycarbonate (PC-13) ([[ηₛₚ/c]=0.75 dl/g).

From an IR spectrum analysis, the polycarbonate (PC-13) was determined to contain carbonate bonds and amino groups from absorptions at 3030cm⁻¹, 1590 cm⁻¹ and 830 cm⁻¹ due to benzene rings, an absorption at 1730 cm⁻¹ due to carbonate groups and an absorption at 3300 cm⁻¹ due to amine. The copolymerization ratios of the polycarbonate (PC-13) were determined by ¹H-NMR spectrum analysis. From the results of these analysis, the polycarbonate (PC-13) was determined to comprise the following repeating units in the following copolymerization ratios.

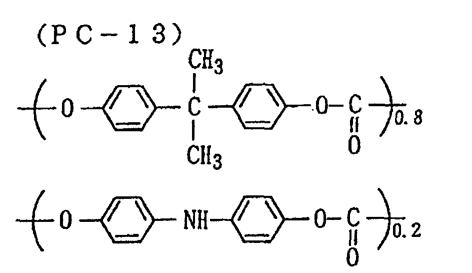

### SYNTHESIS 13 (Synthesis of (PC-14))

The procedures of Synthesis 5 were repeated except that 27.9 g of the compound (BP-3) of the formula A was replaced by 39.8 g of 2,2-bis(3-phenyl-4-hydroxyphenyl)propane and 2.8 g of 2-(4-hydroxyphenyl)ethanol, and that the reaction with MCPBA and the following washing with the NaOH aqueous solution were not carried out, to obtain 103 g of a polycarbonate (PC-14) ([ηₛₚ/c]=0.46 dl/g).

From an IR spectrum analysis, the polycarbonate (PC-14) was determined to contain carbonate bonds and hydroxyl groups from absorptions at 3030cm⁻¹, 1590 cm⁻¹ and 830 cm⁻¹ due to benzene rings, an absorption at 1730 cm⁻¹ due to carbonate groups and a wide absorption near 3300 cm⁻¹ due to hydroxyl groups. The copolymerization ratios of the polycarbonate (PC-14) were determined by ¹H-NMR spectrum analysis. From the results of these analysis, the polycarbonate (PC-14) was determined to comprise the following repeating units in the following copolymerization ratios.

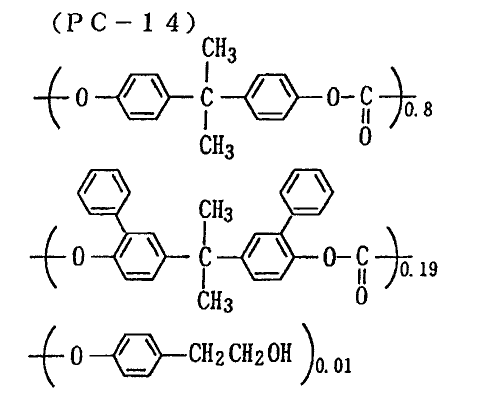

### SYNTHESIS 14 (Synthesis of (PC-15))

The procedures of Synthesis 5 were repeated except that 27.9 g of the compound (BP-3) of the formula A was replaced by 39.8 g of a compound of the formula D: 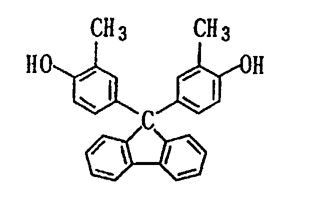 and 2.5 g of 4-hydroxythiophenol, and that the reaction with MCPBA and the following washing with the NaOH aqueous solution were not carried out, to obtain 100 g of a polycarbonate (PC-15) ([ηₛₚ/c]=0.46 dl/g).

From an IR spectrum analysis, the polycarbonate (PC-15) was determined to contain carbonate bonds and thiol units from absorptions at 3030cm⁻¹, 1590 cm⁻¹ and 830 cm⁻¹ due to benzene rings, an absorption at 1730 cm⁻¹ due to carbonate groups and a wide absorption near 3300 cm⁻¹ due to thiol. The copolymerization ratios of the polycarbonate (PC-15) were determined by ¹H-NMR spectrum analysis. From the results of these analysis, the polycarbonate (PC-15) was determined to comprise the following repeating units in the following copolymerization ratios.

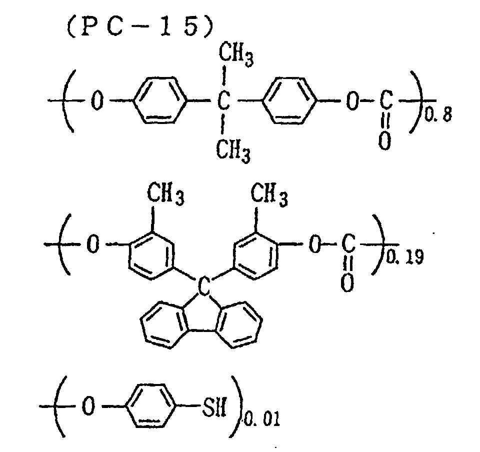

### SYNTHESIS 15 (Synthesis of (PC-16))

The procedures of Synthesis 5 were repeated except that 27.9 g of the compound (BP-3) of the formula A was replaced by 22.7 g of 3,3'-diamino-4,4'-dihydroxybiphenyl (BP-25), and that the reaction with MCPBA and the following washing with the NaOH aqueous solution were not carried out, to obtain 83 g of a polycarbonate (PC-16) ([ηₛₚ/c]=0.75 dl/g).

From an IR spectrum analysis, the polycarbonate (PC-16) was determined to contain carbonate bonds and amino groups from absorptions at 3030cm⁻¹, 1590 cm⁻¹ and 830 cm⁻¹ due to benzene rings, an absorption at 1730 cm⁻¹ due to carbonate groups and a wide absorption near 3300 cm⁻¹ due to amino groups. The copolymerization ratios of the polycarbonate (PC-16) were determined by ¹H-NMR spectrum analysis. From the results of these analysis, the polycarbonate (PC-16) was determined to comprise the following repeating units in the following copolymerization ratios.

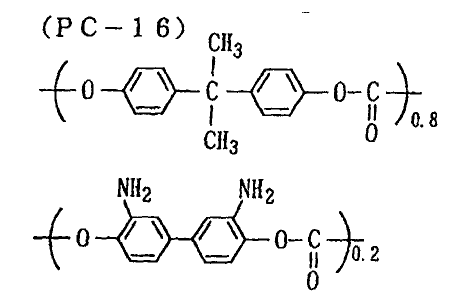

### EXAMPLE 28 (crosslinking of an electrophilic polycarbonate with a nucleophilic crosslinking agent)

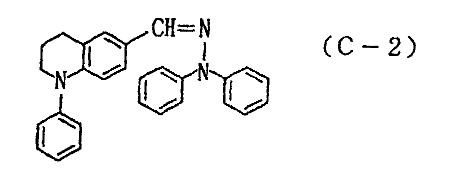

By using (C-2) as a charge-transfer substance, (PC-6) as a binder resin material and xylylenediamine (MXDA) as a crosslinking agent, a solution of (C-2):(PC-6):MXDA:methylene chloride=1:1:0.2:8 (weight ratio) was produced to use it as a coating fluid. On standing for one month, the coating fluid did not whiten nor set to gel. An aluminum conductive substrates was coated with a dispersion of oxotitanium phthalocyanine:butyral resin:methylene chlroride=1:1:38 (weight ratio) by dip coating to form a charge-generating layer (about 0.5 µm) of oxotitanium phthalocyanine, which was then coated with the above-described coating fluid by dip coating, dried and then heated at 150°C for 10 hours to carry out crosslinking, to produce a laminate-type organic electrophotographic photoreceptor having a charge-transfer layers of about 20 µm thick. The charge-transfer layer did not crystallize from coating to crosslinking.

The electrophotographic photoreceptor was examined for electrophotographic properties by discharging -6kV corona using an electrostatic charge testing instrument EPA-8100 (produced by Kawaguchi Denki Seisakusho Co., Ltd.), and measuring the initial surface potential (V₀), the residual potential (V_{R}) 5 seconds after the irradiation of light (10Lux) and the half-value exposure (E_{1/2}). The results are shown in Table 7.

The abrasion resistance of the charge-transfer layer was evaluated by using a Suga abrasion testing machine NUS-ISO-3 (produced by Suga Shikenki Co., Ltd.) by reciprocating a sample of the laminate-type electrophotographic photoreceptor 1200 times on an abrasion test paper (produced by Suga Shikenki Co., Ltd., 3 µm abrasive paper) applied with a load of 200 g and measuring weight loss. The result is shown in Table 8.

### EXAMPLE 29 (crosslinking of a nucleophilic polycarbonate (-OH occurring by the ring-opening of epoxy groups) with an electrophilic crosslinking agent)

A laminate-type electrophotographic photoreceptor was produced in the same manner as in Example 28 except that (PC-6) was replaced by (PC-7), and MXDA by chlorendic anhydride, and measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner. The results are shown in Tables 7 and 8.

On standing for one month, the coating fluid for forming charge-transfer layers did not whiten nor set to gel. The charge-transfer layer did not crystallize from coating to crosslinking.

### EXAMPLE 30 (crosslinking of an electrophilic polycarbonate with a nucleophilic crosslinking agent)

A laminate-type electrophotographic photoreceptor was produced in the same manner as in Example 28 except that (PC-6) was replaced by (PC-8), and measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner. The results are shown in Tables 7 and 8.

On standing for one month, the coating fluid for forming charge-transfer layers did not whiten nor set to gel. The charge-transfer layer did not crystallize from coating to crosslinking.

### EXAMPLE 31 (crosslinking of a nucleophilic polycarbonate with an electrophilic crosslinking agent)

A laminate-type electrophotographic photoreceptor was produced in the same manner as in Example 28 except that (PC-6) was replaced by (PC-9), and MXDA by bisphenol A epoxy resin (epoxy equivalent: 1300), and measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner. The results are shown in Tables 7 and 8.

On standing for one month, the coating fluid for forming charge-transfer layers did not whiten nor set to gel. The charge-transfer layer did not crystallize from coating to crosslinking.

### EXAMPLE 32 (crosslinking (non-epoxy crosslinking) of an electrophilic polycarbonate with a nucleophilic crosslinking agent)

A laminate-type electrophotographic photoreceptor was produced in the same manner as in Example 28 except that (PC-6) was replaced by (PC-10) and that the crosslinking following the drying was carried out at 200°C for 20 hours, and then measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner. The results are shown in Tables 7 and 8.

On standing for one month, the coating fluid for forming charge-transfer layers did not whiten nor set to gel. The charge-transfer layer did not crystallize from coating to crosslinking.

### EXAMPLE 33 (crosslinking of an epoxy-polycarbonate with a Lewis acid)

A laminate-type electrophotographic photoreceptor was produced in the same manner as in Example 28 except that (PC-6) was replaced by (PC-11), and MXDA by boron trifluoride-piperizine complex, and then measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner. The results are shown in Tables 7 and 8.

On standing for one month, the coating fluid for forming charge-transfer layers did not whiten nor set to gel. The charge-transfer layer did not crystallize from coating to crosslinking.

### EXAMPLE 34 (crosslinking of a nucleophilic polycarbonate with an electrophilic crosslinking agent)

A laminate-type electrophotographic photoreceptor was produced in the same manner as in Example 28 except that (PC-6) was replaced by (PC-12), and MXDA by bisphenol A epoxy resin, and then measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner. The results are shown in Tables 7 and 8.

On standing for one month, the coating fluid for forming charge-transfer layers did not whiten nor set to gel. The charge-transfer layer did not crystallize from coating to crosslinking.

### EXAMPLE 35 (crosslinking of a nucleophilic polycarbonate with an electrophilic crosslinking agent)

A laminate-type electrophotographic photoreceptor was produced in the same manner as in Example 28 except that (PC-6) was replaced by (PC-13), and MXDA by bisphenol A epoxy resin, and then measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner. The results are shown in Tables 7 and 8.

On standing for one month, the coating fluid for forming charge-transfer layers did not whiten nor set to gel. The charge-transfer layer did not crystallize from coating to crosslinking.

### EXAMPLE 36 (crosslinking of a nucleophilic polycarbonate with an electrophilic crosslinking agent)

A laminate-type electrophotographic photoreceptor was produced in the same manner as in Example 28 except that (PC-6) was replaced by (PC-14), and MXDA by bisphenol A epoxy resin, and then measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner. The results are shown in Tables 7 and 8.

On standing for one month, the coating fluid for forming charge-transfer layers did not whiten nor set to gel. The charge-transfer layer did not crystallize from coating to crosslinking.

### EXAMPLE 37 (crosslinking of a nucleophilic polycarbonate with an electrophilic crosslinking agent)

A laminate-type electrophotographic photoreceptor was produced in the same manner as in Example 28 except that (PC-6) was replaced by (PC-15), and MXDA by bisphenol A epoxy resin, and then measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner. The results are shown in Tables 7 and 8.

On standing for one month, the coating fluid for forming charge-transfer layers did not whiten nor set to gel. The charge-transfer layer did not crystallize from coating to crosslinking.

### EXAMPLE 38 (crosslinking of a nucleophilic polycarbonate with an electrophilic crosslinking agent)

A laminate-type electrophotographic photoreceptor was produced in the same manner as in Example 28 except that (PC-6) was replaced by (PC-16), and MXDA by bisphenol A epoxy resin, and then measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner. The results are shown in Tables 7 and 8.

On standing for one month, the coating fluid for forming charge-transfer layers did not whiten nor set to gel. The charge-transfer layer did not crystallize from coating to crosslinking.

### COMPARATIVE EXAMPLE 7 (radical crosslinking of a polycarbonate having vinyl groups)

A polycarbonate (PC-17) of the following structure was produced in the same manner as in Comparative Example 4 according to the production of a crosslinking polycarbonate disclosed in Japanese Patent Application Unexamined Publication No. 4-291384.

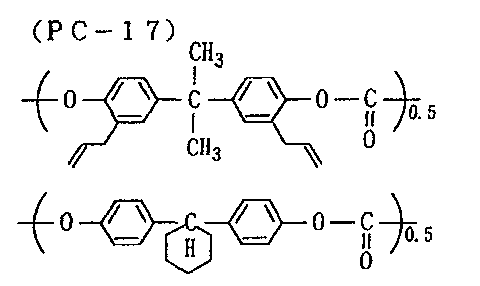

A solution of (PC-17):(C-2):pentaerythritol tetrakis(3-mercaptopropionate)(crosslinking agent):IRGACURE 907 (radical initiator, produced by Ciba-Geigy AG):methylene chloride = 1:1:0.1:0.01:8 (weight ratio) was prepared to use it as a coating fluid for forming charge-transfer layers. Then, in the same manner as in Example 28, a charge-generating layer was formed and the coating fluid was applied on the charge-generating layer and dried. After the drying, an irradiation energy of 80 W/cm² was irradiated for 5 seconds using a high pressure mercury lamp, to give a crosslinked laminate-type electrophotographic photoreceptor.

The laminate-type electrophotographic photoreceptor was then subjected to measurements of the initial surface potential (V₀), the residual potential (V_{R}) 5 seconds after the irradiation of light (10 Lux), the half-value exposure (E_{1/2}) and the weight loss of the charge-transfer layer caused by abrasion were carried out in the same manner as in Example 28. The results are shown in Tables 7 and 8.

On standing for one month, the coating fluid for forming charge-transfer layers did not whiten nor set to gel. The charge-transfer layer did not crystallize from coating to crosslinking.

**TABLE 7**

| | Initial surface potential V₀ (V) | Residual potential V_{R} (V) | Half-value exposure E_{1/2} (lux·sec) |
|---|---|---|---|
| Example 28 | -742 | -4 | 0.75 |
| Example 29 | -749 | -4 | 0.74 |
| Example 30 | -752 | -3 | 0.72 |
| Example 31 | -743 | -4 | 0.75 |
| Example 32 | -753 | -7 | 0.79 |
| Example 33 | -749 | -5 | 0.75 |
| Example 34 | -750 | -2 | 0.75 |
| Example 35 | -752 | -4 | 0.73 |
| Example 36 | -749 | -3 | 0.74 |
| Example 37 | -744 | -4 | 0.75 |
| Example 38 | -750 | -3 | 0.76 |
| Comparative Example 7 | -732 | -45 | 1.14 |

**TABLE 8**

| | Abrasion (mg) |
|---|---|
| Example 28 | 1.15 |
| Example 29 | 1.27 |
| Example 30 | 1.20 |
| Example 31 | 1.34 |
| Example 32 | 1.23 |
| Example 33 | 1.30 |
| Example 34 | 1.22 |
| Example 35 | 1.23 |
| Example 36 | 1.19 |
| Example 37 | 1.26 |
| Example 38 | 1.23 |
| Comparative Example 7 | 1.93 |

### INDUSTRIAL APPLICABILITY

The polycarbonate resins of the present invention are novel polycarbonate resins having crosslinking functional groups and are useful for the production of crosslinked polycarbonate resins or graft polymers. When used as binder resin materials in the photosensitive layers of electrophotographic photoreceptors, the polycarbonate resins do not cause whitening nor gelation of solutions thereof in solvents and can give crosslinked products of high surface hardness, so the electrophotographic photoreceptors maintain high mechanical strength and excellent electrophotographic properties during a long-term repeated uses.

## Claims

1. A polycarbonate resin having crosslinking functional groups in side chains, which comprises repeating units (1') represented by the following general formula (1') and repeating units (2a) represented by the following general formula (2a) and/or repeating units (2b) represented by the following general formula (2b), in a molar ratio of the repeating units (1') to a total of the repeating units (1'), repeating units (2a) and the repeating units (2b), (1')/[(1')+(2a)+(2b)], of 0.001-1; 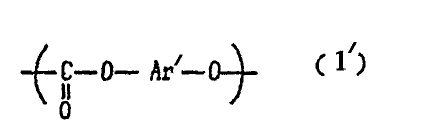 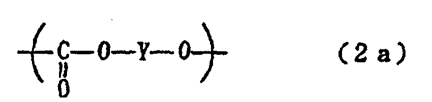 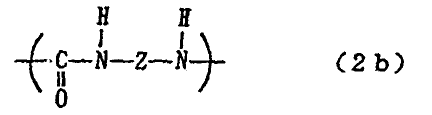 wherein,
in the general formula (1'), Ar' is a divalent aromatic group represented by 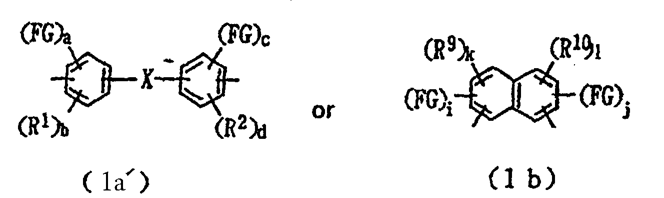 and in the formula (1a'), X is -CO-, -S-, -SO-, -SO₂-, -O-, fluorenylidene, diphenylmethylidene consisting of two phenyl groups linked to each other via 1 to 4 methylene groups, an α,ω-alkylene group of 2 to 12 carbon atoms, -CR⁵R⁶- (wherein R⁵ and R⁶ are each hydrogen, an alkyl group of 1 to 10 carbon atoms, an aryl group of 6 to 36 carbon atoms, an aliphatic hydrocarbon group of 2 to 10 carbon atoms having one or more unsaturated bonds (except for a linear alkenyl group of 2 to 6 carbon atoms having one double bond only at an end thereof and a linear alkynyl group of 2 to 6 carbon atoms having one triple bond only at an end thereof) or FG, at least one of R⁵ and R⁶ being FG or the aliphatic hydrocarbon group of 2 to 10 carbon atoms having one or more unsaturated bonds, FG being 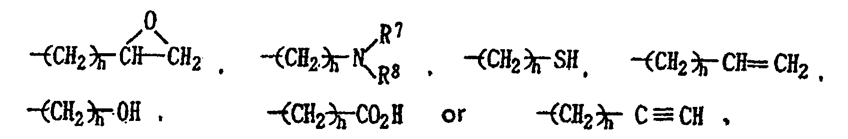 h being an integer of 0 to 4, R⁷ and R⁸ being each hydrogen, an alkyl group of 1 to 6 carbon atoms or a suubstituted or non-substituted aryl group of 6 to 12 carbon atoms), a cycloalkylidene group of 5 to 12 carbon atoms which is substituted by an aliphatic hydrocarbon group of 2 to 12 carbon atoms having one or more unsaturated bonds, a cycloalkylidene group of 5 to 12 carbon atoms which is substituted by an alicyclic hydrocarbon group of 5 to 12 carbon atoms having one or more unsaturated bonds, or a fluorenylidene which is substituted by an aliphatic hydrocarbon group of 2 to 12 carbon atoms having one or more unsaturated bonds, R¹ and R² are each a halogeno, a saturated hydrocarbon group of 1 to 10 carbon atoms, an alkyloxy group of 1 to 10 carbon atoms, an alkylthio group of 1 to 10 carbon atoms, an aryl group of 6 to 18 carbon atoms, an aryloxy group of 6 to 12 carbon atoms, an arylthio group of 6 to 12 carbon atoms, or an aryl group of 6 to 18 carbon atoms which is substituted by an alkoxyl group of 1 to 10 carbon atoms, a, b, c and d are each an integer of 0 to 4, a+b being an integer of 0 to 4, c+d being an integer of 0 to 4; and when X is fluorenylidene, a diphenylmethylidene consisting of two phenyl groups linked to each other via 1 to 4 methylene groups, -CO-, -S-, -SO-, -SO₂-, -O-, or an α,ω-alkylene group of 2 to 12 carbon atoms, a+c is not 0; and when X is -CO-, -S-, -SO-, -SO₂-, -O-, or an α,ω-alkylene group of 2 to 12 carbon atoms, and the FGs bonded to the phenylene groups of (1a') are 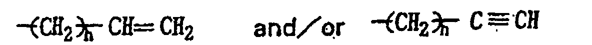 (wherein h is as defined above), a+c is not 0 and b+d is not 0;
and when X is -CR⁵R⁶-, a cycloalkylidene group of 5 to 12 carbon atoms which is substituted by an aliphatic hydrocarbon group of 2 to 12 carbon atoms having one or more unsaturated bonds or a fluorenylidene which is substituted by an aliphatic hydrocarbon group of 2 to 12 carbon atoms having one or more unsaturated bonds, none of R¹ and R² are a halogeno;
and in the formula (1b), R⁹ and R¹⁰ are each a halogeno, an alkyl group of 1 to 6 carbon atoms, an alkyloxy group of 1 to 4 carbon atoms, a substituted or non-substituted aryl group of 6 to 12 carbon atoms or a substituted or non-substituted aryloxy group of 6 to 12 carbon atoms, FG is as defined above, two -COOH present in one repeating unit may form the following structure 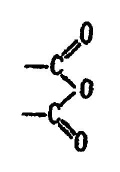 i, j, k and l are each an integer of 0 to 3, i+j=1 to 6, i+k=0 to 3, and j+l=0 to 3;
and in the general formula (2a), Y is a divalent group containing an arylene group and no crosslinking functional group;
and in the general formula (2b), Z is a group represented by the following formula 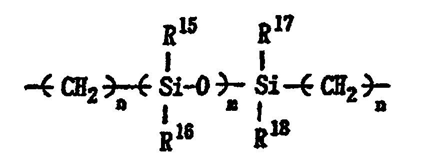 R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150.

2. The polycarbonate resin of claim 1, wherein Ar' in the repeating units (1') is represented by the following formula.

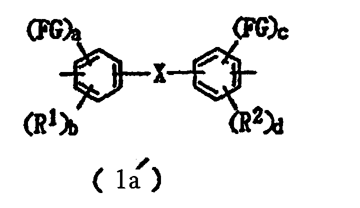

3. The polycarbonate resin of claim 1, wherein Ar' in the repeating units (1') is represented by the following formula.

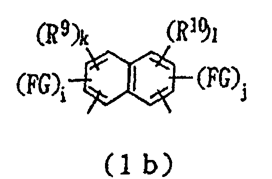

4. The polycarbonate resin of claim 1, wherein the repeating units (1') are represented by the following formula

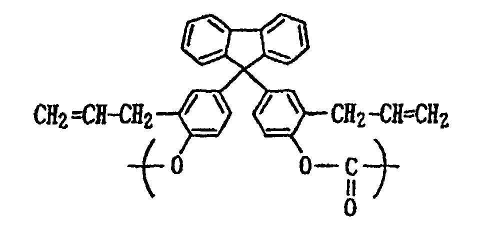

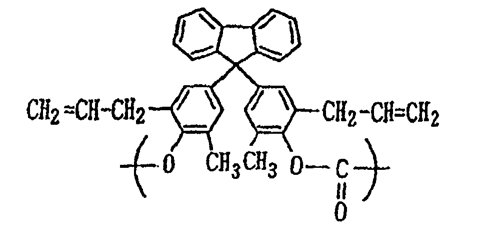

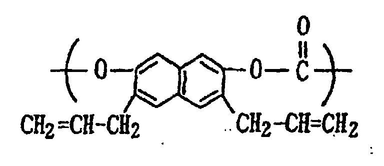

5. The polycarbonate resin of claim 1, wherein the repeating units (2a) are repeating units (3) represented by the following general formula (3) 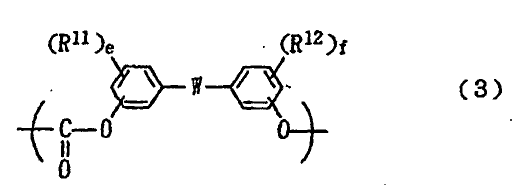 wherein R¹¹ and R¹² are each a balogeho, a saturated hydrocarbon group of 1 to 10 carbon atoms, an aromatic hydrocarbon group of 6 to 12 carbon atoms, an alkyloxy group of 1 to 10 carbon atoms, an alkylthio group of 1 to 10 carbon atoms, an aryloxy group of 6 to 12 carbon atoms or an arylthio group of 6 to 12 carbon atoms, e and f are each an integer of 0 to 4, W is a single bond, -O-, -CO-, -S-, -SO-, -SO₂-, -CR¹³R¹⁴-, a cycloalkylidene group of 5 to 12 carbon atoms or an α,ω-alkylene group of 2 to 12 carbon atoms (R¹³ and R¹⁴ are each hydrogen, trifluoromethyl, an alkyl group of 1 to to carbon atoms or an aromatic hydrocarbon group of 6 to 36 carbon atoms) or the following group 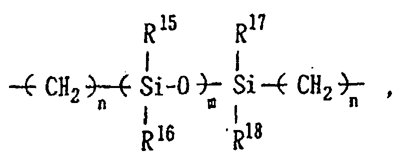 R¹⁵, R¹⁶, R¹⁷ and R¹⁸ being each an alkyl group of 1 to 4 carbon atoms or an aryl group of 6 to 36 carbon atoms, n being an integer of 1 to 6, and m being a number of 1 to 150.

6. The polycarbonate resin of claim 1, which further has end groups which have a crosslinking functional group and are represented by the following general formula (E1), (E2) or (E3): 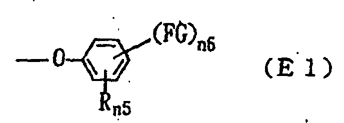 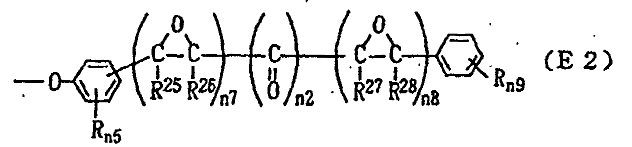
―O-FG (E 3)
wherein each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ may be linked to each other by a methylene chain of 1 to 4 carbon atoms, n7 and n8 are each 0 or 1, n7+n8 is 1 or 2, n2 is 0 or 1, FG is as defined above, and two -COOH present in one end group may form the following structure.

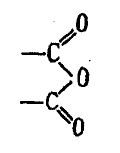

7. A polycarbonate resin having crosslinking functional groups in a main chain, which comprises repeating units (7) or (8) represented by the following general formula (7) or (8), and repeating units (2a) represented by the following general formula (2a) and/or repeating units (2b) represented by the following general formula (2b), in a molar ratio of the repeating units (7) or (8) to a total of the repeating units (6), (7) or (8), the repeating units (2a) and the repeating units (2b), (7) or (8)]/{[ (7) or (8)]+(2a)+(2b)}, of 0.001 to 1; 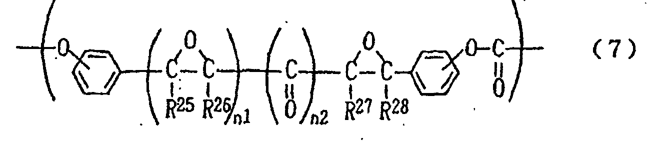 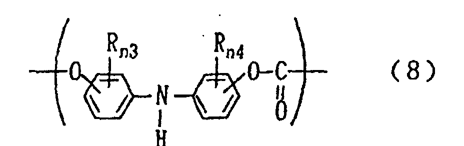 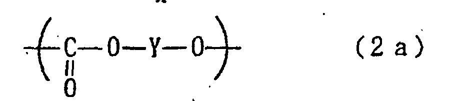 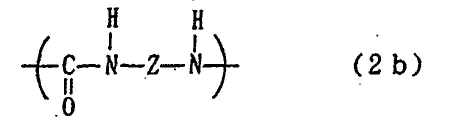 wherein,
in the general formula (7), R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by a methylene chain of 1 to 4 carbon atoms, n1 and n2 are each an integer of 0 or 1;
in the general formula (8), each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n3 and n4 are each an integer of 0 to 4;
in the general formula (2a), Y is a divalent group containing an arylene group and no crosslinking functional group;
In the general formula (2b), Z is represented by the following formula 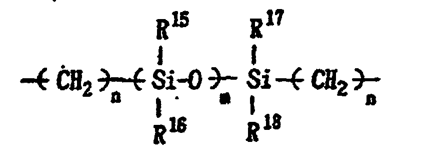 wherein R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150.

8. The polycarbonate resin of claim 7, wherein the repeating units (2a) are repeating units (3) represented by the following general formula (3) 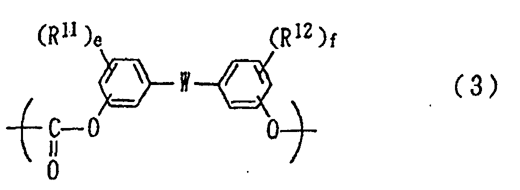 wherein R¹¹ and R¹² are each a halogeno, a saturated hydrocarbon group of 1 to 10 carbon atoms, an aromatic hydrocarbon group of 6 to 12 carbon atoms, an alkyloxy group of 1 to 10 carbon atoms, an alkylthio group of 1 to 10 carbon atoms, an aryloxy group of 6 to 12 carbon atoms or an arylthio group of 6 to 12 carbon atoms, e and f are each an integer of 0 to 4, W is a single bond, -O-, -CO-, -S-, -SO-, -SO₂-, -CR¹³R¹⁴-, a cycloalkylidene group of 5 to 12 carbon atoms or an α,ω-alkylene group of 2 to 12 carbon atoms (R¹³ and R¹⁴ are each hydrogen, trifluoromethyl, an alkyl group of 1 to 10 carbon atoms or an aromatic hydrocarbon groups of 6 to 36 carbon atoms) or a group represented by the following formula 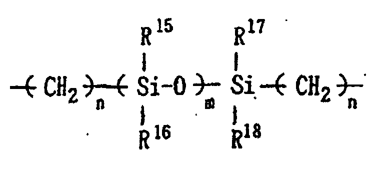 wherein R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150.

9. The polycarbonate resin of claim 7, which further has end groups which have a crosslinking functional group and are represented by the following general formula (E1), (E2) or (E3) 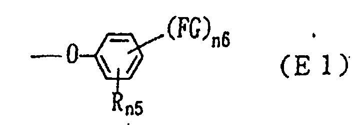 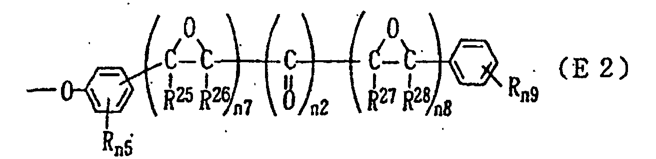
―O-FG (E 3)
wherein each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to :7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an, arylthio group of 6 to 12 carbon atoms, R²⁶ and R²⁷ may be linked to each other by a methylene chain of 1 to 4 carbon atoms, n7 and n8 are each 0 or 1, n7+n8 is 1 or 2, n2 is 0 or 1, FG is 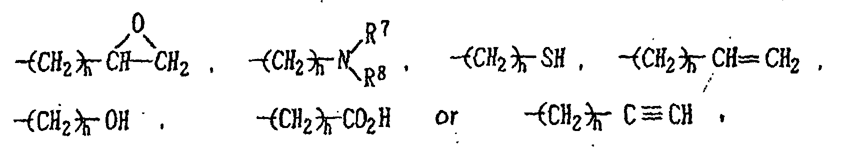 and two -COOH present in one end group may form the following structure, 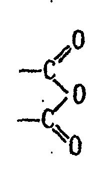 h is an integer of 0 to 4, R⁷ and R⁸ are each hydrogen, an alkyl group of 1 to 6 carbon atoms or a substituted or non-substituted aryl group of 6 to 12 carbon atoms.

10. A polycarbonate resin having crosslinking functional groups at ends, which comprises repeating units (2a) represented by the following general formula (2a) and/or repeating units (2b) represented by the following general formula (2b), and end groups represented by the following general formula (E1'), (E2) or (E3); 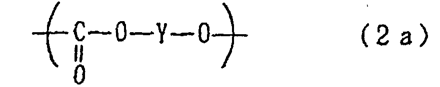 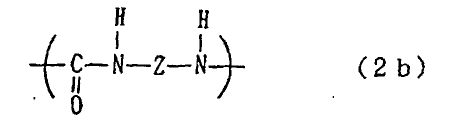 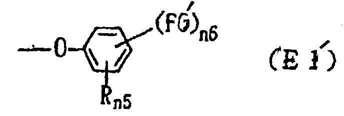 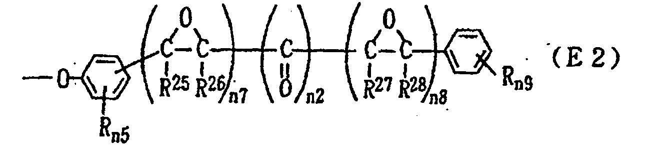
―O-FG (E 3)
wherein
in the general formula (2a), Y is a divalent group containing an arylene group and no crosslinking functional group;
in the general formula (2b), Z is a group represented by the following formula 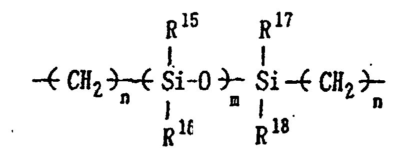 wherein R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150;
in the general formulae (E1'), (E2) and (E3), each R is a halogeno, a substituted or non-substituted alkyl group of 1 to 10 carbon atoms, a substituted or non-substituted alkyloxy group of 1 to 10 carbon atoms, an alkylthio group of to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atams, a substituted or non-substituted aryl group of 6 to 24 carbon atoms a substituted or non-substituted aryloxy group of 6 to 12 carbon atoms or an arylthio group of 6 to 12 carbon atoms, R²⁶ and R²⁷ are optionally linked to each other by a methylene chain of 1 to 4 carbon atoms, n7 and n8 are each 0 or 1, n7+n8 is 1 or 2, n2 is 0 or 1, FIG' is 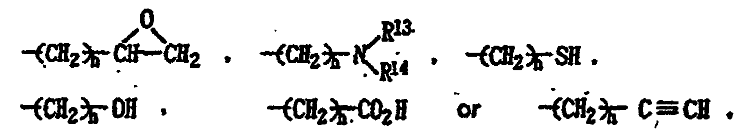 two -COOH present in one end group may form the following structure, 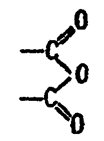 h is an integer of 0 to 4, R¹³ and R¹⁴ are each hydrogen, an alkyl group of 1 to 6 carbon atoms or a substituted or non-substituted aryl group of 6 to 12 carbon atoms.

11. The polycarbonate resin of claim 10, wherein the repeating units (2a) are repeating units (3) represented by the following general formula (3) 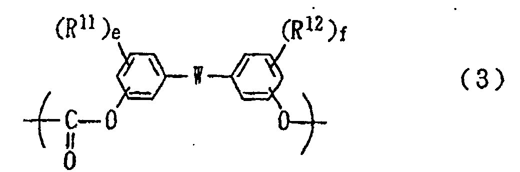 wherein R¹¹ and R¹² are each a halogeno, a saturated hydrocarbon group of 1 to 10 carbon atoms, an aromatic hydrocarbon group of 6 to'12 carbon atoms, an alkyloxy group of 1 to 10 carbon atoms, an alkylthio group of 1 to 10 carbon atoms, an aryloxy group of 6 to 12 carbon atoms or an arylthio group of 6 to 12 carbon atoms, e and f are each an integer of 0 to 4, W is a single bond, -O-, -CO-, -S-, -SO-, -SO₂-, -CR¹³R¹⁴-, a cycloalkylidene group of 5 to 12 carbon atoms or an α,ω-alkylene group of 2 to 12 carbon atoms (R¹³ and R¹⁴ being each hydrogen, trifluoromethyl, an alkyl group of 1 to 10 carbon atoms or an aromatic hydrocarbon groups of 6 to 36 carbon atoms) or a group represented by the following formula 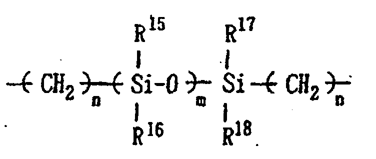 wherein R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150.

12. A crosslinked polycarbonate resin produced by crosslinking the polycarbonate resin of any one of claims 1 to 11.

13. (amended) An electrophotographic photoreceptor comprising a conductive substrate and a photosensitive layer that is disposed on the conductive substrate, the photosensitive layer containing:
a polycarbonate resin having crosslinking functional groups in side chains, which comprises repeating units (1) represented by the following general formula (1) and repeating units (2a) represented by the following general formula (2a) and/or repeating units (2b) represented by the following general formula (2b), in a molar ratio of the repeating units (1) to a total of the repeating units (1), repeating units (2a) and the repeating units (2b), (1)/[(1)+(2a)+(2b)], of 0.001-1; 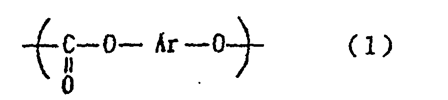 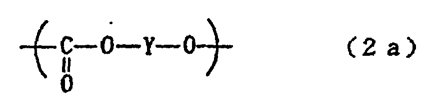 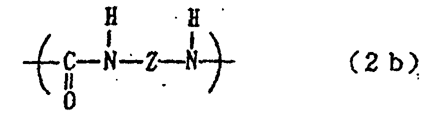
wherein,
in the general formula (1), Ar is a divalent aromatic group represented by 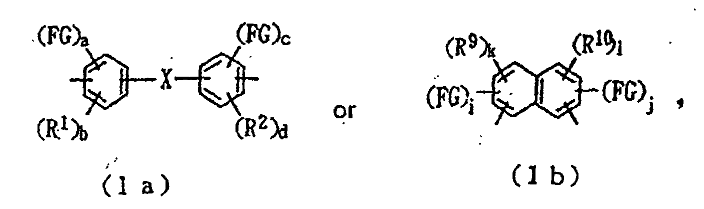 and in the formula (1a), X is a single bond, -CO-, -S-, -SO-, -SO₂-, -O-, -CR³R⁴- (wherein R³ and R⁴ are each an alkyl group of 1 to 10 carbon atoms, trifluoromethyl or an aryl group of 6 to 36 carbon atoms), a cycloalkylene group of 5 to 12 carbon atoms, a cycloalkylidene group of 5 to 12 carbon atoms, fluorenylidene, diphenylmethylidene consisting of two phenyl groups linked to each other via 1 to 4 methylene groups, an α,ω-alkylene group of 2 to 12 carbon atoms, -CR⁵R⁶- (wherein R⁵ and R⁶ are each hydrogen, an alkyl group of 1 to 10 carbon atoms, an aryl group of 6 to 36 carbon atoms, an aliphatic hydrocarbon group of 2 to 10 carbon atoms having one or more unsaturated bonds (except for a linear alkenyl group of 2 to 6 carbon atoms having one double bond only at an end thereof and a linear alkynyl group of 2 to 6 carbon atoms having one triple bond only at an end thereof) or FG, at least one of R⁵ and R⁶ being FG or the aliphatic hydrocarbon group of 2 to 10 carbon atoms having one or more unsaturated bonds, FG being 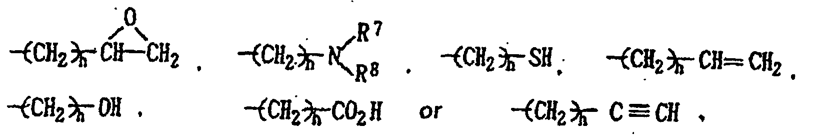 h being an integer of 0 to 4, R⁷ and R⁸ being each hydrogen, an alkyl group of 1 to 6 carbon atoms or a substituted or non-substituted aryl group of 6 to 12 carbon atoms), a cycloalkylidene group of 5 to 12 carbon atoms which is substituted by an aliphatic hydrocarbon group of 2 to 12 carbon atoms having one or more unsaturated bonds, a cycloalkylidene group of 5 to 12 carbon atoms which is substituted by an alicyclic hydrocarbon group of .5 to 12 carbon atoms having one or more unsaturated bonds, or a fluorenylidene which is substituted by an aliphatic hydrocarbon group of 2 to 12 carbon atoms having one or more unsaturated bonds, R¹ and R² are each a halogeno, a saturated hydrocarbon group of 1 to 10 carbon atoms, an alkyloxy group of 1 to 10 carbon atoms, an alkylthio group of 1 to 10 carbon atoms, an aryl group of 6 to 18 carbon atoms, an aryloxy group of 6 to 12 carbon atoms, an arylthio group of 6 to 12 carbon atoms, or an aryl group of 6 to 18 carbon atoms which is substituted by an alkoxyl group of 1 to 10 carbon atoms, a, b, c and d are each an integer of 0 to 4, a+b being an integer of 0 to 4, c+d being an integer of 0 to 4;
and when X is a single bond, fluorenylidene, a diphenylmethylidene consisting of two phenyl groups linked to each other via 1 to 4 methylene groups, -CO-, -S-, -SO-, -SO₂-, -O-, -CR³R⁴-, a cycloalkylene group of 5 to 12 carbon atoms, a cycloalkylidene group of 5 to 12 carbon atoms or an α,ω-alkylene group of 2 to 12 carbon atoms, a+c is not 0;
and when X is -CO-, -S-, -SO-, -SO₂-, -O-, -CR³R⁴-, a cycloalkylene group of 5 to 12 carbon atoms, a cycloalkylidene group of 5 to 12 carbon atoms or an α,ω-alkylene group of 2 to 12 carbon atoms, and the FGs bonded to the phenylene groups of (1a) are 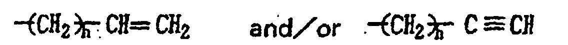 (wherein h is as defined above), a+c is not 0 and b+d is not 0;
and when X is -CR⁵R⁶-, a cycloalkylidene group of 5 to 12 carbon atoms which is substituted by an aliphatic hydrocarbon group of 2 to 12 carbon atoms having one or more unsaturated bonds or a fluorenylidene which is substituted by an aliphatic hydrocarbon group of 2 to 12 carbon atoms having one or more unsaturated bonds, none-of R¹ and R² are a halogeno;
and in the formula (1b), R⁹ and R¹⁰ are each a halogeno, an alkyl group of 1 to 6 carbon atoms, an alkyloxy group of 1 to 4 carbon atoms, a substituted or non-substituted aryl group of 6 to 12 carbon atoms or a substituted or non-substituted aryloxy group of 6 to 12 carbon atoms, FG is as defined above, two -COOH present in one repeating unit may form the following structure 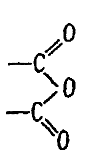 i, j, k and l are each an integer of 0 to 3, i+j=1 to 6, i+k=0 to 3, and j+l=0 to 3;
and in the general formula (2a), Y is a divalent group containing an arylene group and no crosslinking functional group;
and in the general formula (2b), Z is a group represented by the following formula 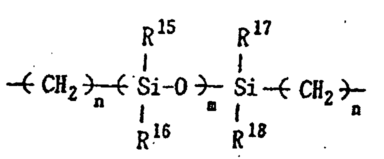 R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150;
or a polycarbonate resin having crosslinking functional groups in a main chain, which comprises repeating units (7) or (8) represented by the following general formula (7) or (8), and repeating units (2a) represented by the following general formula (2a) and/or repeating units (2b) represented by the following general formula (2b), in a molar ratio of the repeating units (7) or (8) to a total of the repeating units (7) or (8), the repeating units (2a) and the repeating units (2b), [(7) or (8)]/{[(7) or (8)]+(2a)+(2b)}, of 0.001 to 1; 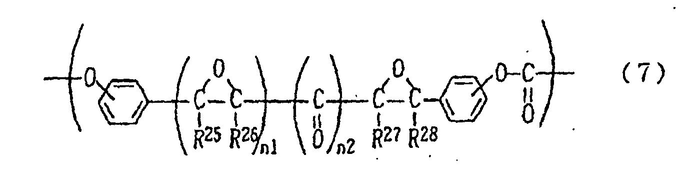 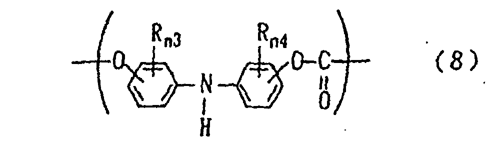 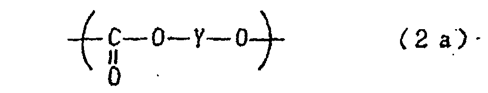 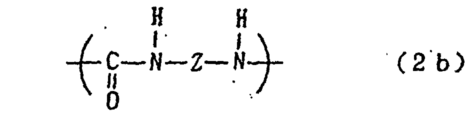 wherein,
in the general formula (7), R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by a methylene chain of 1 to 4 carbon atoms, n1 and n2 are each an integer of 0 or 1;
in the general formula (8), each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted-aryl group of 6 to 24 carbon atoms, a substituted or non-substituted aryloxy group or 6 to 12 carbon atoms or an arylthio group of 6 to 12 carbon atoms, n3 and n4 are each an integer of 0 to 4;
in the general formula (2a), Y is as defined above;
in the general formula (2b), Z is as defined above;
or a polycarbonate resin having crosslinking functional groups at ends, which comprises repeating units (2a) represented by the following general formula (2a) and/or repeating units (2b) represented by the following general formula (2b), and end groups represented by the following general formula (E1'), (E2) or (E3) 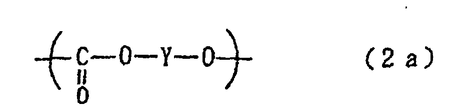 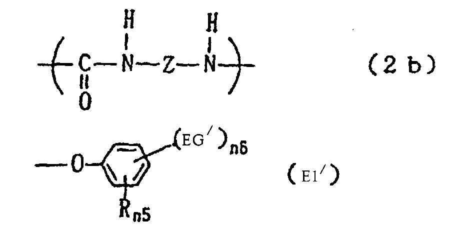 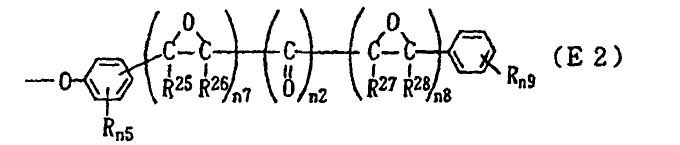
―O-FG (E 3)
wherein
in the general formula (2a), Y is as defined above;
in the general formula (2b), Z is as defined above;
in the general formulae (E1'), (E2) and (E3), each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by a methylene . chain of 1 to 4 carbon atoms, n7 and n8 are each 0 or 1, n7+n8 is 1 or 2, n2 is 0 or 1, FIG' is 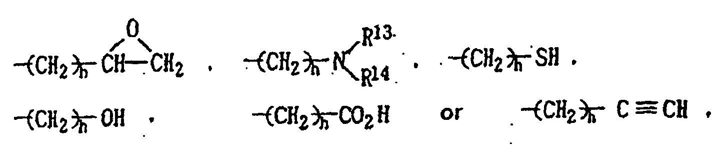 two -COOH present in one end group may have the following structure, 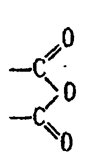 h is an integer of 0 to 4, R¹³ and R¹⁴ are each hydrogen, an alkyl group of 1 to 6 carbon atoms or a substituted or non-substituted aryl group of 6 to 12 carbon atoms.

14. The electrophotographic photoreceptor of claim 13, wherein the photosensitive layer comprises a charge-generating layer containing a charge-generating substance and a charge-transfer layer containing a charge-transfer substance and a binder resin, the binder resin being the polycarbonate resin.

15. An electrophotographic photoreceptor comprising a conductive substrate and a photosensitive layer that is disposed on the conductive substrate, the photosensitive layer containing:
a crosslinked polycarbonate resin obtainable by crosslinking a polycarbonate resin having crosslinking functional groups in side chains, which comprises repeating units (1) represented by the following general formula (1) and repeating units (2a) represented by the following general formula (2a) and/or repeating units (2b) represented by the following general formula (2b), in a molar ratio of the repeating units (1) to a total of the repeating units (1), repeating units (2a) and the repeating units (2b), (1)/[(1)+(2a)+(2b)], of 0.001-1; 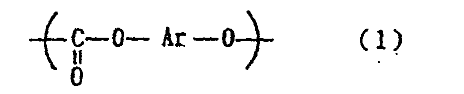 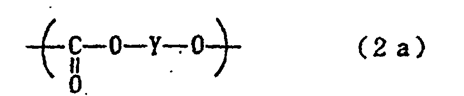 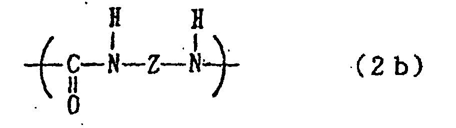
wherein,
in the general formula (1), Ar is a divalent aromatic. group represented by 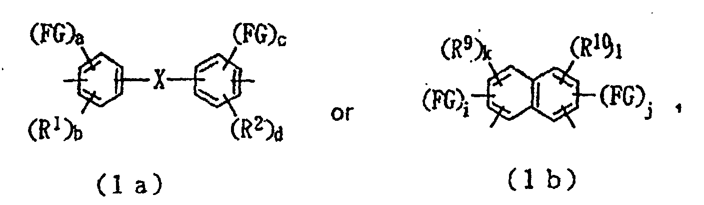 and in the formula (1a), X is a single bond, -CO-, -S-, -SO-, -SO₂-, -O-, -CR³R⁴- (wherein R³ and R⁴ are each an alkyl group of 1 to 10 carbon atoms, trifluoromethyl or an aryl group of 6 to 36 carbon atoms), a cycloalkylene group of 5 to 12 carbon atoms, a cycloalkylidene group of 5 to 12 carbon atoms, fluorenylidene, diphenylmethylidene consisting of two phenyl groups linked to each other via 1 to 4 methylene groups, an α,ω-alkylene group of 2 to 12 carbon atoms, -CR⁵R⁶- (wherein R⁵ and R⁶ are each hydrogen, an alkyl group of 1 to 10 carbon atoms, an aryl group of 6 to 36 carbon atoms, an aliphatic hydrocarbon group of 2 to 10 carbon atoms having ,one or more unsaturated bonds (except for a linear alkenyl group of 2 to 6 carbon atoms having one double bond only at an end thereof and a linear alkynyl group of 2 to 6 carbon atoms having one triple bond only at an end thereof) or FG, at least one of R⁵ and R⁶ being FG or the aliphatic hydrocarbon group of 2 to 10 carbon atoms having one or more unsaturated bonds, FG being 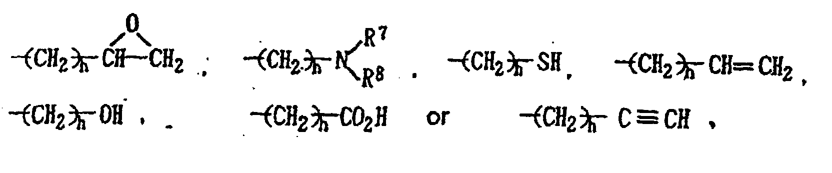 h being an integer of 0 to 4, R⁷ and R⁸ being each hydrogen, an alkyl group of 1 to 6 carbon atoms or a substituted or non-substituted aryl group of 6 to 12 carbon atoms), a cycloalkylidene group of 5 to 12 carbon atoms which is substituted by an aliphatic hydrocarbon group of 2 to 12 carbon atoms having one or more unsaturated bonds, a cycloalkylidene group of 5 to 12 carbon atoms which is substituted by an alicyclic hydrocarbon group of 5 to 12 carbon atoms having one or more unsaturated bonds, or a fluorenylidene which is substituted by an aliphatic hydrocarbon group of 2 to 12 carbon atoms having one or more unsaturated bonds, R¹ and R² are each a halogeno, a saturated hydrocarbon group of 1 to 10 carbon atoms, an alkyloxy group of 1 to 10 carbon atoms, an alkylthio group of 1 to 10 carbon atoms, an aryl group of 6 to 18 carbon atoms, an aryloxy group of 6 to 12 carbon atoms, an arylthio group of 6 to 12 carbon atoms, or an aryl group of 6 to 18 carbon atoms which is substituted by an alkoxyl group of 1 to 10 carbon atoms, a, b, c and d are each an integer of 0 to 4, a+b being an integer of 0 to 4, c+d being an integer of 0 to 4;
and when X is a single bond, fluorenylidene, a diphenylmethylidene consisting of two phenyl groups linked to each other via 1 to 4 methylene groups, -CO-, -S-, -SO-, -SO₂-, -O-, -CR³R⁴-, a cycloalkylene group of 5 to 12 carbon atoms, a cycloalkylidene group of 5 to 12 carbon atoms or an α,ω-alkylene group of 2 to 12 carbon atoms, a+c is not 0; and when X is -CO-, -S-, -SO-, -SO₂-, -O-, -CR³R⁴-, a cycloalkylene group of 5 to 12 carbon atoms, a cycloalkylidene group of 5 to 12 carbon atoms or an α,ω-alkylene group of 2 to 12 carbon atoms, and the FGs bonded to the phenylene groups of (1a) are 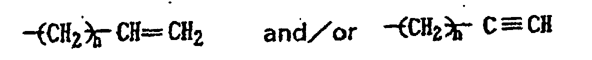 (wherein h is as defined above), a+c is not 0 and b+d is not 0;
and when X is -CR⁵R⁶-, a cycloalkylidene group of 5 to 12 carbon atoms which is substituted by an aliphatic hydrocarbon group of 2 to 12 carbon atoms having one or more unsaturated bonds or a fluorenylidene which is substituted by an aliphatic hydrocarbon group of 2 to 12 carbon atoms having one or more unsaturated bonds, none of R¹ and R² are a halogeno;
and in the formula (1b), R⁹ and R¹⁰ are each a halogeno, an alkyl group of 1 to 6 carbon atoms, an alkyloxy group of 1 to 4 carbon atoms, a substituted or non-substituted aryl group of 6 to 12 carbon atoms or a substituted or non-substituted aryloxy group of 6 to 12 carbon atoms, FG is as defined above, two -COOH present in one repeating unit may form the following structure 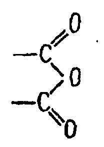 i, j, k and l are each an integer of 0 to 3, i+j=1 to 6, i+k=0 to 3, and j+l=0 to 3;
and in the general formula (2a), Y is a divalent group containing an arylene group and no crosslinking functional group;
and in the general formula (2b), Z is a group represented by the following formula 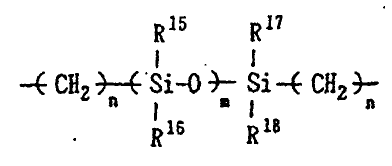 R¹⁵, R¹⁶, R¹⁷ and R¹⁸ are each an alkyl group of 1 to 4 carbon atoms or an aryl group of 6 to 36 carbon atoms, n is an integer of 1 to 6, and m is a number of 1 to 150;
or a crosslinked polycarbonate resin obtainable by crosslinking a polycarbonate resin having crosslinking functional groups in a main chain, which comprises repeating units (7) or (8) represented by the following general formula (7) or (8), and repeating units (2a) represented by the following general formula (2a) and/or repeating units (2b) represented by the following general formula (2b), in a molar ratio of the repeating units (7) or (8) to a total of the repeating units (7) or (8), the repeating units (2a) and the repeating units (2b), [(7) or (8)]/{[ (7) or (8)]+(2a)+(2b)}, of 0.001 to 1; 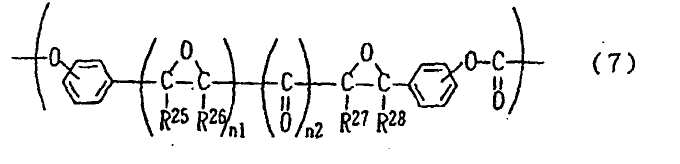 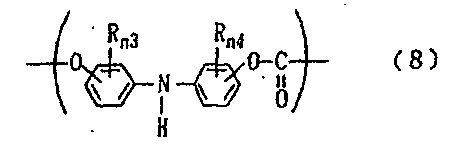 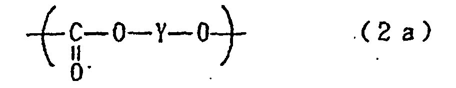 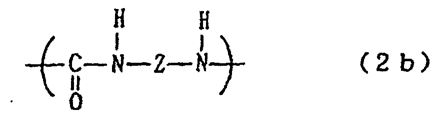 wherein,
in the general formula (7), R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by a methylene chain of 1 to 4 carbon atoms, n1 and n2 are each an integer of 0 or 1;
in the general formula (8), each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n3 and n4 are each an integer of 0 to 4;
in the general formula (2a), Y is as defined above;
in the general formula (2b), Z is as defined above;
or a crosslinked polycarbonate resin obtainable by crosslinking a polycarbonate resin having crosslinking functional groups at ends, which comprises repeating units (2a) represented by the following general formula (2a) and/or repeating units (2b) represented by the following general formula (2b), and end groups represented by the following general formula (E1'), (E2) or (E3) 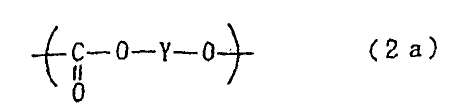 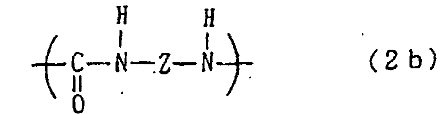 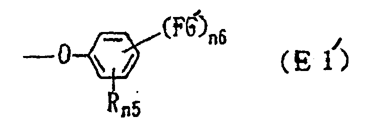 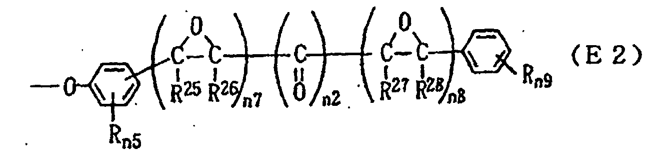
―O-FG (E 3)
wherein
in the general formula (2a) Y is as defined above;
in the general formula (2b), Z is as defined above;
in the general formulae (E1'), (E2) and (E3), each R is a halogeno, a substituted or non-substituted alkyl group of 1 to 10 carbon atoms, a substituted or non-substituted alkyloxy group of 1 to 10 carbon atoms, an alkylthio group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, n5 is an integer of 0 to 4, n6 is an integer of 1 to 5, n5+n6 is an integer of 1 to 5, n9 is an integer of 0 to 5, R²⁵, R²⁶, R²⁷ and R²⁸ are each hydrogen, a halogeno, a substituted or non-substituted alkyl group of 1 to 10 carbon atoms, a substituted or non-substituted alkyloxy group of 1 to 10 carbon atoms, an group of 1 to 10 carbon atoms, a substituted or non-substituted cycloalkyl group of 5 to 7 carbon atoms, a substituted or non-substituted aryl group of 6 to 24 carbon atoms, a substituted or non-substituted aryloxy group of 6 to 12 carbon atoms or an arylthio group of 6 to 12 carbon atoms, R²⁶ and R²⁷ are optionally linked to each other by a methylene chain of 1 to 4 carbon atoms, n7 and n8 are each 0 or 1, n7+n8 is 1 or 2, n2 is 0 or 1, FIG' is 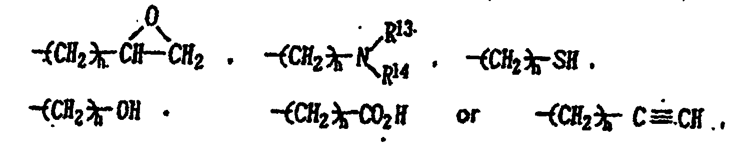 two -COOH present in one end group may form the following structure, 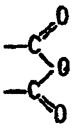 h is an integer of 0 to 4, R¹³ and R¹⁴ are each hydrogen, an alkyl group of 1 to 6 carbon atoms or a substituted or non-substituted aryl group of 6 to 12 carbon atoms.

16. The electrophotographic photoreceptor of claim 15, wherein the photosensitive layer comprises a charge-generating layer containing a charge-generating substance and a charge-transfer layer containing a charge-transfer substance and a binder resin, the binder resin being the crosslinked polycarbonate resin.

## Patentansprüche

1. Polycarbonatharz, das vernetzende funktionelle Gruppen in Seitenketten aufweist, welches Wiederholungseinheiten (1'), dargestellt durch die folgende allgemeine Formel (1') und Wiederholungseinheiten (2a), dargestellt durch die folgende allgemeine Formel (2a) und/oder Wiederholungseinheiten (2b), dargestellt durch die folgende allgemeine Formel (2b), in einem Molverhältnis der Wiederholungseinheiten (1') zu der Gesamtheit der Wiederholungseinheiten (1'), der Wiederholungseinheiten (2a) und der Wiederholungseinheiten (2b) (1')/[(1')+(2a)+(2b)] von 0,001-1 umfaßt: 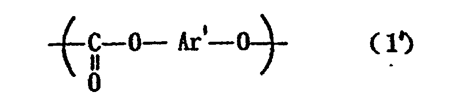 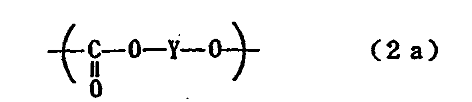 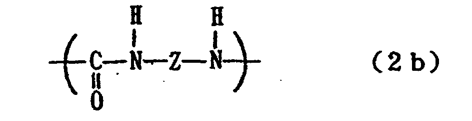 wobei
in der allgemeinen Formel (1'), Ar' eine zweiwertige aromatische Gruppe ist, die durch 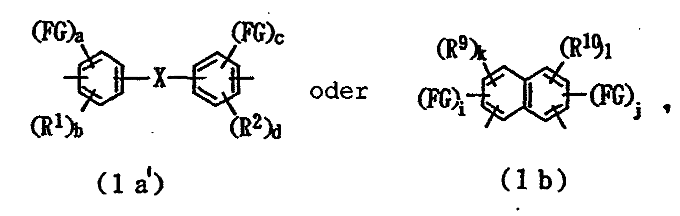 dargestellt ist,
und in Formel (1a') X -CO-, -S-, -SO-, -SO₂-, -O-, Fluorenyliden, Diphenylmethyliden, das aus zwei Phenylgruppen, die miteinander über 1 bis 4 Methylengruppen verknüpft sind, besteht, eine α,ω-Alkylengruppe mit 2 bis 12 Kohlenstoffatomen, -CR⁵R⁶- (worin R⁵ und R6 jeweils Wasserstoff, eine Alkylgruppe mit 1 bis 10 Kohlenstoffatomen, eine Arylgruppe mit 6 bis 36 Kohlenstoffatomen, eine aliphatische Kohlenwasserstoffgruppe mit 2 bis 10 Kohlenstoffatomen, die eine oder mehrere ungesättigte Bindungen aufweist (ausgenommen eine lineare Alkenylgruppe mit 2 bis 6 Kohlenstoffatomen, welche nur an einem Ende eine Doppelbindung aufweist, und eine lineare Alkinylgruppe mit 2 bis 6 Kohlenstoffatomen, die nur an einem Ende eine Dreifachbindung aufweist), oder FG sind, mindestens eines von R⁵ und R⁶ FG oder eine aliphatische Kohlenwasserstoffgruppe mit 2 bis 10 Kohlenstoffatomen, die eine oder mehrere ungesättigte Bindungen aufweist, ist, wobei FG 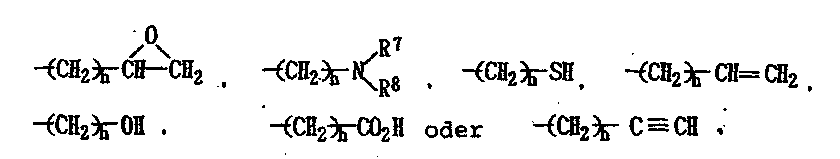 darstellt, h eine ganze Zahl von 0 bis 4 ist, R⁷ und R⁸ jeweils Wasserstoff, eine Alkylgruppe mit 1 bis 6 Kohlenstoffatomen oder eine substituierte oder nicht substituierte Arylgruppe mit 6 bis 12 Kohlenstoffatomen darstellen),
eine Cycloalkylidengruppe mit 5 bis 12 Kohlenstoffatomen, die mit einer aliphatischen Kohlenwasserstoffgruppe mit 2 bis 12 Kohlenstoffatomen, die eine oder mehrere ungesättigte Bindungen aufweist, substituiert ist, eine Cycloalkylidengruppe mit 5 bis 12 Kohlenstoffatomen, die mit einer alicyclischen Kohlenwasserstoffgruppe mit 5 bis 12 Kohlenstoffatomen, die eine oder mehrere ungesättigte Bindungen aufweist, substituiert ist, oder eine Fluorenylidengruppe, die mit einer aliphatischen Kohlenwasserstoffgruppe mit 2 bis 12 Kohlenstoffatomen, die eine oder mehrere ungesättigte Bindungen hat, substituiert ist, darstellt, R¹ und R² jeweils Halogen, eine gesättigte Kohlenwasserstoffgruppe mit 1 bis 10 Kohlenstoffatomen, eine Alkyloxyguppe mit 1 bis 10 Kohlenstoffatomen, eine Alkylthiogruppe mit 1 bis 10 Kohlenstoffatomen, eine Arylgruppe mit 6 bis 18 Kohlenstoffatomen, eine Arylgruppe mit 6 bis 12 Kohlenstoffatomen, eine Arylthiogruppe mit 6 bis 12 Kohlenstoffatomen oder eine Arylgruppe mit 6 bis 18 Kohlenstoffatomen, die mit einer Alkoxylgruppe mit 1 bis 10 Kohlenstoffatomen substituiert ist, darstellt,
a, b, c und d jeweils eine ganze Zahl von 0 bis 4 sind, a+b eine ganze Zahl von 0 bis 4 ist, c+d eine ganze Zahl von 0 bis 4 ist,
und wenn X Fluorenyliden, eine Diphenylmethylidengruppe, die aus zwei miteinander über 1 bis 4 Methylengruppen verknüpften Phenylgruppen besteht, -CO-, -S-, -SO-, -SO₂-, -O- oder eine α,ω-Alkylengruppe mit 2 bis 12 Kohlenstoffatomen ist, a+c nicht 0 ist,
und wenn X -CO-, -S-, -SO-, -SO₂-, -O- oder eine α,ω-Alkylengruppe mit 2 bis 12 Kohlenstoffatomen ist und die an die Phenylengruppen von (1a') gebundenen Gruppen FG 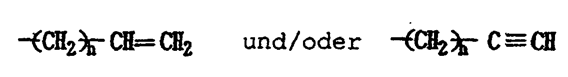 (wobei h wie vorstehend definiert ist) sind, a+c nicht 0 ist und b+d nicht 0 ist,
und wenn X -CR⁵R⁶-, eine Cycloalkylidengruppe mit 5 bis 12 Kohlenstoffatomen, die mit einer aliphatischen Kohlenwasserstoffgruppe mit 2 bis 12 Kohlenstoffatomen, die eine oder mehrere ungesättigte Bindungen hat, oder eine Fluorenylidengruppe ist, die mit einer aliphatischen Kohlenwasserstoffgruppe mit 2 bis 12 Kohlenstoffatomen, die eine oder mehrere ungesättigten Bindungen aufweist, substituiert ist, keines von R¹und R² ein Halogenatom ist,
und wobei in Formel (1b) R⁹ und R¹⁰ jeweils ein Halogenatom, eine Alkylgruppe mit 1 bis 6 Kohlenstoffatomen, eine Alkyloxygruppe mit 1 bis 4 Kohlenstoffatomen, eine substituierte oder nicht-substituierte Arylgruppe mit 6 bis 12 Kohlenstoffatomen oder eine substituierte oder nicht-substituierte Aryloxygruppe mit 6 bis 12 Kohlenstoffatomen sind, FG wie vorstehend definiert ist, zwei Gruppen -COOH, die in einer Wiederholungseinheit vorliegen, die folgende Struktur bilden können: 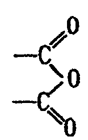 i, j, k und l jeweils eine ganze Zahl von 0 bis 3 sind, i+j=1 bis 6, i+k=0 bis 3 und j+l=0 bis 3 ist,
und in der allgemeinen Formel (2a) Y eine zweiwertige Gruppe ist, die eine Arylengruppe und keine vernetzende funktionelle Gruppe aufweist,
und in der allgemeinen Formel (2b) Z eine durch die folgende Formel dargestellte Gruppe ist 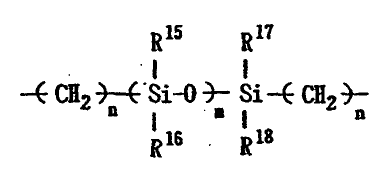 wobei R¹⁵, R¹⁶, R¹⁷ und R¹⁸ jeweils eine Alkylgruppe mit 1 bis 4 Kohlenstoffatomen oder eine Arylgruppe mit 6 bis 36 Kohlenstoffatomen darstellen, n eine ganze Zahl von 1 bis 6 ist und m eine Zahl von 1 bis 150 ist.

2. Polycarbonatharz nach Anspruch 1, wobei Ar' in den Wiederholungseinheiten (1') durch die folgende Formel dargestellt ist:

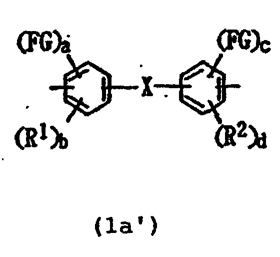

3. Polycarbonatharz nach Anspruch 1, wobei Ar' in den Wiederholungseinheiten (1') durch die folgende Formel dargestellt ist:

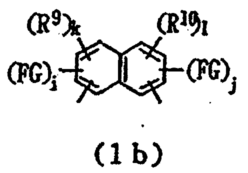

4. Polycarbonatharz nach Anspruch 1, wobei die Wiederholungseinheiten (1') durch die folgende Formel dargestellt sind: 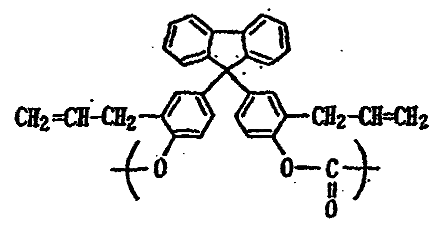 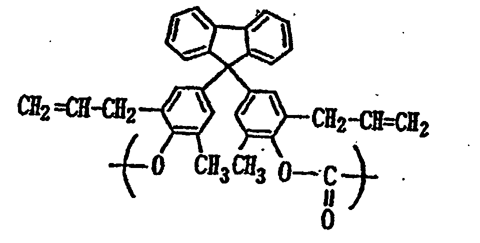 oder

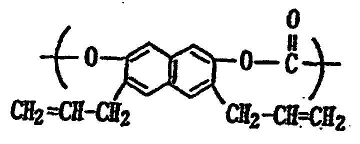

5. Polycarbonatharz nach Anspruch 1, wobei die Wiederholungseinheiten (2a) durch die folgende allgemeine Formel (3) dargestellte Wiederholungseinheiten (3) sind: 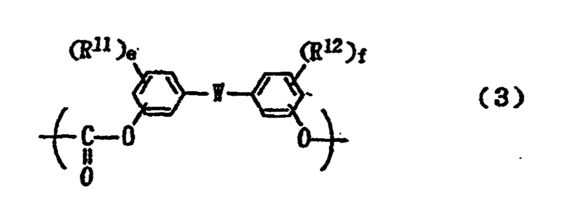 worin R¹¹ und R¹² jeweils ein Halogenatom, eine gesättigte Kohlenwasserstoffgruppe mit 1 bis 10 Kohlenstoffatomen, eine aromatische Kohlenwasserstoffgruppe mit 6 bis 12 Kohlenstoffatomen, eine Alkyloxygruppe mit 1 bis 10 Kohlenstoffatomen, eine Alkylthiogruppe mit 1 bis 10 Kohlenstoffatomen, eine Aryloxygruppe mit 6 bis 12 Kohlenstoffatomen oder eine Arylthiogruppe mit 6 bis 12 Kohlenstoffatomen sind, e und f jeweils eine ganze Zahl von 0 bis 4 sind, W eine Einfachbindung, -O-, -CO-, -S-, -SO-, -SO₂-, -CR¹³R¹⁴-, eine Cycloalkylidengruppe mit 5 bis 12 Kohlenstoffatomen oder eine α,ω-Alkylengruppe mit 2 bis 12 Kohlenstoffatomen (R¹³ und R¹⁴ sind jeweils Wasserstoff, Trifluormethyl, eine Alkylgruppe mit 1 bis 10 Kohlenstoffatomen oder eine aromatische Kohlenwasserstoffgruppe mit 6 bis 36 Kohlenstoffatomen) oder die folgende Gruppe 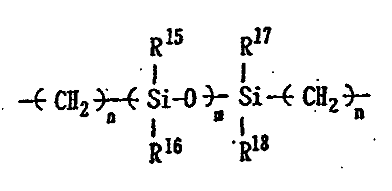 darstellt,
R¹⁵, R¹⁶, R¹⁷ und R¹⁸ jeweils eine Alkylgruppe mit 1 bis 4 Kohlenstoffatomen oder eine Arylgruppe mit 6 bis 36 Kohlenstoffatomen sind, n eine ganze Zahl von 1 bis 6 ist und m eine Zahl von 1 bis 150 ist.

6. Polycarbonatharz nach Anspruch 1, welches außerdem Endgruppen aufweist, die eine vernetzende funktionelle Gruppe aufweisen und durch die folgende allgemeine Formel (E1), (E2) oder (E3) dargestellt sind: 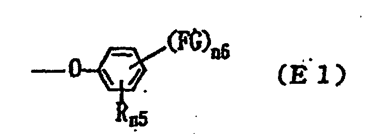 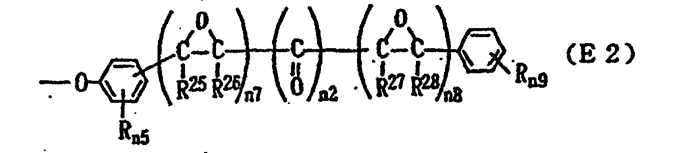
―O-FG (E 3)
worin jedes R ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen darstellt, n5 eine ganze Zahl von 0 bis 4 ist, n6 eine ganze Zahl von 1 bis 5 ist, n5+n6 eine ganze Zahl von 1 bis 5 ist, n9 eine ganze Zahl von 0 bis 5 ist, R²⁵, R²⁶, R²⁷ und R²⁸ jeweils Wasserstoff, ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen darstellen, R²⁶ und R²⁷ über eine Methylenkette mit 1 bis 4 Kohlenstoffatomen miteinander verknüpft sein können, n7 und n8 jeweils 0 oder 1 sind, n7+n8 1 oder 2 ist, n2 0 oder 1 ist, FG wie vorstehend definiert. ist und zwei in einer Endgruppe vorhandene -COOH-Gruppen die folgende Struktur bilden können

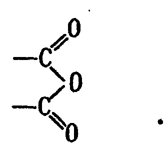

7. Polycarbonatharz mit vernetzenden funktionellen Gruppen in der Hauptkette, welches Wiederholungseinheiten (7) oder (8), die durch die folgende allgemeine Formel (7) oder (8) dargestellt sind, und Wiederholungseinheiten (2a), dargestellt durch die folgende allgemeine Formel (2a) und/oder Wiederholungseinheiten (2b), dargestellt durch die folgende allgemeine Formel (2b), in einem Molverhältnis der Wiederholungseinheiten (7) oder (8) zu der Gesamtheit der Wiederholungseinheiten (6), (7) oder (8), der Wiederholungseinheiten (2a) und der Wiederholungseinheiten (2b), [(7) oder (8)]/{[(7) oder (8)]+(2a)+(2b)} von 0,001 bis 1 umfaßt 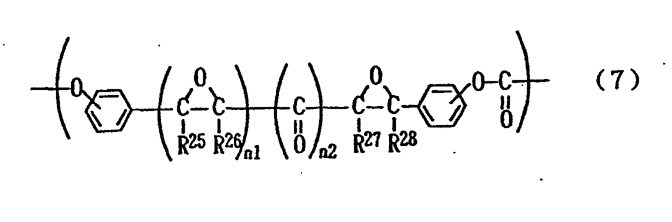 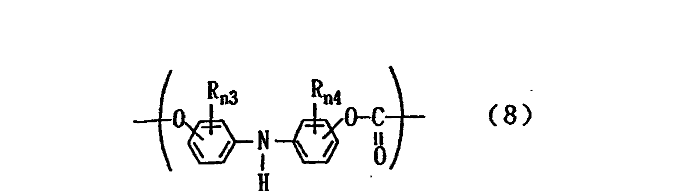 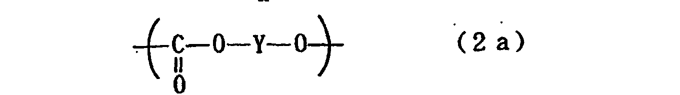 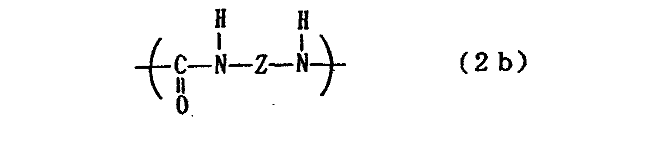 wobei in der allgemeinen Formel (7) R²⁵, R²⁶, R²⁷ und R²⁸ jeweils Wasserstoff, ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen darstellen,
R²⁶ und R²⁷ gegebenenfalls über eine Methylenkette mit 1 bis 4 Kohlenstoffatomen miteinander verknüpft sind, n1 und n2 jeweils eine ganze Zahl von 0 bis 1 sind,
in der allgemeinen Formel (8) jedes R ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen ist, n3 und n4 jeweils eine ganze Zahl von 0 bis 4 sind,
in der allgemeinen Formel (2a) Y eine zweiwertige Gruppe ist, die eine Arylengruppe und keine vernetzende funktionelle Gruppe aufweist,
in der allgemeinen Formel (2b) Z durch die folgende Formel 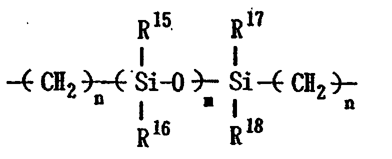 dargestellt ist, worin R¹⁵, R¹⁶, R¹⁷ und R¹⁸ jeweils eine Alkylgruppe mit 1 bis 4 Kohlenstoffatomen oder eine Arylgruppe mit 6 bis 36 Kohlenstoffatomen sind, n eine ganze Zahl von 1 bis 6 ist und m eine Zahl von 1 bis 50 ist.

8. Polycarbonatharz nach Anspruch 7, wobei die Wiederholungseinheiten (2a) durch die folgende allgemeine Formel (3) dargestellte Wiederholungseinheiten (3) sind: 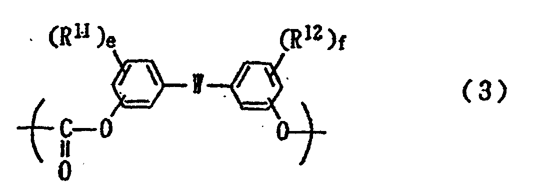 worin R¹¹ und R¹² jeweils ein Halogenatom, eine gesättigte Kohlenwasserstoffgruppe mit 1 bis 10 Kohlenstoffatomen, eine aromatische Kohlenwasserstoffgruppe mit 6 bis 12 Kohlenstoffatomen, eine Alkyloxygruppe mit 1 bis 10 Kohlenstoffatomen, eine Alkylthiogruppe mit 1 bis 10 Kohlenstoffatomen, eine Aryloxygruppe mit 6 bis 12 Kohlenstoffatomen oder eine Arylthiogruppe mit 6 bis 12 Kohlenstoffatomen darstellen, e und f jeweils eine ganze Zahl von 0 bis 4 sind, W eine Einfachbindung, -O-, -CO-, -S-, -SO-, -SO₂-, -CR¹³R¹⁴-, eine Cycloalkylidengruppe mit 5 bis 12 Kohlenstoffatomen oder eine α,ω-Alkylengruppe mit 2 bis 12 Kohlenstoffatomen (R¹³ und R¹⁴ sind jeweils Wasserstoff, Trifluormethyl, eine Alkylgruppe mit 1 bis 10 Kohlenstoffatomen oder eine aromatische Kohlenwasserstoffgruppe mit 6 bis 36 Kohlenstoffatomen) oder eine durch die folgende Formel dargestellte Gruppe ist 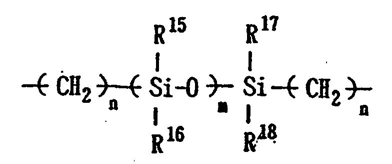 worin R¹⁵, R¹⁶, R¹⁷ und R¹⁸ jeweils eine Alkylgruppe mit 1 bis 4 Kohlenstoffatomen oder eine Arylgruppe mit 6 bis 36 Kohlenstoffatomen sind, n eine ganze Zahl von 1 bis 6 ist und m eine Zahl von 1 bis 150 ist.

9. Polycarbonatharz nach Anspruch 7, welches außerdem Endgruppen aufweist, die eine vernetzende funktionelle Gruppe besitzen und durch die folgende allgemeine Formel (E1), (E2) oder (E3) dargestellt sind 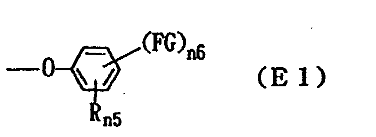 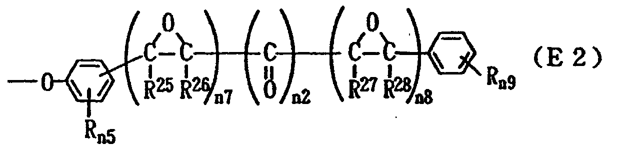
―O-FG (E 3)
worin jedes R ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen darstellt, n5 eine ganze Zahl von 0 bis 4 ist, n6 eine ganze Zahl von 1 bis 5 ist, n5+n6 eine ganze Zahl von 1 bis 5 ist, n9 eine ganze Zahl von 0 bis 5 ist, R²⁵, R²⁶, R²⁷ und R²⁸ jeweils ein Wasserstoffatom, ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen sind, R²⁶ und R²⁷ über eine Methylenkette mit 1 bis 4 Kohlenstoffatomen miteinander verknüpft sein können, n7 und n8 jeweils 0 oder 1 sind, n7+n8 1 oder 2 ist, n2 0 oder 1 ist, FG eine Gruppe 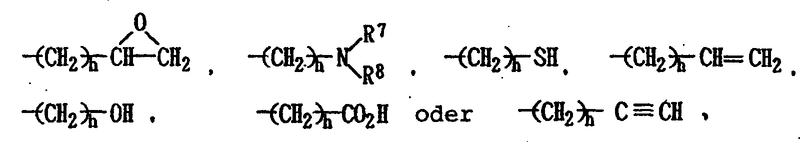 darstellt und zwei in einer Endgruppe vorhandene Gruppen -COOH die folgende Struktur bilden können 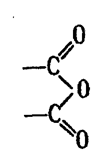 h eine ganze Zahl von 0 bis 4 ist, R⁷ und R⁸ jeweils ein Wasserstoffatom, eine Alkylgruppe mit 1 bis 6 Kohlenstoffatomen oder eine substituierte oder nicht-substituierte Arylgruppe mit 6 bis 12 Kohlenstoffatomen sind.

10. Polycarbonatharz mit vernetzenden funktionellen Gruppen an den Enden, welches Wiederholungseinheiten (2a), dargestellt durch die folgende allgemeine Formel (2a) und/oder Wiederholungseinheiten (2b), dargestellt durch die folgende allgemeine Formel (2b) und Endgruppen, die durch die folgende allgemeine Formel (E1'), (E2) oder (E3) dargestellt sind, aufweist: 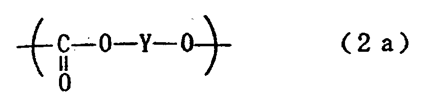 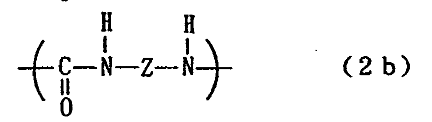 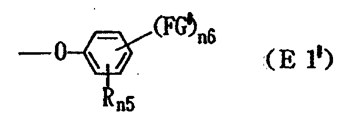 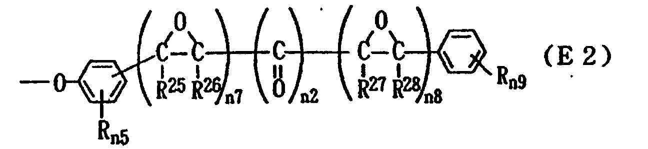
―O-FG (E 3)
wobei
in der allgemeinen Formel (2a) Y eine zweiwertige Gruppe ist, die eine Arylengruppe und keine vernetzende funktionelle Gruppe aufweist,
in der allgemeinen Formel (2b) Z eine durch die folgende Formel dargestellte Gruppe ist 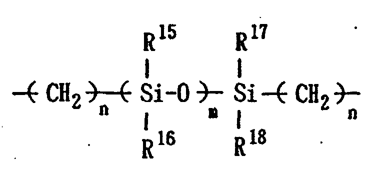 worin R¹⁵, R¹⁶, R¹⁷ und R¹⁸ jeweils eine Alkylgruppe mit 1 bis 4 Kohlenstoffatomen oder eine Arylgruppe mit 6 bis 36 Kohlenstoffatomen sind, n eine ganze Zahl von 1 bis 6 ist und m eine Zahl von 1 bis 150 ist,
in den allgemeinen Formeln (E1'), (E2) und (E3) jedes R ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen darstellt, n5 eine ganze Zahl von 0 bis 4 ist, n6 eine ganze Zahl von 1 bis 5 ist, n5+n6 eine ganze Zahl von 1 bis 5 ist, n9 eine ganze Zahl von 0 bis 5 ist, R²⁵, R²⁶, R²⁷ und R²⁸ jeweils ein Wasserstoffatom, ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Alkylthiogruppe mit 6 bis 12 Kohlenstoffatomen darstellen, R²⁶ und R²⁷ gegebenenfalls über eine Methylengruppe mit 1 bis 4 Kohlenstoffatomen miteinander verknüpft sind, n7 und n8 jeweils 0 oder 1 sind, n7+n8 1 oder 2 ist, n2 0 oder 1 ist, FG' eine Gruppe 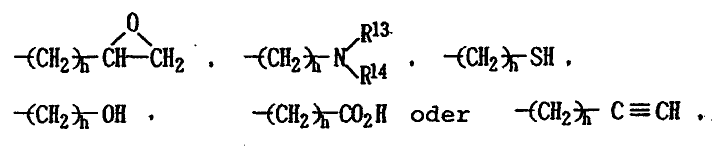 darstellt,
zwei in einer Endgruppe vorliegende -COOH-Gruppen die folgende Struktur bilden können 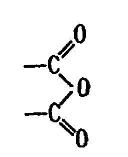 h eine ganze Zahl von 0 bis 4 ist, R¹³ und R¹⁴ jeweils ein Wasserstoffatom, eine Alkylgruppe mit 1 bis 6 Kohlenstoffatomen oder eine substituierte oder nicht-substituierte Arylgruppe mit 6 bis 12 Kohlenstoffatomen sind.

11. Polycarbonatharz nach Anspruch 10, wobei die Wiederholungseinheiten (2a) durch die folgende allgemeine Formel (3) dargestellte Wiederholungseinheiten (3) sind 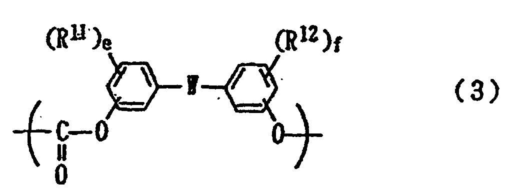 worin R¹¹ und R¹² jeweils ein Halogenatom, eine gesättigte Kohlenwasserstoffgruppe mit 1 bis 10 Kohlenstoffatomen, eine aromatische Kohlenwasserstoffgruppe mit 6 bis 12 Kohlenstoffatomen, eine Alkyloxygruppe mit 1 bis 10 Kohlenstoffatomen, eine Alkylthiogruppe mit 1 bis 10 Kohlenstoffatomen, eine Aryloxygruppe mit 6 bis 12 Kohlenstoffatomen oder eine Arylthiogruppe mit 6 bis 12 Kohlenstoffatomen darstellen, e und f jeweils eine ganze Zahl von 0 bis 4 sind, W eine Einfachbindung, -O-, -CO-, -S-, -SO-, -SO₂-, -CR¹³R¹⁴-, eine Cycloalkylidengruppe mit 5 bis 12 Kohlenstoffatomen oder eine α,ω-Alkylengruppe mit 2 bis 12 Kohlenstoffatomen (R¹³ und R¹⁴ sind jeweils Wasserstoff, Trifluormethyl, eine Alkylgruppe mit 1 bis 10 Kohlenstoffatomen oder eine aromatische Kohlenwasserstoffgruppe mit 6 bis 36 Kohlenstoffatomen) oder eine durch die folgende Formel dargestellte Gruppe ist 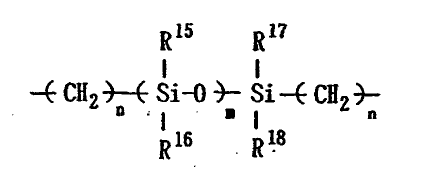 worin R¹⁵, R¹⁶, R¹⁷ und R¹⁸ jeweils eine Alkylgruppe mit 1 bis 4 Kohlenstoffatomen oder eine Arylgruppe mit 6 bis 36 Kohlenstoffatomen sind, n eine ganze Zahl von 1 bis 6 ist und m eine Zahl von 1 bis 150 ist.

12. Vernetztes Polycarbonatharz, hergestellt durch Vernetzen des Polycarbonatharzes nach einem der Ansprüche 1 bis 11.

13. Elektrophotographischer Photorezeptor, der ein leitfähiges Substrat und eine auf dem leitfähigen Substrat angeordnete photoempfindliche Schicht umfaßt, wobei die photoempfindliche Schicht enthält:
ein Polycarbonatharz mit vernetzenden funktionellen Gruppen in Seitenketten, welches Wiederholungseinheiten (1), dargestellt durch die folgende allgemeine Formel (1) und Wiederholungseinheiten (2a), dargestellt durch die folgende allgemeine Formel (2a) und/oder Wiederholungseinheiten (2b), dargestellt durch die folgende allgemeine Formel (2b) in einem Molverhältnis der Wiederholungseinheiten (1) zu der Gesamtheit der Wiederholungseinheiten (1), der Wiederholungseinheiten (2a) und der Wiederholungseinheiten (2b), (1)/[(1)+(2a)+(2b)] von 0,001-1 enthält 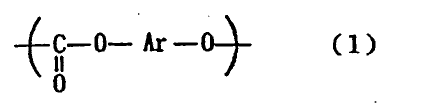 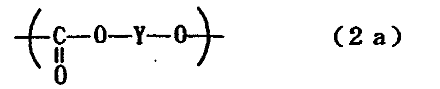 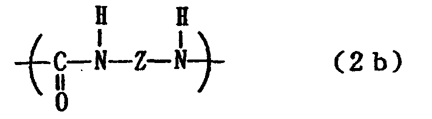
wobei in der allgemeinen Formel (1) Ar eine durch 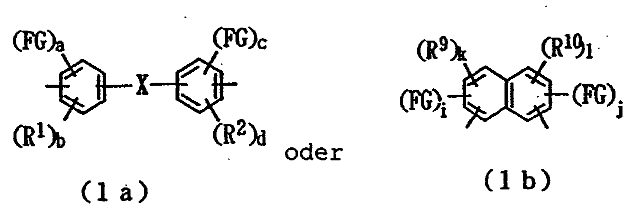 dargestellte zweiwertige aromatische Gruppe ist und in Formel (1a) X eine Einfachbindung, -CO-, -S-, -SO-, -SO₂-, -O-, -CR³R⁴- (worin R³ und R⁴ jeweils eine Alkylgruppe mit 1 bis 10 Kohlenstoffatomen, eine Trifluormethyl- oder eine Arylgruppe mit 6 bis 36 Kohlenstoffatomen sind), eine Cycloalkylengruppe mit 5 bis 12 Kohlenstoffatomen, eine Fluorenylidengruppe, eine Diphenylmethylidengruppe, die aus zwei miteinander über 1 bis 4 Methylengruppen verknüpften Phenylgruppen besteht, eine α,ω-Alkylengruppe mit 2 bis 12 Kohlenstoffatomen, -CR⁵R⁶- (worin R⁵ und R⁶ jeweils Wasserstoff, eine Alkylgruppe mit 1 bis 10 Kohlenstoffatomen, eine Arylgruppe mit 6 bis 36 Kohlenstoffatomen, eine aliphatische Kohlenwasserstoffgruppe mit 2 bis 10 Kohlenstoffatomen, die eine oder mehrere ungesättigte Bindungen aufweist (ausgenommen eine lineare Alkinylgruppe mit 2 bis 6 Kohlenstoffatomen, die nur an einem Ende eine Doppelbindung enthält und eine lineare Alkinylgruppe mit 2 bis 6 Kohlenstoffatomen, die nur an einem Ende eine Dreifachbindung enthält) oder FG darstellen, wobei mindestens eines von R⁵ und R⁶ FG oder eine aliphatische Kohlenwasserstoffgruppe mit 2 bis 10 Kohlenstoffatomen, die eine oder mehrere ungesättigte Bindungen aufweist, bedeutet, wobei FG 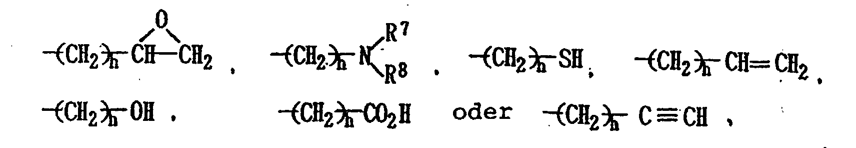 ist, h eine ganze Zahl von 0 bis 4 ist, R⁷ und R⁸ jeweils Wasserstoff, eine Alkylgruppe mit 1 bis 6 Kohlenstoffatomen oder eine substituierte oder nicht-substituierte Arylgruppe mit 6 bis 12 Kohlenstoffatomen sind,
eine Cycloalkylidengruppe mit 5 bis 12 Kohlenstoffatomen, die mit einer aliphatischen Kohlenwasserstoffgruppe mit 2 bis 12 Kohlenstoffatomen, die eine oder mehrere ungesättigte Bindungen aufweist, substituiert ist, eine Cycloalkylidengruppe mit 5 bis 12 Kohlenstoffatomen, die mit einer alicyclischen Kohlenwasserstoffgruppe mit 5 bis 12 Kohlenstoffatomen, die eine oder mehrere ungesättigte Bindungen aufweist, substituiert ist oder eine Fluorenylidengruppe, die mit einer aliphatischen Kohlenwasserstoffgruppe mit 2 bis 12 Kohlenstoffatomen, die eine oder mehrere ungesättigte Bindungen aufweist, substituiert ist, darstellt, R¹ und R² jeweils ein Halogenatom, eine gesättigte Kohlenwasserstoffgruppe mit 1 bis 10 Kohlenstoffatomen, eine Alkyloxygruppe mit 1 bis 10 Kohlenstoffatomen, eine Alkylthiogruppe mit 1 bis 10 Kohlenstoffatomen, eine Arylgruppe mit 6 bis 18 Kohlenstoffatomen, eine Aryloxygruppe mit 6 bis 12 Kohlenstoffatomen, eine Arylthiogruppe mit 6 bis 12 Kohlenstoffatomen oder eine Arylgruppe mit 6 bis 18 Kohlenstoffatomen, die mit einer Alkoxylgruppe mit 1 bis 10 Kohlenstoffatomen substituiert ist, darstellen, a, b, c und d jeweils eine ganze Zahl von 0 bis 4 sind, a+b eine ganze Zahl von 0 bis 4 ist, c+d eine ganze Zahl von 0 bis 4 ist,
und wenn X eine Einfachbindung, eine Fluorenylidengruppe, eine Diphenylmethylidengruppe, die aus zwei miteinander über 1 bis 4 Methylengruppen verknüpften Phenylgruppen besteht, -CO-, -S-, -SO-, -SO₂-, -O-, -CR³R⁴-, eine Cycloalkylengruppe mit 5 bis 12 Kohlenstoffatomen, eine Cycloalkylidengruppe mit 5 bis 12 Kohlenstoffatomen oder eine α,ω-Alkylengruppe mit 2 bis 12 Kohlenstoffatomen ist, a+c nicht 0 ist, und wenn X -CO-, -S-, -SO-, -SO₂-, -O-, -CR³R⁴-, eine Cycloalkylengruppe mit 5 bis 12 Kohlenstoffatomen, eine Cycloalkylidengruppe mit 5 bis 12 Kohlenstoffatomen oder eine α,ω-Alkylengruppe mit 2 bis 12 Kohlenstoffatomen ist und die an die Phenylengruppen von (1a) gebundenen Gruppen FG 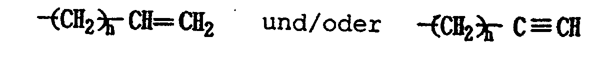 sind (worin h wie vorstehend definiert ist), a+c nicht 0 ist und b+d nicht 0 ist,
und wenn X -CR⁵R⁶-, eine Cycloalkylidengruppe mit 5 bis 12 Kohlenstoffatomen, die mit einer aliphatischen Kohlenwasserstoffgruppe mit 2 bis 12 Kohlenstoffatomen, die eine oder mehrere ungesättigte Bindungen aufweist, substituiert ist, oder eine Fluorenylidengruppe, die mit einer aliphatischen Kohlenwasserstoffgruppe mit 2 bis 12 Kohlenstoffatomen, die eine oder mehrere ungesättigte Bindungen aufweist, substituiert ist, darstellt, keines von R¹ und R² ein Halogenatom ist,
und in Formel (1b) R⁹ und R¹⁰ jeweils ein Halogenatom, eine Alkylgruppe mit 1 bis 6 Kohlenstoffatomen, eine Alkyloxygruppe mit 1 bis 4 Kohlenstoffatomen, eine substituierte oder nicht-substituierte Arylgruppe mit 6 bis 12 Kohlenstoffatomen oder eine substituierte oder nicht-substituierte Aryloxygruppe mit 6 bis 12 Kohlenstoffatomen ist, FG wie vorstehend definiert ist, zwei in einer Wiederholungseinheit vorliegende -COOH-Gruppen die folgende Struktur bilden können 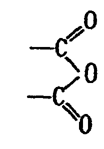 i, j, k und l jeweils eine ganze Zahl von 0 bis 3 sind, i+j=1 bis 6, i+k=0 bis 3 und j+l=0 bis 3 ist,
und in der allgemeinen Formel (2a) Y eine zweiwertige Gruppe, die eine Arylengruppe und keine vernetzende funktionelle Gruppe aufweist, ist,
und in der allgemeinen Formel (2b) Z eine durch die folgende Formel dargestellte Gruppe ist 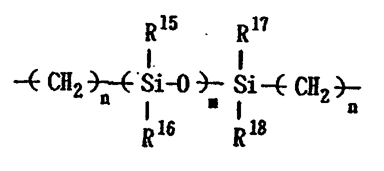 wobei R¹⁵, R¹⁶, R¹⁷ und R¹⁸ jeweils eine Alkylgruppe mit 1 bis 4 Kohlenstoffatomen oder eine Arylgruppe mit 6 bis 36 Kohlenstoffatomen sind, n eine ganze Zahl von 1 bis 6 ist und m eine Zahl von 1 bis 150 ist,
oder ein Polycarbonatharz, das vernetzende funktionelle Gruppen in der Hauptkette aufweist, das durch die folgende allgemeine Formel (7) oder (8) dargestellte Wiederholungseinheiten (7) oder (8) und durch die folgende allgemeine Formel (2a) dargestellte Wiederholungseinheiten (2a) und/oder durch die folgende allgemeine Formel (2b) dargestellte Wiederholungseinheiten (2b) in einem Molverhältnis der Wiederholungseinheiten (7) oder (8) zu der Gesamtheit der Wiederholungseinheiten (7) oder (8), der Wiederholungseinheiten (2a) und der Wiederholungseinheiten (2b), [(7) oder (8)]/{[(7) oder (8)]+(2a)+(2b)} von 0,001 bis 1 enthält, 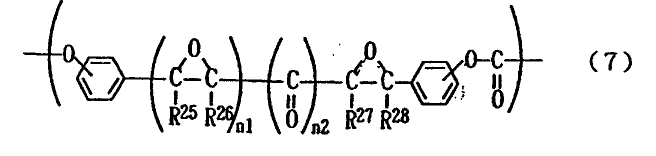 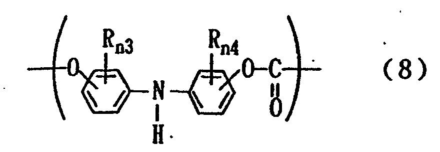 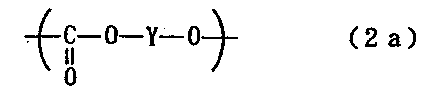 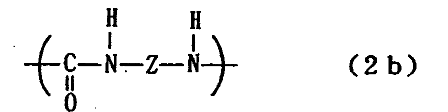 worin
in der allgemeinen Formel (7) R²⁵, R²⁶, R²⁷ und R²⁸ jeweils ein Wasserstoffatom, ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen darstellen, R²⁶ und R²⁷ gegebenenfalls durch eine Methylengruppe mit 1 bis 4 Kohlenstoffatomen miteinander verknüpft sind, n1 und n2 jeweils 0 oder 1 sind,
in der allgemeinen Formel (8) jedes R ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen darstellt, n3 und n4 jeweils eine ganze Zahl von 0 bis 4 sind,
in der allgemeinen Formel (2a) Y wie vorstehend definiert ist,
in der allgemeinen Formel (2b) Z wie vorstehend definiert ist
oder ein Polycarbonatharz mit vernetzenden funktionellen Gruppen an den Enden, welches Wiederholungseinheiten (2a), die durch die folgende allgemeine Formel (2a) dargestellt sind und/oder Wiederholungseinheiten (2b), die durch die folgende allgemeine Formel (2b) dargestellt sind, aufweist und Endgruppen, die durch die nachstehende allgemeine Formel (E1'), (E2) oder (E3) dargestellt sind, enthält 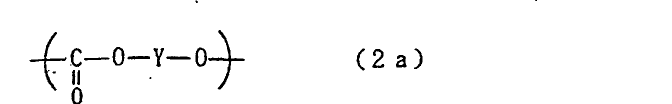 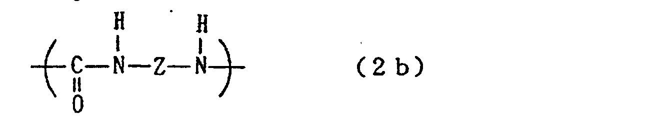 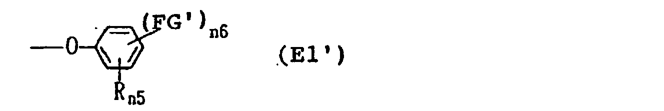 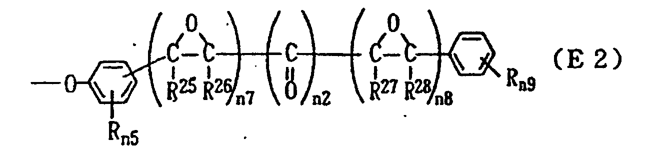
―O-FG (E 3)
wobei
in der allgemeinen Formel (2a) Y wie vorstehend definiert ist,
in der allgemeinen Formel (2b) Z wie vorstehend definiert ist,
in den allgemeinen Formeln (E1'), (E2) und (E3) jedes R ein Halogenatom, eine substituierte oder nicht substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht substituierte Cycloalkylgruppe mit 5 bis 7 Kohlenstoffatomen, eine substituierte oder nicht substituierte Arylgruppe mit 6 bis 24 Kohlenstoffatomen, eine substituierte oder nicht-substituierte Aryloxygruppe mit 6 bis 12 Kohlenstoffatomen, oder eine Arylthiogruppe mit 6 bis 12 Kohlenstoffatomen ist, n5 eine ganze Zahl von 0 bis 4 ist, n6 eine ganze Zahl von 1 bis 5 ist, n5+n6 eine ganze Zahl von 1 bis 5 ist, n9 eine ganze Zahl von 0 bis 5 ist, R²⁵, R²⁶, R²⁷ und R²⁸ jeweils ein Wasserstoffatom, ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen darstellen, R²⁶ und R²⁷ gegebenenfalls über eine Methylenkette mit 1 bis 4 Kohlenstoffatomen miteinander verknüpft sind, n7 und n8 jeweils 0 oder 1 sind, n7+n8 1 oder 2 ist, n2 0 oder 1 ist, FG' 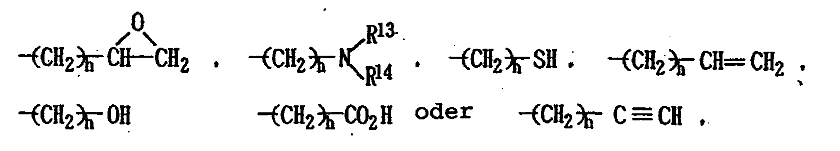 darstellt, zwei in einer Endgruppe vorliegende -COOH-Gruppen die folgende Struktur bilden können 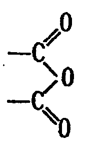 h eine ganze Zahl von 0 bis 4 ist, R¹³ und R¹⁴ jeweils ein Wasserstoffatom, eine Alkylgruppe mit 1 bis 6 Kohlenstoffatomen oder eine substituierte oder nicht-substituierte Arylgruppe mit 6 bis 12 Kohlenstoffatomen darstellen.

14. Elektrophotographischer Photorezeptor nach Anspruch 13, wobei die photoempfindliche Schicht eine Ladungs-erzeugende Schicht, die eine Ladungs-erzeugende Substanz enthält, und eine Ladungsübertragungsschicht, die eine Ladungsübertragungssubstanz enthält und ein Bindemittelharz umfaßt, wobei das Bindemittelharz das Polycarbonatharz ist.

15. Elektrophotographischer Photorezeptor, der ein leitfähiges Substrat und eine auf dem leitfähigen Substrat angeordnete photoempfindliche Schicht aufweist, wobei die photoempfindliche Schicht enthält:
ein venetztes Polycarbonatharz, erhältlich durch Vernetzen eines Polycarbonatharzes, das vernetzende funktionelle Gruppen in Seitenketten aufweist, welches durch die folgende allgemeine Formel (1) dargestellte Wiederholungseinheiten (1) und durch die folgende allgemeine Formel (2a) dargestellte Wiederholungseinheiten (2a) und/oder durch die folgende allgemeine Formel (2b) dargestellte Wiederholungseinheiten (2b) in einem Molverhältnis der Wiederholungseinheiten (1) zu der Gesamtheit der Wiederholungseinheiten (1), der Wiederholungseinheiten (2a) und der Wiederholungseinheiten (2b), (1)/[(1)+(2a)+(2b)], von 0,001-1 umfaßt 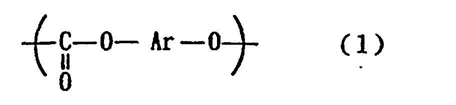 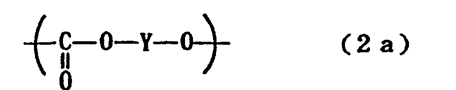 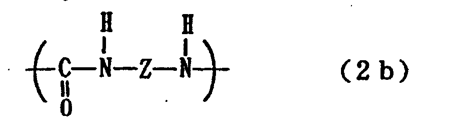
wobei
in der allgemeinen Formel (1) Ar eine zweiwertige aromatische Gruppe ist, die durch 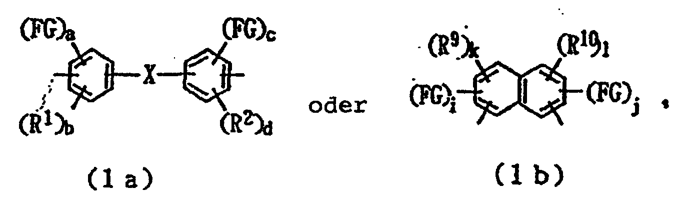 dargestellt ist,
und in Formel (1a) X eine Einfachbindung, -CO-, -S-, -SO-, -SO₂-, -O-, -CR³R⁴- (worin R³ und R⁴ jeweils eine Alkylgruppe mit 1 bis 10 Kohlenstoffatomen, eine Trifluormethylgruppe oder eine Arylgruppe mit 6 bis 36 Kohlenstoffatomen sind), eine Cycloalkylengruppe mit 5 bis 12 Kohlenstoffatomen, eine Cycloalkylidengruppe mit 5 bis 12 Kohlenstoffatomen, eine Fluorenylidengruppe, eine Diphenylmethylidengruppe, die aus zwei über 1 bis 4 Methylengruppen miteinander verknüpften Phenylgruppen besteht, eine α,ω-Alkylengruppe mit 2 bis 12 Kohlenstoffatomen, -CR⁵R⁶- (worin R⁵ und R⁶ jeweils Wasserstoff, eine Alkylgruppe mit 1 bis 10 Kohlenstoffatomen, eine Arylgruppe mit 6 bis 36 Kohlenstoffatomen, eine aliphatische Kohlenwasserstoffgruppe mit 2 bis 10 Kohlenstoffatomen, die eine oder mehrere ungesättigte Bindungen aufweist (ausgenommen eine lineare Alkenylgruppe mit 2 bis 6 Kohlenstoffatomen, die eine Doppelbindung nur an einem Ende aufweist und eine lineare Alkinylgruppe mit 2 bis 6 Kohlenstoffatomen, die eine Dreifachbindung nur an einem Ende aufweist) oder eine Gruppe FG darstellt, wobei mindestens eines von R⁵ und R⁶ FG oder eine aliphatische Kohlenwasserstoffgruppe mit 2 bis 10 Kohlenstoffatomen, die eine oder mehrere ungesättigte Bindungen aufweist, darstellt und FG 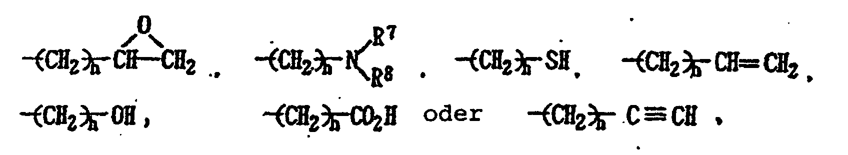 darstellt,
h eine ganze Zahl von 0 bis 4 ist, R⁷ und R⁸ jeweils ein Wasserstoffatom, eine Alkylgruppe mit 1 bis 6 Kohlenstoffatomen oder eine substituierte oder nicht-substituierte Arylgruppe mit 6 bis 12 Kohlenstoffatomen sind), eine Cycloalkylidengruppe mit 5 bis 12 Kohlenstoffatomen, die mit einer aliphatischen Kohlenwasserstoffgruppe mit 2 bis 12 Kohlenstoffatomen, die eine oder mehrere ungesättigte Bindungen aufweist, substituiert ist, eine Cycloalkylidengruppe mit 5 bis 12 Kohlenstoffatomen, die mit einer alicyclischen Kohlenwasserstoffgruppe mit 5 bis 12 Kohlenstoffatomen, die eine oder mehrere ungesättigte Bindungen aufweist, substituiert ist, oder eine Fluorenylidengruppe, die mit einer aliphatischen Kohlenwasserstoffgruppe mit 2 bis 12 Kohlenstoffatomen, die eine oder mehrere ungesättigte Bindungen aufweist, substituiert ist, darstellt R¹ und R² jeweils ein Halogenatom, eine gesättigte Kohlenwasserstoffgruppe mit 1 bis 10 Kohlenstoffatomen, eine Alkyloxygruppe mit 1 bis 10 Kohlenstoffatomen, eine Alkylthiogruppe mit 1 bis 10 Kohlenstoffatomen, eine Arylgruppe mit 6 bis 18 Kohlenstoffatomen, eine Aryloxygruppe mit 6 bis 12 Kohlenstoffatomen, eine Arylthiogruppe mit 6 bis 12 Kohlenstoffatomen oder eine Arylgruppe mit 6 bis 18 Kohlenstoffatomen, die mit einer Alkoxylgruppe mit 1 bis 10 Kohlenstoffatomen substituiert ist, darstellen,
a, b, c und d jeweils eine ganze Zahl von 0 bis 4 sind, a+b eine ganze Zahl von 0 bis 4 ist, c+d eine ganze Zahl von 0 bis 4 ist, und wenn X eine Einfachbindung, eine Fluorenylidengruppe, eine Diphenylmethylidengruppe, die aus. zwei miteinander über 1 bis 4 Methylengruppen verknüpften Phenylgruppen besteht, -CO-, -S-, -SO-, -SO₂-, -O-, -CR³R⁴-, eine Cycloalkylengruppe mit 5 bis 12 Kohlenstoffatomen, eine Cycloalkylidengruppe mit 5 bis 12 Kohlenstoffatomen oder eine α,ω-Alkylengruppe mit 2 bis 12 Kohlenstoffatomen ist, a+c nicht 0 ist,
und wenn X -CO-, -S-, -SO-, -SO₂-, -O-, -CR³R⁴-, eine Cycloalkylengruppe mit 5 bis 12 Kohlenstoffatomen, eine Cycloalkylidengruppe mit 5 bis 12 Kohlenstoffatomen oder eine α,ω-Alkylengruppe mit 2 bis 12 Kohlenstoffatomen darstellt und die an die Phenylengruppen von (1a) gebundenen Gruppen FG 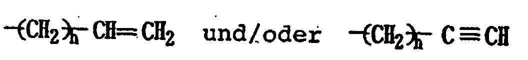 (worin h wie vorstehend definiert ist) bedeuten, ist a+c nicht 0 und b+d nicht 0,
und wenn X -CR⁵R⁶-, eine Cycloalkylidengruppe mit 5 bis 12 Kohlenstoffatomen, die mit einer aliphatischen Kohlenwasserstoffgruppe mit 2 bis 12 Kohlenstoffatomen, die eine oder mehrere ungesättigte Bindungen aufweist, substituiert ist, oder eine Fluorenylidengruppe, die mit einer aliphatischen Kohlenwasserstoffgruppe mit 2 bis 12 Kohlenstoffatomen, die eine oder mehrere ungesättigte Bindungen aufweist, substituiert ist, keines von R¹ und R² ein Halogenatom ist,
und wobei in Formel (1b) R⁹ und R¹⁰ jeweils ein Halogenatom, eine Alkylgruppe mit 1 bis 6 Kohlenstoffatomen, eine Alkyloxygruppe mit 1 bis 4 Kohlenstoffatomen, eine substituierte oder nicht-substituierte Arylgruppe mit 6 bis 12 Kohlenstoffatomen oder eine substituierte oder nicht-substituierte Aryloxygruppe mit 6 bis 12 Kohlenstoffatomen sind, FG wie vorstehend definiert ist, zwei in einer Wiederholungseinheit vorliegende -COOH-Gruppen die folgende Struktur bilden können 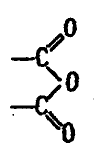 i, j, k und l jeweils eine ganze Zahl von 1 bis 3 sind, i+j=1 bis 6, i+k=0 bis 3 und j+l=0 bis 3,
und wobei in der allgemeinen Formel (2a) Y eine zweiwertige Gruppe ist, die eine Arylengruppe und keine vernetzende funktionelle Gruppe aufweist,
und wobei in der allgemeinen Formel (2b) Z eine durch die folgende Formel 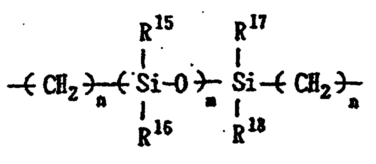 dargestellte Gruppe ist,
R¹⁵, R¹⁶, R¹⁷ und R¹⁸ jeweils eine Alkylgruppe mit 1 bis 4 Kohlenstoffatomen oder eine Arylgruppe mit 6 bis 36 Kohlenstoffatomen sind, n eine ganze Zahl von 1 bis 6 ist und m eine Zahl von 1 bis 150 ist,
oder ein vernetztes Polycarbonatharz, erhältlich durch Vernetzen eines Polycarbonatharzes, das vernetzende funktionelle Gruppen in der Hauptkette enthält, welches durch die folgende Formel (7) oder (8) dargestellte Wiederholungseinheiten (7) oder (8) und durch die folgende allgemeine Formel (2a) dargestellte Wiederholungseinheiten (2a) und/oder durch die folgende allgemeine Formel (2b) dargestellte Wiederholungseinheiten (2b) in einem Molverhältnis der Wiederholungseinheiten (7) oder (8) zu der Gesamtheit der Wiederholungseinheiten (7) oder (8), der Wiederholungseinheiten (2a) und der Wiederholungseinheiten (2b), [(7) oder (8)]/{[(7) oder (8)]+(2a)+(2b)} von 0,001 bis 1 enthält, 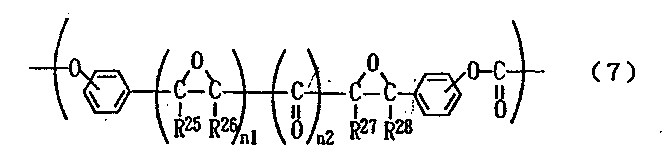 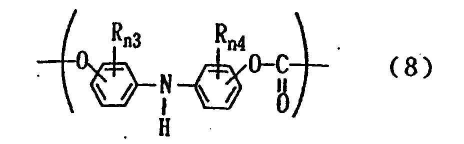 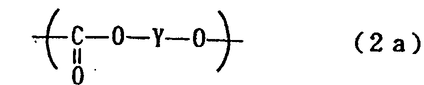 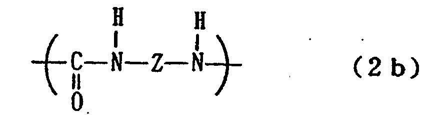 wobei in der allgemeinen Formel (7) R²⁵, R²⁶, R²⁷ und R²⁸ jeweils Wasserstoff, ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen darstellen, R²⁶ und R²⁷ gegebenenfalls über eine Methylenkette mit 1 bis 4 Kohlenstoffatomen miteinander verknüpft sind, n1 und n2 jeweils eine ganze Zahl von 0 oder 1 sind,
wobei in der allgemeinen Formel (8) jedes R ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Alkylthiogruppe mit 6 bis 12 Kohlenstoffatomen darstellt, n3 und n4 jeweils eine ganze Zahl von 0 bis 4 sind,
in der allgemeinen Formel (2a) Y wie vorstehend definiert ist,
in der allgemeinen Formel (2b) Z wie vorstehend definiert ist,
oder ein vernetztes Polycarbonatharz, erhältlich durch Vernetzen eines Polycarbonatharzes, das vernetzende funktionelle Gruppen an den Enden enthält, welches durch die folgende allgemeine Formel (2a) dargestellte Wiederholungseinheiten (2a) und/oder durch die folgende allgemeine Formel (2b) dargestellte Wiederholungseinheiten (2b) und durch die folgende allgemeine Formel (E1'), (E2) oder (E3) dargestellte Endgruppen aufweist, 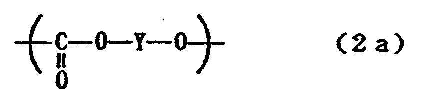 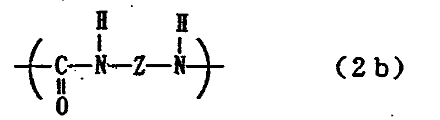 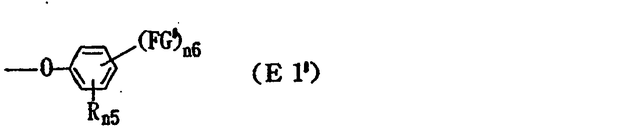 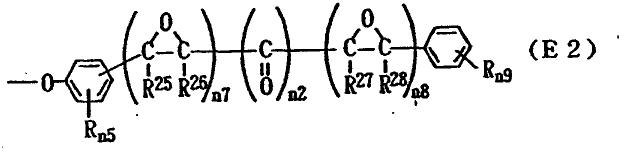
―O-FG (E 3)
wobei
in der allgemeinen Formel (2a) Y wie vorstehend definiert ist,
in der allgemeinen Formel (2B) Z wie vorstehend definiert ist,
in den allgemeinen Formeln (E1'), (E2) und (E3) jedes R ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen darstellt, n5 eine ganze Zahl von 0 bis 4 ist, n6 eine ganze Zahl von 1 bis 5 ist, n5+n6 eine ganze Zahl von 1 bis 5 ist, n9 eine ganze Zahl von 0 bis 5 ist, R²⁵, R²⁶, R²⁷ und R28 jeweils Wasserstoff, ein Halogenatom, eine substituierte oder nicht-substituierte Alkylgruppe mit 1 bis 10 Kohlenstoffatomen, eine substituierte oder nicht-substituierte Alkyloxygruppe mit 1 bis 10 Kohlenstoffatomen, eine Alkylthiogruppe mit 1 bis 10 Kohlenstoffatomen, eine substituierte oder nicht-substituierte Cycloalkylgruppe mit 5 bis 7 Kohlenstoffatomen, eine substituierte oder nicht-substituierte Arylgruppe mit 6 bis 24 Kohlenstoffatomen, eine substituierte oder nicht-substituierte Aryloxygruppe mit 6 bis 12 Kohlenstoffatomen oder eine Arylthiogruppe mit 6 bis 12 Kohlenstoffatomen sind,
R²⁶ und R²⁷ gegebenenfalls über eine Methylenkette mit 1 bis 4 Kohlenstoffatomen miteinander verknüpft sind, n7 und n8 jeweils 0 oder 1 sind, n7+n8 1 oder 2 ist, n2 0 oder 1 ist, FG' 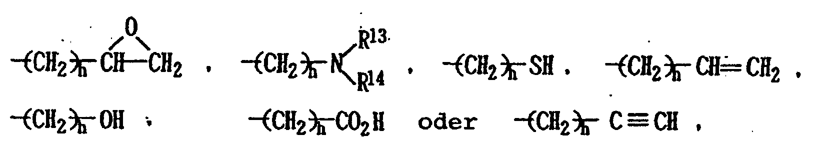 bedeutet,
zwei in einer Endgruppe vorhandene -COOH-Gruppen die folgende Struktur bilden können 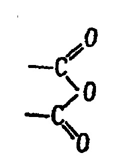 h eine ganze Zahl von 0 bis 4 ist, R¹³ und R¹⁴ jeweils Wasserstoff, eine Alkylgruppe mit 1 bis 6 Kohlenstoffatomen oder eine substituierte oder nicht-substituierte Arylgruppe mit 6 bis 12 Kohlenstoffatomen darstellen.

16. Elektrophotographischer Photorezeptor nach Anspruch 15, wobei die photoempfindliche Schicht eine Ladungs-erzeugende Schicht, die eine Ladungs-erzeugende Substanz enthält, und eine Ladungsübertragungsschicht, die eine Ladungs-übertragende Substanz und ein Bindemittelharz enthält, umfaßt, wobei das Bindemittelharz das vernetzte Polycarbonatharz ist.

## Revendications

1. Résine de polycarbonate ayant des groupes fonctionnels de réticulation dans les chaînes latérales, qui comprend des motifs répétés (1') représentés par la formule générale suivante (1'), et des motifs répétés (2a) représentés par la formule générale suivante (2a), et/ou des motifs répétés (2b) représentés par la formule générale suivante (2b), dans un rapport molaire des motifs répétés (1') à un total des motifs répétés (1'), des motifs répétés (2a) et des motifs répétés (2b),
(1')/[(1) + (2a) + (2b)], de 0,001 à 1 ; 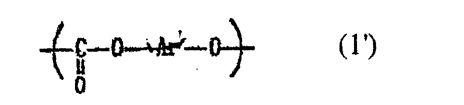 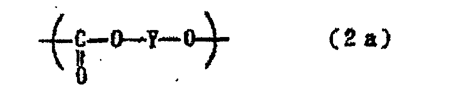 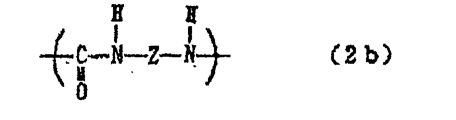 dans lesquelles,
dans la formule générale (1'), Ar' est un groupe aromatique divalent représenté par 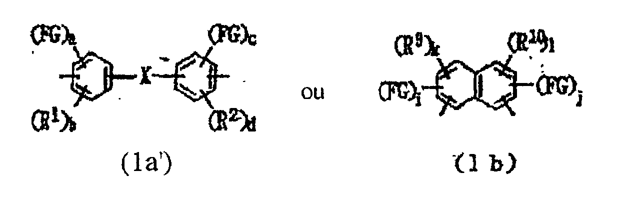 et dans la formule (1a'), X est -CO-, -S-, -SO-, -SO₂-, -O-, le fluorénylidène, le diphénylméthylidène comprenant deux groupes phényle liés l'un à l'autre via 1 à 4 groupes méthylène, un groupe α,ω-alkylène de 2 à 12 atomes de carbone, -CR⁵R⁶- (dans lequel R⁵ et R⁶ sont chacun un atome d'hydrogène, un groupe alkyle de 1 à 10 atomes de carbone, un groupe aryle de 6 à 36 atomes de carbone), un groupe hydrocarbure aliphatique de 2 à 10 atomes de carbone ayant une ou plusieurs liaisons insaturées (si ce n'est un groupe alcényle linéaire de 2 à 6 atomes de carbone ayant une double liaison seulement à une de ses extrémités, et un groupe alcynyle linéaire de 2 à 6 atomes de carbone ayant une triple liaison seulement à une de ses extrémités) ou FG, au moins un parmi R⁵ et R⁶ étant FG ou le groupe hydrocarbure aliphatique de 2 à 10 atomes de carbone ayant une ou plusieurs liaisons insaturées, FG étant 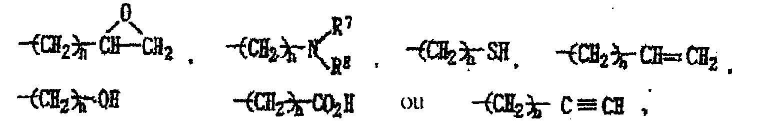 h étant un nombre entier de 0 à 4, R⁷ et R⁸ étant chacun un atome d'hydrogène, un groupe alkyle de 1 à 6 atomes de carbone ou un groupe aryle de 6 à 12 atomes de carbone substitué ou non substitué, un groupe cycloalkylidène de 5 à 12 atomes de carbone qui est substitué par un groupe hydrocarbure aliphatique de 2 à 12 atomes de carbone ayant une ou plusieurs liaisons insaturées, un groupe cycloalkylidène de 5 à 12 atomes de carbone qui est substitué par un groupe hydrocarbure alicyclique de 5 à 12 atomes de carbone ayant une ou plusieurs liaisons insaturées, ou un groupe fluorénylidène qui est substitué par un groupe hydrocarbure aliphatique de 2 à 12 atomes de carbone ayant une ou plusieurs liaisons insaturées, R¹ et R² sont chacun un atome d'halogène, un groupe hydrocarbure saturé de 1 à 10 atomes de carbone, un groupe alkyloxy de 1 à 10 atomes de carbone, un groupe alkylthio de 1 à 10 atomes de carbone, un groupe aryle de 6 à 18 atomes de carbone, un groupe aryloxy de 6 à 12 atomes de carbone, un groupe arylthio de 6 à 12 atomes de carbone, ou un groupe aryle de 6 à 18 atomes de carbone qui est substitué par un groupe alcoxyle de 1 à 10 atomes de carbone, a, b, c et d sont chacun un nombre entier de 0 à 4, a + b étant un nombre entier de 0 à 4, c + d étant un nombre entier de 0 à 4 ; et quand X est le fluorénylidène, un diphénylméthylidène comprenant deux groupes phényle liés l'un à l'autre via 1 à 4 groupes méthylène, -CO-, -S-, -SO-, -SO₂-, -O-, ou un groupe α,ω-alkylène de 2 à 12 atomes de carbone, a + c ne vaut pas 0 ;
et quand X est -CO-, -S-, -SO-, -SO₂-, -O-, ou un groupe α,ω-alkylène de 2 à 12 atomes de carbone, et que les FG liés aux groupes phénylène de (1a') sont 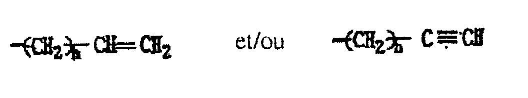 (dans lesquelles h est tel que défini ci-dessus), a + c ne vaut pas 0, et b + d ne vaut pas 0 ;
et quand X est -CR⁵R⁶-, un groupe cycloalkylidène de 5 à 12 atomes de carbone qui est substitué par un groupe hydrocarbure aliphatique de 2 à 12 atomes de carbone ayant une ou plusieurs liaisons insaturées ou un fluorénylidène qui est substitué par un groupe hydrocarbure aliphatique de 2 à 12 atomes de carbone ayant une ou plusieurs liaisons insaturées, aucun parmi R¹ et R² n'est un atome d'halogène ;
et dans la formule (1b), R⁹ et R¹⁰ sont chacun un atome d'halogène, un groupe alkyle de 1 à 6 atomes de carbone, un groupe alkyloxy de 1 à 4 atomes de carbone, un groupe aryle de 6 à 12 atomes de carbone substitué ou non substitué, ou un groupe aryloxy de 6 à 12 atomes de carbone substitué ou non substitué, FG est tel que défini ci-dessus, deux -COOH présents dans un motif répété peuvent former la structure suivante 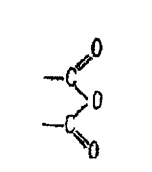 i, j, k et l sont chacun un nombre entier de 0 à 3, i + j = 1 à 6, i + k = 0 à 3, et j + l = 0 à 3 ;
et dans la formule générale (2a), Y est un groupe divalent contenant un groupe arylène et aucun groupe fonctionnel de réticulation ;
et dans la formule générale (2b), Z est un groupe représenté par la formule générale 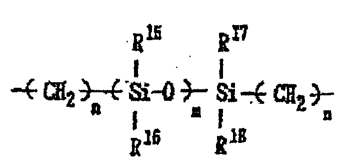 R¹⁵, R¹⁶, R¹⁷ et R¹⁸ sont chacun un groupe alkyle de 1 à 4 atomes de carbone ou un groupe aryle de 6 à 36 atomes de carbone, n est un nombre entier de 1 à 6, et m est un nombre de 1 à 150.

2. Résine de polycarbonate selon la revendication 1, dans laquelle les Ar' dans les motifs répétés (1') sont représentés par la formule générale

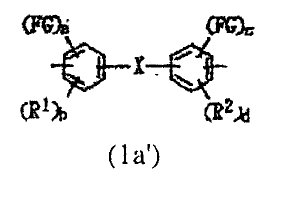

3. Résine de polycarbonate selon la revendication 1, dans laquelle les Ar' dans les motifs répétés (1') sont représentés par la formule générale

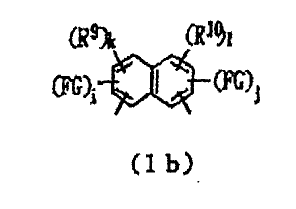

4. Résine de polycarbonate selon la revendication 1, dans laquelle les motifs répétés (1') sont représentés par la formule générale 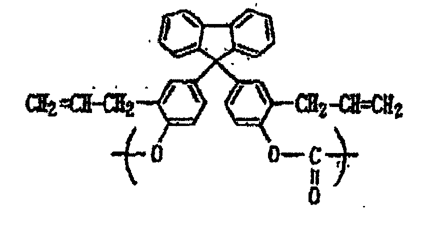 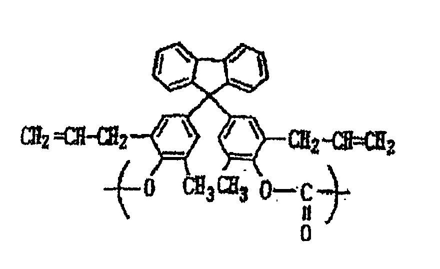 ou

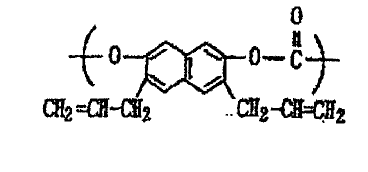

5. Résine de polycarbonate selon la revendication 1, dans laquelle les motifs répétés (2a) sont des motifs répétés (3) représentés par la formule générale (3) 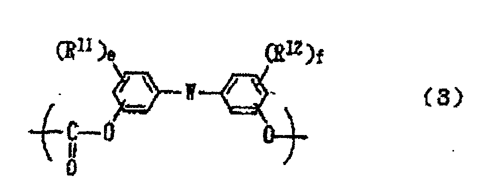 dans laquelle R¹¹ et R¹² sont chacun un atome d'halogène, un groupe hydrocarbure saturé de 1 à 10 atomes de carbone, un groupe hydrocarbure aromatique de 6 à 12 atomes de carbone, un groupe alkyloxy de 1 à 10 atomes de carbone, un groupe alkylthio de 1 à 10 atomes de carbone, un groupe aryloxy de 6 à 12 atomes de carbone ou un groupe arylthio de 6 à 12 atomes de carbone, e et f sont chacun un nombre entier de 0 à 4, W est une simple liaison, -O-, -CO-, -S-, -SO-, -SO₂-, -CR¹³R¹⁴-, un groupe cycloalkylidène de 5 à 12 atomes de carbone ou un groupe α,ω-alkylène de 2 à 12 atomes de carbone (R¹³ et R¹⁴ sont chacun un atome d'hydrogène, un trifluorométhyle, un groupe alkyle de 1 à 10 atomes de carbone ou un groupe hydrocarbure aromatique de 6 à 36 atomes de carbone) ou le groupe suivant 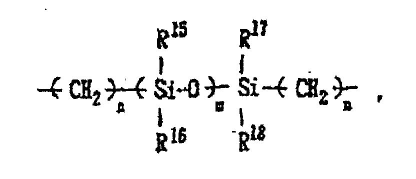 R¹⁵, R¹⁶, R¹⁷ et R¹⁸ étant chacun un groupe alkyle de 1 à 4 atomes de carbone ou un groupe aryle de 6 à 36 atomes de carbone, n est un nombre entier de 1 à 6, et m est un nombre de 1 à 150.

6. Résine de polycarbonate selon la revendication 1, qui comprend en outre des groupes terminaux qui possèdent un groupe fonctionnel de réticulation et sont représentés par la formule générale (E1), (E2) ou (E3) : 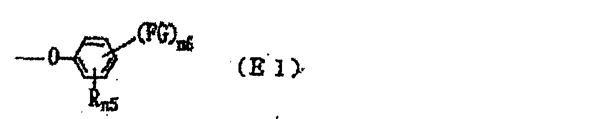 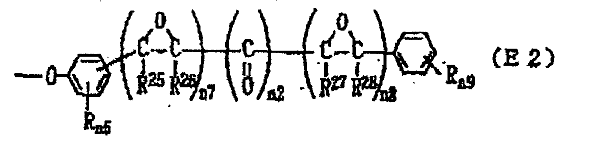
―O-FG (E 3)
dans laquelle chaque R est un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, n5 est un nombre entier de 0 à 4, n6 est un nombre entier de 1 à 5, n5 + n6 est un nombre entier de 1 à 5, n9 est un nombre entier de 0 à 5, R²⁵, R²⁶, R²⁷ et R²⁸ sont chacun un atome d'hydrogène, un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, R²⁶ et R²⁷ peuvent être liés l'un à l'autre par une chaîne méthylène de 1 à 4 atomes de carbone, n7 et n8 valent chacun 0 ou 1, n7 + n8 vaut 1 ou 2, n2 vaut 0 ou 1, FG est tel que défini ci-dessus, et deux -COOH présents dans un groupe terminal peuvent former la structure suivante

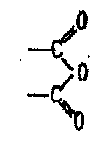

7. Résine de polycarbonate ayant des groupes fonctionnels de réticulation dans une chaîne principale, qui comprend les motifs répétés (7) ou (8) représentés par la formule générale suivante (7) ou (8), et les motifs répétés (2a) représentés par la formule générale suivante (2a) et/ou les motifs répétés (2b) représentés par la formule générale suivante (2b), dans un rapport molaire des motifs répétés (7) ou (8) à un total des motifs répétés (6), (7) ou (8), les motifs répétés (2a) et les motifs répétés (2b), [(7) ou (8)]/{[( 7) ou (8)] + (2a) + (2b)}, de 0,001 à 1 ; 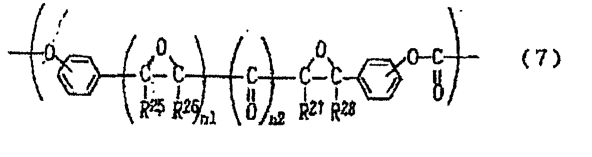 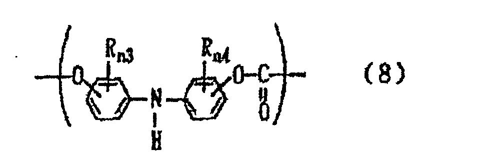 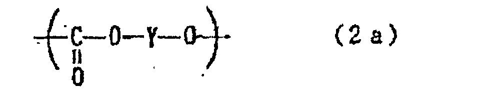 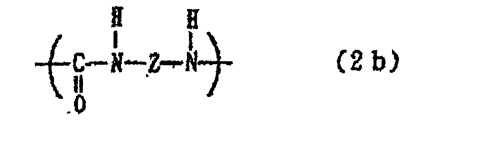 dans lesquelles,
dans la formule générale (7), R²⁵, R²⁶, R²⁷ et R²⁸ sont chacun un atome d'hydrogène, un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, R²⁶ et R²⁷ sont éventuellement liés l'un à l'autre par une chaîne méthylène de 1 à 4 atomes de carbone, n1 et n2 valent chacun un nombre entier 0 ou 1 ;
dans la formule générale (8), chaque R est un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, n3 et n4 sont chacun un nombre entier de 0 à 4 ;
dans la formule générale (2a), Y est un groupe divalent contenant un groupe arylène et aucun groupe fonctionnel de réticulation ;
dans la formule générale (2b), Z est représenté par la formule suivante 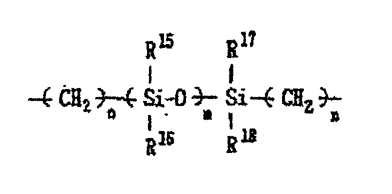 dans laquelle R¹⁵, R¹⁶, R¹⁷ et R¹⁸ sont chacun un groupe alkyle de 1 à 4 atomes de carbone ou un groupe aryle de 6 à 36 atomes de carbone, n est un nombre entier de 1 ou 6, et m est un nombre de 1 à 150.

8. Résine de polycarbonate selon la revendication 7, dans laquelle les motifs répétés (2a) sont des motifs répétés (3) représentés par la formule générale (3) 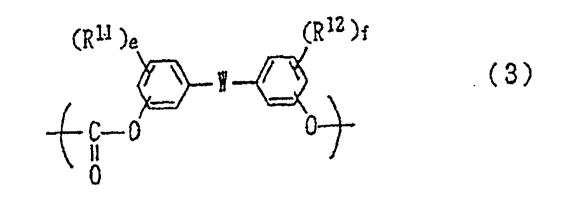 dans laquelle R¹¹ et R¹² sont chacun un atome d'halogène, un groupe hydrocarbure saturé de 1 à 10 atomes de carbone, un groupe hydrocarbure aromatique de 6 à 12 atomes de carbone, un groupe alkyloxy de 1 à 10 atomes de carbone, un groupe alkylthio de 1 à 10 atomes de carbone, un groupe aryloxy de 6 à 12 atomes de carbone ou un groupe arylthio de 6 à 12 atomes de carbone, e et f sont chacun un nombre entier de 0 à 4, W est une simple liaison, -O-, -CO-, -S-, -SO-, -SO₂-, -CR¹³R¹⁴-, un groupe cycloalkylidène de 5 à 12 atomes de carbone ou un groupe α,ω-alkylène de 2 à 12 atomes de carbone (R¹³ et R¹⁴ sont chacun un atome d'hydrogène, un trifluorométhyle, un groupe alkyle de 1 à 10 atomes de carbone ou un groupe hydrocarbure aromatique de 6 à 36 atomes de carbone) ou un groupe représenté par la formule suivante 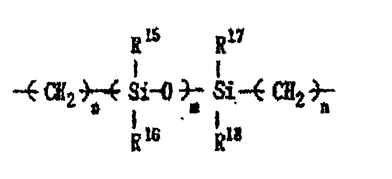 dans laquelle R¹⁵, R¹⁶, R¹⁷ et R¹⁸ sont chacun un groupe alkyle de 1 à 4 atomes de carbone ou un groupe aryle de 6 à 36 atomes de carbone, n est un nombre entier de 1 à 6, et m est un nombre de 1 à 150.

9. Résine de polycarbonate selon la revendication 7, qui comprend en outre des groupes terminaux qui possèdent un groupe fonctionnel de réticulation et sont représentés par la formule générale (E1), (E2) ou (E3) : 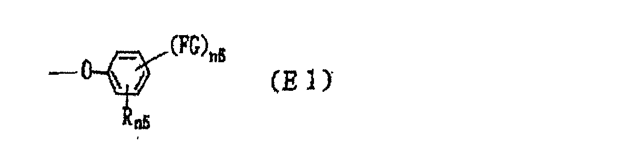 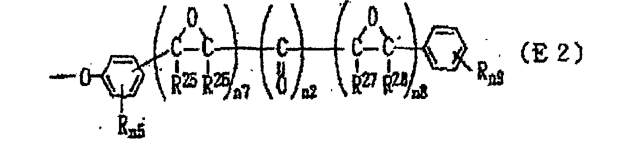
―O-FG (E 3)
dans laquelle chaque R est un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, n5 est un nombre entier de 0 à 4, n6 est un nombre entier de 1 à 5, n5 + n6 est un nombre entier de 1 à 5, n9 est un nombre entier de 0 à 5, R²⁵, R²⁶, R²⁷ et R²⁸ sont chacun un atome d'hydrogène, un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, R²⁶ et R²⁷ peuvent être liés l'un à l'autre par une chaîne méthylène de 1 à 4 atomes de carbone, n7 et n8 valent chacun 0 ou 1, n7 + n8 vaut 1 ou 2, n2 vaut 0 ou 1, FG est 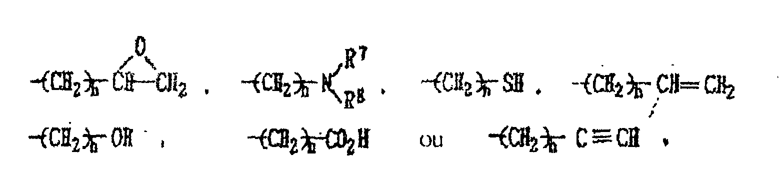 et deux -COOH présents dans un groupe terminal peuvent former la structure suivante 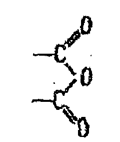 h est un nombre entier de 0 à 4, R⁷ et R⁸ étant chacun un atome d'hydrogène, un groupe alkyle de 1 à 6 atomes de carbone ou un groupe aryle substitué ou non substitué de 6 à 12 atomes de carbone.

10. Résine de polycarbonate ayant des groupes fonctionnels de réticulation aux extrémités, qui comprend des motifs répétés (2a) représentés par la formule générale (2a) et/ou des motifs répétés (2b) représentés par la formule générale (2b), et des groupes terminaux représentés par la formule générale (E1'), (E2) ou (E3) 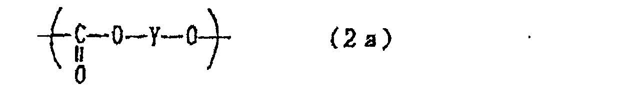 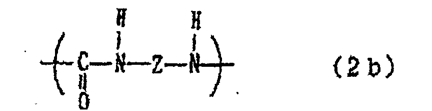 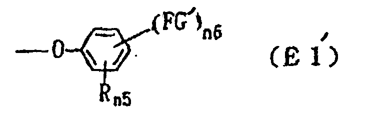 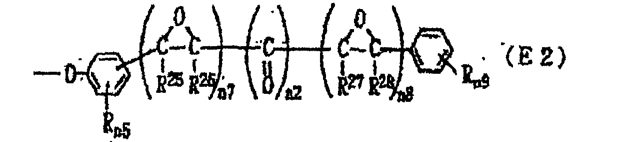
―O-FG (E 3)
dans lesquelles
dans la formule générale (2a), Y est un groupe divalent contenant un groupe arylène et aucun groupe fonctionnel de réticulation ;
et dans la formule générale (2b), Z est un groupe représenté par la formule suivante 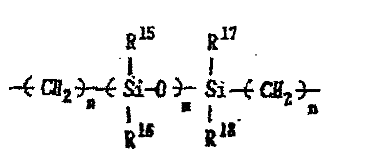 dans laquelle R¹⁵, R¹⁶, R¹⁷ et R¹⁸ sont chacun un groupe alkyle de 1 à 4 atomes de carbone ou un groupe aryle de 6 à 36 atomes de carbone, n est un nombre entier de 1 à 6, et m est un nombre de 1 à 150 ;
dans les formules générales (E1'), (E2) et (E3), chaque R est un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, n5 est un nombre entier de 0 à 4, n6 est un nombre entier de 1 à 5, n5 + n6 est un nombre entier de 1 à 5, n9 est un nombre entier de 0 à 5, R²⁵, R²⁶, R²⁷ et R²⁸ sont chacun un atome d'hydrogène, un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, R²⁶ et R²⁷ peuvent être liés l'un à l'autre par une chaîne méthylène de 1 à 4 atomes de carbone, n7 et n8 valent chacun 0 ou 1, n7 + n8 vaut 1 ou 2, n2 vaut 0 ou 1, FG' est 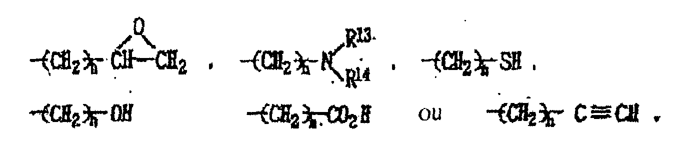 deux -COOH présents dans un groupe terminal peuvent former la structure suivante, 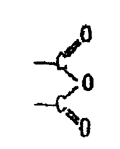 h est un nombre entier de 0 à 4, R¹³ et R¹⁴ sont chacun un atome d'hydrogène, un groupe alkyle de 1 à 6 atomes de carbone ou un groupe aryle de 6 à 12 atomes de carbone substitué ou non substitué.

11. Résine de polycarbonate selon la revendication 10, dans laquelle les motifs répétés (2a) sont des motifs répétés (3) représentés par la formule générale (3) 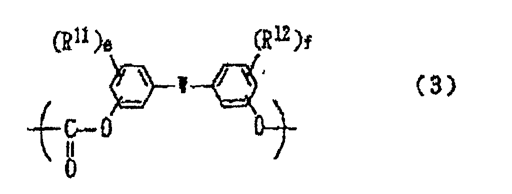 dans laquelle R¹¹ et R¹² sont chacun un atome d'halogène, un groupe hydrocarbure saturé de 1 à 10 atomes de carbone, un groupe hydrocarbure aromatique de 6 à 12 atomes de carbone, un groupe alkyloxy de 1 à 10 atomes de carbone, un groupe alkylthio de 1 à 10 atomes de carbone, un groupe aryloxy de 6 à 12 atomes de carbone ou un groupe arylthio de 6 à 12 atomes de carbone, e et f sont chacun un nombre entier de 0 à 4, W est une simple liaison, -O-, -CO-, -S-, -SO-, -SO₂-, -CR¹³R¹⁴-, un groupe cycloalkylidène de 5 à 12 atomes de carbone ou un groupe α,ω-alkylène de 2 à 12 atomes de carbone (R¹³ et R¹⁴ étant chacun un atome d'hydrogène, un trifluorométhyle, un groupe alkyle de 1 à 10 atomes de carbone ou un groupe hydrocarbure aromatique de 6 à 36 atomes de carbone) ou un groupe représenté par la formule suivante 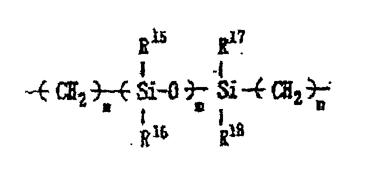 dans laquelle R¹⁵, R¹⁶, R¹⁷ et R¹⁸ étant chacun un groupe alkyle de 1 à 4 atomes de carbone ou un groupe aryle de 6 à 36 atomes de carbone, n est un nombre entier de 1 à 6, et m est un nombre de 1 à 150.

12. Résine de polycarbonate réticulée produite par réticulation de la résine de polycarbonate selon l'une quelconque des revendications 1 à 11.

13. Photorécepteur électrophoto-graphique comprenant un substrat conducteur et une couche photosensible qui est disposée sur le substrat conducteur, la couche photosensible contenant :
une résine de polycarbonate ayant des groupes fonctionnels de réticulation dans les chaînes latérales, qui comprend des motifs répétés (1) représentés par la formule générale suivante (1), et des motifs répétés (2a) représentés par la formule générale suivante (2a), et/ou des motifs répétés (2b) représentés par la formule générale suivante (2b), dans un rapport molaire des motifs répétés (1) à un total des motifs répétés (1), des motifs répétés (2a) et des motifs répétés (2b),
(1)/[(1) + (2a) + (2b)], de 0,001 à 1 ; 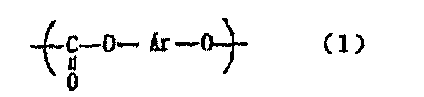 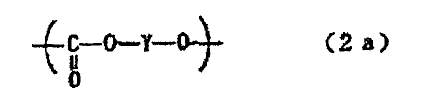 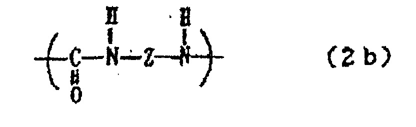 dans lesquelles,
dans la formule générale (1), Ar' est un groupe aromatique divalent représenté par 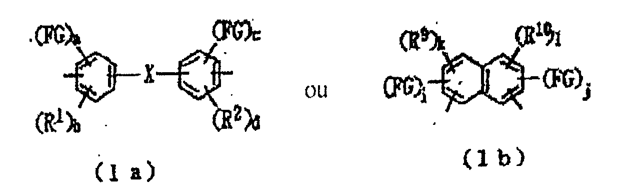 et dans la formule (1a), X est une simple liaison, -CO-, -S-, -SO-, -SO₂-, -O-, -CR³R⁴- (dans laquelle R³ et R⁴ sont chacun un groupe alkyle de 1 à 10 atomes de carbone, un trifluorométhyle, ou un groupe aryle de 6 à 36 atomes de carbone), un groupe cycloalkylène de 5 à 12 atomes de carbone, un groupe cycloalkylidène de 5 à 12 atomes de carbone, le fluorénylidène, le diphénylméthylidène comprenant deux groupes phényle liés l'un à l'autre via 1 à 4 groupes méthylène, un groupe α,ω-alkylène de 2 à 12 atomes de carbone, -CR⁵R⁶- (dans lequel R⁵ et R⁶ sont chacun un atome d'hydrogène, un groupe alkyle de 1 à 10 atomes de carbone, un groupe aryle de 6 à 36 atomes de carbone, un groupe hydrocarbure aliphatique de 2 à 10 atomes de carbone ayant une ou plusieurs liaisons insaturées (si ce n'est un groupe alcényle linéaire de 2 à 6 atomes de carbone ayant une double liaison seulement à une de ses extrémités, et un groupe alcynyle linéaire de 2 à 6 atomes de carbone ayant une triple liaison seulement à une de ses extrémités) ou FG, au moins un parmi R⁵ et R⁶ étant FG ou le groupe hydrocarbure aliphatique de 2 à 10 atomes de carbone ayant une ou plusieurs liaisons insaturées, FG étant 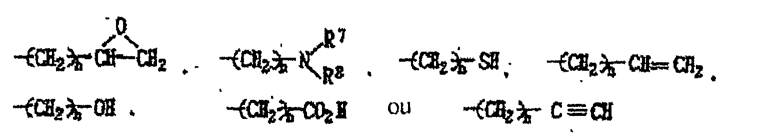 h étant un nombre entier de 0 à 4, R⁷ et R⁸ étant chacun un atome d'hydrogène, un groupe alkyle de 1 à 6 atomes de carbone ou un groupe aryle de 6 à 12 atomes de carbone substitué ou non substitué, un groupe cycloalkylidène de 5 à 12 atomes de carbone qui est substitué par un groupe hydrocarbure aliphatique de 2 à 10 atomes de carbone ayant une ou plusieurs liaisons insaturées, un groupe cycloalkylidène de 5 à 12 atomes de carbone qui est substitué par un groupe hydrocarbure alicyclique de 5 à 12 atomes de carbone ayant une ou plusieurs liaisons insaturées, ou un fluorénylidène qui est substitué par un groupe hydrocarbure aliphatique de 2 à 12 atomes de carbone ayant une ou plusieurs liaisons insaturées, R¹ et R² sont chacun un atome d'halogène, un groupe hydrocarbure saturé de 1 à 10 atomes de carbone, un groupe alkyloxy de 1 à 10 atomes de carbone, un groupe alkylthio de 1 à 10 atomes de carbone, un groupe aryle de 6 à 18 atomes de carbone, un groupe aryloxy de 6 à 12 atomes de carbone, un groupe arylthio de 6 à 12 atomes de carbone, ou un groupe aryle de 6 à 18 atomes de carbone qui est substitué par un groupe alcoxyle de 1 à 10 atomes de carbone,
a, b, c et d sont chacun un nombre entier de 0 à 4, a + b étant un nombre entier de 0 à 4, c + d étant un nombre entier de 0 à 4 ;
et quand X est une simple liaison, le fluorénylidène, un diphénylméthylidène comprenant deux groupes phényle liés l'un à l'autre via 1 à 4 groupes méthylène, -CO-, -S-, -SO-, -SO₂-, -O-, -CR³R⁴-, un groupe cycloalkylène de 5 à 12 atomes de carbone, un groupe cycloalkylidène de 5 à 12 atomes de carbone, ou un groupe α,ω-alkylène de 2 à 12 atomes de carbone, a + c ne vaut pas 0 ;
et quand X est -CO-, -S-, -SO-, -SO₂-, -O-, -CR³R⁴-, un groupe cycloalkylène de 5 à 12 atomes de carbone, un groupe cycloalkylidène de 5 à 12 atomes de carbone ou un groupe α,ω-alkylène de 2 à 12 atomes de carbone, et que les FG liés aux groupes phénylène de (1a) sont 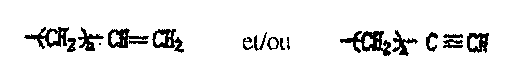 (dans lesquelles h est tel que défini ci-dessus), a + c ne vaut pas 0, et b + d ne vaut pas 0 ;
et quand X est -CR⁵R⁶-, un groupe cycloalkylidène de 5 à 12 atomes de carbone qui est substitué par un groupe hydrocarbure aliphatique de 2 à 12 atomes de carbone ayant une ou plusieurs liaisons insaturées, ou un fluorénylidène qui est substitué par un groupe hydrocarbure aliphatique de 2 à 12 atomes de carbone ayant une ou plusieurs liaisons insaturées, aucun parmi R¹ et R² n'est un atome d'halogène ;
et dans la formule (1b), R⁹ et R¹⁰ sont chacun un atome d'halogène, un groupe alkyle de 1 à 6 atomes de carbone, un groupe alkyloxy de 1 à 4 atomes de carbone, un groupe aryle de 6 à 12 atomes de carbone substitué ou non substitué ou un groupe aryloxy de 6 à 12 atomes de carbone substitué ou non substitué, FG est tel que défini ci-dessus, deux -COOH présents dans un motif répété peuvent former la structure suivante 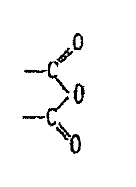 i, j, k et l sont chacun un nombre entier de 0 à 3, i + j = 1 à 6, i + k = 0 à 3, et j + l = 0 à 3 ;
et dans la formule générale (2a), Y est un groupe divalent contenant un groupe arylène et aucun groupe fonctionnel de réticulation ;
et dans la formule générale (2b), Z est un groupe représenté par la formule suivante 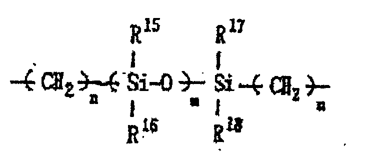 R¹⁵, R¹⁶, R¹⁷ et R¹⁸ sont chacun un groupe alkyle de 1 à 4 atomes de carbone ou un groupe aryle de 6 à 36 atomes de carbone, n est un nombre entier de 1 à 6, et m est un nombre de 1 à 150 ;
ou une résine de polycarbonate ayant des groupes fonctionnels de réticulation dans une chaîne principale, qui comprend des motifs répétés (7) ou (8) représentés par la formule générale suivante (7) ou (8), et des motifs répétés (2a) représentés par la formule générale suivante (2a), et/ou des motifs répétés (2b) représentés par la formule générale suivante (2b), dans un rapport molaire des motifs répétés (7) ou (8) à un total des motifs répétés (7) ou (8), des motifs répétés (2a) et des motifs répétés (2b),
[(7) ou (8)]/{[(7) ou (8)] + (2a) + (2b)}, de 0,001 à 1 ; 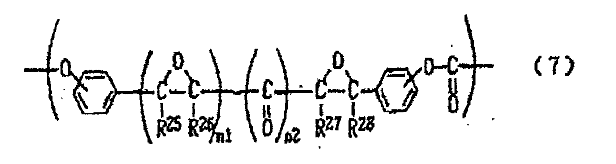 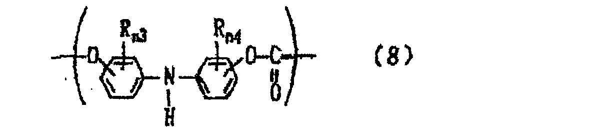 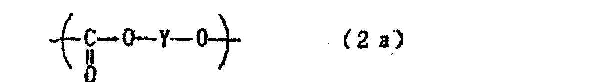 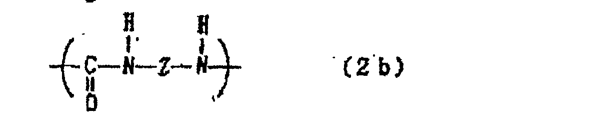 dans lesquelles,
dans la formule générale (7), R²⁵, R²⁶, R²⁷ et R²⁸ sont chacun un atome d'hydrogène, un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, R²⁶ et R²⁷ peuvent être liés l'un à l'autre par une chaîne méthylène de 1 à 4 atomes de carbone, n1 et n2 sont chacun un nombre entier de 0 ou 1 ;
dans la formule générale (8), chaque R est un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, n3 et n4 sont chacun un nombre entier de 0 à 4 ;
dans la formule générale (2a), Y est tel que défini ci-dessus ;
dans la formule générale (2b), Z est tel que défini ci-dessus ;
ou une résine de polycarbonate ayant des groupes fonctionnels de réticulation aux extrémités, qui comprend des motifs répétés (2a) représentés par la formule générale (2a) et/ou des motifs répétés (2b) représentés par la formule générale (2b), et des groupes terminaux représentés par la formule générale suivante (E1'), (E2) ou (E3) : 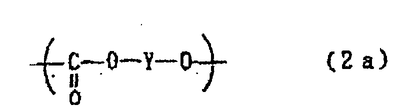 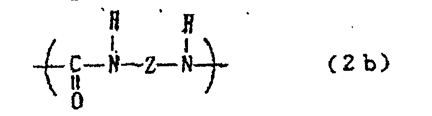 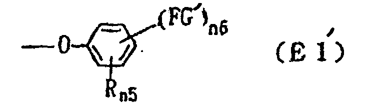 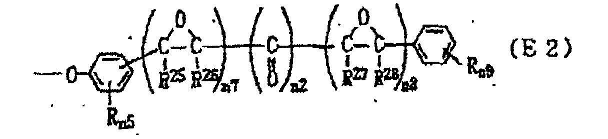
―O-FG (E 3)
dans lesquelles
dans la formule générale (2a), Y est tel que défini ci-dessus ;
dans la formule générale (2b), Z est tel que défini ci-dessus ;
dans les formules générales (E1'), (E2) et (E3), chaque R est un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué ou un groupe arylthio de 6 à 12 atomes de carbone, n5 est un nombre entier de 0 à 4, n6 est un nombre entier de 1 à 5, n5 + n6 est un nombre entier de 1 à 5, n9 est un nombre entier de 0 à 5, R²⁵, R²⁶, R²⁷ et R²⁸ sont chacun un atome d'hydrogène, un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, R²⁶ et R²⁷ peuvent être liés l'un à l'autre par une chaîne méthylène de 1 à 4 atomes de carbone, n7 et n8 valent chacun 0 ou 1, n7 + n8 vaut 1 ou 2, n2 vaut 0 ou 1, FG' est 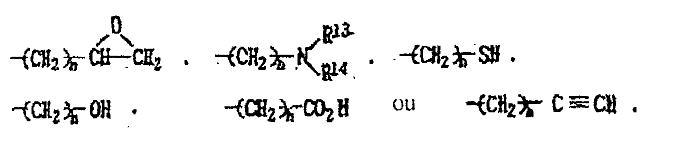 deux -COOH présents dans un groupe terminal peuvent former la structure suivante, 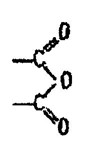 h est un nombre entier de 0 à 4, R¹³ et R¹⁴ sont chacun un atome d'hydrogène, un groupe alkyle de 1 à 6 atomes de carbone ou un groupe aryle de 6 à 12 atomes de carbone substitué ou non substitué.

14. Photorécepteur électrophoto-graphique selon la revendication 13, dans lequel la couche photosensible comprend une couche génératrice de charge contenant une substance génératrice de charge et une couche de transfert de charge contenant une substance de transfert de charge et une résine lieuse, la résine lieuse étant la résine de polycarbonate.

15. Photorécepteur électrophoto-graphique comprenant un substrat conducteur et une couche photosensible qui est disposée sur le substrat conducteur, la couche photosensible contenant :
une résine de polycarbonate réticulée que l'on peut obtenir par réticulation d'une résine de polycarbonate ayant des groupes fonctionnels de réticulation dans les chaînes latérales, qui comprend des motifs répétés (1) représentés par la formule générale suivante (1), et des motifs répétés (2a) représentés par la formule générale suivante (2a), et/ou des motifs répétés (2b) représentés par la formule générale suivante (2b), dans un rapport molaire des motifs répétés (1) à un total des motifs répétés (1), des motifs répétés (2a) et des motifs répétés (2b), (1)/[(1) + (2a) + (2b)], de 0,001 à 1 ; 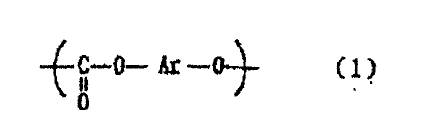 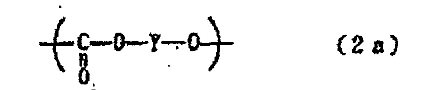 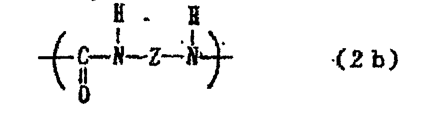
dans lesquelles,
dans la formule générale (1), Ar est un groupe aromatique divalent représenté par 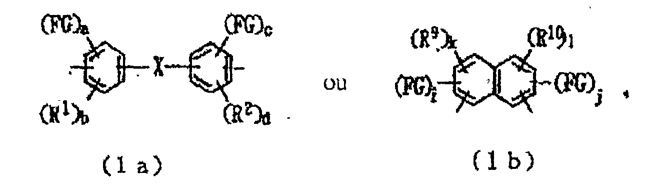 et dans la formule (1a), X est une simple liaison, -CO-, -S-, -SO-, -SO₂-, -O-, -CR³R⁴- (dans laquelle R³ et R⁴ sont chacun un groupe alkyle de 1 à 10 atomes de carbone, un trifluorométhyle, ou un groupe aryle de 6 à 36 atomes de carbone), un groupe cycloalkylène de 5 à 12 atomes de carbone, un groupe cycloalkylidène de 5 à 12 atomes de carbone, le fluorénylidène, le diphénylméthylidène comprenant deux groupes phényle liés l'un à l'autre via 1 à 4 groupes méthylène, un groupe α,ω-alkylène de 2 à 12 atomes de carbone, -CR⁵R⁶- (dans lequel R⁵ et R⁶ sont chacun un atome d'hydrogène, un groupe alkyle de 1 à 10 atomes de carbone, un groupe aryle de 6 à 36 atomes de carbone, un groupe hydrocarbure aliphatique de 2 à 10 atomes de carbone ayant une ou plusieurs liaisons insaturées (si ce n'est un groupe alcényle linéaire de 2 à 6 atomes de carbone ayant une double liaison seulement à une de ses extrémités, et un groupe alcynyle linéaire de 2 à 6 atomes de carbone ayant une triple liaison seulement à une de ses extrémités) ou FG, au moins un parmi R⁵ et R⁶ étant FG ou le groupe hydrocarbure aliphatique de 2 à 10 atomes de carbone ayant une ou plusieurs liaisons insaturées, FG étant 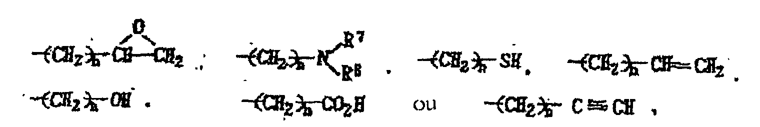 h étant un nombre entier de 0 à 4, R⁷ et R⁸ étant chacun un atome d'hydrogène, un groupe alkyle de 1 à 6 atomes de carbone ou un groupe aryle de 6 à 12 atomes de carbone substitué ou non substitué, un groupe cycloalkylidène de 5 à 12 atomes de carbone qui est substitué par un groupe hydrocarbure aliphatique de 2 à 12 atomes de carbone ayant une ou plusieurs liaisons insaturées, un groupe cycloalkylidène de 5 à 12 atomes de carbone qui est substitué par un groupe hydrocarbure alicyclique de 5 à 12 atomes de carbone ayant une ou plusieurs liaisons insaturées, ou un groupe fluorénylidène qui est substitué par un groupe hydrocarbure aliphatique de 2 à 12 atomes de carbone ayant une ou plusieurs liaisons insaturées, R¹ et R² sont chacun un atome d'halogène, un groupe hydrocarbure saturé de 1 à 10 atomes de carbone, un groupe alkyloxy de 1 à 10 atomes de carbone, un groupe alkylthio de 1 à 10 atomes de carbone, ou un groupe aryle de 6 à 18 atomes de carbone, un groupe aryloxy de 6 à 12 atomes de carbone, un groupe arylthio de 6 à 12 atomes de carbone, ou un groupe aryle de 6 à 18 atomes de carbone qui est substitué par un groupe alcoxyle de 1 à 10 atomes de carbone,
a, b, c et d sont chacun un nombre entier de 0 à 4, a + b étant un nombre entier de 0 à 4, c + d un nombre entier de 0 à 4 ;
et quand X est une simple liaison, le fluorénylidène, un diphénylméthylidène comprenant deux groupes phényle liés l'un à l'autre via 1 à 4 groupes méthylène, -CO-, -S-, -SO-, -SO₂-, -O-, -CR³R⁴-, un groupe cycloalkylène de 5 à 12 atomes de carbone, un groupe cycloalkylidène de 5 à 12 atomes de carbone ou un groupe α,ω-alkylène de 2 à 12 atomes de carbone, a + c ne vaut pas 0 ;
et quand X est -CO-, -S-, -SO-, -SO₂-, -O-, -CR³R⁴- un groupe cycloalkylidène de 5 à 12 atomes de carbone ou un groupe α,ω-alkylène de 2 à 12 atomes de carbone, et que les FG liés aux groupes phénylène de (1a) sont 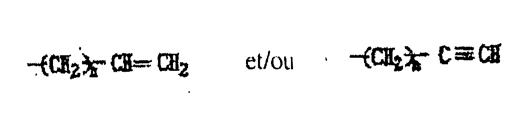 (dans lesquelles h est tel que défini ci-dessus), a + c ne vaut pas 0, et b + d ne vaut pas 0 ;
et quand X est -CR⁵R⁶-, un groupe cycloalkylidène de 5 à 12 atomes de carbone qui est substitué par un groupe hydrocarbure aliphatique de 2 à 12 atomes de carbone ayant une ou plusieurs liaisons insaturées ou un fluorénylidène qui est substitué par un groupe hydrocarbure aliphatique de 2 à 12 atomes de carbone ayant une ou plusieurs liaisons insaturées, aucun parmi R¹ et R² n'est un atome d'halogène ;
et dans la formule (1b), R⁹ et R¹⁰ sont chacun un atome d'halogène, un groupe alkyle de 1 à 6 atomes de carbone, un groupe alkyloxy de 1 à 4 atomes de carbone, un groupe aryle de 6 à 12 atomes de carbone substitué ou non substitué ou un groupe aryloxy de 6 à 12 atomes de carbone substitué ou non substitué, FG est tel que défini ci-dessus, deux -COOH présents dans un motif répété peuvent former la structure suivante 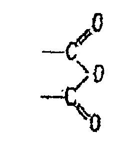 i, j, k et l sont chacun un nombre entier de 0 à 3, i + j = 1 à 6, i + k = 0 à 3, et j + l = 0 à 3 ;
et dans la formule générale (2a), Y est un groupe divalent contenant un groupe arylène et aucun groupe fonctionnel de réticulation ;
et dans la formule générale (2b), Z est un groupe représenté par la formule suivante 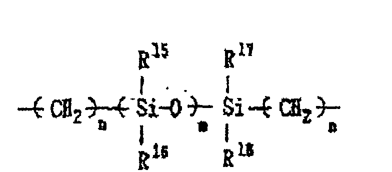 R¹⁵, R¹⁶, R¹⁷ et R¹⁸ sont chacun un groupe alkyle de 1 à 4 atomes de carbone ou un groupe aryle de 6 à 36 atomes de carbone, n est un nombre entier de 1 à 6, et m est un nombre de 1 à 150 ;
ou une résine de polycarbonate réticulée que l'on peut obtenir par réticulation d'une résine de polycarbonate ayant des groupes fonctionnels de réticulation dans une chaîne principale, qui comprend des motifs répétés (7) ou (8) représentés par la formule générale générale suivante (7) ou (8), et des motifs répétés (2a) représentés par la formule générale générale suivante (2a), et/ou des motifs répétés (2b) représentés par la formule générale suivante (2b), dans un rapport molaire des motifs répétés (7) ou (8) à un total des motifs répétés (7) ou (8), des motifs répétés (2a) et des motifs répétés (2b),
[(7) ou (8)]/{[(7) ou (8)] + (2a) + (2b)}, de 0,001 à 1 ; 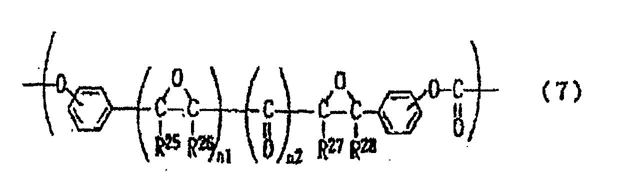 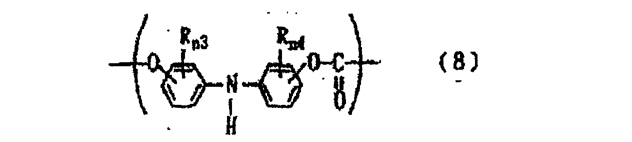 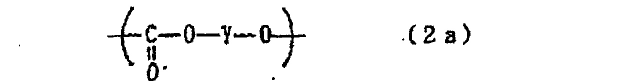 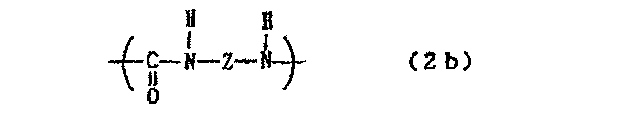 dans lesquelles,
dans la formule générale (7), R²⁵, R²⁶, R²⁷ et R²⁸ sont chacun un atome d'hydrogène, un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, R²⁶ et R²⁷ peuvent être liés l'un à l'autre par une chaîne méthylène de 1 à 4 atomes de carbone, ni et n2 sont chacun un nombre entier de 0 ou 1 ;
dans la formule générale (8), chaque R est un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, n3 et n4 sont chacun un nombre entier de 0 à 4 ;
dans la formule générale (2a), Y est tel que défini ci-dessus ;
dans la formule générale (2b), Z est tel que défini ci-dessus ;
ou une résine de polycarbonate réticulée que l'on peut obtenir par réticulation d'une résine de polycarbonate ayant des groupes fonctionnels de réticulation aux extrémités, qui comprend des motifs répétés (2a) représentés par la formule générale (2a) et/ou des motifs répétés (2b) représentés par la formule générale (2b), et des groupes terminaux représentés par la formule générale (E1'), (E2) ou (E3) : 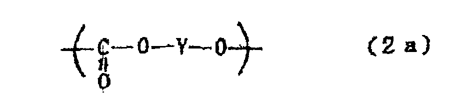 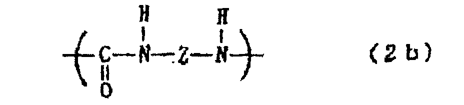 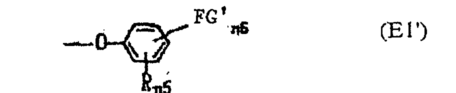 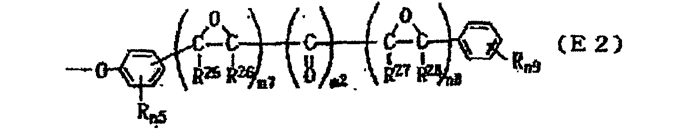
―O-FG (E 3)
dans lesquelles
dans la formule générale (2a), Y est tel que défini ci-dessus ;
dans la formule générale (2b), Z est tel que défini ci-dessus ;
dans les formules générales (E1'), (E2) et (E3), chaque R est un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, n5 est un nombre entier de 0 à 4, n6 est un nombre entier de 1 à 5, n5 + n6 est un nombre entier de 1 à 5, n9 est un nombre entier de 0 à 5, R²⁵, R²⁶, R²⁷ et R²⁸ sont chacun un atome d'hydrogène, un atome d'halogène, un groupe alkyle de 1 à 10 atomes de carbone substitué ou non substitué, un groupe alkyloxy de 1 à 10 atomes de carbone substitué ou non substitué, un groupe alkylthio de 1 à 10 atomes de carbone, un groupe cycloalkyle de 5 à 7 atomes de carbone substitué ou non substitué, un groupe aryle de 6 à 24 atomes de carbone substitué ou non substitué, un groupe aryloxy de 6 à 12 atomes de carbone substitué ou non substitué ou un groupe arylthio de 6 à 12 atomes de carbone, R²⁶ et R²⁷ peuvent être liés l'un à l'autre par une chaîne méthylène de 1 à 4 atomes de carbone, n7 et n8 valent chacun 0 ou 1, n7 + n8 vaut 1 ou 2, n2 vaut 0 ou 1, FG' est 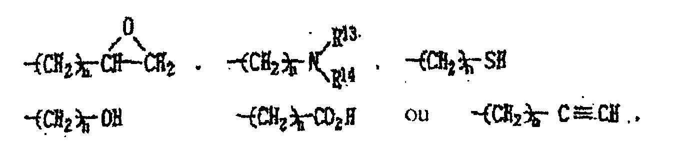 deux -COOH présents dans un groupe terminal peuvent former la structure suivante, 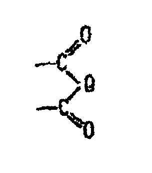 h est un nombre entier de 0 à 4, R¹³ et R¹⁴ sont chacun un atome d'hydrogène, un groupe alkyle de 1 à 6 atomes de carbone ou un groupe aryle de 6 à 12 atomes de carbone substitué ou non substitué.

16. Photorécepteur électrophoto-graphique selon la revendication 15, dans lequel la couche photosensible comprend une couche génératrice de charge contenant une substance génératrice de charge et une couche de transfert de charge contenant une substance de transfert de charge et une résine lieuse, la résine lieuse étant la résine de polycarbonate réticulée.
